# EUROPEAN PATENT SPECIFICATION

(11) **EP 3 446 225 B1**
(45) Date of publication and mention of the grant of the patent: **30.11.2022**
(21) Application number: 17786497.2
(22) Date of filing: 18.04.2017
(51) Int. Cl.: G06F 15/16, G06F 21/00, H04L 29/06, H04L 29/08, H04N 21/258, H04W 4/02, H04W 4/029, H04W 4/38

(54) **MULTI-LEVEL CONTROL, VARIABLE ACCESS, MULTI-USER CONTEXTUAL INTELLIGENT COMMUNICATION PLATFORM**
INTELLIGENTE KONTEXTUELLE KOMMUNIKATIONSPLATTFORM MIT MEHRSTUFIGER STEUERUNG UND VARIABLEM ZUGANG
PLATE-FORME DE COMMUNICATION INTELLIGENTE CONTEXTUELLE MULTI-UTILISATEURS À ACCÈS VARIABLE ET À COMMANDE MULTI-NIVEAUX

(30) Priority: 18.04.2016 US 201662324283 P; 24.08.2016 US 201662379150 P
(43) Date of publication of application: 27.02.2019
(73) Proprietor: Bjontegard, Bernt Erik, San Diego, CA 92106 (US)
(72) Inventor: Bjontegard, Bernt Erik, San Diego, CA 92106 (US)
(74) Representative: Schaumburg und Partner Patentanwälte mbB
(86) International application number: PCT/US2017/028196
(87) International publication number: WO 2017/184646

(56) References cited:
- US-A1- 2014 171 039
- US-A1- 2014 171 039
- US-B1- 6 895 586
- US-B2- 7 227 658
- US-B2- 8 615 784
- US-B2- 8 615 784

## Description

### TECHNICAL FIELD

The invention relates generally to the technical field of interactive, electronic networks that enable multi-level control, variable access, multi-user communications of real-time contextually relevant data or information among network-connected devices, and actions based on those communications, as the network-connected devices move from one location to another and/or the data/information flow among those devices change over time.

### BACKGROUND ART

High tech mobile chip companies like Qualcomm and Broadcom, mobile device manufacturers such as Apple, HTC, Nokia and Samsung, mobile network operators such as AT&T, Verizon and Orange, mobile app developers and publishers such as Trigger and thousands of others build, develop, create, invent, manufacture and/or publish products and processes in the field of electronic or telecommunications. Augmented reality (AR) software solutions such as Qualcomm's Vuforia^{™} brand software application and others such as Aurasma, image recognition (IR) solutions such as Qualcomm's Vuforia^{™} application, peer-to-peer communication solutions such as Qualcomm's AllJoyn^{™} brand application, mobile payment solutions such as Qualcomm's Pay^{™} brand application and Google's Wallet^{™} brand application, and context awareness solutions such as Qualcomm's Gimbal^{™} brand application also play a role in the field of electronic communications and mobile applications. Sensor fusion companies such as Virtual Eye, stadium and venue solutions such as provided and developed by Cisco also play a role in the field of electronic communications and mobile applications. Customer relationship management (CRM) systems hosted in the cloud are offered by companies such as Salesforce.com, Oracle and Parallel6. Research facilities such as PARC, MIT and Qualcomm continue to fund and conduct research and development in many of the facets and features of the field of electronic communications. Numerous patents exist in each of the sub categories described below. The presently describe systems and processes is not dependent upon any specific such patent.

### Context awareness

Contact awareness is a well-known discipline, and has significant, current R&D in progress. There is a lot of R&D in this space, at universities (MIT), research facilities (PARC, SRI, Freuenheuser) and commercial corporations (Qualcomm, Apple). Qualcomm has released a proximity based communication platform named "Gimbal"^{™}, which features aspects of the presently disclosed, but which does not include sensor fusion with other devices, input from other devices, multi-tenant controls and does not include a commercial CRM back end that enables integration with historical demographic data as a stand-alone solution across multiple parties in one common platform.

### Context Intelligence

Significant research and development has taken place in this space, but the only known commercial application relevant to the present disclosure is described in United States Patent 9,338,622, and available from Total Communicator Solutions, Inc. Also, the entities identified above are strong players in this space. However, none includes multi-level control, variable access, multi-user, multi-sensor, multi-device, action-event driven contextual intelligent communications capability controlled from a common platform as disclosed herein

### Mobile or Proximity Marketing

Numerous companies are doing mobile and/or proximity marketing with use of mobile devices. Some use location based services, others include social media status and integrations, and others use a CRM back-end. None has a complete solution that enables a brand to gather real time context information, combine it with historical data and automatically deliver messages to the mobile device based on these input data with the capabilities to have a feedback loop that records the actions taken based on the messages delivered.

### AR

Numerous companies have technologies in this space, ranging from Layar which started using GPS for AR, to Nokia's solution for Windows 7 phones; to Sony, Blippar, Aurasma, Dekko, Magic Leap, Nimatic Labs and numerous others, each with its own technology solution. One of the biggest players in the space was Qualcomm with its Vuforia SDK which has now been acquired by PTC. It is believed that none of these applications use AR to discover and verify context, and it is believed that there is no application that includes a marketing back-end CRM system that enables brands to have their own solution to their own specific needs as part of a complete content and campaign management system.

### IR

Image recognition is an aspect of AR, and many of the known AR technologies use their own algorithms to create the AR experiences. Qualcomm's Gimbal SDK offers a free IR component. It does not include sensor input from devices in proximity, or a marketing CRM back-end database.

### Location Based Services

Many companies are offering Location Based Services (Placecast, Place-IQ and many others) that feature aspects of the presently disclosed invention. However, except for the system described in United States Patent 9,338,622, none has integrated context and sensor input.

### Coupon Delivery

Groupon and numerous others have various solutions for delivery of coupons and offers. However, none has a solution with the features, capabilities and functions as presently described herein.

### Customer Relation Management

Salesforce.com, Oracle, Parallel6 and numerous others have cloud based customer relation management (CRM) systems. The system described in United States Patent 9,338,622 also includes CRM features. However, none has complex real-time contextual information that is combined with historical and demographical data in a multi-level control, variable access.

### Push Technology

There are numerous solutions that enable messages to be pushed to a mobile device - some are fairly sophisticated. However, none includes multi-level control, variable access, multi-user contextual intelligent communications capability as disclosed herein.

### Mobile Payment Applications

Google Wallet, Qualcomm's Pay, Samsung, Apple, Total Communicator Solutions, Inc., and numerous others have various solutions for mobile payments. However, none has an application that is fully integrated with a cloud based CRM solution and includes multi-level control, variable access, multi-user, contextual intelligent communications capability as disclosed herein.

### Mobile Devices

Mobile devices are well known. The invention is not dependent upon any specific mobile device. It is acknowledged that the forms, functions, structures and capabilities of mobile devices will change radically in the future, and it is believed that such new devices can be used with the multi-level control, variable access, multi-user, contextual intelligent communications capabilities as disclosed herein.

### Peer-to-peer Communication

It is believed that numerous companies and others are working on standards and new means for peer-to-peer communications, with Qualcomm's open source and free SDK "AllJoyn" providing exemplary, diversified cross platforms, cross standards and cross device solutions. However, none has provided a standard or means for peer-to-peer communications that includes multi-level control, variable access, multi-user, contextual intelligent communications capability as disclosed herein.

### Stadium / Venue Solutions

Cisco, Virtual Eye and Sporting Innovation have a series of solutions for venue enhancements. However, none includes multi-level control, variable access, multi-user, contextual intelligent communications capability as disclosed herein.

### Sensor Fusion

Numerous companies, Kinect, Qualcomm, Nokia, Focus Motion and many others, provide sensor fusion applications. However, none includes multi-level control, variable access, multi-user, contextual intelligent communications capability as disclosed herein.

### Ball and Player Tracking

Virtual Eye and Hawkeye provide applications that can track and verify ball trajectories in sports such as soccer, baseball, tennis and golf. However, none includes multi-level control, variable access, multi-user, contextual intelligent communications capability as disclosed herein.
From the United States patent US 8615784 B2 a group in the active network teaching multi-level control is known. From the United States patent application publication US 2014/0171039 A1 a computer-implemented electronic network according to the precharacterizing part of claim 1 is known, processing process data on the current context of a user who is using a connected mobile communication device.
It is an object of the invention to increase the control options of the network processing the current context of a user who is using a connected mobile communication device.
This and other objects are achieved by the features in claim 1. Advantageous further embodiments are claimed in the dependent claims.

### SUMMARY OF INVENTION

The interactive, electronic networks according to the present disclosure overcome the drawbacks of known electronic networks by providing multi-level control, variable access, multi-user communications of real-time contextually relevant data or information among network-connected devices, and actions based on those communications as the network-connected devices move from one location to another and/or the data/information flow among those devices change over time. The networks described herein are intended, preferably, to work in conjunction with and may incorporate features of the contextually intelligent communication platform(s) (CICP(s)) described, for example, in International application PCT/US13/062504, United States Patent 9,338,622. However, the networks described herein do not depend on or rely uniquely on those CICPs. One aspect of the present disclosure may be referred to as a multi-tenant contextual intelligent communication platform (MTCICP). The MTCICP is described herein with reference to several preferred embodiments that include delivery of real-time contextually relevant content, offers and experiences while gathering and recording real-time performance data to multiple administrators from multiple organizations and various level of access at the same time. Additionally the MTCICP is described herein with reference to several preferred embodiments that include systems to promote a healthy lifestyle, wellness encouragement, verification and reward for healthy behavior while improving medical care, including pre- and post-surgical operation care with verification of medication and activity compliance. In yet another aspect, the MTCICP is described herein with reference to several preferred embodiments that include combinations of CICPs systems with sensors and devices that combines on-board, on-device computation algorithms with calculation results communicated via aggregation hubs that along with other CICP computing hubs, together communicate with the same common CICP central data gathering and computation site that is optionally integrated into a common interface, preloaded onto numerous connected devices and/or included as a part of an operating system that can enable the interactions of the physical environment or world with the digital environment or world.

In yet another aspect, the MTCICP is described herein with reference to several preferred embodiments that include a centralized system that functions to identify the location of devices, products and assets within a physical space through use of listening devices, active transmitters, mobile devices, network-connected equipment, including connections through use of, for example, relatively low cost proximity beacons, NFC tags and/or other sensors.

In yet another aspect, the MTCICP is described herein with reference to several preferred embodiments that include a centralized system that functions to identify the location of devices, products and assets within a physical space through use of listening devices, active transmitters, mobile devices, network-connected equipment, to present curated experiences and curated content to the user of such connected devices to enhance their actions whether in an augmented reality game or content deliver with a specific game associated with that specific location, game play or user's activity, to an activity to is representative of a pre-recorded action by someone else at another location, to passive activities performed by the user such as riding on a bus - all activities are connected to the MTCICP which presents the curated content to enable the curated experience.

Specific embodiments, examples, features, aspects, and advantages of the present disclosure will become better understood with regard to the following description, appended claims and accompanying drawings.

### BRIEF DESCRIPTION OF DRAWINGS

The foregoing aspects and the attendant aspects of the present disclosure will become more readily appreciated by reference to the following detailed description, when taken in conjunction with the accompanying drawings, wherein:
Figure 1 is a schematic overview of an exemplary multi-tenant architecture for a preferred platform or system showing different and various layers and control over those layers;
Figure 2 is a schematic overview showing areas of influence controlled by different layers of the of the Figure 1 platform.
Figure 3 is a schematic overview showing exemplary input types for the various layers of the Figure 1 platform.
Figure 4 is a schematic overview showing exemplary output types for the various layers of the Figure 1 platform.
Figure 5 illustrates is a schematic overview showing exemplary access types for the various layers of the Figure 1 platform.
Figure 6 illustrates exemplary inputs used to define a context for an end user of the Figure 1 platform.
Figure 7 illustrates the Figure 6 inputs as expanded for more than one end user of the Figure 1 platform.
Figure 8 illustrates exemplary context outputs for an end user of the Figure 1 platform.
Figure 9 illustrates the Figure 8 context outputs as expanded for multiple users.
Figure 10 illustrates different and exemplary types of users and input from different access/control levels in the Figure 1 platform.
Figure 11 illustrates different and exemplary types of feedback or output to different levels in the Figure 1 platform in response to an event.
Figure 12 illustrates a specific example of input and output for an event that takes place during use of the Figure 1 platform.
Figure 13 is an exemplary event action record and retain flowchart for use in the Figure 1 platform.
Figure 14 illustrates an exemplary sensor network infrastructure for use in the Figure 1 platform.
Figure 15 illustrates an exemplary curated contextual relevant content delivery embodiment for use with the Figure 1 platform.
Figure 16 illustrates an exemplary curated contextual relevant content delivery embodiment of Figure 15 and in addition includes triggering the delivery of curated content by a sensor that detects the presence of an end user for use with the Figure 1 platform.
Figure 17 illustrates an exemplary curated contextual relevant content delivery embodiment of Figures 15 or 16 and in addition includes alerting a staff member about the presence of the end user so that that staff member can enhance the experience for the end user for use with the Figure 1 platform.
Figure 18 illustrates an exemplary, curated shopping experience for use with the Figure 1 platform.
Figure 19 illustrates an exemplary, curated experience with secondary display for use with the Figure 1 platform.
Figure 20 illustrates an exemplary, curated experience that includes the capability of an additional action in the vicinity of the end user for use with the Figure 1 platform.
Figure 21 illustrates an exemplary use of the Figure 1 platform as an end user communication tool, with a patient being the end user.
Figure 22 illustrates an exemplary hospital patient discharge patient kit.
Figure 23 illustrates the Figure 22 discharge kit with the addition of capability to provide curated information, including capability for a physician to provide information to the patient.
Figure 24 illustrates the Figure 22 discharge kit with the capability of communication, and follow-up communication with a patient.
Figure 25 illustrates an exemplary embodiment for providing contextual intelligence to caregivers.
Figure 26 depicts a floor plan of a venue with hallways, individual rooms with separate entrances from the hallway, stairways and entry point such as a section of a hospital with three movable assets.
Figure 27 depicts the Figure 26, where bed 1 ("B-1") is in one room, bed 2 ("B-2") and bed 3 ("B-3") are in two different rooms.
Figure 28 depicts the same floor plan as in the Figures 26, 27 floorplan, but with the beacon sensors in the hallways (Fig 27-6 and Fig 28-8), beacon sensors in the stairwell (Fig 27-7), and beacon sensors attached to the beds Fig 26-1 through Fig 26-3.
Figure 29 depicts the Figure 27 floor plan with additional beacons or transmitters placed in a hallway.
Figure 30 depicts the Figure 29 floor plan, with the sensor having made a connection and recognized or started a communication with the Figure 27 hallway sensors/beacons.
Figure 31 depicts the Figure 30 hallway and set up, and with the Figure 30 sensor and communication devices moved from the hallway into the room where bed B-1 is located.
Figure 32 depicts the Figure 31 hallway and set up, and with the Figure 30 sensor and communication devices moved from the hallway into the room where bed B-1 is located.
Figure 33 depicts the Figure 32 hallway and set up, with the Figure 32 sensor and communication devices moved from the room where bed B-1 was located into the hallway.
Figure 34 depicts the Figure 33 floorplan with the "last known location" of bed B-1 detected and its location calculated by the SHCICP-MTCICP.
Figure 35 depicts a SHCICP-MTCICP operating platform that incorporates a sensor or proximity beacon on a piece of luggage or other product that is shipped and in which a location or series of locations are pre-determined as "geo-locations".
Figure 36 depicts a SHCICP-MTCICP operating platform that incorporates a mobile communication device and a sensor or proximity beacon at physical locations that serve food or drinks or both.
Figure 37 depicts the Figure 36 system and with a series of additional parameters to present the information to the end user's mobile device.
Figure 38 depicts a decision tree for delivery of messages, content and actual delivery of the Figure 38 items.
Figure 39 depicts the Figure 38 decision tree exemplary decision input from a variety of devices and venues.
Figure 40 is a schematic dataflow and input/output with feedback extending across a series of sensors and devices that are communicating via a CICP.
Figure 41 depicts a multi-tenant architecture of a MTCICP as used by an airport.
Figure 42 depicts an overview of devices and experiences as well as the data collected in a CICP platform.
Figure 43 depicts the flow of "Big Data" and its use in a "smart city" installation of a SHCICP-MTCICP system.
Figure 44 depicts an SHCICP-MTCICP infrastructure for a smart city that incorporates a convention center "FIRA" with a solution for travelers and exhibitors that attend and exhibit at the convention center.
Figure 45 depicts a subset of the Figure 44 infrastructure.
Figure 46 is an infographic depiction showing a more detailed version of the Figure 45 subset.
Figure 47 is a schematic overview of the infrastructure of Figures 44-46.
Figure 48 is an infographic representation showing how content and contextual parameters can be combined in an SHCICP-MTCICP infrastructure.
Figure 49 depicts multiple revenue streams enabled across an SHCICP-MTCICP infrastructure.
Figure 50 is a schematic overview showing how a SHCICP-MTCICP infrastructure could incorporate "consumer apps" on mobile "handsets", and integrated with a "web site".
Figure 51 depicts a SHCICP-MTCICP infrastructure for sporting events and competitions, in stadiums, outside of stadiums or both in and out of a stadium.
Figure 52 is an infographic depicting a sensor system that can gather data from sensors, and combine it with geo-locations to deliver content that is relevant to specific participants.
Figure 53 is an infographic depicting how various vertical industries can provide content and information into a MTCICP, process big data and provide communications to numerous vertical markets.
Figure 54 depicts data flow from sensors, mobile devices and associated sensor and beacon networks to create "Context Awareness" as indicated in Figure 53.
Figure 55 is a schematic infographic of a platform that incorporates various parameters for content delivery.
Figure 56 is a schematic representation of a content management solution part of a CICP, MTCICP and /or a SHCICP-MTCICP and in which content can be displayed on a variety of devices.
Figure 57 is a schematic representation of a content management solution part of a CICP, MTCICP and /or a SHCICP-MTCICP and in which a patient receive care from a group of care providers via their connected mobile devices.
Figure 58 is an overview of a user's journey as the user interacts with a facility, checks in, stays in the facility for a period, checks out and communicates with the facility after leaving the facility.
Figure 59 is an infographic overview of a "Patient Journey", content delivery, form verification, geo-location based messages and alerts, and a mobile application that enables co-payment.
Figure 60 is an infographic of a new lifestyle using a series of devices that deliver content, trigger and suggest healthy behavior via a series of devices that deliver content and experiences via a central SHCICP-MTCICP.
Figure 61 illustrates the data flow for a MTCICP system used for a pre-check verification of a patient filling in pre-operation consent forms prior to having a procedure performed as described in Fig 59.
Figure 62 illustrates an extension to Fig 61 providing an alert presented via the MTCICP that the patient has viewed the education information and has completed the pre-operation consent forms.
Figure 63 is an extension of the data flow shown in Fig 62, Fig 61 and Fig 59, showing that an insurance company has been granted access to the MTCICP that controls the patient's mobile app.
Figure 64 is a schematic overview illustrating a SHCICP-MTCICP installation in a fitness gym or similar facility as operated by a corporation - depicted as "Employer" - that is interested in maintaining a healthy staff.
Figure 65 illustrates an extension to the architecture shown in Figure 64, and in which the SHCICP-MTCIP enables continuous monitoring upon user approval.
Figure 66-1 depicts the SHCICP-MTCICP infrastructure as installed in an airport, and in which offers and information from various tenants as well as facility information such as lounge location and other re3levant information such as gate information are presented into the SHCIP-MTCICP depicted as "Spark Compass PaaS" control.
Figure 66-2 illustrates system and over-all control of the SHCICP-MTCICP by the Master Tenant, depicted as "Airport Operator".
Figure 67 depicts a high level overview of an "Intelligent Platform for a Smart City" that incorporates a control platform powered by a SHCICP-MTCICP that incorporates Big Data to ensure social factors while defining the SHCICP-MTCICP infrastructure across the city.
Figure 68 is an extension of the flow illustrated in Figure 67, depicting the consideration and interactions between the various vertical use cases for a master city wide SHCICP-MTCICP with sub-tenant SHCICP-MTCICP system installations in various areas.
Figure 69 depicts a way in which a CICP. MTCICP or SHCICP-MTCICP can aggregate "Big Data" to prepare custom reports, can be used to power or integrate with 3^{rd} Party Plug-ins, can presented in on-line dashboards and can also be integrated with additional data sets to provide data insights.
Figure 70 depicts a use case where a museum has installed a SHCICP-MTCICP infrastructure.
Figure 71 depicts the use of a SHCICP-MTCICP for automatic payment by travelers using a train/trolley transportation system.
Figure 72 illustrates additional details of the Figure 71 system, such as how many people are in each wagon and an alert before entering a specific wagon.
Figure 73 illustrates a re-target ad and content use of a CICP.
Figure 74. is a schematic overview of an exhibitor at a trade show using a SHCICP to enhance a visitor's experience while at the exhibitor's booth
Figure 75 depicts how an airport can use a CICP to enhance a traveler's journey as the traveler move across the facilities.
Figure 76 is a schematic overview of showing how an exemplary CICP, MTCICP, SHCICP and /or a SHCICP-MTCICP system captures, monitors and records user behavior.
Figure 77 is a high level overview figure illustrating the ability to monetize a MTCICP, such as an MTCICP system at an airport programmed for leasing access based on selected parameters.
Figure 78 is an overview of various, exemplary technologies that can be used by a CICP, MTCICP, SHCICP and /or a SHCICP-MTCICP to detect location of a user or group of users.
Figure 79 illustrates how a CICP, MTCICP, SHCICP and /or a SHCICP-MTCICP detect the location of a user or group of users inside of an airport.
Figure 80 depicts an exemplary method for delivering content based on use of a central CICP control platform.
Figure 81 is an overview of an exemplary, connected gym that uses a SHCICP-MTCICP and infrastructure controlled by a member management user.
Figure 82 illustrates an SHCICP capturing the motions and actions of a person such as a trainer who has been outfitted with sensors that capture the trainer's motions and actions.
Figure 83 illustrates an interactive and guided work-out routine incorporated into a fitness gym that has an installed SHCICP platform.
Figure 84 is an exemplary overview of the interfaces that can be used for the Figure 81 CICP.
Figure 85 illustrates integration of the Figure 82 system into a SHCICP installed in a gym.
Figure 86 illustrates how the Figures 82 and 85 systems can be replayed.
Figure 87 depicts the Figure 86 system with a feedback loop back into the central SHCICP.
Figure 88 depicts a system based on the Figure 87 system, but with numerous systems providing feedback, that is, reporting back to the originating SHCICP.
Figure 89 depicts a CICP system in a building or venue that is connected with a digital display, monitor or TV that delivers wayfinding, location, navigation and asset location information on the display.
Figure 90 depicts the Figure 89 system, but instead of location information itself, it illustrates delivery of information relevant to a specific location.
Figure 91 depicts a CICP based system that can be used to enhance work flow for workers across a facility on the basis of events at the facility.
Figure 92 depicts use of the Figure 91 system, but with multiple workers.
Figure 93 depicts use of the system of Figures 91-92, and with the CICP connected to various displays, sensors and equipment located in the facility.
Figure 94 depicts use of a CICP system to determine and provide information re movement of a user from one location to another location, and re the destination location.
Figure 95 depicts use of a CICP system by a sports team or training facility for comparing activity data for athletes.
Figure 96 illustrates shows use of the Figure 95 system to provide the activity information in various ways, to various uses and for various purposes.
Figure 97 is a schematic overview of a CICP-based system used to change behavior.
Figure 98 depicts an exemplary CICP infrastructure for use by a city for managing its interactions and communications.
Figure 99 is a schematic overview of a master CICP system for an enterprise such as a national retailer, grocery chain, hotel chain etc.
Figure 100 is a schematic overview of a master CICP system distributed via a Software Developer Kit (SDK) to various levels of developers.
Figure 101 is a schematic overview of a CICP system used to deliver game play on various devices and in various formats
Figure 102 depicts the system described in Fig 101 with feedback loops
Figure 103 depicts the system described in Fig 102 with multiple players connected via a central Contextually Intelligent Geolocation and Sensor Experience Replay Game Processor (CIGSERGP)
Figure 104 depicts the multiple player system depicted in Fig 103 with additional groups of players connected via their own group's CIGSERGP for multiple player groups
Figure 105 is a schematic overview of numerous various CICP systems capturing user data in one common database
Figure 106 is a schematic overview of an end user's communication device communicating with various CICP systems at multiple locations or environments with data gathered about the end user captured, stored and used in a specific end-user database
Figure 107 is a schematic overview of the end user's data in the end-user database being used to interact with a CICP with results of the interactions captured and stored in the end user's database
Figure 108 depicts how the interactions and system depicted in Fig 106 is expanded to interact with multiple CICP systems
Figure 109 depicts how the interactions and system depicted in Fig 107 can be used to interact with new CICP systems the end user comes in communications with
Figure 110 is a schematic overview of a CICP system where a user has a condition that is known and this condition is communicated via the CICP to a series of care givers and law enforcement / rescue teams
Figure 111 depicts the system in Fig 110 when a police officer with a device enters a crowd of people with one communicating with the system depicted in Fig 110.
Figure 112 depicts the system in Fig 111 when connected to a SHCIP with a series of sensors in a location and data base with knowledge about the location.
Figure 113 is a schematic overview of a facility where there are multiple CICP systems, multiple operators and systems, known conditions of the End User and a care team all connected and communicating with a database with known information about the end user.
Figure 114 is a schematic overview of a CICP system that connects a series of end users and their databases with a series of offers and services triggered and presented by the CICP.
Figure 115 expands the system depicted in Fig 114 with end users who have a service or product or offering to sell, promote or present to another user or have a desire to engage in a transaction or trade or sale to another end user via the same CICP as depicted in Fig 114.
Figure 116 depicts a system as described in Fig 115 where the type of end users of Figure 115 replaced with end users who are any of a patient / recipient of care, care giver or health care provider, such as a physician communicating via a CICP system as described in Figures 114 and 115.
Figure 117 depicts a system where a central government has an MTCICP that include several or a series of CICP sub-governmental entities or sub-systems communicating with each other.
Figure 118 depicts an example of the Fig 117 system, for a specific, exemplary use where the sub-governmental entity is a local school and the system is used by the school for active teaching systems that include activity, sensors, student devices and databases with central teacher databases and CICP systems.

Reference symbols or names are used in the Figures to indicate certain components, aspects or features shown therein. Reference symbols common to more than one Figure indicate like components, aspects or features shown therein.

### DESCRIPTION OF EMBODIMENTS

In accordance with embodiments described herein interactive, electronic networks, in the form of computer-implemented, enterprise applications or platforms according to the present disclosure will be described in detail. The embodiments herein are presented in a systems level description. Specific examples of code have been written, and other specific code could be written by persons of ordinary skill in this field of technology and that would enable operation of the inventions described herein. Techniques and commercially available applications for generation of such specific computer-implemented code are well-known and the capability to write such code is well within the level of skill of ordinary coders who work in this field of technology.

In its most general sense, the present invention is a computer-implemented enterprise application or platform configured to provide functionality as further described. Embodiments of the application or platform are preferably intended to work in conjunction with the systems and processes described in International application PCT/US 13/062504, United States application 14/040,677, filed 28 September 2013, now United States Patent 9,338,622 issued May 10, 2016, United States provisional application 61/882,593, filed 25 September 2013, United States provisional application 61/709,710, filed 4 October 2012, United States provisional application 62/324,283, filed 18 April 2016, and United States provisional application 62/379,150, filed 24 August 2016, (the subject matter of which is individually and collectively referred to as contextually intelligent communication platform(s) or CICP(s). The presently described embodiments do not depend or rely on the CICP, but preferably include one or more aspects, components and/or features of the CICP.

The presently described embodiments are directed to CICPs that have a master control component, which preferably is an enterprise holding a master license for that specific enterprise, and having the capability to assign sub-levels of control and various types of access to that enterprise-specific application.

Also, the master licensee is preferably granted permission to sub-lease access to selected and defined sub-licensees. The present computer software implemented application can thereby be distributed in a manner that will permit specific enterprise licensees and sub-licensees to generate commerce by controlling and being responsible for all operations of the specific MTCICP application licensed to that enterprise and its licensees and sub-licensees, respectively.

The multiple layers of control and multiple types of access control within and spanning the multiple layers are advantageous aspects of the present application, and enable to capability of sending the correct or right messages to the correct or right user(s) at the correct or right time and place.

### Multi-Tenant, Real-Time Embodiments Adapted for Delivery of Contextually Intelligent Content, Offers and Experiences to Designated Recipients

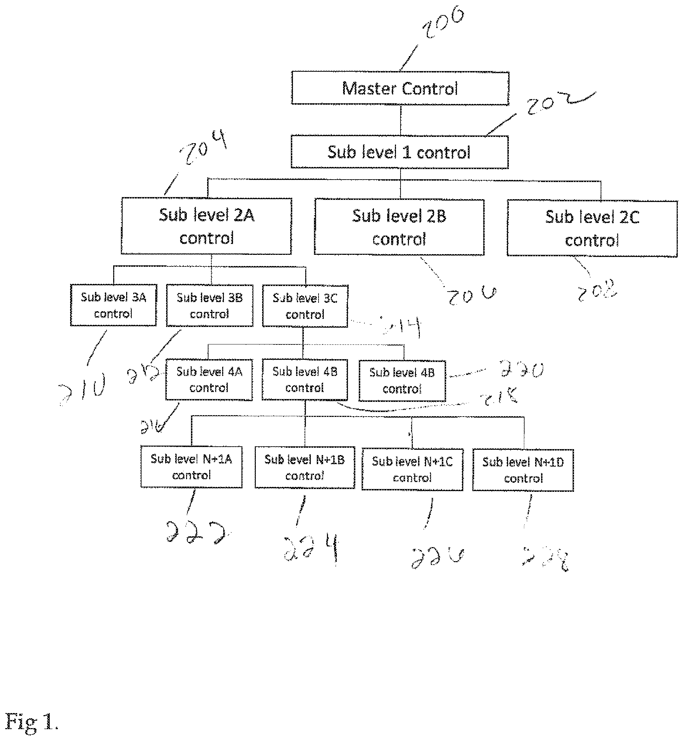

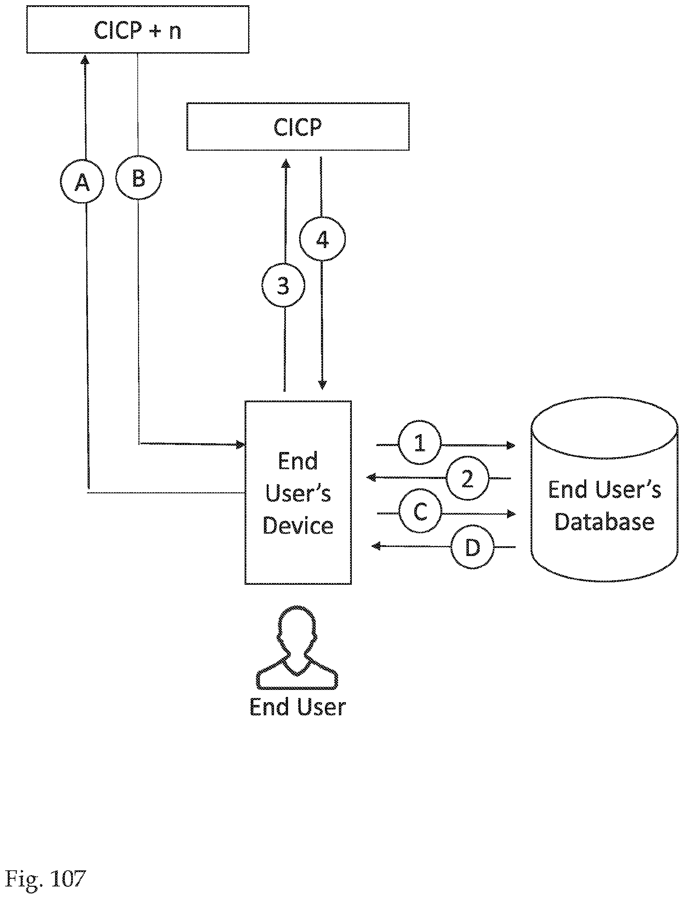

With reference to Figures 1-118 preferred embodiments of the interactive, computer software implemented electronic network application may be configured as a multi-tenant contextual intelligent communication platform (MTCICP) that functions to deliver real-time contextually relevant content, offers and experiences to designated recipients while simultaneously gathering and recording real-time performance data for multiple administrators or users associated with multiple organizations that are connected to the application and having access to various designated levels and designated types of access within, among and spanning the levels and types of access for each organization or group of multiple organizations.

With reference to Figures 1-5, the Master Control 200 may be configured to grant access to designated users for various designated levels, sub-levels, controls, sub-controls, parts and/or components of the application or system based on any of numerous predesignated criteria. As shown in Figure 1 for example, at Master Control 200, the application is preferably implemented for a specific enterprise, such as for example a national chain retail store, a hospital, a convention center, etc. Master Control 200 preferably is computer-implemented software or code that has the capability of controlling all of the types, sub-types, levels and sub-levels of control and/or access for users within the enterprise and for users outside of the enterprise who have been granted some degree of access to a specific enterprise application. Preferably the Master Control 200 will be operated by a master licensee who licenses rights to use the enterprise application for its specific enterprise and who preferably has rights to sub-license rights under a master license. For convenience a person performing the functions of, or operating the Master Control will be referred to as the master control user. This user preferably has the ability to control access to and operations of lower or sub-levels of control as shown in the Figure 1 architecture and to control users at the lower or sub-levels. As shown in Figure 1, illustrative sub-levels of control are shown at sub-level 1 control 202, sub-level 2A control 204, sub-level 2B control 206 and sub-level 2C control 208. The users of the sub-levels are referred herein to as sub-level control users. The Master Control 200 is shown as having one sub-level 202. Sub-level 1 control 202 is shown as having three sub-levels 2A, 2B and 2C at 204, 206 and 208, respectively. Sub-level 2A control 204 is shown as having three sub-levels 3A, 3B and 3C at 210, 212 and 214, respectively. Sub-level 3C control 214 is shown as having three sublevels 4A, 4B and 4 C at 216, 218 and 220, respectively. At sub-level control 4B, Figure 1 then continues, by showing in generalized form the capability of the application to create and function with N additional sublevel controls. The number N can be a large number, depending primarily on the complexity of the specific enterprise and the number of users. In Figure 1, N=4 and thus the sub-level N +1A control 222, N + 1B control 224, N + 1C control 226 and N + 1D control 228 would each be at the fifth sub-level, respectively, and so on with the system capable of having additional controls and users at each sub-level (control E, control F, control G, etc.) and additional sub-levels beyond five sub-levels (sub-level 6, sub-level 7, sub-level 8, etc.).

Preferably the system enables the master control user with authority and capability to control the specific enterprise MTCICP, including all sub-level controls. The system is preferably adapted to enable the master control user/licensee to sub-lease or grant access to predesignated and defined licensees and/or sub-control users.

The enterprise application is preferably distributed or provided to users by conventional means, such as to the master control user/licensee by an Internet connection. The master control user can then further distribute or provide specific levels of control within the specific MTCICP, also by conventional means, so that the licensed enterprise itself will operate the specific enterprise platform in a manner that will generate commerce or some other activity. Preferably, the master control user/licensee will be responsible for all operations of the specific MTCICP, such as, for example, sales and distribution for a manufacturing or retail business; patient care and communication for a health provider enterprise; access to and communication with governmental units for a governmental application; and providing education, instruction and training at virtually all levels and types of learning activities for an educational enterprise. The capability of the application or system to provide the master control user/licensee control with access to and use of each of, and groups of multiple layers, multiple controls at each sub-level and/or multiple types of control of the platform is an advantageous feature of the present system because it provides the capability of ensuring that the correct or right message(s) are sent to the correct or right person(s) or user(s) at the correct or right time and to/from the correct or right place(s).

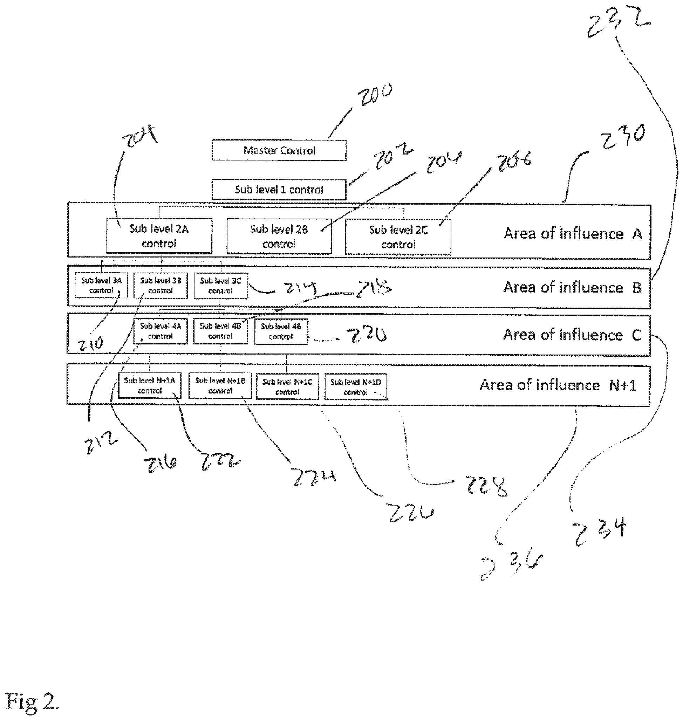

Figure 2 shows a general, exemplary architecture or scheme whereby the various levels of access are grouped into functional of areas of influence, such as sub-level 2 controls 204, 206 and 208 designated as within area of influence A, shown at 230. Sub-level 3 controls 210, 212 and 214 are designated as within area of influence B, shown at 232. Sub-level 4 controls 216, 218 and 220 are designated as within area of influence C, shown at 234. In the general case, sub-level N + 1, controls 222, 224, 226 and 228 are designated as within area of influence N+1, shown at 236. The exemplary system illustrated in Figure 2 is a system that is an extension of the Figure 1 system, and is a system in which the areas of influence are preferably controlled by respective sub-users who are positioned at the various layers of the overall architecture, although defining and designating areas of influence may be tasks assigned to some other system user, such as for example, the master control user. In another aspect of the nature of the areas of influence or definition or designation of areas of influence, an area of influence can be designated or defined, for example, as a geographical area, a subset of clients that designated sub-control users have access to, some grouping of users for which access is time-limited, or for which access is granted on some other predefined criterion or criteria. Thus, the system is adapted to provide for one or more areas of influence that can be defined by multiple criteria, such as a geographical area and specification of characteristics of a user or groups of users, interests of a user or group(s) of users, specific position of the user(s) in the larger geographical area, identity of any device(s) to which the end user has access, any device(s) associated with the end user and so forth. With respect to the system embodiments illustrated in Figure 1 and Figure 2, controls of and for the various levels and controls of and within each level and sub-level are shown. Preferably, specific assignment or designation of a specific degree or type of control and/or access is based on the nature of an area's influence at each of the various layers of system administration, respectively. Preferably, the master control and/or master control user has the capability to assign to one or more of the sub-levels of control, and the capability to set further controls at each level and sub-level. As one example, consider a convention center, such as the San Diego Convention Center, to be the master control and having a master control user. The Convention Center could lease designated Convention Center assets, and lease control of the system's sub-level 1 to a sub-level 1 control user, who could be a convention manager for a specific convention at the Convention Center or the convention sponsor of a specific convention at the Convention Center. The sub-level 1 user would then have access to the leased facilities and leased system during a specific time, such as when that specific convention is open in San Diego. The sub-level 1 control user would then have, for example, access to certain or predesignated sections of the Convention Center during certain or predesignated periods. More specifically, consider the well-known Comic-Con convention in which the convention manager or organization that hosts the convention then leases or sub-leases space in the convention center to exhibitors and content owners during that time. The number and types of levels and controls is variable, and can be changed over time. For example, in the case of Comic-Con, the entire Convention Center might be leased for control by the sponsor. For other conventions, perhaps taking place at the same or overlapping times, such as the American Cancer Society convention and the American Heart Association convention, only part of the Convention Center and part of the Convention Center assets would be leased to each organization, and each organization would have sub-level 1, "geo-control" over only the part of the Convention Center that it leased.

Continuing with the Comic-Con example, one exhibitor might be Marvel, who would lease space in the Convention Center from the convention organizer, i.e., the sub-level 1 user rather than from the master control user, which would be the Convention Center itself. Marvel might want the capability of having a proximity event trigger within its booth, and of having rights to influence only people within a certain distance from its booth. Also, exhibitor Marvel might want to have access to beacons or systems that are outside of the convention center, but included in the offerings by the Convention Center that are available to exhibitors. The system has the capability to provide for this level and type of access, and it could also be included in the lease. The ability or capability for the system to physically locate an end user inside or outside of the convention center is also included within the presently described system though use of various wireless devices. The system includes and uses a combination of proximity sensors, proximity beacons (or "i beacons"), near field communication tags ("NFC") and augmented reality triggers, for example, images that located only within the booth. As used in the present system, proximity beacons, such as "iBeacons^{™}" brand proximity beacons are conventional devices that are relatively small and transmit low power, BlueTooth signals for a specific range. Each preferably has an identifier that is assigned to it and is controlled by one more users of the present system for a specific use or specific application such as the San Diego Convention Center Comic-Con convention. The conventional proximity beacon signaling is received by a sensor, and the signals are then transmitted through the various levels of control in the present system, in accordance with access and control assigned to the device and the users as described herein. When an authorized end user is within the predetermined proximity of the device, the device's signal is transmitted to and received by the end user. Such proximity beacons are available from several sources, such as Kontak.io, Gimbal and Estimote. Gimbal brand proximity beacons are preferred, specifically its Series S10, Series S20 and U-Series 5, although any conventional proximity beacon device may be used, so long as it performs its signaling functions as required by the system described herein.

Considering another example, for example, use in a large retail enterprise, area of influence A could correspond to three countries in which the enterprise operates, area of influence B could correspond to three states in one of the three countries, area of influence C could correspond to three cities or counties or metropolitan regions within one of the states. Within area of influence C, a specific retail store could further designate areas of influence according to products, services or profit centers, such as "toys", "women's clothing", "sporting goods", "restaurant", etc.

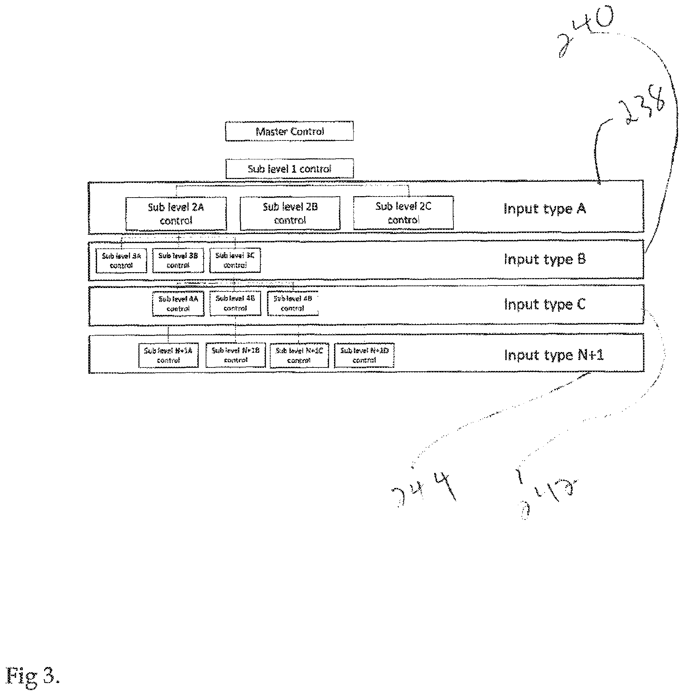

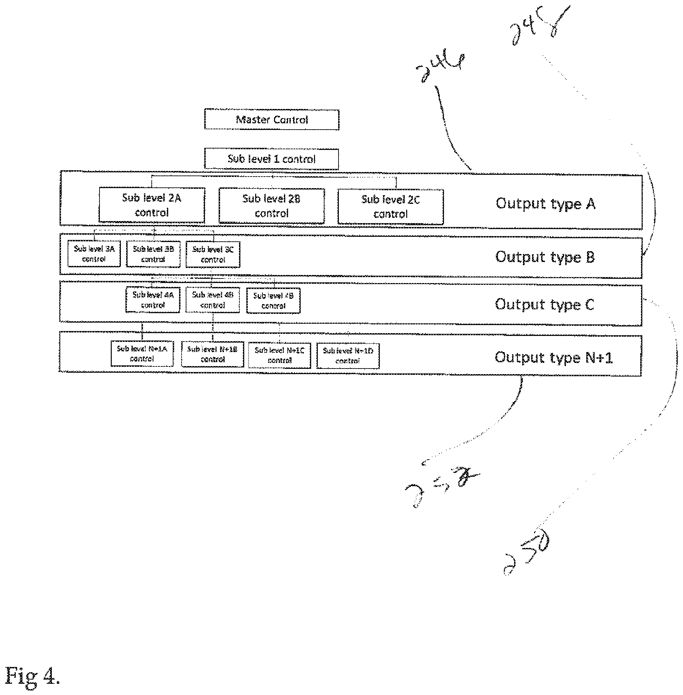

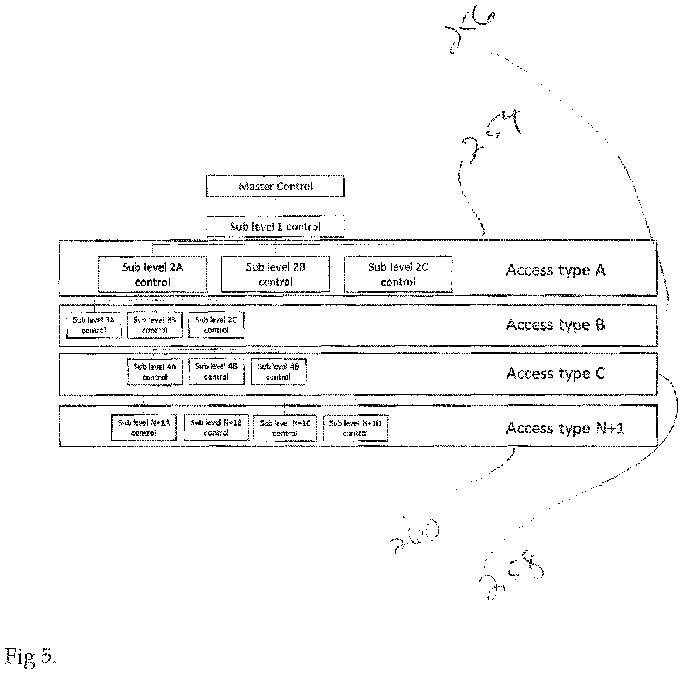

Figure 3 illustrates granting different levels or degrees of control based on difference types of input, shown at 238, 240, 242 and 244, respectively. Referring to Figure 4, another way in which the level and or degree of control could be assigned to users of the application is shown. Here the control is based on types of output, shown at 246, 248, 250 and 252. Referring to Figure 5, another way in which the level and or degree of control could be assigned to users of the application is based on the type of access, as shown at 254, 256, 260 and 258. Here the control is based on types of access to be granted to the various levels.

Figures 2-5 illustrate types of ways in which access and functionality for users can be assigned and controlled, but are intended not to limit the capabilities of the application. In general, virtually any defined feature and or defined set of features, defined function and/or defined set of functions, defined location and/or set of defined locations, defined proximity and/or defined set of proximities may be used as criteria for the level of control and access that can be assigned or granted to specific users or groups of users of the application. Additional illustrative examples are described below.

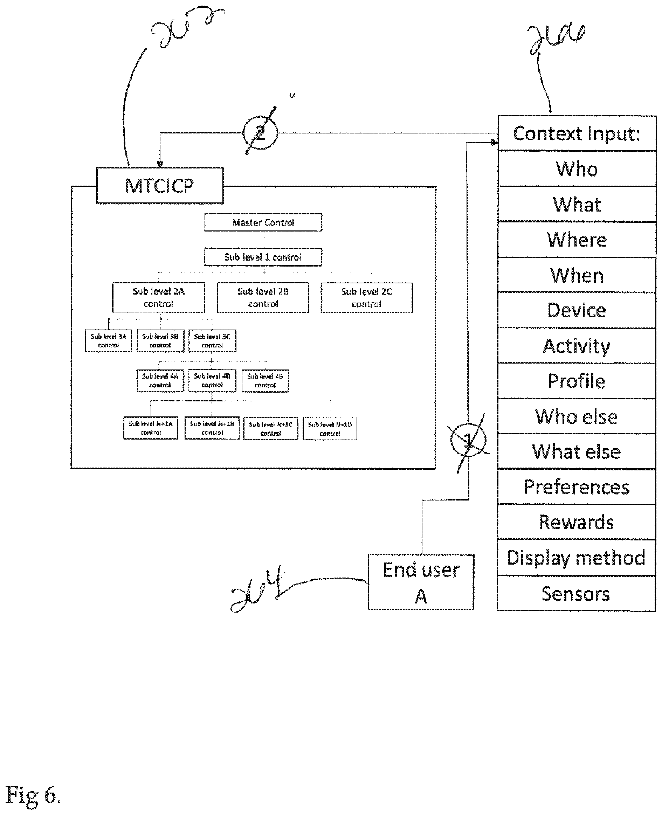

Referring to Figures 3 and 6, Figure 6 shows an exemplary listing of types of information that the system is adapted to receive as input into MTCICP example 262 for a designated end user A, shown at 264. The context input listing for end user A in Figure 6 can correspond, in general to the context input described in the related applications identified above, and shown, for example in a list shown at 266 in Figure 6, and in Figures 2-5 of International application PCT/US 13/062504. The inputs 266 shown in Figure 6 (not individually numbered) include but are not limited to application-specific designations of who, what, where, when, device(s), activity(ies), profile(s), who else, what else, preference(s), reward(s), display method and sensor(s).

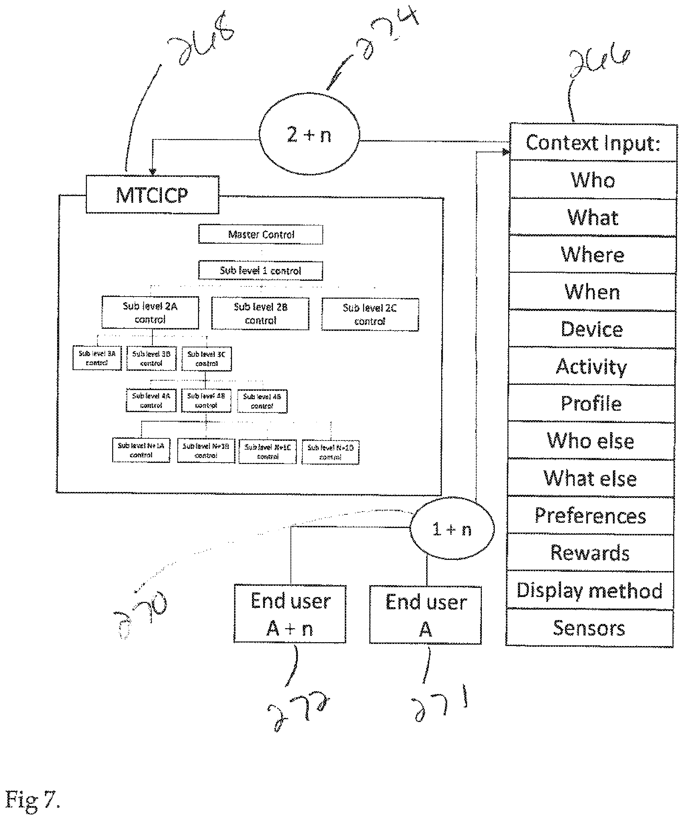

In an alternate embodiment MTCICP 268, illustrated in Figure 7, the application is adapted to accommodate multiple users 1 + n, shown at 270, 271 (end user A) and 272 (end user A + n). The Figure 7 embodiment MTCICP 268 also accommodates multiple users, such as 2 and 2 + n, shown at 274.

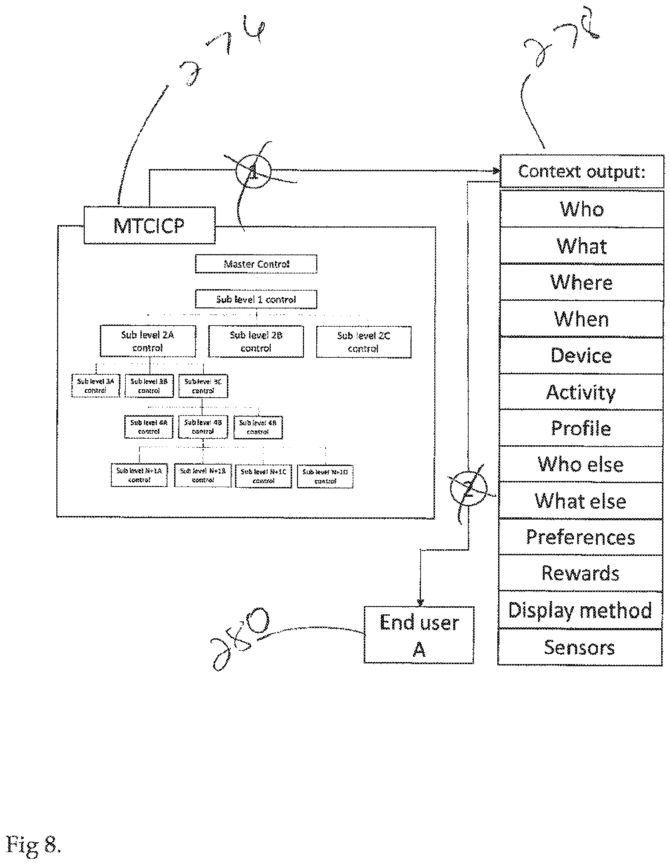

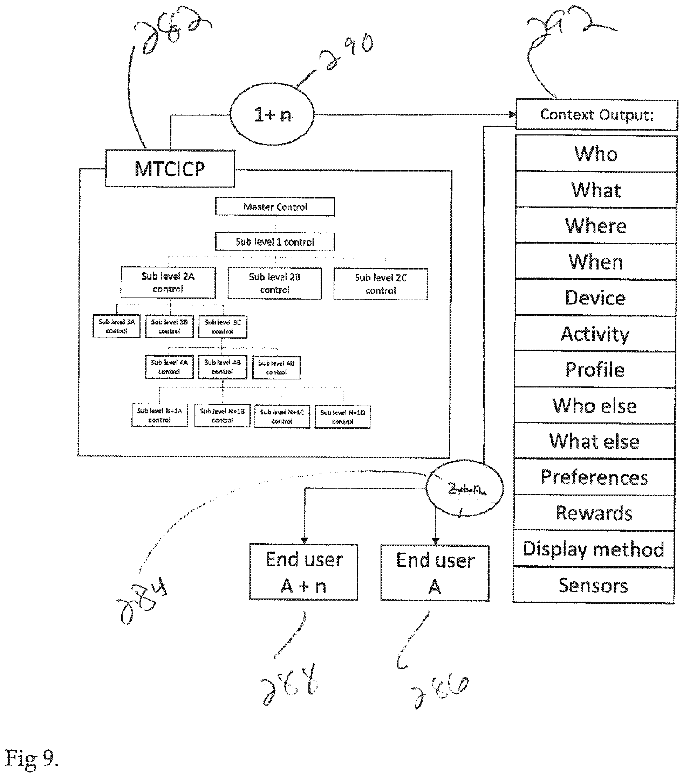

Referring to Figure 9, alternate embodiment MTCICP 276 includes an exemplary listing 278 of types of information that the system is adapted to output from the MTCICP 276 to an end user A, shown at 280 (Figure 8). Referring to Figure 9, alternate embodiment MTCICP 282 illustrates an adaptation in which the system is adapted to include any of numerous users, 284, such as user A, shown at 286, and users A + n, shown at 288, where n is a positive integer, respectively. The Figure 9 MYCICP 282 is also adapted to include multiple context outputs, 1 + n. where n is a positive integer, shown at 290. The context outputs illustrative list 292 may be adapted so that a different list is applied to each end user, or may be a single list applied to all of the users, or may be grouped such that specific groups of users may use the same list, with different lists for different groups of users.

Also, in other alternate embodiments, access to the application can be defined and granted for specific periods, such as at all times, or time(s) limited to one or more defined periods. Access may also be defined and granted on the basis of pre-determined conditions of performance, actions and/or activities, and/or during a defined period, a defined repeated period or for a defined variable period assigned by defined pre-determined performance or other criteria.

Alternatively, access to the application also can be defined and granted, for example, on the basis of a fee, a defined participation of revenues generated, a defined monthly fee, a defined fee per active or non-active user(s) who have been granted or permitted access and who have actively opted into the system, against other defined compensation criteria or, for example, at no fee and for no other compensation.

Alternatively, access to the application can be limited to certain aspects of the MTCICP application, such as limited to certain defined or predesignated sensors, defined set(s) of sensors, defined proximity beacon(s) or one or more set(s) of defined proximity beacons, defined video displays or one or more sets of video displays, or other defined or predetermined connected devices such as kiosks, in-store displays, virtual reality display units that are connect to the system, and any combination of criteria corresponding to devices that are connected to the system.

Alternatively, access to the application can also be granted on the basis of defined, specific end users, defined set(s) of user groups and or defined set(s) of network-connected devices, such as a customer's mobile phone(s), wearable(s), AR glasses, body sensors or other devices connected to the system. The system is adapted to enable access to be controlled through requiring end users to grant permission to have such access via active opt-in functionality as may be part of the master licensee's privacy policies.

The master licensee can also enable its authorized users to have access to, for example, related regulatory, and/or compliance organizations, expert organizations and/or commercial partners, subsidiaries, participants in a franchise structure, local, state and/or federal /national governments and governmental units, tourism organizations, health organizations, disease control organizations, law enforcement and/or other parties in accordance with privacy policies and applicable law corresponding to a particular enterprise, users, groups of users, etc.

Users who have been granted access to an enterprise-specific application can then use the authorized aspects of the MTCICP. For example, depending on the level and type of access granted, the user can control specific devices, can use specific features and functions of the specific MTCICP to deliver content, enable experiences, deliver messages, encourage behavior, reward behavior, monitor behavior, record behavior, encourage commerce, complete sales, reward for sales, make recommendations, encourage healthy behavior, stop and/or prevent unsafe or dangerous behavior, verify delivery of content and offers, verify actions taken, reward to encourage repeat behavior of desired behavior and discourage unwanted, unsafe or inappropriate behavior, and engage in educational activities, such as specific on-line educational courses or training.

As these above actions are taken, each specific MTCICP application preferably records all interactions corresponding to that application.

The various levels and types of access to the application can also be assigned, granted, and/or extended to entities and users that are remote from the initial geographical area of the installation. For example, they can be located in geographical areas beyond the location of the master licensee or the location of the master control of the MTCICP application. In regard to a convention center as an enterprise having a MTCICP installation, master license and master control over its specific enterprise installation, the convention master control could grant limited and specific access to extended entities or users such as restaurants, bars, hotels, shops, local retailers, tour operators, travel agents, taxi drivers and other entities and users interested in communicating with attendees of the convention center, but that are not physically located at that convention center.

Referring again to Figure 6, an illustrative listing of types of content that can be input into the MTCICP 262 from or by a single end user A with one or more connected devices is shown. These types of inputs can include the types of input and from the types of input devices that are described and illustrated in Figures 2-13 of International application PCT/US 13/062504. Figure 7 is a schematic drawing that provides a listing of the same types of context input as shown in Figure 6, but from multiple users, each of which is referred to as end user A + n, where n is an integer, shown at 270.

Referring again to Figure 8, an illustrative listing 278 of types of content that can be output from the MTCICP 276 to a single end user A, shown at 280. These types of output can include the types of output and from the types of input devices that are illustrated in Figures 2-5 of International application PCT/US 13/062504. Again referring to Figure 9, an exemplary listing of the same types of context output as shown in Figure 8 is provided, but with the MTCICP adapted for use with multiple users, each of which is referred to as end user A + n, shown at 288 and where n is a positive integer.

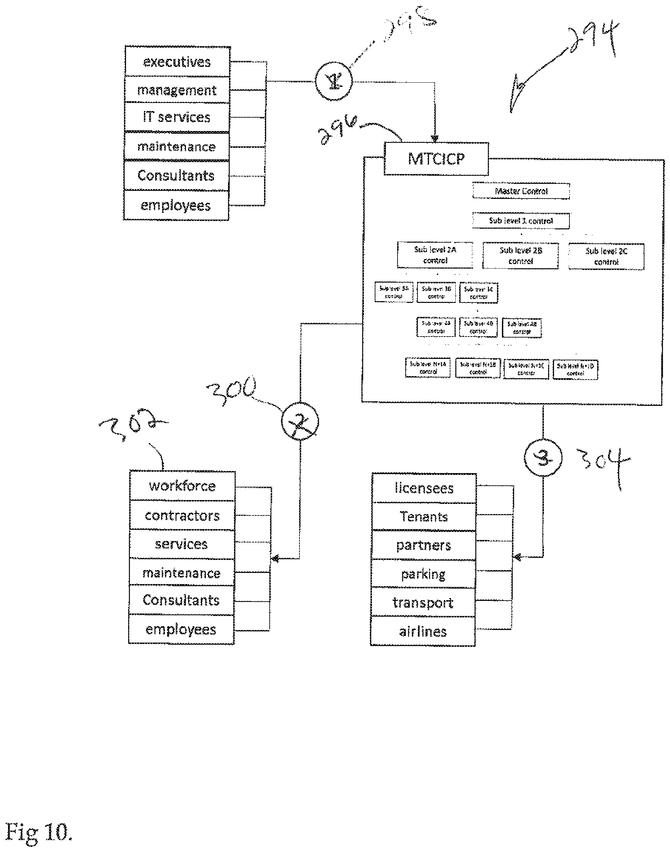

Referring to Figure 10, an alternate embodiment system 294 infrastructure is shown. The infrastructure 294 includes MTCICP 296 and different types and levels of responsibilities, control and input. In this instance, a management team 298 is shown, listing, for example (not individually numbered) executives, other management users, IT services and users, maintenance functions and users, consultants and other employees. The management team 298 users preferably are the users who control the system and define the information that goes into the system. The reference numeral 298 lead line has an arrowhead pointing from the table or list on the left to the MTCICP platform 296, and illustrates what would be some examples of different types of users that could be defined as included in a management team for a specific application, generally in terms of the functions that each type of user or groups of users would perform in comparison to the functions of other types of user, such as workforce users and users whose products or services could be useful to the other users. In another application, for instance, in an airport use example, if an executive is walking the facilities and sees a problem with one of the flight information displays ("FID"s), that digitally displays flight information at gates or other locations at the airport, that executive could send an alert that there is a problem in FID No. 5, for example, and the system will recognize where that location is, will recognize that the input is from an authorized member of the management team and is a request for service, will recognize who sent the alert and will determine the level or type of user who should receive this message. In this example the message preferably would not go to the janitorial staff; but rather, it would go to the IT staff, who would then investigate and address the problem identified by the executive.

Again referring to Figure 10, each of the executive group users 298 would be identified and assigned specific levels of authority, control and communication capabilities. For example, a CEO preferably will have the maximum or ultimate control or ability to send messages to any of the users, but a janitorial staff supervisor could have a relatively limited ability regarding the types of messages that could be sent and where the messages could be sent. For example, a janitorial or maintenance supervisor in the management team 298 would be blocked from sending messages that would change information on any of the FIDs for airlines using the airport. With respect to a convention center example, the various types of users in the executive group would have control, access and functionality from the organizational and operational standpoint of the facility. A designated supervisor could have overall control across the janitorial services and security services as well as the IT aspects of those parts of the system. With a system having multiple layers of supervisors, each supervisor preferably would have an area of influence that corresponds to that supervisor's actual responsibility. For example, the janitorial supervisor in charge of a specific section, such as "Section B" of a convention center, could have and use the same input mechanism, as described in the above example to identify an issue or a problem that that need to be addressed or that some other action needs to take place in Section B of the convention center. At the same time, while an upper management user, for example, the CEO, who may be touring the facilities and sees that there is another issue or problem, or the same issue or problem, and can send the same message or command as sent by the janitorial supervisor. However, the message or command from the CEO could go global to all users in the system, in comparison to the message or command send by the Section B janitorial supervisor, which message or command preferably would be send only to the Section B janitorial staff.

In general, each of the individual users in the management team 298 would have specific criteria that would identify to whom each would be able to send messages to. The system architecture enables the access level of each user to be preassigned and predefined, so that during operation of the system, the system automatically routes commands or other messages from specific users to specific users or groups of users. With this functionality each access level relates not only to access that the system would enable for an individual user, but also access that the individual user would have in order to send or initiate messages to other users or groups of users in the system or platform 294, such as the MTCICP 296 of Figure 10. Additionally, specific enterprise applications of the system can be adapted so that access to a user from other users in the system can be different than access from any specific user, as indicated at 300 and 302 in Figure 10.

Again referring to Figure 10, arrow 300, the arrowhead points towards a group of service providers. The arrow indicates that specific messages initiated by a management team 298 user would be sent to the MTCICP 296 for processing and then directed to a workforce team 302 user. Exemplary workforce users (not separately numbered) are listed as workforce, contractors, services, maintenance, consultants and employees in Figure 10. Other, non-management team and non-workforce users are shown with arrow 304, with the single arrowhead indicating the direction of transmission for certain types of messages. In the Figure 10 example, the exemplary list of other users (not separately numbered) includes licensees, tenants, partners, parking, transport or transportation, such as taxis, and airlines.

Again with reference to Figure 10, consider for example, a convention center as the enterprise, and a tenant user in a section, e.g. section 15, where the tenant sells, among other products, coffee. Suppose there is a coffee spill at that location and the spill is noticed by a convention center management team user, specifically a maintenance supervisor of that section in the convention center. That supervisor's alert of the coffee spill is transmitted into the system at arrow 298, and the system 294 then as shown by arrow 300 alerts the maintenance staff and the service staff of the workforce 302 that is in control of that specific location. The system 294 also identifies the location of the spill, knows the location of each of the section's janitorial staff within the convention center and then automatically routes the message to the section staff user who is closest to the spill. Continuing with this example of a coffee spill, and the other users identified by arrow 304, for example, the system 294 would send a message to the tenant who sells coffee in that section. That tenant would not be responsible for cleaning up the spill, but would want to know about it and be assured that the spill was being cleaned up by the convention center staff, and the message to the tenant would provide that information and assurance. In this example, the system alerts the tenant of that section that a facility manager has identified the spill and the cleaning staff has been assigned to clean up the coffee spill.

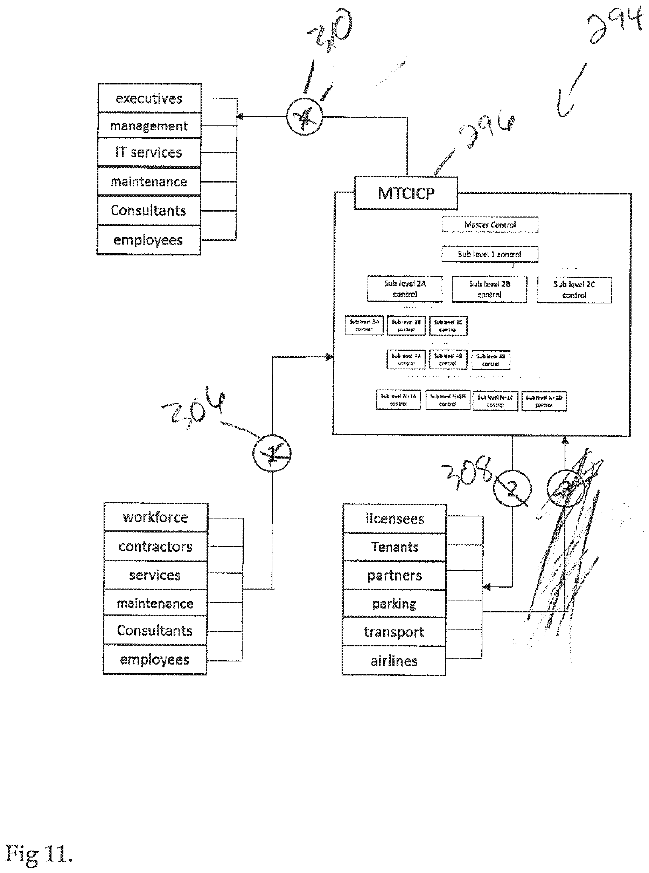

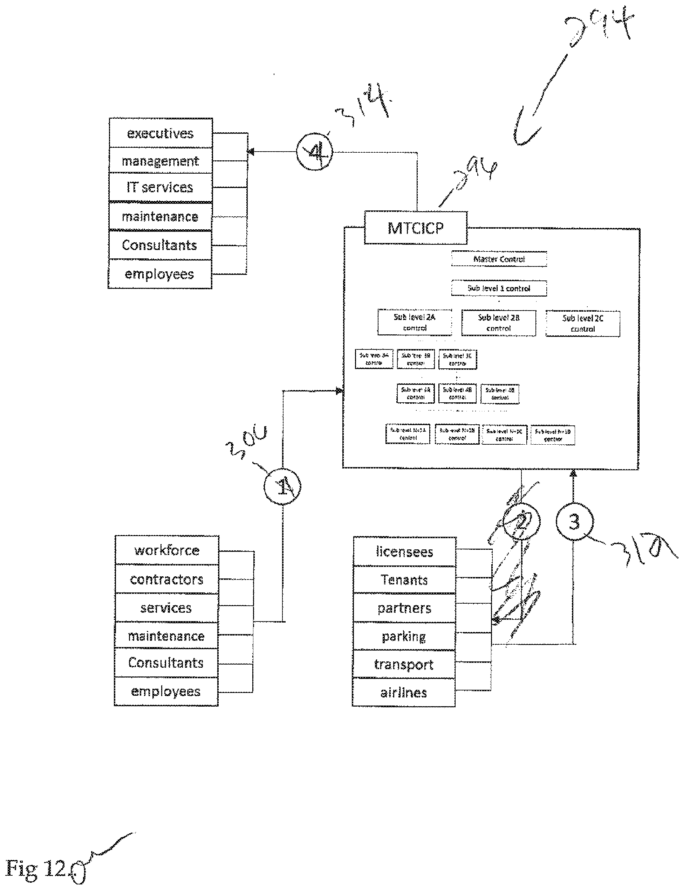

Referring to Figures 11-12, the coffee spill example described above in regard to Figure 10 is described, but from the perspective of the messages originating from and being received by affected users as the spill is being cleaned up (Figure 11) and after it has been cleaned up (Figure 12). As shown in Figure 11, the spill is being cleaned up by a maintenance person as shown at arrow 306 by a message from the user who is cleaning the spill with the arrowhead pointing to the MTCICP 296, which message is transmitted to the tenant, shown with arrow 308pointing to the tenant, and to the originating reporting executive, shown at arrow 310. Referring to Figure 12, after the spill has been cleaned up the tenant has verified the clean-up as shown with arrow 312 pointing to the MTCICP 296. A feedback report from the system 296 to the original supervisor is transmitted as shown by arrow 314 pointing to the original supervisor. In summary, Figures 10-12 report the history of an incident, from discovery to reporting completion of corrective action.

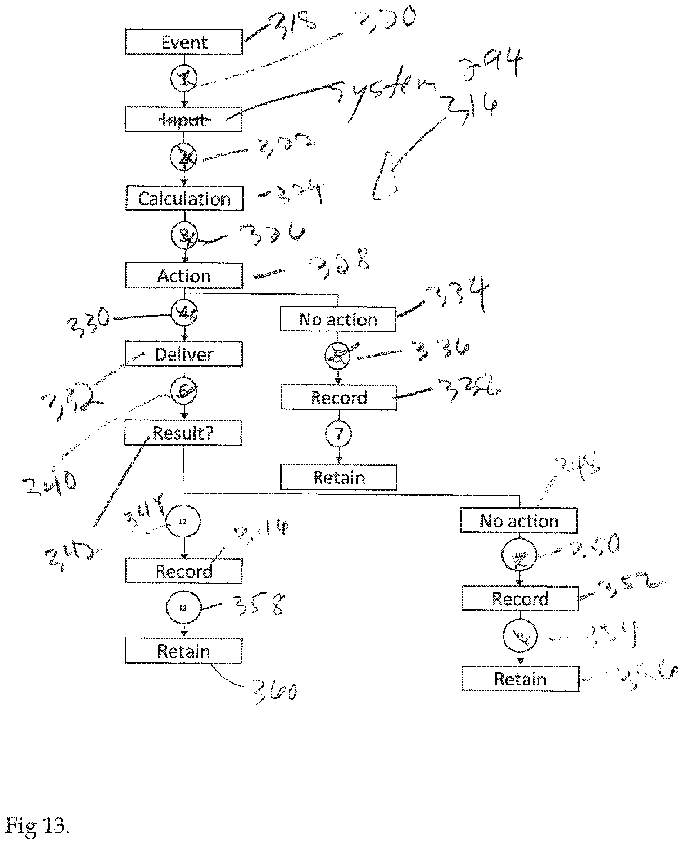

Referring to Figure 13, an event history 316 is shown. The event history preferably includes information on the actions taken, generates a record of the actions taken, and retains that information. An illustrative architecture or schematic flowchart is shown in Figure 13, where an event occurs at 318, and that event is input into the system 294 at arrow 320. The system 294 then at 322 makes a calculation or determination 324 based on this event, for example, simply that the event is recorded and no action is taken, or that some action is to be taken at 326. The calculation can be based on a pre-programmed algorithm and that can be complex or can be simply a yes/no decision, as will be understood by those skilled in this field. The action, shown at 328, if any, is then transmitted or delivered to the affected user(s) at 332, or in the case of no action taken, shown at 334 there would be no transmission, shown at 336. In the case of no action, the "no action" event 334 is recorded and retained by the system at336 and 338. When an action has been taken at 328, the result is delivered and recorded as shown at 330, 332, 340, 342, 344, 346 and 358. If no further action results from the delivery, then a "no action" is recorded and retained as shown at 348, 350, 352 and 354. In either case of "no action" or when an "action" has been taken, the record is retained in the system, as shown at 356, and 360, respectively.

Specific algorithms used in specific applications will be different according to and depending on the specific use of the platform or application of the system 294 and creation of specific code for such specific applications are within the skill of those of ordinary skill in this field. For example algorithms in a system for use in a sporting venue such as a stadium would be different from algorithms in a system for use in a convention center, or in a system for use in a national, retail chain. Writing such specific use code or algorithms is within the skill of those skilled in this field and all are considered to be within the scope of the presently described inventions. For example, algorithms for use in a sports oriented system where the events would be based on sensors on the body of one or more players during sports action would be different than algorithms for a marketing platform where an advertisement is presented on behalf of a beverage manufacturer and/or a specific restaurant, for example.

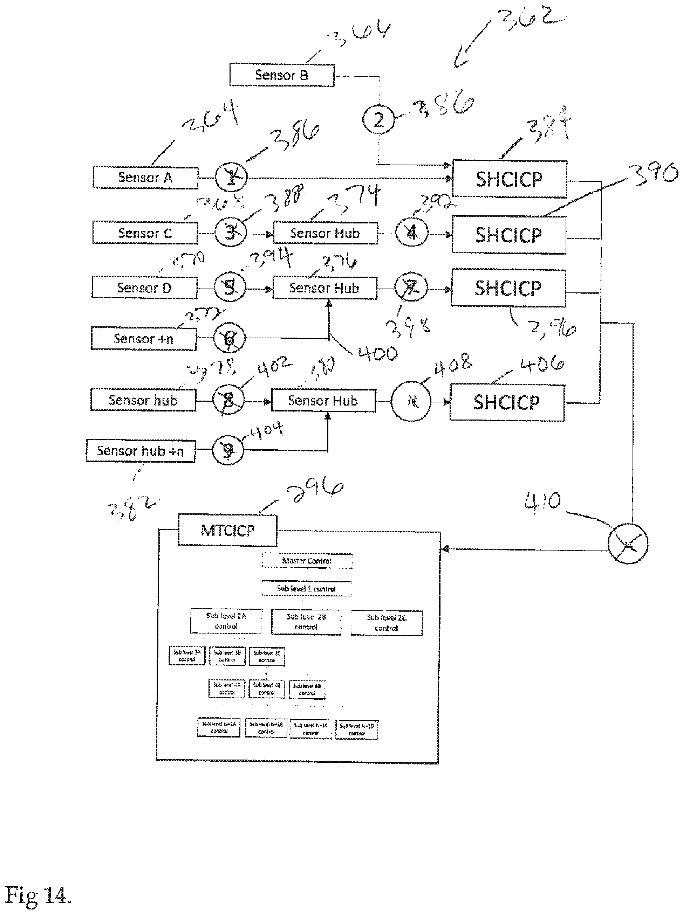

Referring to Figure 14, an alternate embodiment including a sensor network infrastructure 362 includes a series of sensors 364, 366, 368, 370 and 372 identified as Senor A, Sensor B, Sensor C, Sensor D and Sensor +n, respectively. The network 362 also includes Sensor Hubs 374, 376, 378, 380 and 382 that are connected together and in communication with or connected to the system as shown. Sensor A communicates with Sensor Hub Contextual Intelligent Communication Platform ("SHCICP") 384 as shown at arrow 386. As an example of a sensor, in this instance, a sensor can be a simple accelerometer that could be tied to the shoe and has blue tooth communication to another sensor that may detect the person's moisture, or sense how much that person is sweating. Those two sensors are adapted to communicate with a sensor hub, which in this instance a sensor hub can be the program that resides on, for example, a Samsung Gear S2 brand watch. The watch would be adapted to include a component of the CICP that combines the sensory input from each of these two sensors before it transmits the information to the MTCICP 296. Sensor B at 366 also communicates to SHCICP, as shown at arrow 386. Similarly, Sensor C at 368 communicates with Sensor Hub 374 as shown at arrow 338, and Sensor Hub 374 communicates with SHCICP 390 as shown at arrow 392. Sensor D at 370 communicates with Sensor Hub 376 as shown at arrow 394, and hub 376 communicates with SHCICP 396 as shown at arrow 398. Sensor + n, at 378 also communicate with Sensor Hub 376 as shown at arrow 400. Sensor Hub 378 and Sensor hub + n at 382 communicate with Sensor Hub 380 as shown at arrows 402, 404, and Sensor Hub 380 communicate with SHCICP 406 as shown at arrow 408. SHCICPs 384, 390, 396 and 406 communicate with MTCICP 296 as shown at arrow 410.

As also shown in Figure 14, at 370, 372, 376, 394, 396, 398 and 400, information detected by one sensor could affect, in some way, the value that is output by another sensor. In other words, two or more sensors in communication with a single Sensor Hub and/or a single SHCICP need not be totally independent of each other, but rather the information output from one sensor could depend, in some way, on data that comes in from another sensor or other sensors. A Sensor Hub could be simply a hub that combines the data, and only collects and transmits data forward to a SHCICP. Sensor Hub CICPs, such as at 384, 396 and 406 preferably have algorithms that function to combine data and to define an output that goes into MTCICP 296. A specific system embodiment can be adapted to include sensor to sensor communication, sensor to sensor hub communication, multiple sensors to a common sensor hub communication or multiple sensor hub communications to a common sensor hub in order to be transmitted through the system and into the platform. The sensor hub could be merely a pass-through, much like a switch, or, alternatively, it could also include some processing capability, but preferably the main processing capability will be in the SHCICP where the data is aggregated. The system can be adapted so that aggregation would be in a mobile device, in a series of mobile devices, in a field-based computer system, and/or in a call-by system, for example. As shown at arrow 410 in Figure 14, output from the sensor hubs is transmitted to the MTCICP 296.

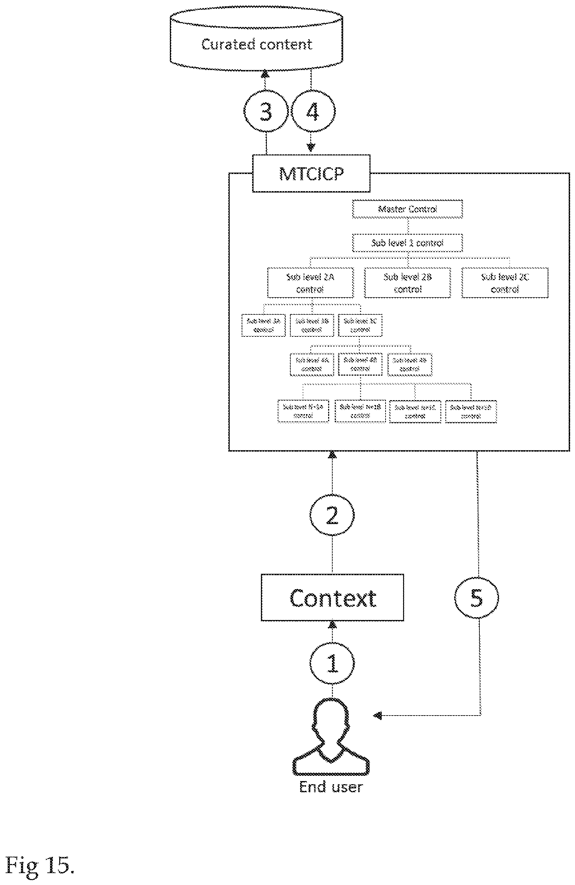

As an example of how a Figure 14 sensor-based embodiment could be adapted to operate or to be used, consider that the enterprise is a football team. In this example each player, during a training session at a training facility, is fitted with sensors on his shoes, ankles, wrists and/or in his helmet. Each sensor has a relatively low power transmitter and has the capability to define or generate data representative of the mobility of each body part, the rate of speed and the acceleration of each body part during play. These data are then combined or aggregated via an algorithm to create a full picture of the activity, that is, data representative of the motions and actions of the player. The sensors are preferably of low enough power, low enough transmission range and sufficiently lightweight to not adversely interfere with the activities of the player, but have enough power and transmission range to generate data useful for the intended purpose of the invention. For example, a hub could be a Samsung Gear brand watch or a watch-like device that is worn on the wrist or elsewhere on a user's body. The hub functions to collect the data from the sensors and to transmit the data to the server as described, for example, with reference to Figure 14. Continuing with the football player example, another sensor attached to the player could generate data that would correspond to or measure blood pressure or pulse rate of the player, in real time during play. Also, the sensor set could include a motion sensor, or a moisture monitor to determine the sweating level of the player. The hubs and SCHICPs could combine all these data to create a composite picture or data set for each player on the team and that would be representative of the player's condition. As another example, one or more accelerometers could be placed on a player's helmet and would be adapted to provide data representative or directly proportional to the force of a hit during play, and that might provide other information, such as likelihood of a concussion resulting from the hit. Figure 15 illustrates use of the platform for delivery of curated content, for use in, for example a museum. The museum has an MTICP system in place, has a content that is curated around specific exhibits. A person end user, who is a visitor to this museum, can experience that context as the user enters into the museum, and near the exhibit. The MTCICP system can control delivery of the content by location of the user, by whom the content is delivered, what content is delivered to whom, how and when. The experiences that are being presented are curated in such a fashion that they have been prepared and approved by a control-user, such as a museum board of directors. The methodology of the delivery of the contents can vary. It can vary based on location. Delivery doesn't have to be only on the premises of the museum for instance. Now the content, the curated content, can be delivered on the mobile device of the user when they are at a specific location or area, for example, the ruins of Pompeii or at some other site of historical significance. Here curated content means that somebody of authority has created or approved information that is related to a specific area of topic. It is unlike an advertising campaign, which is about marketing and defining a sale, and it is unlike a sports event where input is from athletic performance.

Referring to Figure 15, the end user is shown at 1 coming into a context that is defined by the MTICICP, recognized by the MTICICP so that the curated content database is accessed at 2, 3, and information relevant to that end user, based on the user's cross-referenced, personal information, is pulled from the curated content at 4, and that information in the right format is delivered to the end user at 5.

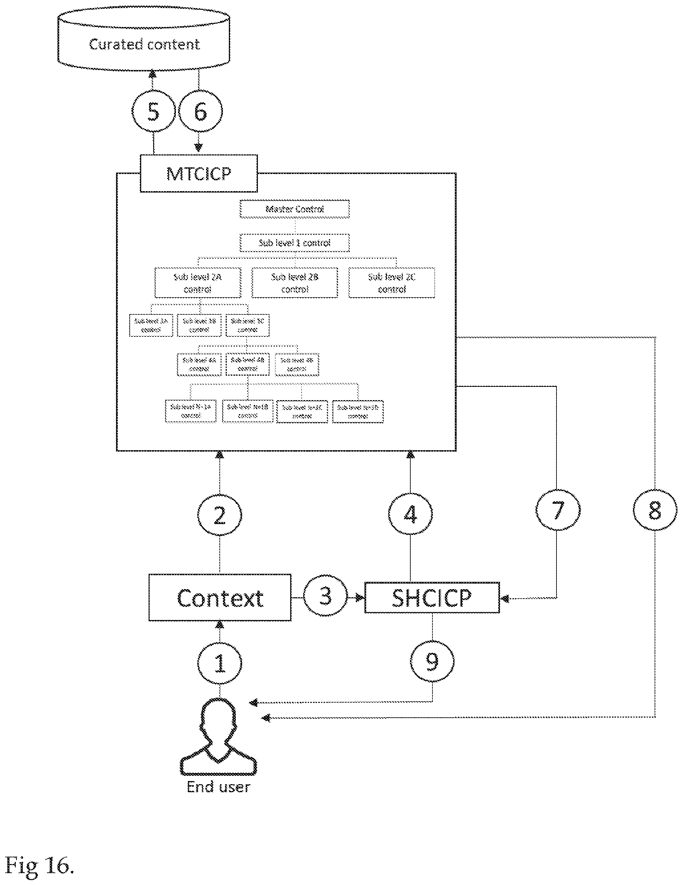

Figure 16 illustrates a system adapted to enable context relevant, curated experience to occur using the present platform. In comparison to the Figure 15 system, the Figure 16 system includes a sensor hub within the museum. The sensor hub can be, for example an interactive display and can now identify the presence of the end user. The curated content could be virtual reality experience such that when the user enters the environment, such as near a particular exhibit in the museum, a trigger is activated and the content is sent. The content could be an immersion type experience, i.e., a 4D type environment where there is sound, video, wind and mist to create a virtual experience of what may have happened in the past. All triggered with curated content triggered by the sensor system that is embedded in that environment, controlled by an MTCICP and via a sensor hub CICP.

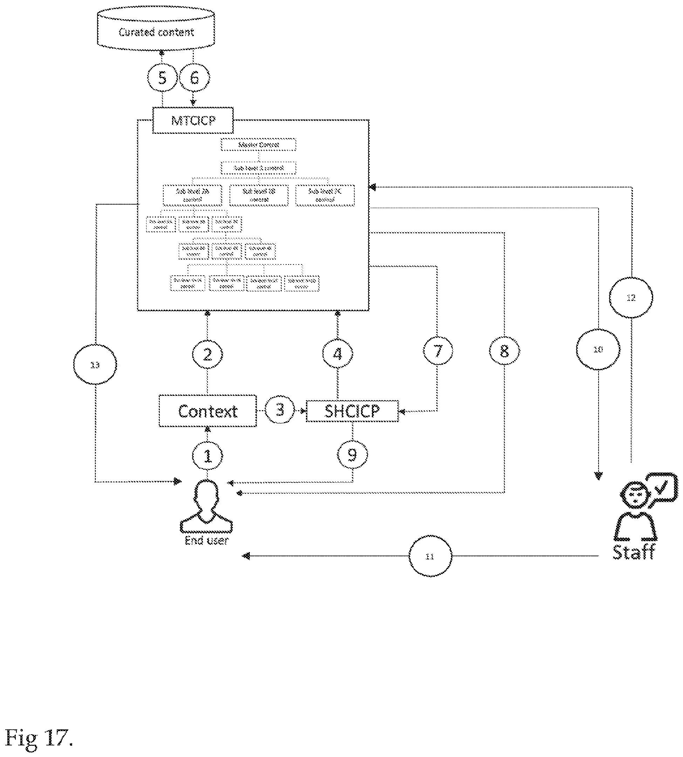

Figure 17 illustrates use of the platform as a curated content provider, and in relation to Figures 15 and 16 additionally provides the capability of alerting a staff member of the presence of the visitor-end user in an environment that has delivery of curated content via a sensor hub driven infrastructure. An alert of the visitor's presence is transmitted to the staff so that that the staff member can enhance the experience for the visitor. Also, in a similar fashion but in a different end use - a retail business as the MTCICP - in which and the end user is a shopper. In this case, the curated content would be information about an item for purchase, such as a laptop. The SHCICP could be an interactive display of that computer where, when the customer comes in proximity to the computer augmented reality will be shown over the computer to identify the various features that are relevant to that specific computer. As these interactions are happening and the end user is consuming this curated contents about this laptop, a salesperson is alerted about these interactions and is receiving from the MTCICP information about the end user so that the salesperson can come to the end user with information to help close the sale.

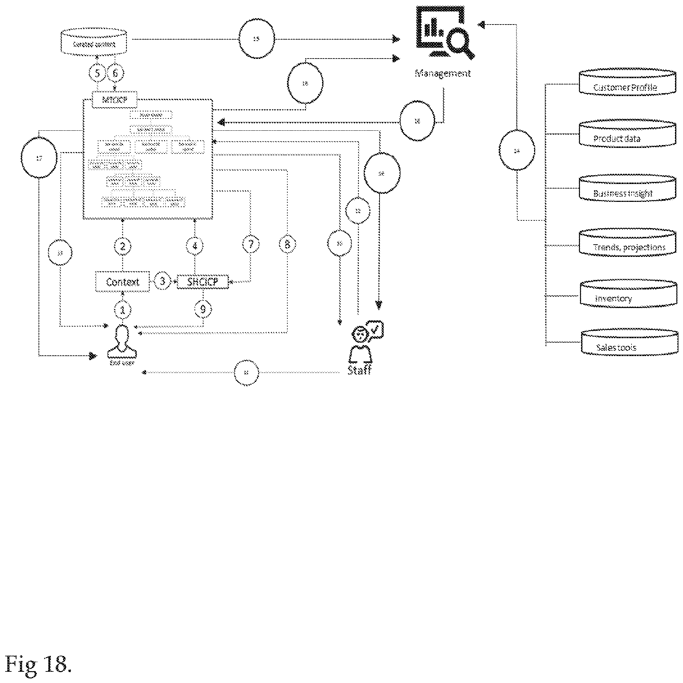

Figure 18 illustrates a curated shopping experience of Figure 17, and including components of the management oversights and capability to enhance the curated contents based on a series of business intelligence data, such as shown at 14, a company-wide customer profile of all its customers, product data, etc., that is useful to the management of a retail store. With use this this platform configuration the system will have information about the user to maximize the chances that a sale can be made to the user based on the historical information the system knows about the user. Also in order to make sure that the right product is sold, management needs to have control of what's in stock, the inventory levels, what's likely to sell out now and what would be appropriate incentives to sell designated products. Examples of business insight could include trends, such as the weakening dollar versus yen, and should a certain type of products be pushed on a specific day, status of future delivery of orders of merchandise, staffing requirements or staffing issues, forecasts of an upcoming snowstorm or a hurricane. In the present example, trends and projections are intended to be forward looking as where the business wants to go, rather than known information and predictions on what is actually going to happen and what is happening within specific areas. Sales tools could refer to, for example, information such as the best words in order to sell a particular product or special features of a product in comparison to a competitor's product.

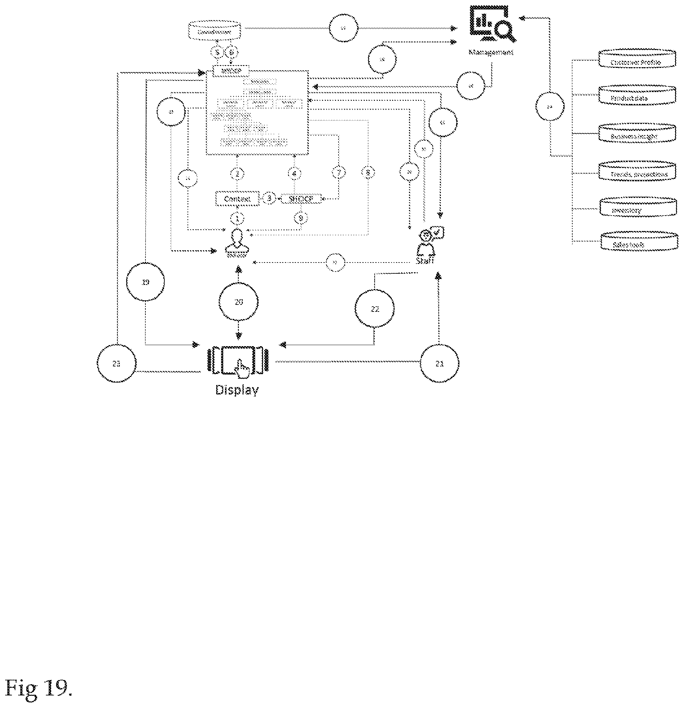

Figure 19 illustrates a curated, in-house curated experience platform with a secondary display that is preferably in the physical location of the end user, or is otherwise identified. This display displays curated content that is relevant to the end user when the end user is in front of this device, and will report back to the MTCICP when that user, shown at 20 is in front of that specific display. The system would also identify and display back to the sales staff that the end user is in front of this specific display. It will also inform the sales staff of the content that has been presented so that the staff member can go back in front of the display and engage the end user with the benefit of having information about the end user and the content provided. It can also present information to the sales staff about the end user such as past behavior and any other data that may be associated to the end user so that the staff member is well prepared before engaging with the end user.

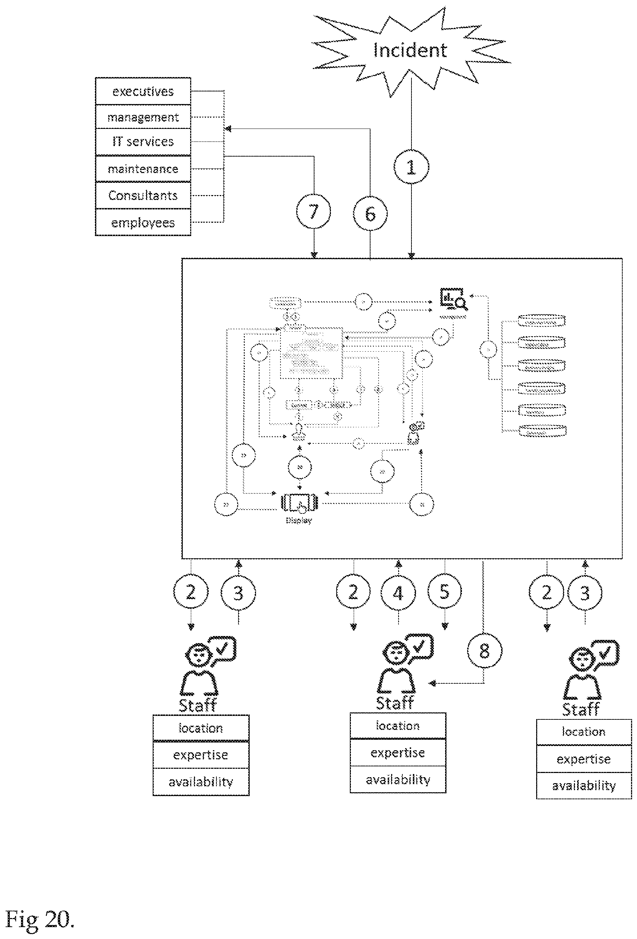

Figure 20 is an extension of Figure 19, and includes additional staff members and an "incident" at the physical location. The incident, shown at 1, could be, for example spilled coffee, an alert of arrival of a VIP member at a stadium, arrival of a VIP guest at a hotel, etc. This incident would alert several staff members, at 2. Any staff member who could not address the incident would notify the system with a rejection, at 3. Another staff member who could address the incident would accept the responsibility at 4. Information about the incident is provided at 5. The incident report is communicated to the executive at 6. The executive may provide additional communication or information that is relevant to this instance at 7, and all of that information is then sent to the staff member at 8.

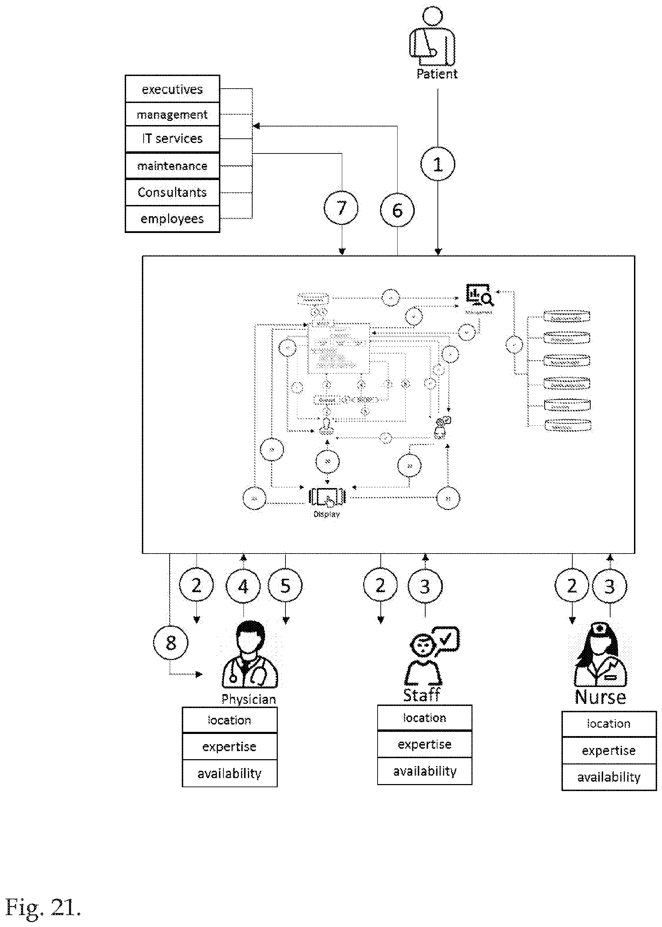

Figure 21 illustrates a contextual patient's communication tool, for a patient to raise an alert or request for help. In this instance the patient, shown at 1, has an issue which is detected by a device and transmits an alert into a facility that has an MTICICP system that tracks the device. In this instance, the issue is reported to all of the staff members that are on call at the health care facility at 2. The alert comes to the physicians, other staff, and the nurses on call. In this example the issue raised by the patient is an issue for the physician to handle. So the non-physical staff members reject the message at 3. The physician then responds with an acceptance at 4. Verification is sent to the management and the administrators of the facility at 6. Any information that is relevant to this interaction, such as insurance information, medical records, etc., is transmitted back into the system at 7 and the physician gets a "packet of information" at 8 so that he is fully informed about the incident and who was involved.

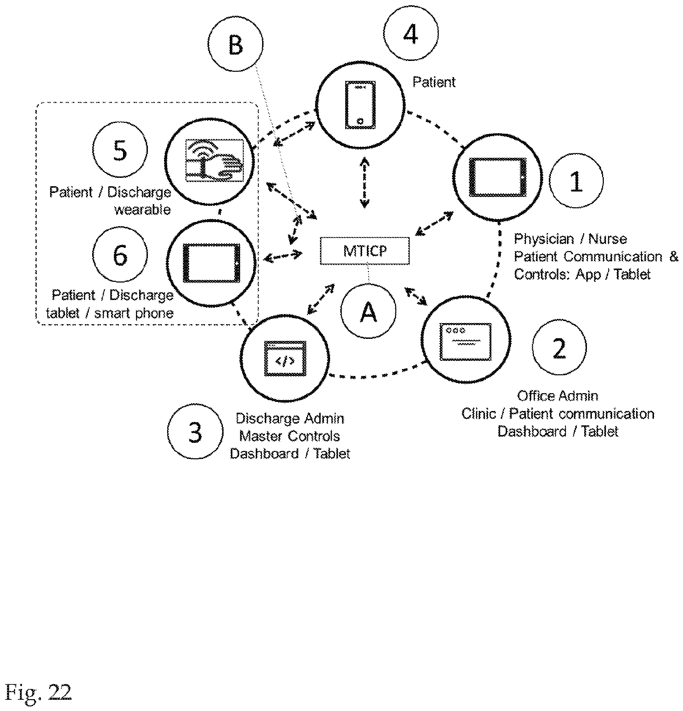

Figure 22 illustrates a discharge patient kit, in which a patient, shown at 4, has been in the hospital and is discharged from the hospital. This hospital has an MCICP system that includes a patient application, a wearable device such as a wristband, shown at 5, and a tablet shown at 6. The tablet contains relevant and information useful to the patient about his/he condition and any procedures needed to be followed to recover. It can contain information such as contact information to the care team such as physicians and primary care physicians, pharmacy and other relevant information to the condition of the patient and the procedure that has been performed. The wearable is a communication tool that sends reminders and alerts to the patients about taking medications, verification that the person has taken the medication etc. This kit goes with the patient when the patient leaves the hospital, and takes home, post procedure. The kit provides a way for the staff, the physicians and the administration to maintain contact with the patient, encourage compliance with medication, and remind the patient to make follow up appointments. The system's CICP will record and retain all interactions within the system to ensure, verify and monitor compliance.

A table or dashboard, shown at 1 in Figure 22, can be used by a physician and a nurse can use as an input into the MTICP and also, output from the MTICP so results can be displayed on this device . An office administrator would have access to the system via a tablet or dashboard, shown at 2. The administrator users would be somebody who has more control of scheduling and has access to a dashboard that is potentially in a computer in the office. A discharge administrator, shown at 3, is also somebody who has control of the platform via dashboards. The patient's tablet, shown at 6, preferable also contains information about the discharge procedure, contact information to all the care team, nurses and staff members and information about how to address the recovery period. This tablet preferably also communicates directly with the wrist device worn by the patient or can connect directly to the MTICICP via other means such as 3G or WiFi. The wrist device communicates with MTICICP. The MTICICP alerts the patient when it is time to take medication. The patient acknowledges receipt of the message and will say yes, I'll take the medication, thereby providing a medication compliance trigger back into MTICICP. Compliance can be displayed to the physician, the nurse, the administrator and the office administrator so that all are award that the patient is complying with the regiments that they prescribed. If the patient fails to acknowledge, an alarm can be sent to the discharge administrator, who can then contact the patient directly. If the wearable has detected an indication or fall, similarly an alarm can be sent to the discharge administrator for action, such as calling an ambulance or contacting the patient.

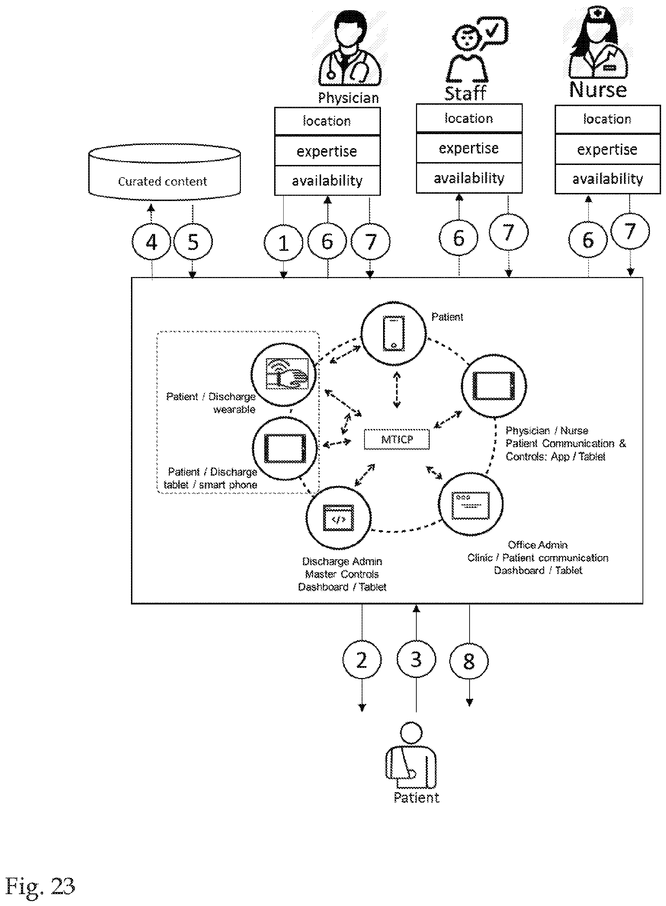

Figure 23 illustrates a discharge kit as shown in Figure 22, and with the capability of providing curated content to the patient. Here there is a need for the physician to provide information to the patient and with a response. In this example, medical information about a procedure is provided from the physician at 1 through the MTCICP. The information is delivered either via the wearable or the patient discharge tablet at 2. The response is at 3, which is then put into the curated content in case that there is a complication that has occurred. The system then can automatically identify whether there is a problem and if so communicates a message to all of the caregivers that are associated with the patient, namely the staff, the physician and the nurse. Any of them that have an input to provide based on the information from the curated content and the answer from the patient, at 3, then delivers a response back into the system at 7. A response from the responding caregiver is then sent via the MCICP to the patient at 8.

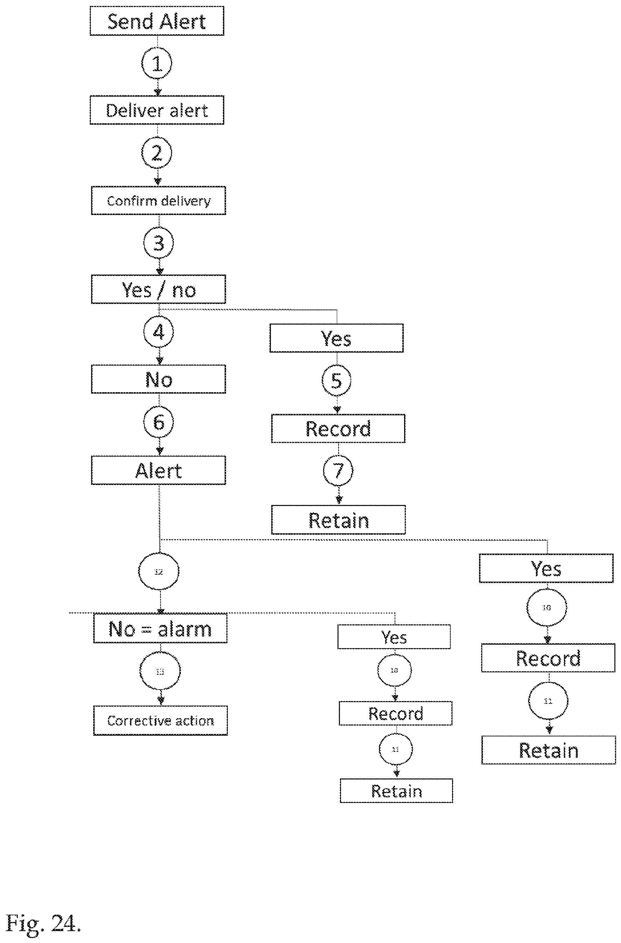

Figure 24 is an application to the ability to alert, and send the right message to the right person at the right time and place with an alarm, or with no alarm. In this example an alarm is sent at 1 to a patient who has been notified to take medication and the alert is delivered and confirmed at 2, 3. If the patient responded with a yes, at 5, then the response is recorded and retained at 7. If there is no response, at 4, an alert can be sent at 6, and if that alert is acknowledged it can be recorded and retained at 10, 11. If there is no alert or no response to the alert, an alarm can be sent and now a corrective action can be taken, at 12, 13.

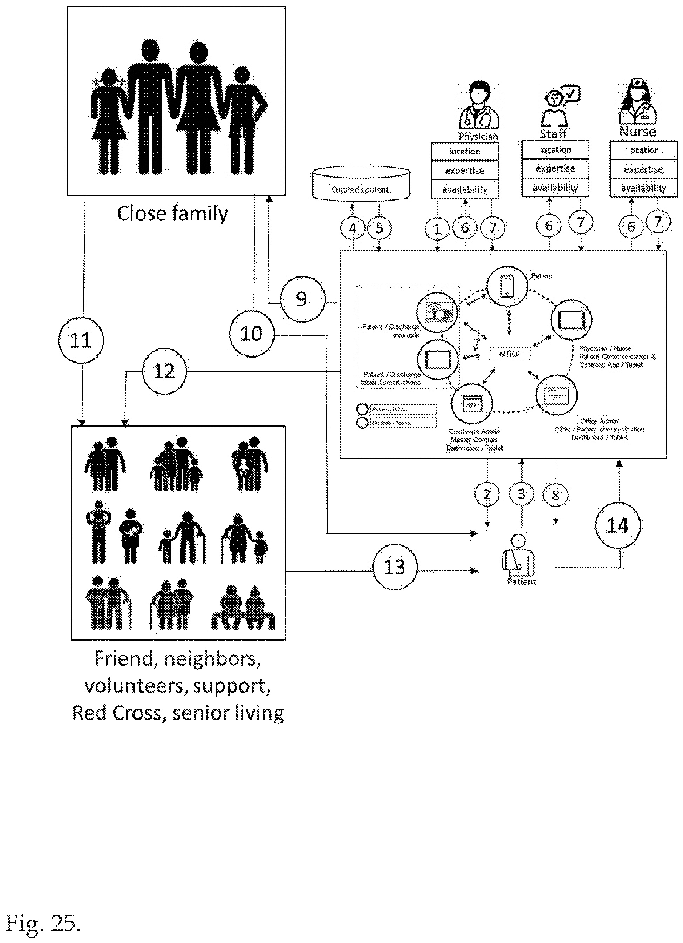

Figure 25 illustrates a contextual intelligence system for extended caregivers. This is the same basis system as in Figure 24 that provides for delivery of curated content to the patient, but includes two additional levels of influence for the patient. One level could be friend or close family member, and the alert system can alert that person that that there might be a problem as shown at 9. As shown at 10, that person is now alerted about the patient and asked to verify that everything is well. If that action has not happened or the family member cannot go to the patient, and then the system could alert a use in a second group, such as a neighbor, volunteer, etc., as shown at 11. Whoever acknowledges that they can respond, will get more detailed information at 12, and then contact the patient at 13. Regardless of who is contacted, the communications are recorded and reported into the system at 14.

Another capability of the application, particularly advantageous when the enterprise is a convention center, or the like, is inclusion of facility sensors as input devices. In such instances, sensors in the facility can also communicate with the MTCICP and provide useful input data or information. The information can, for example range from audio, temperature, movement, noise, moisture, smoke or other conditions that the sensor(s) detect, record and/or transmit. The process of alert and alarm communication through the MTCICP will be routed to the correct MTCICP connected device. For example, a connected smoke alarm, when activated would cause the application to route the alarm to the Master Control and to the nearest fire station.

As another example, connected sensors and the MTCICP could also be used to verify that a staff member has performed a given task. Such a task could be to open a refrigerated cooler or vending machine that is used to display and present cold drinks for sale or that dispenses cold drinks, respectively. The cooler or vending machine would have a proximity beacon. The enterprise specific application would provide information about the location of the cooler is, by, for example a map on the device. As the staff member approaches the cooler, the proximity beacon will trigger an event on the staff member's device. This event is transmitted to the MTCICP server, recorded and retained as when the staff approached the cooler. The beacon inside will also transmit the temperature around it and its battery life. Both are transmitted to the connected device which then transmits this to the MTCICP. This is also recorded and retained by the MTCICP. Once the cooler door is opened, the temperature will drop. This is observed by the beacon sensor and transmitted to the staff member's connected device that then sends this to the MTCICP. This event is recorded and retained. The process is repeated when the staff member closes the door, and moves away from the cooler. Each event is recorded and retained by the MTCICP. Access can be granted to the MTCICP to the staff member's boss, his supervisor and the owner of the organization that services the coolers. The owner of the facility where the cooler or vending machine is placed can also be granted access to the MTCICP to review the collected and recorded data. The producer of the drinks that are sold or dispensed can also be granted access to the MTCICP to review the collected and recorded data. The same MTCICP has thereby been used to direct staff member to perform an action, verified that is has been performed, verified that the staff member was at the location, recorded when the staff member arrived, recorded how long he was there, and recorded when he left. The same system then can grant the ability to verify these events by the staff member's boss, the owner of the cooler and the owner of the location - all different entities and organizations.

The MTCICP can also be used to control the actual functions and functionality of the building. It can be connected with Smart Building infrastructures and sensors, equipment, control systems and infrastructure. This can include switches, controls and sensors, door locks, access cards, elevators, escalators, firs suppression, HVAC, AC, heating, lights, power supplies, window shades and other aspects of the building controls. These sensors can be connected directly to the MTCICP or via sensor hubs that can communicate the aggregated results from a series of such sensors. Those sensors that can control functions will have 2 way communications so that they can receive commands and actions from the MTCICP based on the actions it determines based on the events that I collects. These events can be collected from a sensor or a series of sensors in the facility, of from people or equipment that is in the building temporarily. The people will have mobile devices that have installed software or operating systems that are also connected to the MTCICP. They can have full access to the MTCICP system or have been granted access to only a select series of interactions, sensors or events, for a predetermined time or for always as long as their log in credentials are accredited. This way the MTCICP system's multi-tenant architecture is used as a partition to grant access and deliver content to the right person at the right time, even within a building, venue, structure, for those that work there, operate it, maintain it, provide safety and or services to the building and those that work there, visit, stay or live there.

The system will detect interactions with and between sensors and the people there as well as equipment that is mobile, record and retain these interactions. Those events that warrant an action will trigger actions to be transmitted to the right sensor or control unit or display or device or equipment.

This will enable the MTCICP to detect how many people are in specific areas, determine the temperature in the area through devices such as NEST or Samsung Smart Works sensors, account for how many people are on the escalator coming to that room, start cooling the area via the control units on the NEST thermostat's control unit before the people enters because it is more efficient to cool the room than after they have arrived. Likewise, light controls can be connected to turn on while there are people there, and off when they leave, creating "following lights" down corridors for instance. Elevators, moving sidewalks and escalators may also be connected in this manner providing low power speeds or remain stationary while there is no people close by or on the devices. The levels of controls can be set and controlled by the MTCICP. For instance, digital displays along the moving walkways can be programmed to present content and offers to the people on the moving walkway as they pass by.

This methodology can work in spaces of any size, from across an apartment to across a 1 story building, to a large multi-story convention center or airport even across entire cities, islands or any geographical area.

The MTCICP will retain real-time contextual data about how people interacts with facilities, areas indoors and outdoors, across all the physical geographical areas that have been defined by the MTCTCIP operators and administrators. This data will provide a deep level of records for the way a person interacts with his or her surroundings - real life physical interactions. This data is contextually anchored, by time, person, ID, the type of interactions, the location, the hyper location, what content was presented, what content was consumer, what content was interacted upon, what products, equipment, sensors, displays, cars, sports equipment, buildings were interacted with, used, consumed, viewed. All data can be made anonymous should this be required for by rules and regulation. All data can be retained and / or removed. All data can be used again. This way the system is looking at past behavior to determine what is likely to be of interest for a person "next" based on their past behavior and current context. This context match does not need to be based on the users past behavior. It can be leveraging what others in the same context, with the same or similar background profiles have found of interest. By blending all these components, the MTCICP will create its intelligence. The content that is being presented does not need to be sent back to the originating device. Such an example can be a sports fan that is a fan of the Ole Miss Football team. He has downloaded the Rebel rewards app which is connected to a MTCICP operated by the Ole Miss Athletics department. He is at the game when a record is set and one of the team members is a guaranteed shoe-in for the Heisman trophy. The system recognizes that he was in the stands the moment this happened. Two weeks later, he is on-line at home on his tablet. A sports fan site has signed a deal with Ole Miss to produce baseball caps commemorating the event, and also signed a deal to access the MTCICP. The off-line experience of being at the stadium that moment triggered an event in the MTCICP that is recorded and retained. When he is back on-line the access is recognized and an action is sent. This action is to present a personalized offer to get the baseball cap personalized and shipped to his home address - all information is pre-programmed and included in the offer - so it's an on-click order to have a personalized baseball cap shipped and paid for - memorizing his time in the stand. Once he is back in the stadium, the system will recognize he is back, and offer him a special Coke, Hot-dog and Fries for $5 since he was there at the magic moment and had purchased the hat. Coke had also access to the MTCICP and the past actions with the current context caused the offer that was made on-line to be extended off-line into the real world. The MTCICP can also be used in situations when the access to the platform is widely granted due to a specific event. Such can be a natural disaster such as an avalanche at a ski resort. The resort operator would have a MTCICP enabled system where beacons or devices are used by the skiers as a guidance and access tool. Proximity solutions can grant access to lifts; provide VIP access to restaurants and record number of runs the skier has skied down. In platform tracking can be used to record number of runs, vertical drop skied, speed and g-forces. In the event an avalanche occurs the system can be reversed and access to detect proximity between users - the skiers - can be granted to all. Should someone be buried in snow, their device will continue to transmit "I am here" signals. In this instance, instead of fixed sensors in the facilities, every other skier with the system can receive an alert about the proximity of another. Should a person be buried in snow, those above will be alerted to those above and visible by eye-sight, but also be alerted to the proximity of those out sight - i.e. buried in the snow. Signal strength can be used to guide rescuers to the person buried as weakening signal indicates moving away, stronger means getting closer. While this is not 100% accurate, it will minimize the time needed to start digging and getting oxygen to those under snow. In this instance, the multi-tenant architecture has been used to turn a crowd into the authorized user of the system, enabling rescue efforts to be crowd sourced before official and professional help arrives.

Other use of the multi-tenant feature of the MTCICP can be used in targeted advertising and programmatic delivery of advertisements, offers, coupons, content and experiences. Real time interactions with products, locations, sensors, printed materials and other contextual experiences will be gathered by the MTCICP as often as the system is programmed to gather the information. As this data is collected, it is combined with the information about the user that the user has given permission to collect. This data is gathered into a profile for the user. This profile can remain assigned to that specific person, or can be made anonymous and related to a specific user device and / or other way to anonymously identify that profile with past and future behavior as described in invention 1. The MTCICP can be used by a third party who has been granted access to this system to present offers, content and experiences when that person at a later time interacts with this party's MTCICP or other communication system. This system can be a re-targeting ad server, and artificial intelligent recommendation engine or other communication platform. The content delivered, and the action the user has taken upon the delivery of said content can then is used to further improve and expand the profile retained within the first MTCICP system.

The content delivered via a MTCICP can also be generated, provided and / or curated by the operator owner of the MTCICP or authorized third party providers. One such embodiment is in a museum setting. The operator of the museum can install a MTCICP system. They can then assign personnel internally to curate content relevant to the artifacts they show. They can enable content and content descriptions relevant to their artifacts to be provided by 3^{rd} parties and or common databases. The MTCICP will enable the right curated content to be delivered to the right person on the right device. Such devices can be the museum visitor's own devices that have MTCICP enabled apps installed such as mobile phones and wearables, or can be devices that are lent or leased by the museum and remain their property, those that are leased by the MTCICP provider to the museum or devices that are fixed at the museum. These devices can be tablets, phones, wearables, digital displays, AR devices, VR devices, connected rooms, and other future display systems such as HoloLens, Samsung GearVR or other VR display technologies. The curated content can be delivered by the museum operator via the MTCICP onsite inside the museum, outside on the museum property or off-site such as remote sites or historic sites, or cities or ruins beyond the physical boundaries of the museum. Should there be an entity that owns this location or has other interests in such a location, they can be granted access to control the curated experiences that are triggered on such a site via the administrated access to the designated feature set of the MTCICP.

In a similar fashion, the owner of a sporting and education facility can grant access to the same MTCICP to multiple entities. The objective of this can be to enhance the experiences to those that are there, it can be to provide information, it can be to provide services, and it can be to provide safety and security. The same infrastructure of the MTCICP will enable all to access the same infrastructure, but to provide content and experiences that are within their domain or expertise or mandate. In such instances it can be used to promote a brand to a sports fan, while providing crowd control and security oversight to campus police, while granting access to concessionaires that want to sell products to the fans while in stadium. The same system can be used to provide educational content to students while in class rooms, enable automatic rollcall for attendance to university admins while enabling educator in the room to push educational content at one time that is delivered personalized to the individual student in the designated room - or any other designated location. This system can also be used by students and teachers as a tool to learn how to deliver content, test what works and what does not, what inspired and drives activity and changes behavior, and what does not. In such an embodiment, the end users that experience these interactions can be limited to those that have granted the MTCICP permission to present such test cases, not the general public that has granted permission only to final and commercial content.

The MTCICP can be used to detect crowds and alert those users that are connected to the system about such crowds, direct to less crowded areas before entering or while in the crowded area. One such embodiment is the ability to display an indication of number of users at each entry gate at a sports facility that has an MTCICP system installed with end user devices that are connected. Based on the interactions the system has at each enabled location, and the dwell time each such interaction has, the MTCICP can detect the density of users and the time that they are in this area. An approximation of wait time and density of people can thereby be deducted. The MTCICP can present this information on the end user's devices so that the end user can make a choice of which entry to use. In addition, the MTCICP can send messages to those that are in-line at a crowded entry point that there are smaller crowds and / or shorter anticipated wait times at another entry. Likewise, the anticipated wait time can be displayed on interactive displays / signs that can provide those that are there with an anticipated wait time. This can be extended and further enhanced in areas of long lines such as amusement parks or taxi lines at busy airports. Here numerous displays / signs with sensors can be placed with known and fixed distance between each. As a member with a MTCICP connected device comes into proximity to sign 1, the MTCICP record the time. When he moves along and comes into proximity to sign / display number 2 that is a known distance apart from sign number 1, simple calculation can be made to determine the rate of speed. This process can be repeated along the line and once a slowdown is determined, the time for a person who enters the line at sign 1 to arrive at the final destination which is a distance known distance can be calculated by the MTCICP and displayed at the sign 1 and on the user's MTCICP connected device.

Such understanding of location in a facility by the MTCICP and its permitted operators and users can also be used to facilitate roll-call, presence verification, and selected granted access, denial of access and / or check-in of a user with a device connected to the aforementioned MTCICP. Once such presence has been detected, the MTCICP can send alerts to others about the presence of the user in such an environment. This can be of great use to a hotel operator. As their guest arrives on the premises with a device that is connected to the hotel's MTCICP system, the MTCICP can send multiple messages alerting hotel staff about his presence. This can be the car valet service and the bellboy services. They can be alerted by the MTCICP with details about the user such as name of the user, his status with the hotel rewards system to determine VIP level, his preferences and past visits thereby enabling the staff to present a personalized welcome. Should the hotel's MTCICP also be connected to the hotel's booking system, an automatic check-in can happen and when sensors inside the lobby detect the presence of the user via his MTCICP connected devices. Should a payment be needed this payment can be tendered within the MTCICP if it has been so programmed. The payment tender can be closed via any of the current and future payment methodologies that have been incorporated into the MTCICP such as Samsung's PAY, Apple PAY, Google PAY, and Passport. Should the hotel MTCICP have been programmed to interact and by integrated with the hotel's room management and room key and room lock system, a token, message, programming code, other encrypted key granting access to the hotel room that the user has paid for can be delivered to the user's MTCICP connected device such as a mobile phone, wearable device such as a smart watch or other programmable device connected to the MTCICP. As the user arrives by his room, his connected device will grant him access via the MTCICP connected device to the room for the period that he has paid for via the MTCICP integrated room lock. As he enters the room with his MTCICP enabled device (s) his presence in the room is detected by sensors in the room. These can be passive sensors communicating with a room hub that communicates to the hotel MTCICP, control sensors that takes input and sends a control output command, and those that interact with both the user's MTCICP enabled devices and the hotel master MTCICP control systems. Interactions within the room can thereby controlled by input from the various sensors in the room with actions delivered to those devices they controlled, based on the presence of the user in the context as well as the use's past preferences as collected by the user's MTCICP connected device and / or a combination of this profile and the known past behavior and preferences of the user that the hotel MTCICP has retained and accessed and / or a third party's provided profile of the user that the hotel's MTCICP has been granted access to or any combination of any of the above. The room can therefore change its environment such as temperature, light, shades drawn or closed, radio station, tv channel based on the understanding of the user via the presence of his MTCICP enabled device in the environment that has sensors and controlled via the same connected MTCICP.

The use of such a MTCICP multi-tenant platform enables numerous entities to use the CICP as a revenue generator for the operator owner licensee of the MTCICP. This can enable a faster investment as it can be capitalized as a revenue investment, marketing expense, subscription or lease investment rather than a capital expense investment.

In larger geographical environments, such as regions, cities, islands and or countries, multiple MTCICP platforms can be integrated across numerous vertical markets and numerous geographical areas with numerous end-users experiences under one master MTCICP. Such master MTCICP can be used by a city management to have real-time access to anonymous data and travel behavior across entire regions and cities. Such a system can provide the contextual intelligence for a smart city - numerous systems with various technologies providing real-time contextual data from private enterprises with governance data to provide better information and services to those that live there, enable those that work there to do so more effectively, entertain and service those that visit to encourage repeat visits while providing transportation, security, safety and services to all.

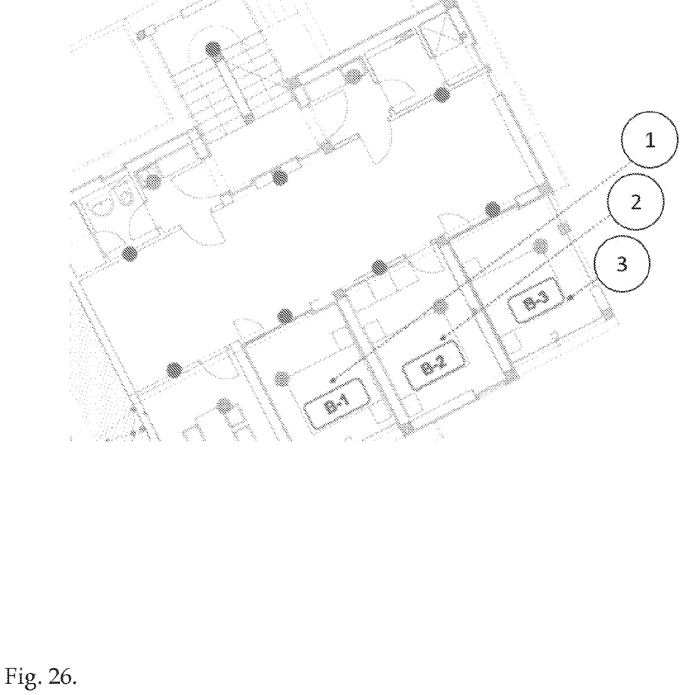

Fig 26 depicts a floor plan of a venue with hallways, individual rooms with separate entrances from the hallway, stairways and entry point such as a section of a hospital. In some of these rooms there are movable items such as patient beds that are used to move patients across hospitals. These could be any moveable item. They are noted as Bed 1 "B-1" note Fig 26-1, noted as Bed 2 "B-2" note Fig 26-2, and finally noted as Bed 3 "B-3" note Fig 26-3.

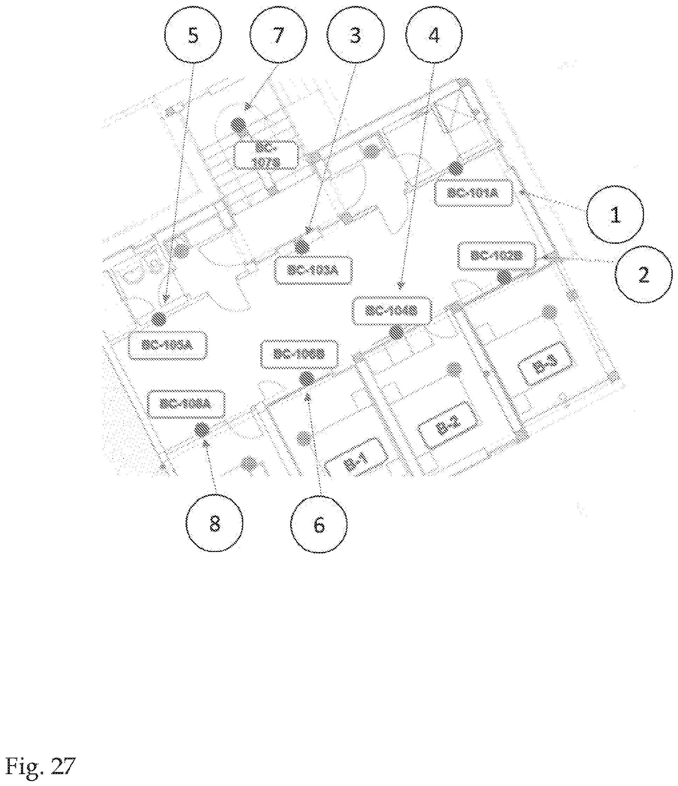

Fig 27 depicts the same floor plan as in Fig 26, where the Bed 1 "B-1" is in one room, bed 2 is noted as "B-2" in another room and bed 3 is noted as bed "B-3" is shown in a 3^{rd} room. Here a series of fixed proximity beacons and / or sensors are places in the hallways and stairwell. These are noted as Fig 27-1 through Fig 27-6 and Fig 27-8 for the hallway sensors / proximity beacons, and Fig 27-7 for the stairwell sensor. Fixed beacons are used to identify a known location when somebody comes in proximity to that beacon. They are also useful in that having several beacons with overlapping signals permit triangulation base on those signals, so that the exact location of a person that is in connection with more than two, but ideally three, beacons at any given time can be determined. In this example B1, B2, B3 are beacons attached to mobile pieces of equipment that can be moved, such as EKG systems and so forth

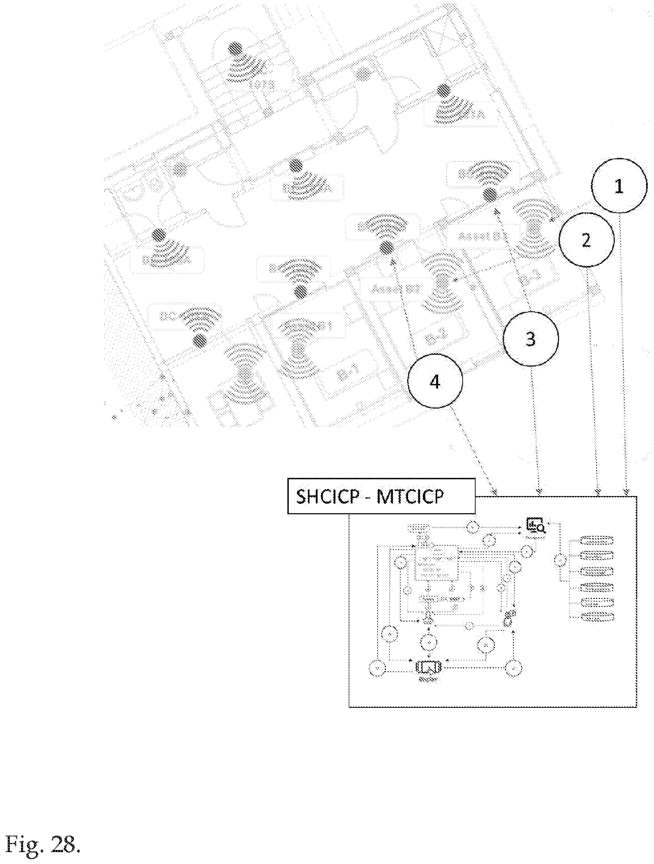

Fig 28 depicts the same floor plan as in Fig 26 and Fig 27 with the beacon sensors in the hallways (Fig 27-6 and Fig 28-8) beacon sensors in the stairwell (Fig 27-7) and there are beacons sensor attached to the beds Fig 26-1 through Fig 26-3. The beacons placed on the beds such as shown in Fig 28-1 and Fig 28-2 are identified and can be communicated with and or recognized by a SHCICP-MTCICP. Like ways, the beacon sensors in the hallways and stairwells as depicted by Fig 28-3 and Fig 28-4 can also be can be communicated with and or recognized by the same SHCICP-MTCICP.

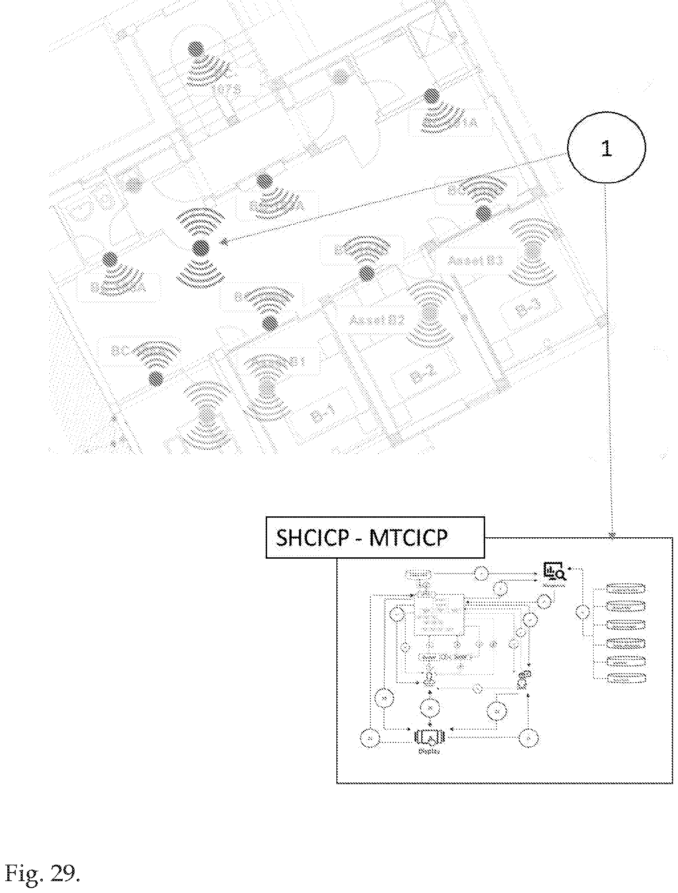

Fig 29 depicts the same floor plan and SHCICP-MTCICP as depicted in Fig 27. In this instance, and additional beacon or transmitter has entered into the hallway as indicated by Fig 29-1. This device can transmit and emit signals and can be communicating with and or recognized by the same SHCICP-MTCICP that controls the sensors as shown in Fig 28. This sensor can be a mobile phone, tablet or computer, wearable or other communication device worn by a staff member, management or support staff, a physician, nurse or admin operator in a hospital, or a member of the public who has a device that is communicating with the SHCICP-MTCICP.

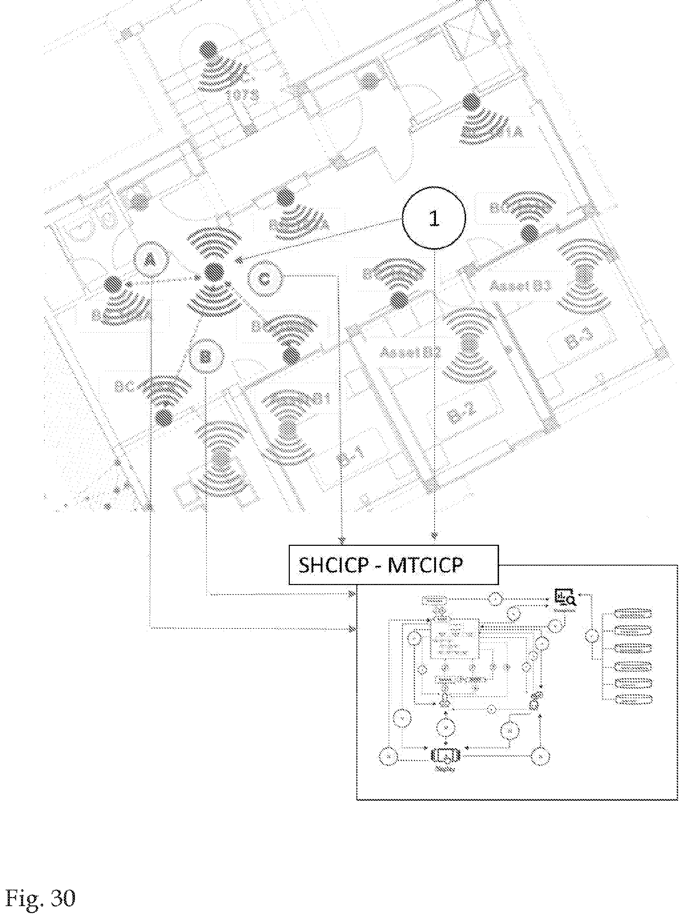

Fig 30 depicts the same floor plan and SHCICP-MTCICP and added sensor / mobile device 29-1 as depicted in Fig 29. Here the sensor shown as Fig 29-1 in Fig 29, herein as Fig 30-1, has made a connection, recognized or started a communication with the hallway sensors / beacons shown in Fig 27. The hallway beacons / sensor that sensor Fig 29-1 is communicating with are the ones in range, namely Fig 27-5, Fig 27-8 and Fig 27-6. These connections are indicated as Fig 30-A for connection between Fig 30-1 and Fig 27-5, as Fig 30-B for connection between Fig 30-1 and Fig 27-8 and as Fig 30-C for connection between Fig 30-1 and Fig 27-6. These connections Fig 30-A, Fig 30-B and Fig 30-C are communicated to the SHCICP-MTCICP together with the identification of beacon / sensor / communication device Fig 30-1. The signal strengths Fig 30-A, Fig 30-B and Fig 30-C can be used to triangulate the location of the device depicted as Fig 30-1 in a numerous ways using standard location algorithms applied by the SHCICP-MTCICP. The location of Fig 30-1 can thereby be calculated, recorded and retained by the SHCICP-MTCICP.

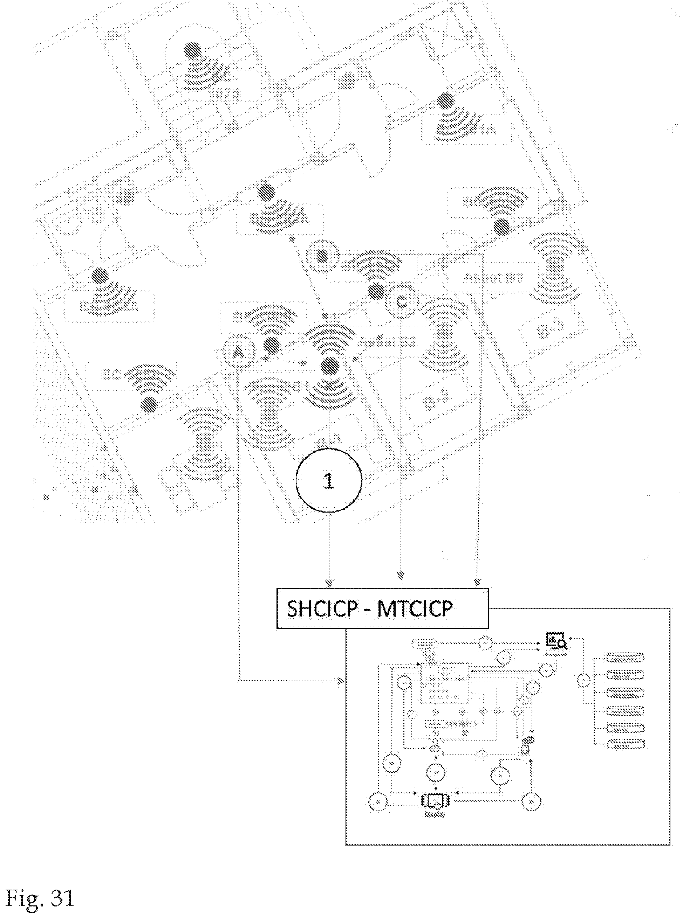

Fig 31 depicts the same hallway and set up as in Fig 30. Here the sensor, communication devices shown in Fig 30 and Fig 30-1 has moved from the hallway into the room where the bed B-1 shown in Fig 26 is located now noted as Fig 31-1. Now the connections between the fixed sensors in the hallway shown in Fig 28 and the movable sensor / communication device Fig 31-1 to change to have connections with the hallway sensors Fig 28-3, and Fig 28-4. These connections are indicated as Fig 31-A for connection between Fig 31-1 and Fig 27-6, as Fig 31-B for connection between Fig 31-1 and Fig 27-4 and as Fig 31-C for connection between Fig 31-1 and Fig 27-3. These connections Fig 31-A, Fig 31-B and Fig 31-C are communicated to the SHCICP-MTCICP together with the identification of beacon / sensor / communication device Fig 31-1. The signal strengths Fig 31-A, Fig 31-B and Fig 31-C can be used to triangulate the new location of the device depicted as Fig 31-1 in a numerous ways using standard location algorithms applied by the SHCICP-MTCICP. The new location of Fig 31-1 can thereby be calculated, recorded and retained by the SHCICP-MTCICP.

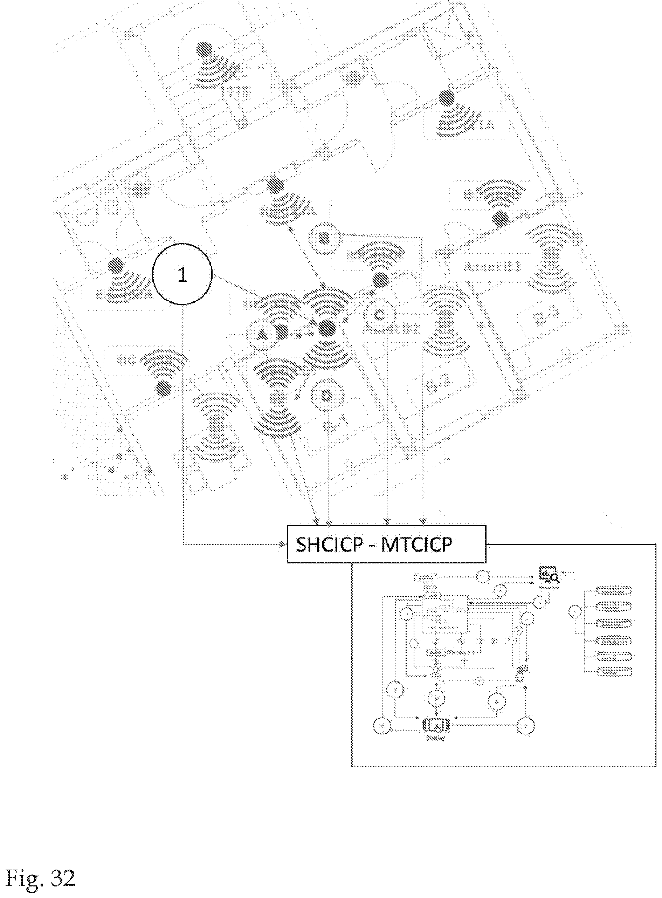

Figure 32 depicts the same hallway and set up as in Fig 31. Here the sensor, communication devices shown in Fig 30 and Fig 30-1 has moved from the hallway into the room where the bed B-1 shown in Fig 26 is located. Now the connections between the fixed sensors in the hallway shown in Fig 28 and the movable sensor / communication device Fig 32-1 to change to have connections with the hallway sensors Fig 28-3, Fig 28-6 and Fig 28-4. These connections are indicated as Fig 32-A for connection between Fig 32-1 and Fig 27-6, as Fig 32-B for connection between Fig 32-1 and Fig 27-4 and as Fig 32-C for connection between Fig 32-1 and Fig 27-3. These connections Fig 32-A, Fig 32-B and Fig 32-C are communicated to the SHCICP-MTCICP together with the identification of beacon / sensor / communication device Fig 31-1. The signal strengths Fig 32-A, Fig 32-B and Fig 32-C can be used to triangulate the new location of the device depicted as Fig 32-1 in a numerous ways using standard location algorithms applied by the SHCICP-MTCICP. The new location of Fig 32-1 can thereby be calculated, recorded and retained by the SHCICP-MTCICP. An additional connected has been made, Fig 32-D. This is between Bed in room B-1 noted as Fig 26-1 and Fig 32-1. The signal strength and the action of coming within proximity range between sensor - communication device Fig 32-1 and the Fig 26-1 beacon on the B-1 bed is captured recorded and retained by the SHCICP-MTCICP with a time the proximity was detected and the location of the Fig 32-1 device was at that time. The location of the proximity detection between the device Fig 32 worn by a staff member and the Fig 26-1 bed is thereby recorded, retained and known.

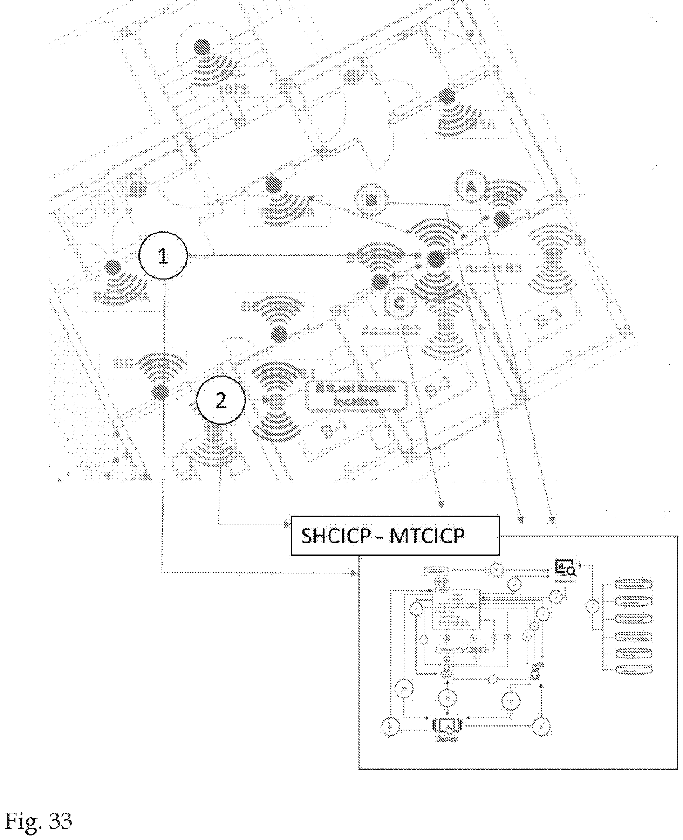

Fig. 33 depicts the same hallway and set up as in Fig 32. Here the sensor, communication devices shown in Fig 32-1 has moved from the room where the bed B-1 shown in Fig 26 was located, into the hallway as shown by Fig 33-1. Now the connections between the fixed sensors in the hallway shown in Fig 28 and the movable sensor / communication device Fig 33-1 is changed to have connections with the hallway sensors Fig 28-2, Fig 28-4 and Fig 28-3. These connections are indicated as Fig 33-A for connection between Fig 33-1 and Fig 27-2, as Fig 33-B for connection between Fig 33-1 and Fig 27-3 and as Fig 33-C for connection between Fig 33-1 and Fig 27-2. These connections Fig 33-A, Fig 33-B and Fig 33-C are communicated to the SHCICP-MTCICP together with the identification of beacon / sensor / communication device Fig 33-1. The signal strengths Fig 33-A, Fig 33-B and Fig 33-C can be used to triangulate the new location of the device depicted as Fig 33-1 in a numerous ways using standard location algorithms applied by the SHCICP-MTCICP. The new location of Fig 33-1 can thereby be calculated, recorded and retained by the SHCICP-MTCICP. The connected device that was with the Bed B1 in room B1 show as Fig 32-D is now no longer in place. This was between Bed in room B-1 noted as Fig 26-1 and Fig 32-1. The action of Fig 33-1 moving out of range of Fig 26-1 is captured, recorded and retained by the SHCICP-MTCICP with a time the proximity was lost as depicted by Fig 33-2. The location of the Fig 33-1 device was at that time is captured. The location of the loss of proximity detection between the device Fig 33-1 worn by a staff member and the Fig 26-1 bed is thereby recorded, retained and known. This is captured and retained as "last known location" of B-1 bed Fig 26-1 by the SHCICP-MTCICP.

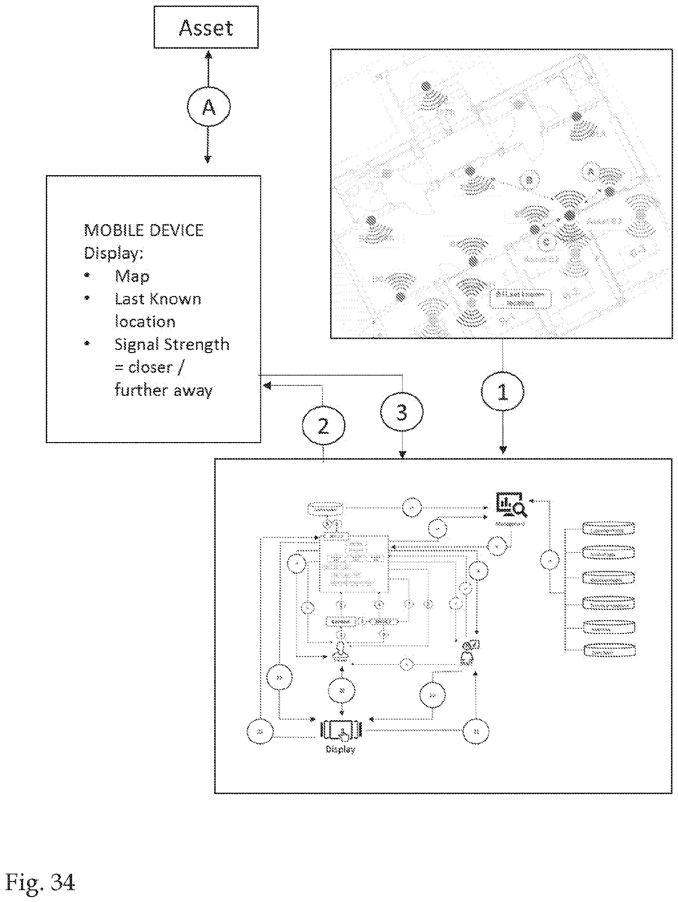

Fig 34 depicts the floorplan shown in Fig 33 with the "last known location" of the Bed B-1 detected and calculated by the SHCICP-MTCICP - Fig 34-1. The Asset in this figure can be the Bed B-1 Fig 26-1, or a database of assets controlled by the system and its operators - Fig 34-A. The information from the SHCICP-MTCICP can be displayed on devices with information from the SHCICP-MTCICP as shown in Fig 34-2. This information can be "last known location", "signal strength" between sensors and communication devices so that alerts can be presented if a person is moving closer as indicated by increase of signal strength, or away by lower signal strength. A floor map or other lay-out of the areas where sensor and beacons can be displayed can also be presented by the SHCICP-MTCICP on these displays. These displays can be mobile and on phones, tablets or wearables used and worn by personnel that have authorization to access the SHCICP-MTCICP, it can be on fixed digital displays and kiosks in the facility or it can be on computer screens at the facility or elsewhere. Feedback from these devices will be communicated back to the SHCICP-MTCICP as shown in Fig 34-3.

### Asset Tracking Example

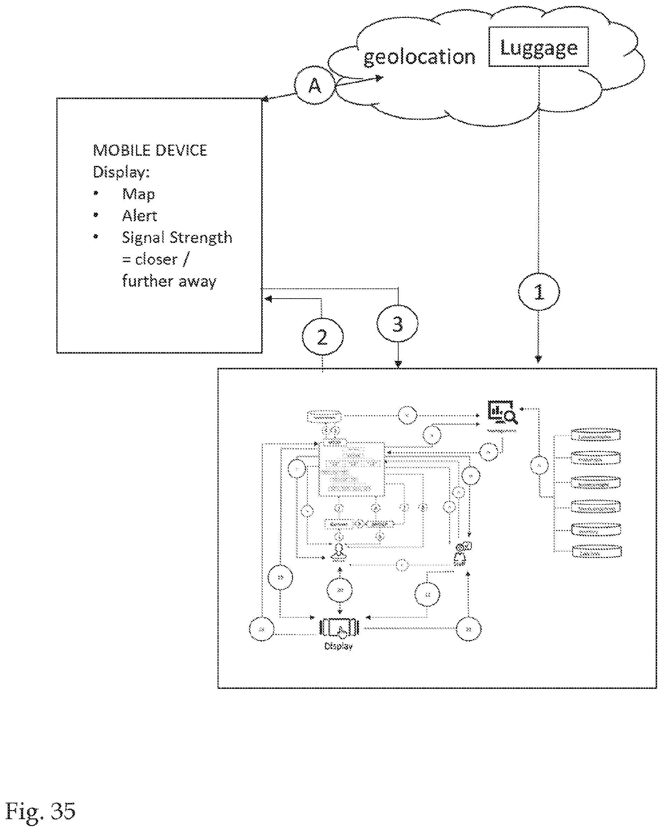

Fig 35 depicts a SHCICP-MTCICP operating platform that incorporates a sensor or proximity beacon on a piece of luggage or other product that is shipped. A locations, or series of locations, are pre-determined as "geo-locations". These geo-locations are known and matched with a series of mobile devices and their abilities to display information about locations of assets and provide directions to move towards the asset as described in Fig 34 - as indicated in Fig 35-A. The identity of the luggage and other asset is also communicated to these displays - Fig 35-A. The mobile display can be on a mobile device that is mobile and moves with a user or a mobile connected display that is fixed permanently or temporarily in a known physical location. The identity of the luggage / asset is also communicated to the SHCICP-MTCICP as shown in Fig 35-1. When this Luggage, asset has been identified and location determined by the SHCICP-MTCICP this information is presented to the mobile device display Fig 35-2. When this has been interacted with on the mobile device, the feedback from this interaction is communicated back into the SHCICP-MTCICP, Fig 35-3.

### Food and Drink Vendor Example

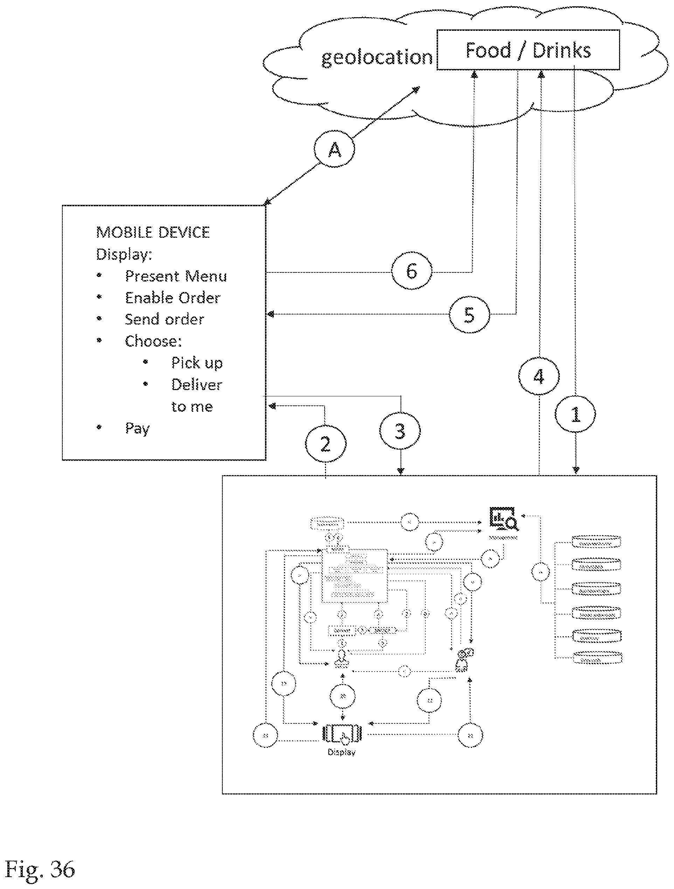

Fig 36 depicts a SHCICP-MTCICP operating platform that incorporates a mobile communication device and a sensor or proximity beacon at physical locations that serves food or drinks or both. This location is known, Fig 36-A. This can be a location, or series of locations that are pre-determined as "geo-locations". The information about the Food and Drink at this or these locations are shared with an SHCICP-MTCICP system as shown in Fig 36-1. The SHCICP-MTCICP the can display this information on a mobile device, Fig 36-2. This information can be to "Present Menu" on the device, "Enable Order" that enables a user to prepare and present an order based on the "Menu" presented on the device, "Send Order" will enable the user to send the order presented, while the end user can chose to "Pick Up" the order or have it "Delivered to me" and finally enables the user to "Pay" for the order to complete the order. The mobile communication device can be a mobile phone, mobile tablet or wearable the user is wearing, or it can be a fixed kiosk at the location or it can be a digital display in vicinity of one of the geo-locations. Once this information has been compiled on the Mobile Device, the Mobile Device communicates this information to the SHCICP-MTCICP system, Fig 36-3. This information is aggregated by the SHCICP-MTCICP system to include location of the Mobile Device and any information about the end user that the user has approved for the SHCICP-MTCICP system to gather and retain, and sent to the appropriate Geolocation that produces and serves Food / Drinks, Fig 36-4. This complete order is recorded and retained by the Food / Drinks geo-location using any of the numerous commercially available Point of Sales and Order Entry systems used by such facilities, and confirms and acknowledges that the order is received and accepted, and worked on Fig 36-5. Should the end user have selected "Deliver to me" order delivery, the mobile device will communicate its location to the geolocation, Fig 36-6. Should the user have selected "Pick Up", the Mobile Device will present the user's identification, location and enable the delivery of the order when in proximity to the geolocation, Fig 36-6. Should the user have selected "Pay", the mobile device will enable payment of the order via any of the readily available mobile payment systems that the SHCICP-MTCICP enables and integrates and that the geolocation operator accepts such as Apple Pay, Android PAY, Samsung PAY, MasterCard Mobile PASS or any other such system.

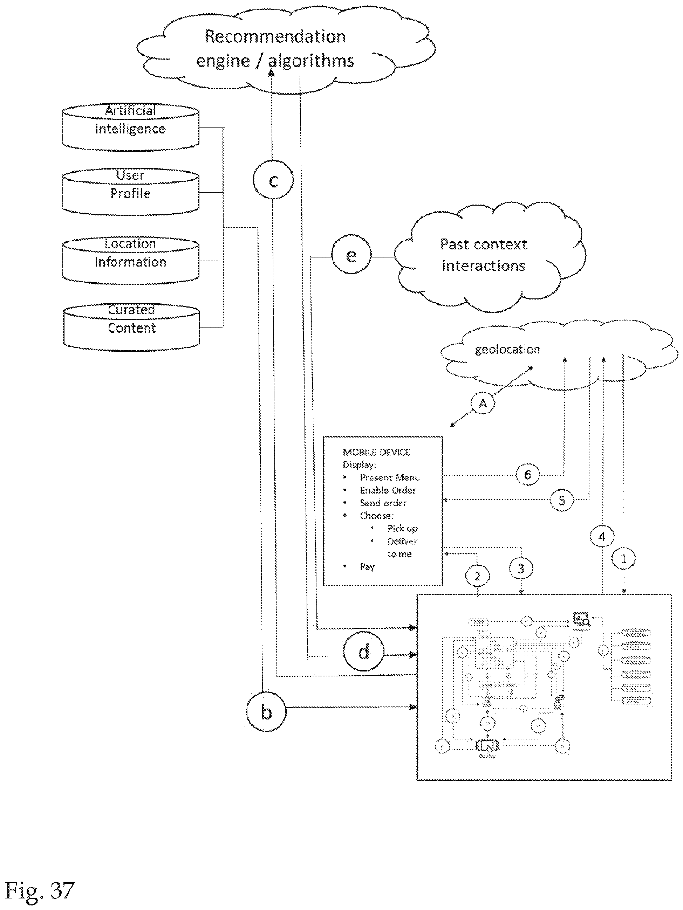

Fig 37 depicts the system as described in Fig 36 with a series of additional parameters to present the information to the end user's Mobile Device as shown in Fig 37-2. This information is presented to the SHCICP-MTCICP Fig 37-b from a combination of information databases depicted as "User Profile", "Location Information" and "Curated Content" such as calorie intake for a menu item, photographs of a menu dish or advertisement information about a blended drink. These are listed as illustrative and not intended to be all-encompassing. In addition, algorithms can be used to combine the information as depicted by "Artificial Intelligence". This combined data as sent to the SHCICP-MTCICP, Fig 37-b. The combination of this and the information presented to the SHCICP-MTCICP from the geolocation Fig 37-1 and the Mobile Device, Fig 37-3 is calculated and combined by the SHCICP-MTCICP and presented to a cloud based computation device 37-c. This device performs calculations based on recommendation engine algorithms and presents the results back to the SHCICP-MTCICP as depicted as 37-d. Another cloud based database and computation device them presents "Past context interactions" to the SHCICP-MTCICP, Fig 37-e. These can be past interactions of the end user, they can be interactions of the user and the geo-location, it can be other's interactions with the geo-locations, it can be the user's behavior at other geo-locations or it can be other's interactions at other geo-locations. This context understanding and knowledge is presented to the SHCICP-MTCICP as shown in 37-e. This combined knowledge and computation results are presented to the Geolocation 37-4 and presented to the Mobile Device from the geolocation after they have evaluated, reviewed and accepted the information, Fig 37-5. The end user's response to the information, including order details, order delivery method or pick-up by user and payment is then presented to the geolocation, Fig 37-6.

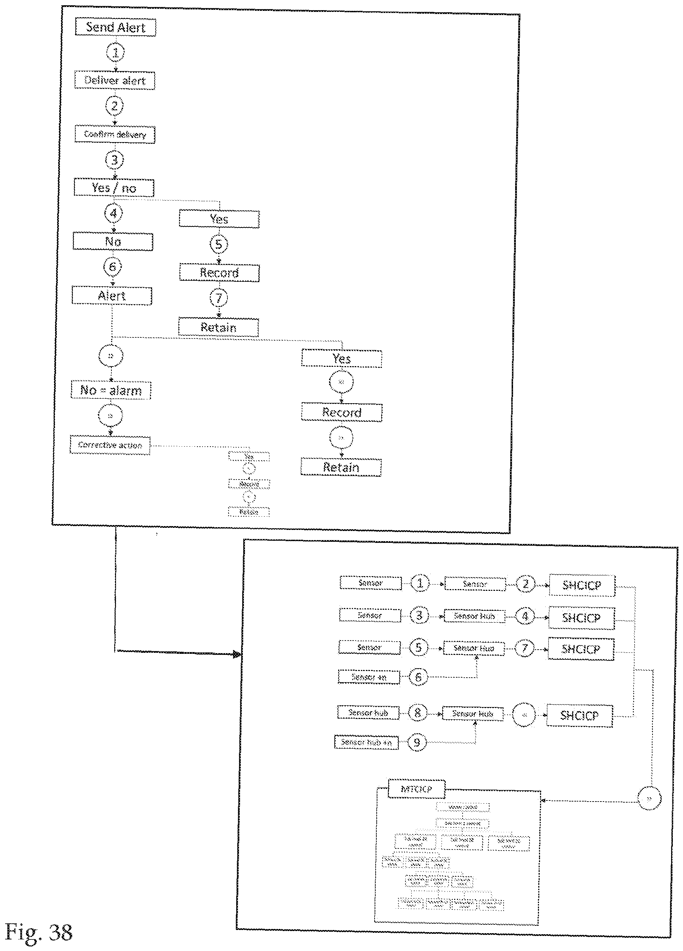

Fig 38 depicts a decision tree for the delivery of messages, content and actual delivery of food items as depicted in Fig 37 combined with a SHCICP-MTCICP with series of sensor inputs.

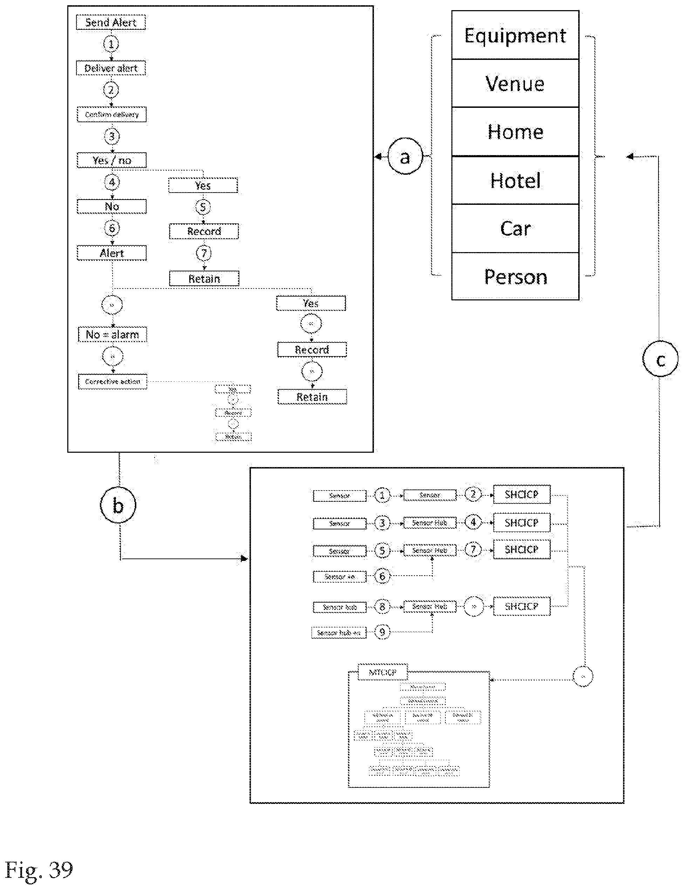

Fig 39. Depicts the decision tree shown in Fig 38 with decision input coming from a suggestion of devices and venues listed as "Equipment", "Venue", "Home", "Hotel", "Car" and "Person". This list is for illustrative purpose only, not intended to be complete. It is any facility, human, device, system, infrastructure, city, building or any other entity or device that has a series of interactions within its sphere of influence / context and this output from these is entered into a decision tree - Fig 39-a. The output from these calculations are the put into a SHCICP-MTCICP as shown by Fig 39-b. The output from the SHCICP-MTCICP is the sent back into the originating location that detected the original context as shown by Fig 39-c

### Multiple Devices CICP Example

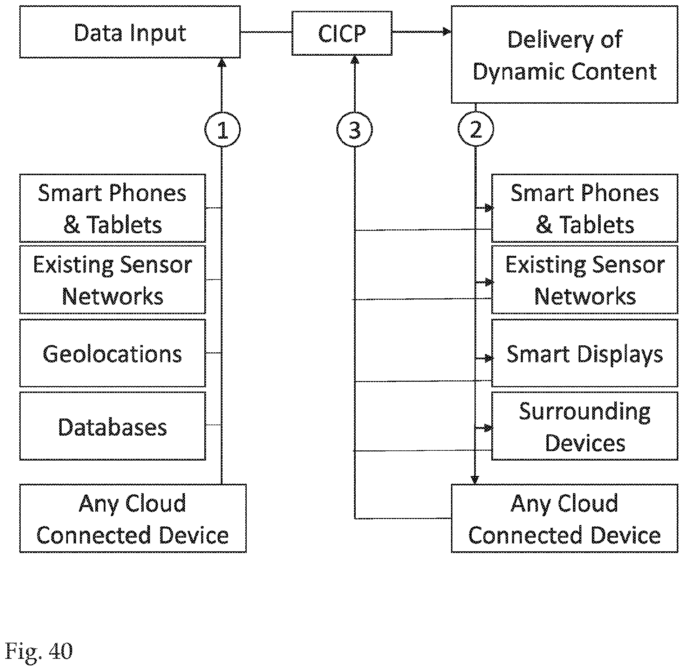

Fig 40 depicts a schematic dataflow and input/output with feedback across a series of sensors and devices that are communicating via a CICP. Data input can come from "smart phones and tablets", "Existing sensor networks", "Geolocations", "Any cloud connected device" and "Databases". This input is sent to the CICP, processed and sent to "Users devices", "Surrounding devices" and / or "other people's phones", "Cloud connected device" and / or "Smart displays". Feedback from the originating devices as indicated by "smart phones and tablets", Existing sensor networks", "Geolocations", "Any cloud connected device" and "Databases" can also be used to provide "Delivery of dynamic content" to the "Users devices", "Surrounding devices" and / or "other people's phones", "Cloud connected device" and / or "Smart displays". Then the results generated by the "Users devices", "Surrounding devices" and / or "other people's phones", "Cloud connected device" and / or "Smart displays" can be sent back to the originating "smart phones and tablets", "Existing sensor networks", "Geolocations", "Any cloud connected device" and "Databases". Data is collected across all these interactions as indicated by "BIG DATA collected across the process". The devices and databases listed are intended to be illustrative and not all encompassing.

### Airport Example

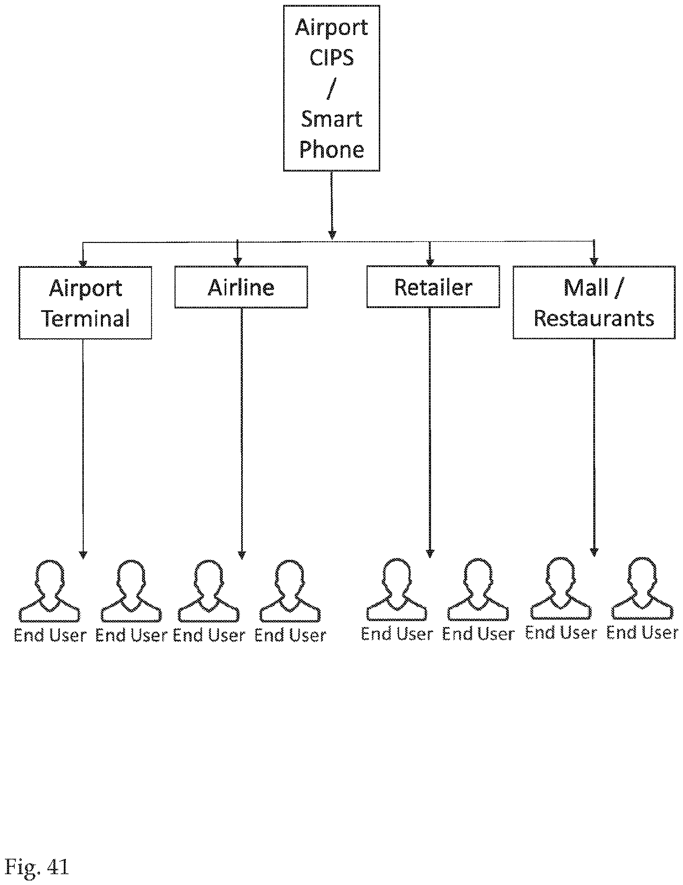

Fig 41 depicts a Multi-tenant architecture of a MTCICP as used by an airport. This is intended to illustrative and not all-encompassing. In this instance, the master administration is presented by the "airport app". Subordinated to this is a series off apps that are controlled and overseen by the "airport app" such as "terminal", "airline", "mall" and "retailer". Each of these has access to a series of end users - depicted as a customer on the left and personnel / staff on the right. This is intended to be illustrative and not all encompassing.

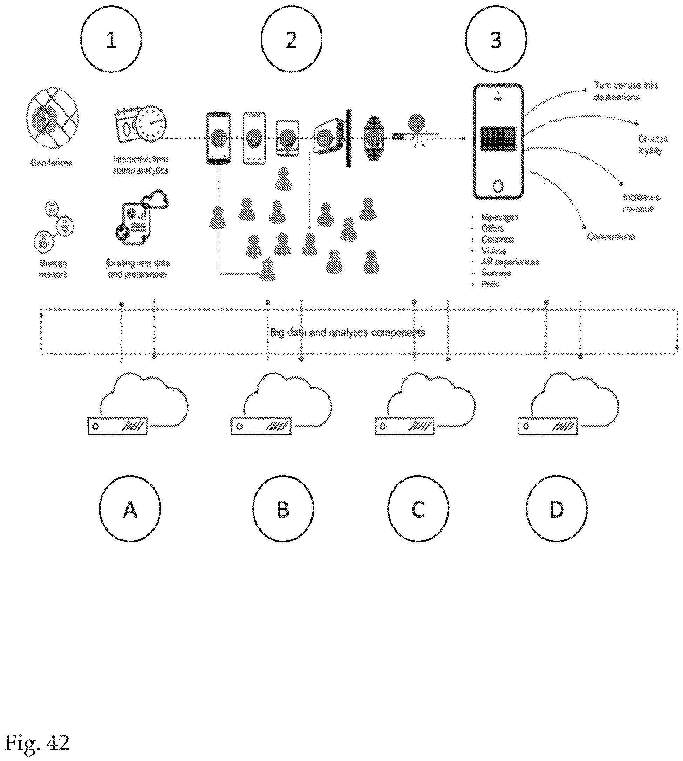

Fig. 42 depicts an overview of devices and experiences as well as the data collected in a CICP platform. Devices, features, databases and infrastructures provide input Fig 42-1. Data is collected and retained, Fig 42-A, used for computation and analytics, retained and recorded. The input data from Fig 42-1 infrastructure is presented on a variety of devices Fig 42-2 such as phones, wearables, tablets, digital signs, and augmented reality glasses, for one or many end users. Data is collected and retained, Fig 42-B, used for computation and analytics, retained and recorded. The data presented on the devices depicted in Fig 42-2 can be "Messages", "Offers", "Coupons", "Videos", "AR experiences", "Surveys" and "Polls" as shown in Fig 42-3. Data is collected and retained, Fig 42-C, used for computation and analytics, retained and recorded. The content and experiences delivered in Fig 42-3 is intended to "Turn venues into destinations", "creates loyalty", "increase revenue" and provide "conversions". Data is collected and retained, Fig 42-D, used for computation and analytics, retained and recorded. This is intended to be illustrative and not all encompassing.

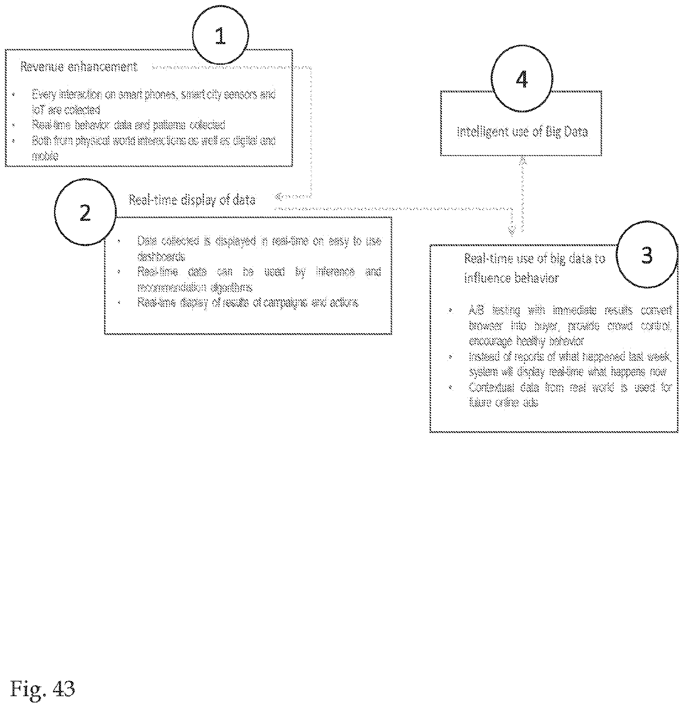

Fig. 43 depicts the flow of "Big Data" and the use of this. Big data in this instance is depicted as data across a "smart city" installation of a SHCICP-MTCICP system. The data collected from every smart phone, smart city sensor and Internet of things (IoT) devices is collected and combined to deliver real-time behavior and patterns of behavior from both the physical world and the digital / mobile world. This is all combined to enable revenue enhancements, Fig 43.1. This data that has been collected is displayed real-time on dashboards so that it can be reviewed and used for further calculations such as inference and recommendation algorithms, with the ability to see real-time results of campaigns, messages and commands sent. This real-time display of the data is shown as Fig 43-2. This ability to see immediate results of campaigns and A-B testing can be used convert browsers in a shopping mall to actual buyers, can provide information to people real time to manage crowds and can enable messages, content and experiences to be delivered to drive healthy behavior such as taking the stairs in a government office rather than the elevators. Instead of the typical reporting capability of traditional big data systems that provides reports in the future of what is happening now, or provides reports now of what happened in the past, this enables real-time viewing of real-time events as they actually unfolds, the results of messages sent and the results of campaigns and A-B testing. This real-time use of data can be a tool to provide content to influence behavior as shown in Fig 43-3. This complete process the leads to "intelligent use of Big Data" as shown in Fig 43-4. This is the core of complete CICP, MTCICP, SHCICP and SHCICP-MTCICP systems. This is intended to be illustrative and not all encompassing.

### Smart City Example

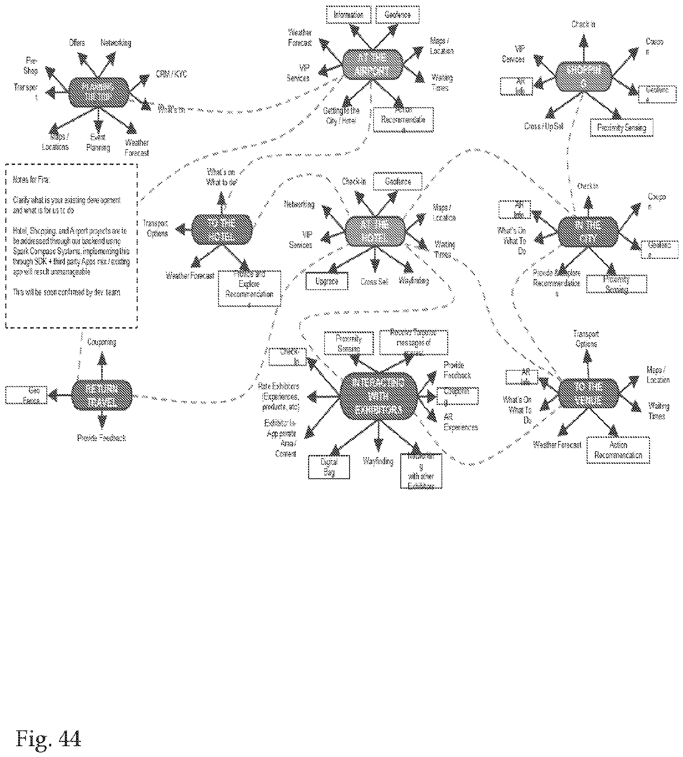

Fig 44 depicts a complete SHCICP-MTCICP infrastructure for a Smart City that incorporates a convention center "FIRA" with complete solution for the travelers and exhibitors that attend and exhibit at the convention. It starts providing information before the attendees arrive as indicated by "Planning the trip". It then incorporates transportation to the venue, namely "Airport" and from airport to the hotel "To the hotel", enables hospitality to interact as indicated by "At the Hotel". As the attendee travels to the exhibition, the system can interact as indicated by "To the Venue". It also shows how the attendee and exhibitors can interact and create connections at the exhibit as indicated by 'Interacting with exhibitors". As the attendee is in the city before and after the event, the system can interact as indicated by "in the city", and can be used to encourage retail shown as "Shopping". Each of the locations have a series of experiences that can be triggered and enabled, features that can be used, technologies that are integrated and content delivery. This is all part of the context intelligence gathering capability of a complete SHCICP-MTCICP infrastructure, as well as the contextually intelligent distribution of content and experiences by the same complete SHCICP-MTCICP infrastructure. This is intended to be illustrative and not all encompassing.

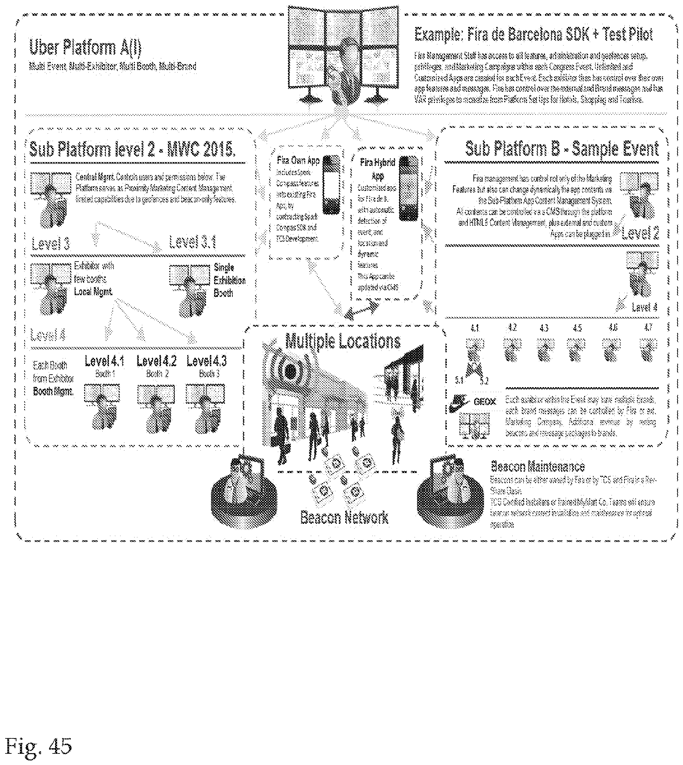

Fig 45 depicts a subset of the complete SHCICP-MTCICP infrastructure for a Smart City that incorporates a convention center "FIRA" shown in Fig 44. In this infographic figure, the master tenant is indicated as "Uber Platform A(I)" In this case the show manager - the company putting on an event at a convention center "FIRA" is denoted at "Sub Platform level 2- MWC 2015". Another event organizer can also be allowed to use the system as indicated by "Sub Platform B - Sample Event". The SHCICP-MTCICP infrastructure enables the master tenant to provide additional mobile applications that they directly control. These are indicated as "Fira Own App" and "Fira Hybrid App". These can be used by the public, the event staff and exhibitors across multiple locations as indicated by "Multiple Locations". These multiple locations can incorporate beacons and beacon networks as indicated by the "Beacon Networks". As an added service layer, a third party or dedicated sub-contractor, or division of the master tenant that the master tenant has granted administration rights to can maintain the beacon network, indicated by "Beacon Maintenance". The sub tenants can also further sublease access to the SHCICP-MTCICP infrastructure. This is shown in "Level 3" where a sub licensee has multiple sub licenses below him, "Level 4.1, "Level 4.2" and "Level 4.3". The sub tenant can also lease to single licensees that have no further sub licensees, as shown in "Level 3.1". The same infrastructure can be enables to other tenants as indicated by "Level 4" under the "Sub Platform B - Sample Event". In both sub licensees, brands and producers of merchandise or content that exhibit across any and all, can be enabled to access the system as indicated by the Nike ^{™} logo and "5.1" and "5.2". This is intended to be illustrative and not all encompassing.

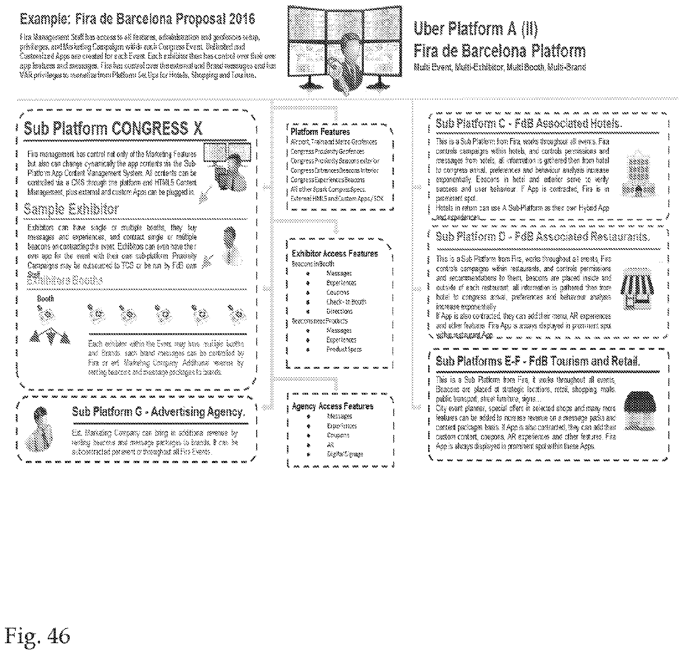

Fig 46 is an infographic that shows a more detailed version of Fig 45. This forms that basic for a detailed architecture with use cases, features, sub licensees, third party vendors and member statuses. Parties outside of the congress have also been included as indicated by Sub Platforms C, D, E & F.

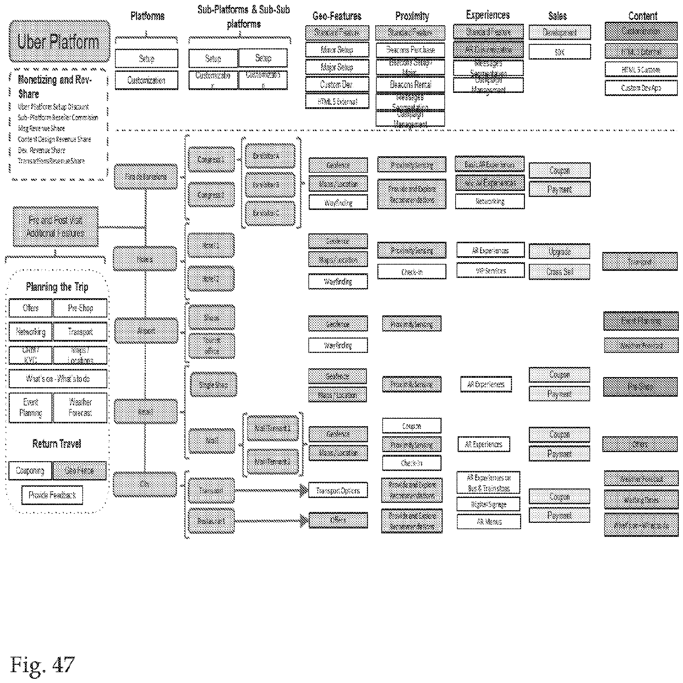

Fig 47 is a schematic overview of the complete SHCICP-MTCICP infrastructure described in Fig 44, Fig 45 and Fig 46. It shows the hierarchy of a sample layout of master and sub licensees for a city management of a SHCICP-MTCICP infrastructure, platform and sub platforms, clients and licensees, features, use cases, experiences, sales / commerce, and content across all the suggested uses cases and installations described in Fig 44 and Fig 45. This is intended to be illustrative and not all encompassing.

### Personalized Messaging Example

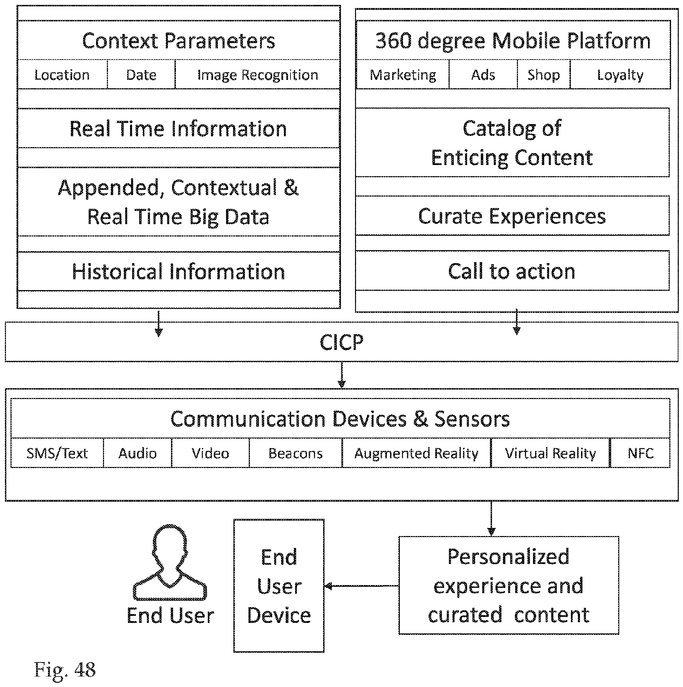

Fig 48 is an infographic representation shows how content and contextual parameters can be combined in a complete SHCICP-MTCICP infrastructure to deliver content based on content delivery mechanisms on a mobile device to deliver personalized experiences and messages that are appropriate for the end user. The data is recorded and retained to improve future communication with others that have a similar profile. This is intended to be illustrative and not all encompassing.

### Fee-Based Membership Example

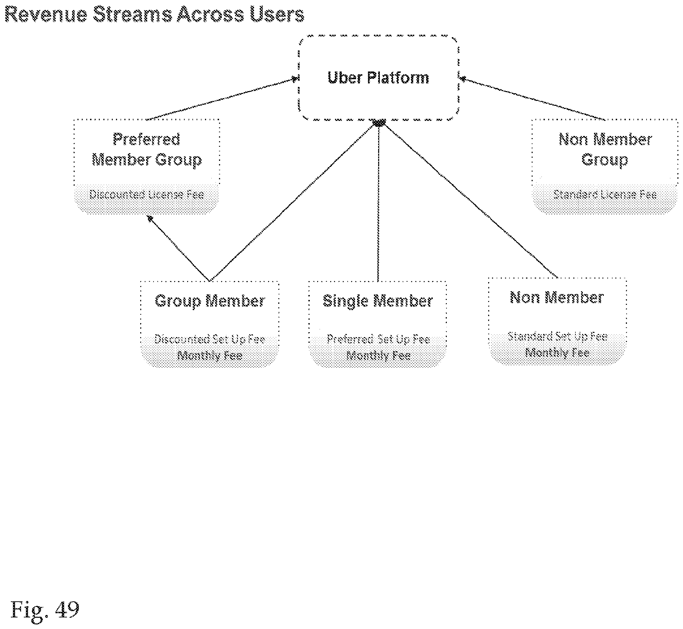

Fig 49 shows how multiple revenue streams can be enabled across complete SHCICP-MTCICP infrastructure, with various levels of members paying a monthly fee to the master licensee "Uber Platform" based on their level of membership. This is intended to be illustrative and not all encompassing.

### Integrated Website Example

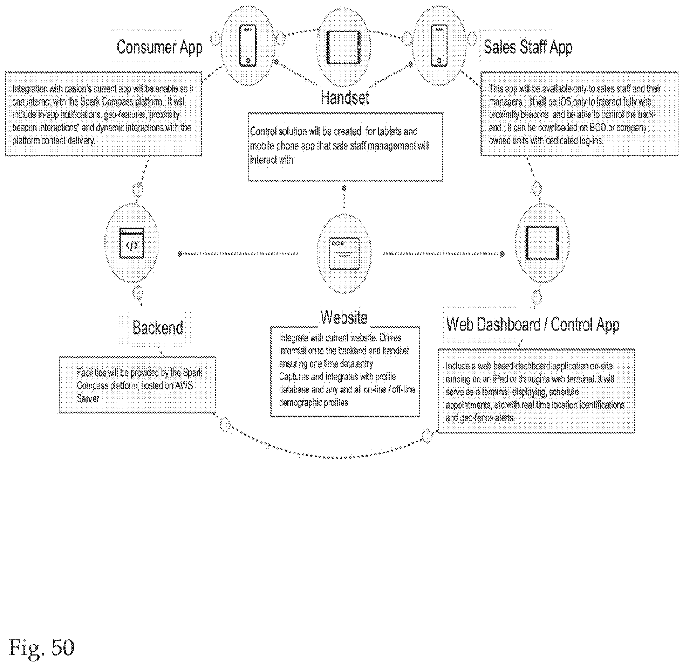

Fig 50 is a schematic overview showing how a complete SHCICP-MTCICP infrastructure incorporates "consumer apps" on mobile "handsets", integrated with a "website". Output is sent to the "Consumer App" and "Sales Staff App". The platform is controlled via a "web Dashboard/ control app" that controls the web site, takes information from this and sends information there. The "Sales Staff' app is also controlled directly via the "Web Dashboard/Control App" and communicates bi-directionally between the two. In some instances these can be one and the same. Data from all goes into the "Backend" server. This is intended to be illustrative and not all encompassing.

### Sporting Events Example

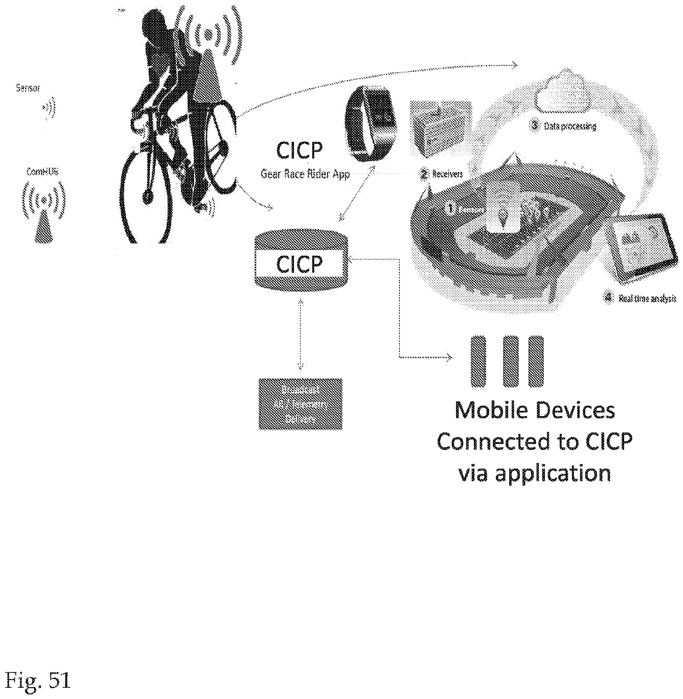

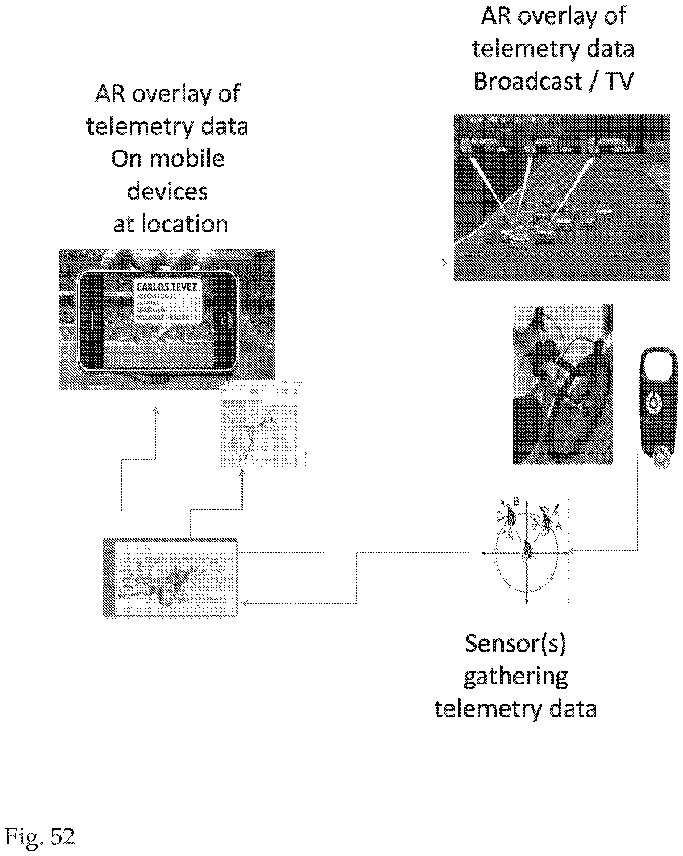

Fig 51 depicts a complete SHCICP-MTCICP infrastructure for sporting events and competitions, in stadiums, outside of stadiums or both in and out of a stadium. Contestants, in this case bicycle riders are competing along a track outside a stadium. There are sensors along the track "Sensor" and there are sensor communication hubs "ComHUB". There are also sensors on the bicycle as indicated on the pedals and handle bars. The rider is wearing a heart monitor as indicated by the heart and a sensor communication hub. The rider can also wear a wearable device with an app that gathers data and receives data via an app that is connected to the SHCICP-MTCICP, Fig 51 "Spark Compass Gear Race Rider App". Both communicate with the SHCICP-MTCICP depicted as "Spark Compass". Data that has been aggregated and recalculated can be transmitted to Broadcast AR/Telemetry Delivery' enabling reproduction of the rider along the track in augmented reality. For system that include sensor feedback from the viewers of the content and for dynamic interactive virtual reality, sensor data can be transmitted back into the SHCICP-MTCICP. The stadium can also be connected via sensors in the stadium Fig51-1 that communicate data with receivers Fig 51-2 that can be used to deliver data to a central cloud based data processing device, Fig 52-3 with real time analytics, Fig 52-4. This can be a standard off-the-shelves system such as Cisco Stadium Vision platform or Hopscotch's app and platform system, or it can be a complete SHCICP-MTCICP infrastructure. The SHCICP-MTCICP depicted as "Spark Compass" can also be delivering and receiving data and sensor input / feedback from connected devices as depicted by "Mobile Devices w Spark Compass Race APP". This is intended to be illustrative and not all encompassing.

Fig 52 is an infographic depicting more details about a sensor system that can gather data from sensors, combine it with geo-locations to deliver content that is relevant to specific participants during a contest such as a bicycle race with presents a map vie on a device, to a football game that super-imposes a football player's stats in an augmented reality representation to the telemetry data from race cars as shown in video overlays in a TV broadcast. This is intended to be illustrative and not all encompassing.

### Vertical Industries Example

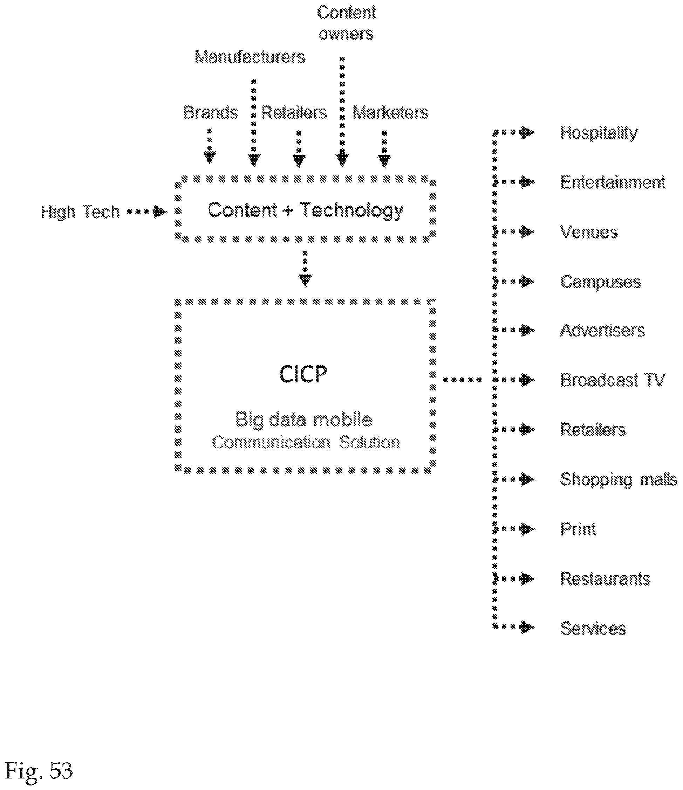

Fig 53 is an infographic depicting how various vertical industries can provide content and information into a MTCICP as depicted as "Spark Compass" which can process the big data and provide communication to numerous vertical markets. This is intended to be illustrative and not all encompassing.

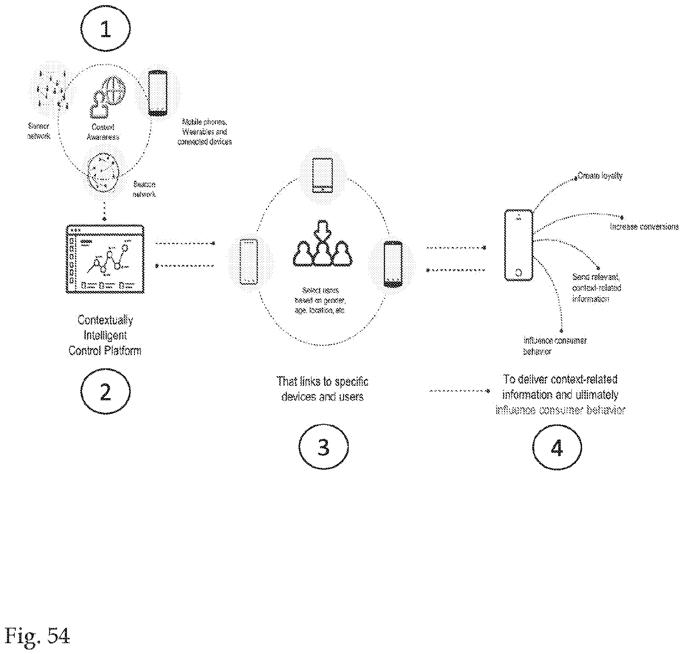

Fig 54 depicts the data flow from sensors, mobile devices and associated sensor and beacon networks to create "Context Awareness" as indicated in 53-1. The information is then sent into a Contextually Intelligent Control Platform - as subset of a CICP - as shown in 53-2. Data is sent to and from this device to end users and content is linked to specific devices based on their users' gender, age, location and other known parameters identifying the specific user as shown in 53-3. This date is the deliver specifically to a user to create loyalty, increase sales, send relevant information and or influence consumer behavior as shown in Fig 53-4. This is intended to be illustrative and not all encompassing.

### Reward-Based Behavior Modification Example

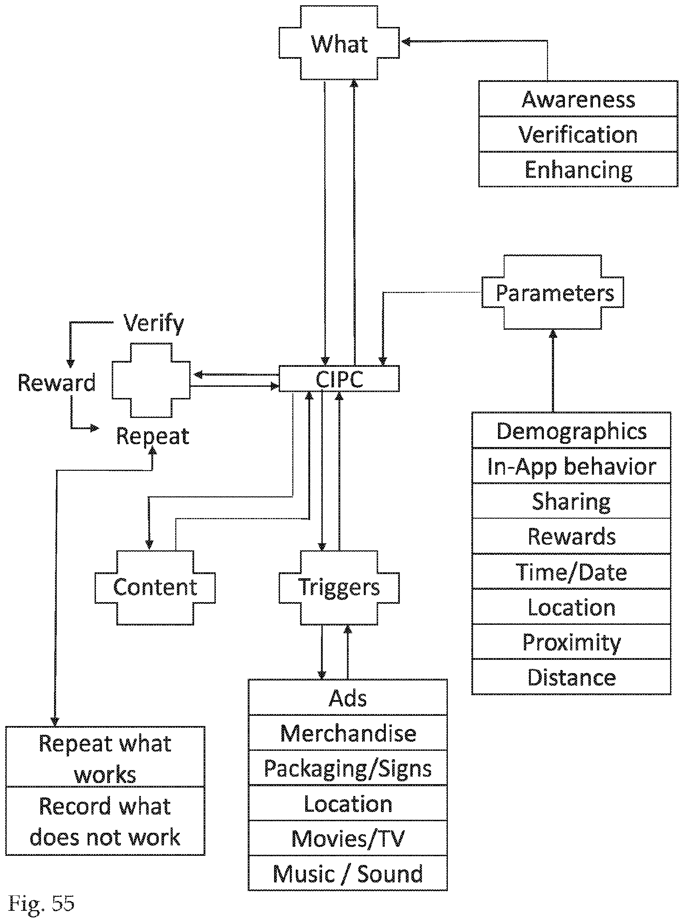

Fig 55 is a schematic infographic of a complete platform that incorporates parameters for content delivery such as "what", "parameters for offers", "triggers" that initiates the "content delivery", with the ability to "Prove", "Reward" and "Encourage" to validate and "Verify a Close of Sale" present a "Reward" and "Repeat" what works. A series of sub categories are listed for each of these actions. This is intended to be illustrative and not all encompassing.

### Rich-Media Content Delivery Management Example

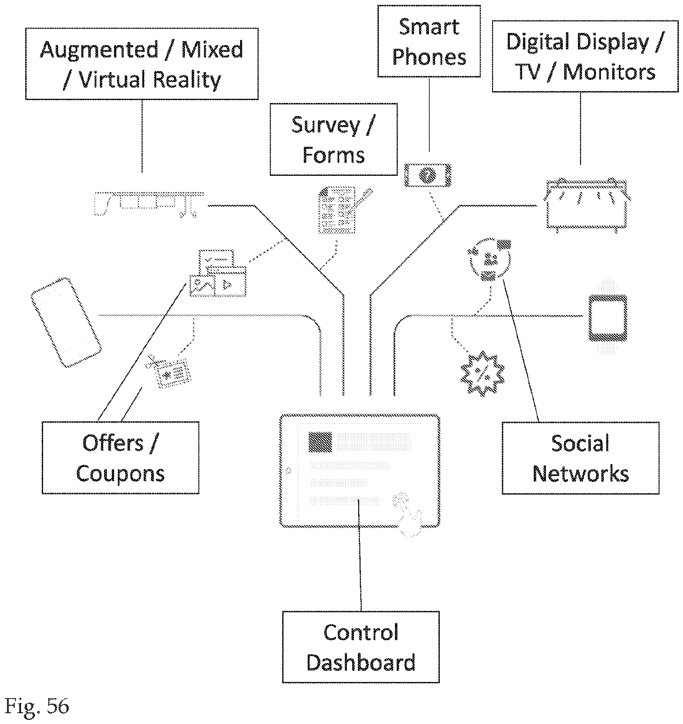

Fig 56 shows a schematic representation of the content management solution part of a CICP, MTCICP and / or a SHCICP-MTCICP. Content can be displayed on a magnitude of devices from phones and wearables, tablets to digital displays. Content can be interactive and present coupons and offers, data and video overlays, surveys and forms, questionnaires, social media and networks and other sensors. Some use cases are listed. This is intended to be illustrative and not all encompassing.

### Patient Care Example

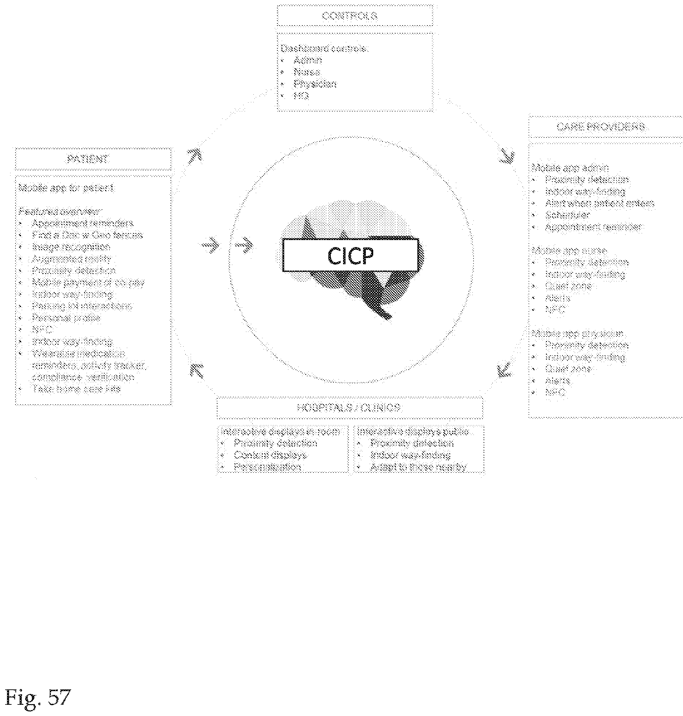

Fig 57 shows a schematic representation of the content management solution part of a CICP, MTCICP and / or a SHCICP-MTCICP in a situation where a patient is receiving care from a group of care providers via their connected mobile apps "Mobile app admin", "mobile app nurse" and "Mobile app physician". Hospitals and clinics can use the system to interact with the patent directly in the rooms, "interactive displays in-room" and with less sensitive information that has been scrubbed from personally identifiable information (PII) in "interactive displays public". All can be displayed for the patient in the "Mobile app for patient". Controls of the system and content can be administrated via "Dashboard controls". All is controlled and centered on the MTCICP depicted as "Spark Compass PaaS". Some use cases are listed. This is intended to be illustrative and not all encompassing.

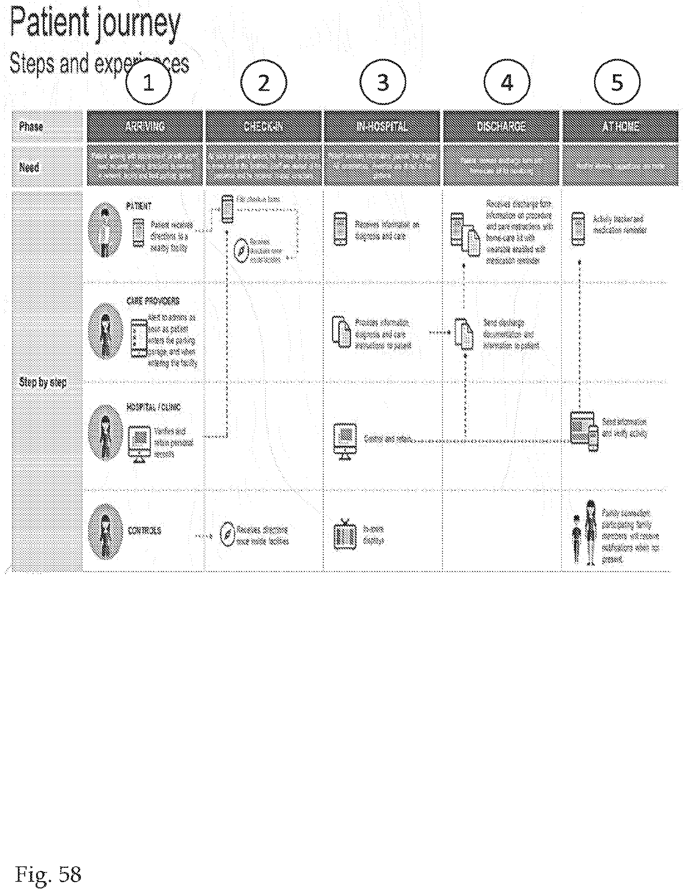

Fig 58 depicts an overview of a user's journey as they interact with a facility, get checked in, are staying in the facility for a period of time, when the leave and how they are communicated with after leaving the facility. This journey could be a person checking into a hotel, boarding a plane, ship or train, enters a stadium or convention center. In this instance, the journey depicted is that of a patient while arriving at a hospital to receive care, Fig 58-1, during the check in process, Fig 58-2, during the stay in the hospital, Fig 58-3, during discharge from the hospital, Fig 58-4 and after the patient arrives back home, Fig 58-5. The participants depicted in this patient journey overview are the "Patient", the "Care Providers", the staff and admins at the "Hospital/Clinic", and the oversights and "controls" of the process, features and content. A SHCICP-MTCICP solution and infrastructure would be used to verify user, enable controls, and enable curated content delivery, instructions and verifications, with check-in, check-lists and content presented to controllers, care givers and facilities. Some use cases are listed. This is intended to be illustrative and not all encompassing.

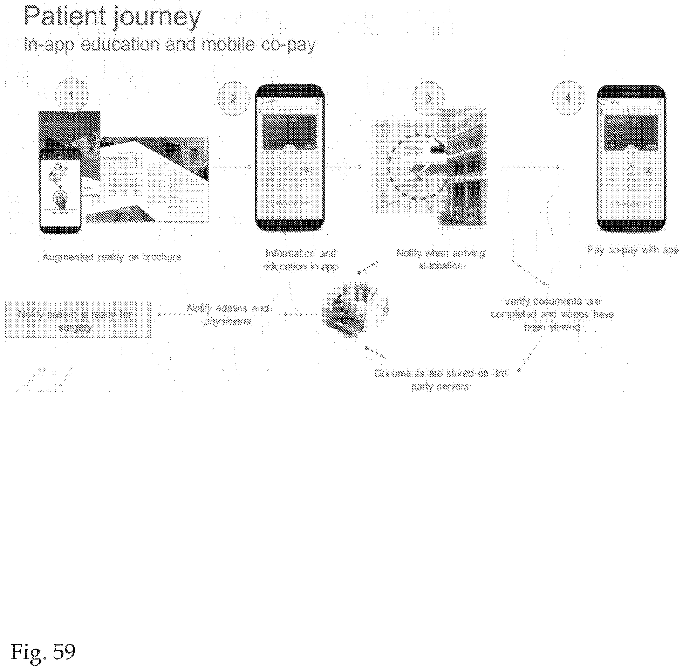

Fig 59 is an infographic overview of a "Patient Journey", content delivery, form verification, geo-location based messages and alerts and mobile app that enables co-payment. The patient about to undergo a procedure receives printed information and a mobile app on his device that is connected to a SHCICP-MTCICP that incorporates delivery of educational information in augmented reality on the printed materials as shown in Fig 59-1. The action of triggering the AR in the app unlocks education and information in the app as shown in Fig 59-2. It can also unlock verification forms, pre-op consent forms, surveys, check-lists and instructions. When the patient arrives on the facility grounds, the SHCICP-MTCICPs geo-fence feature will triggered an alert to the SHCICP-MTCICP that the patient is on the premises, Fig 59-3. An alert will be sent to the appropriate staff, nurses, physicians, administrators, care givers, immediate family member who have been granted access to receive the information via the SHCICP-MTCICP. When this alert is sent, a verification request is triggered to ensure that the proper forms presented in in Fig 59-3 are completed. Such documents can be presented from and stored on separate third party vendors and supplier should the operator of the SHCICP-MTCICP so desire. The result of these queries for completed forms is sent to the nurses and physicians, and if complete the patient is declared clear for surgery. A mobile payment option is then enabled in the mobile device ensuring the patient pays his or her co-pay prior to procedure start, Fig 59-4. Some use cases are listed. This is intended to be illustrative and not all encompassing.

### Lifestyle - Health Management Example

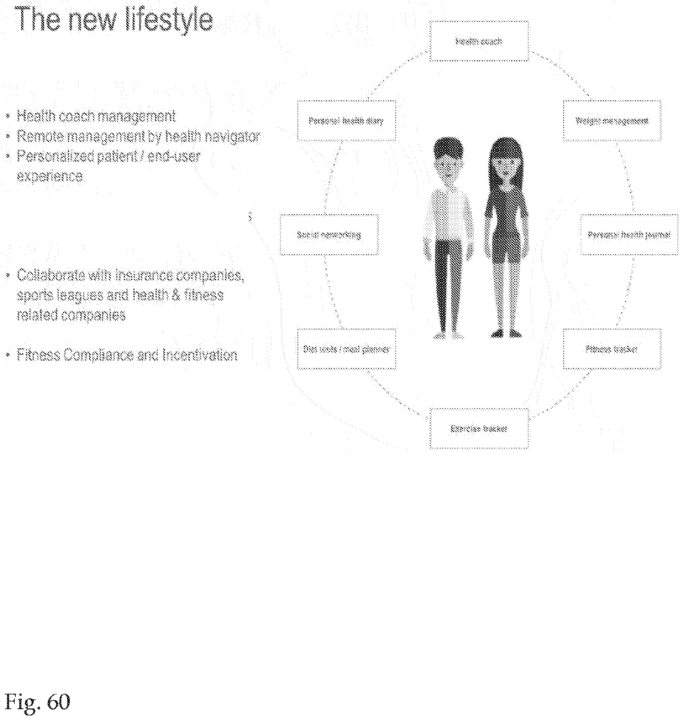

Fig 60 depicts a new lifestyle using a series of devices that delivers content, triggers and suggest healthy behavior via a series of devices that are delivering content and experiences via a central SHCICP-MTCICP. Use case such as "health coach", "Weight management", "personal fitness journal", "Fitness tracker", "Exercise tracker", "Diet tools / meal planner", "social networking" and "Personal healthy diary" are use cases that can be enabled via such a system. Authorized users of the platform to deliver the content and experiences can be "health coach management", "health navigator" or the end user themselves. It can be connected with insurance companies, sports leagues and fitness/health companies. It can be used to ensure compliance with fitness programs and to provide incentives. Some use cases are listed. This is intended to be illustrative and not all encompassing.

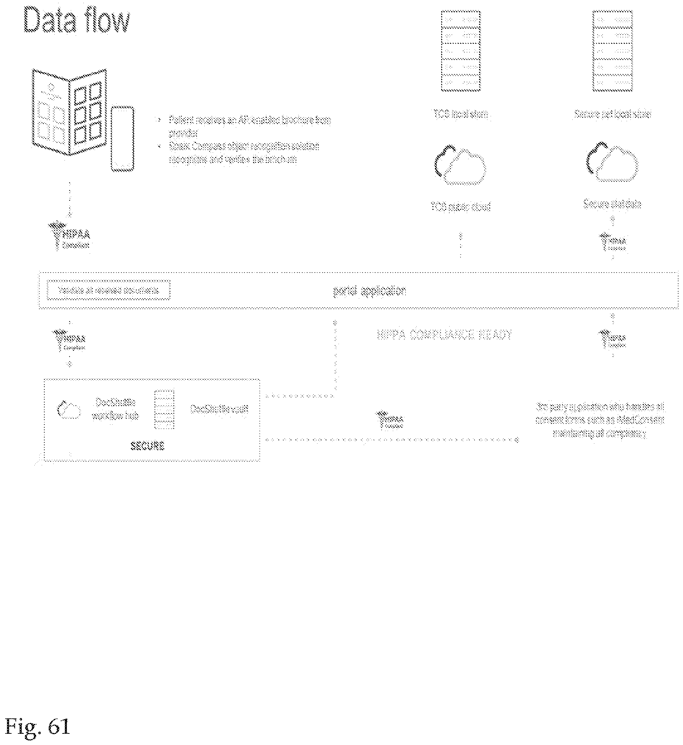

Fig 61 depicts the data flow for a MTCICP system used for a pre-check verification of a patient filling in pre-operation consent forms prior to having a procedure performed as described in Fig 59. The patient is using a mobile application that is on a device that is connected with the MTCICP. The mobile device triggers a video or information on the printed materials that the patient is given to be informed about the operation or procedure. This trigger and consequent playing of the video or display of the content is recorded and verified by the MTCICP via the connected mobile app. This video is a public video and requires neither personal identifiable information nor a Hipaa compliant data transfer. The trigger and re-play of the video is also transferred and recorded as an event by the MTCICP that is sends to a Hipaa compliant data base via an approved data transmission. Based on these events, the MTCICP then enables a third party vendor - depicted as iMedConcent group - to present the pre-op - consent forms to the MTCICP. The MTCICP then present these documents and /or links via HIPPA compliant communication channels to the patent within the MTCICP connected mobile app on the patient's phone. This is for illustrative purposes and not intended to be all encompassing.

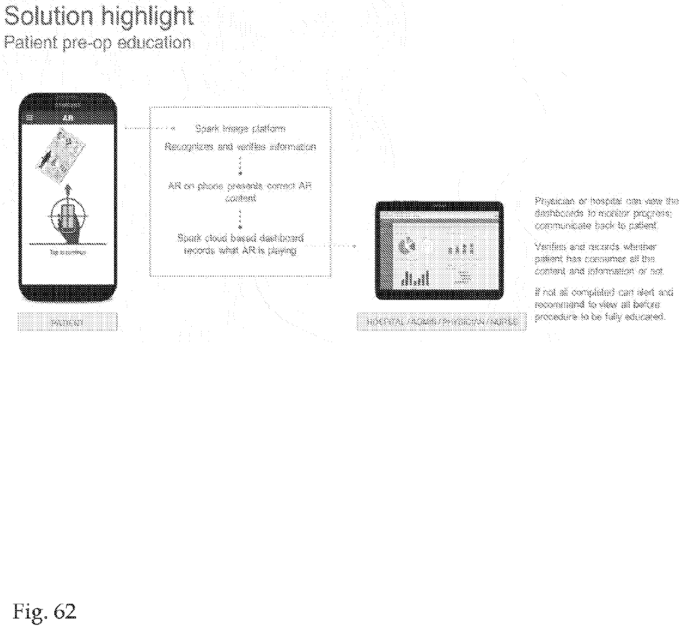

Fig 62 depicts an extension to Fig 61 providing an alert presented via the MTCICP that the patient has viewed the education information and has completed the pre-operation consent forms. This is sent to staff, admins, check-in personnel, hospital administrators, physicians, care givers and any others that have been granted permission to know, be alerted or control the information by the MTCICP. If the patient has failed to complete any of the above, the system will alert the appropriate personnel so that corrective actions can be taken. This is for illustrative purposes and not intended to be all encompassing.

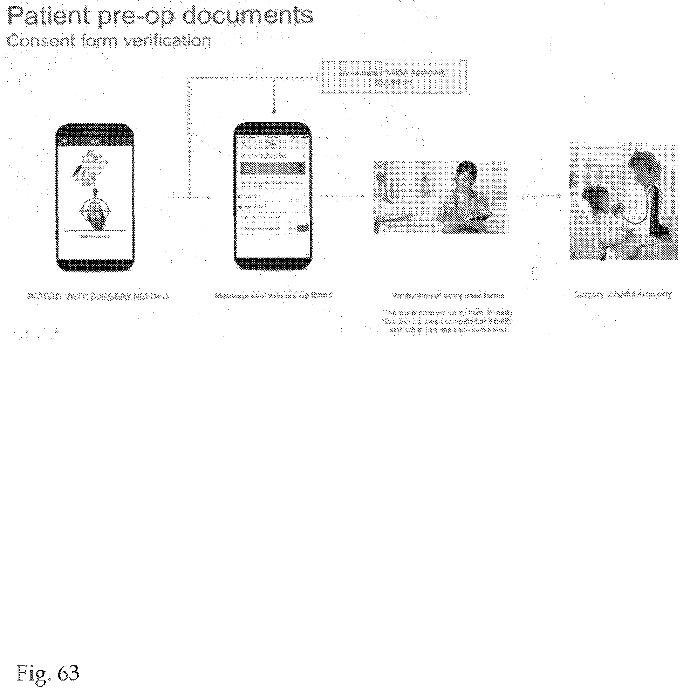

Fig 63 extends the data flow shown in Fig 62, Fig 61 and Fig 59. In this illustration, an insurance company has been granted access to the MTCICP that controls the patient's mobile app. The MTCICP will alert the insurance company when the patent has viewed the education information and presented the appropriate forms to the patient and the insurance company based on this event. The MTCICP can then also send the pre-op form alerts and integration as defined in Fig 62. This is a use of the MTCICP event-action-verify-record architecture. This is for illustrative purposes and not intended to be all encompassing.

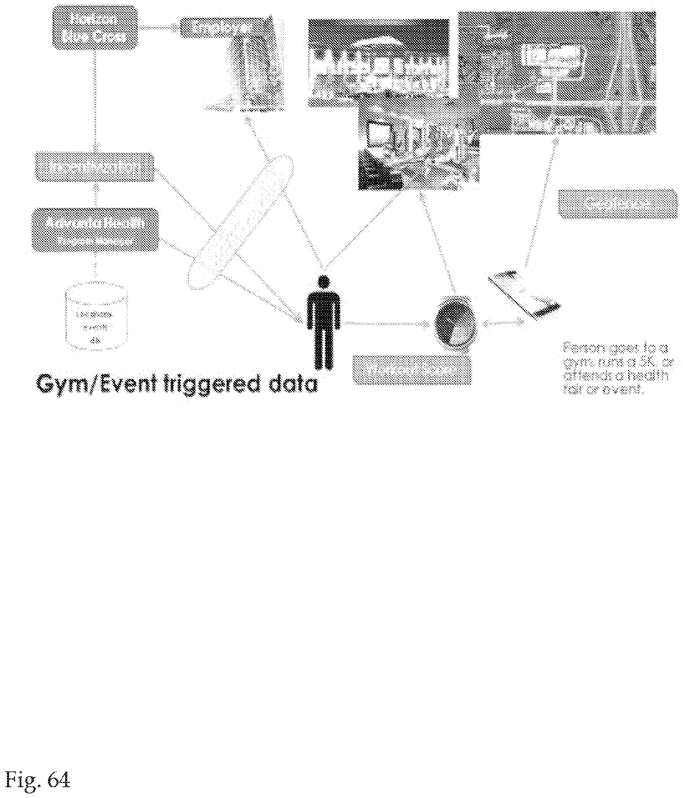

Fig 64 is a schematic overview illustrates a SHCICP-MTCICP installation in a fitness gym or similar facility as operated by a corporation - depicted as "Employer" - that is interested in maintaining a healthy staff. It can also be any geographical location that is somehow preprogrammed in the SHCICP-MTCICP. The master tenant administrator of the SHCICP-MTCICP can be the corporation or the program operator might be a third party, in this case depicted as "Advanta Health". The SHCICP-MTCICP is depicted in parts as "Spark Compass". The end user is performing a series of exercises that are captured by wearable sensors, smart watches and / or mobile phone that have an application that integrates with the SHCIP-MTCICP and records the user's activities. The can include locations, physical gyms, the corporate offices or facilities, any location that has been defined into the SHCICP-MTCICP. The ""Program Manager" may have employed an incentivization algorithm or command or campaign alone or with the help of a medical insurance company or health care organization or any other qualified and approved third party, here depicted as "Horizon Blue Cross". This can be used to enable the SHCICP- MTCICP to deliver messages, incentives, rewards, encouragement, motivation or other messages to encourage the user to have a healthy lifestyle with the capability to offer rewards for such behavior when complied to. This is for illustrative purposes and not intended to be all encompassing.

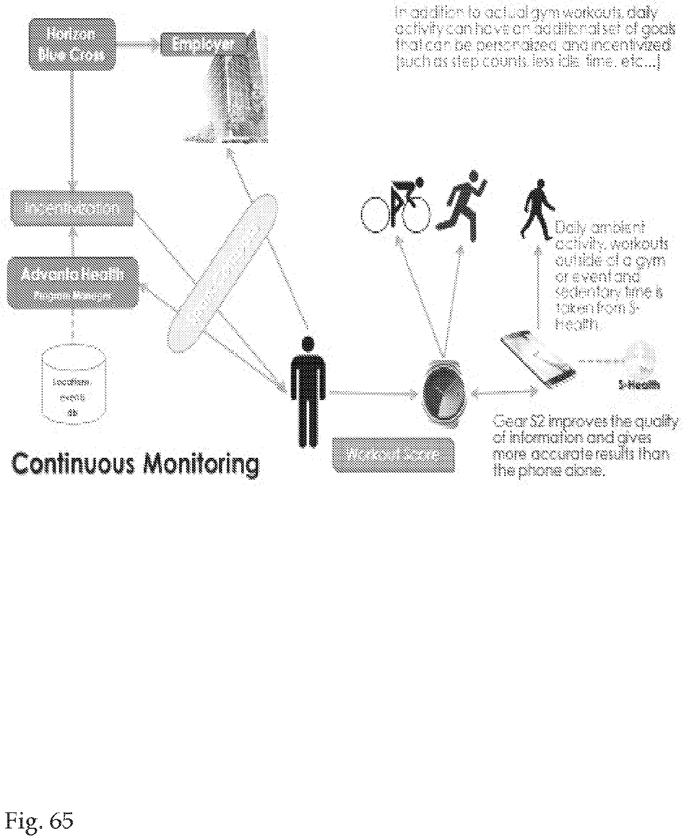

Fig 65 is an extension to the architecture described in Fig 64. In this embodiment, the SHCICP-MTCIP is enabling continuous monitoring should that be desired and approved by the user. A total overview of the user's lifestyle and fitness level can then be monitored as captured by the devices, depicted as "S-Health" here. Mobile wearable devices depicted as "Gear S2" can be integrated with the SCHICP-MTCICP to provide accurate user motions and activities. This is for illustrative purposes and not intended to be all encompassing.

### Airport Example 2

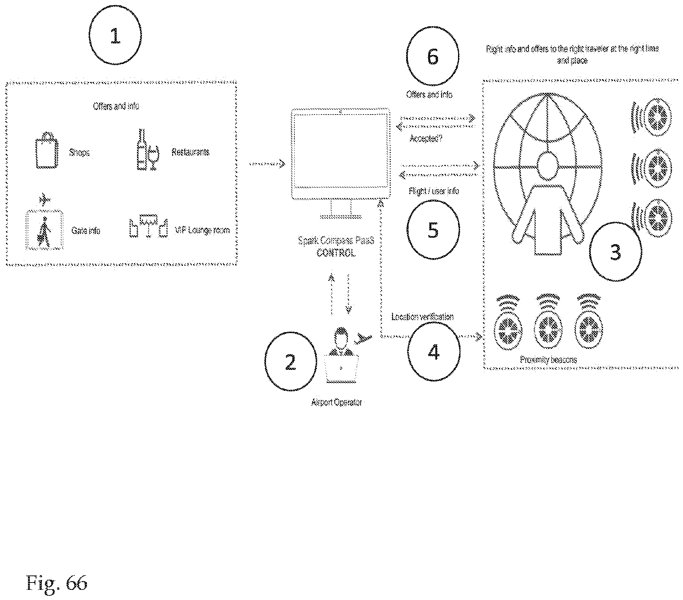

Fig 66 depicts the SHCICP-MTCICP infrastructure as installed in an airport.. Offers and information from various tenants as well as facility information such as lounge location and other re3levant information such as gate information, Fig 66-1, are presented into the SHCIP-MTCICP depicted here in as "Spark Compass PaaS" control. The system and overall control of the SHCICP-MTCICP is the Master Tenant, depicted as "Airport Operator", Fig 66-2. Travelers moving across the airport facility are in contact with sensors such as proximity beacons as they move across the facility, Fig 66-3. These interactions provides location identification and proximity verification of the user as he moves across the facility, and this is communicated to the SHCICP-MTCICP and verified, Fig 66-4. Gate and flight information can then be sent to the user based on the data provided to the SHCICP-MTCICP based on the location of the user, Fig 66-5. If the user is at the right location, such as the gate that the user's flight is departing from, gate information will not be transmitted. Similarly information and offers can be presented based on location and their relevance. Some information that is nearby may be highlighted and sent first, while other information about things further away may be presented in a discovery / search mode. Any offer accepted can be transmitted back to the SHCICP-MTCICP for further processing. This is for illustrative purposes and not intended to be all encompassing.

### Smart City Example 2

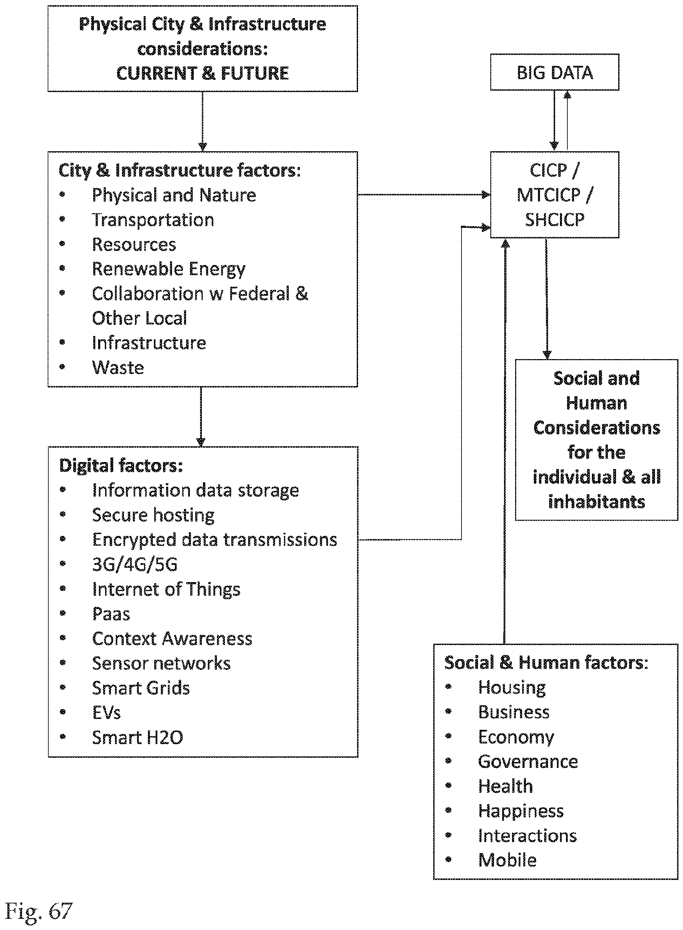

Fig 67 depicts a high level overview of an "Intelligent Platform for a Smart City" that incorporates a control platform powered by a SHCICP-MTCICP that incorporates Big Data to ensure social factors while defining the SHCICP-MTCICP infrastructure across the city. This flowchart identifies the variables, features, technologies, considerations, parameters and factors that might go into consideration to define the work and data flow for a SHCICP-MTCICP infrastructure installation. This is for illustrative purposes and not intended to be all encompassing.

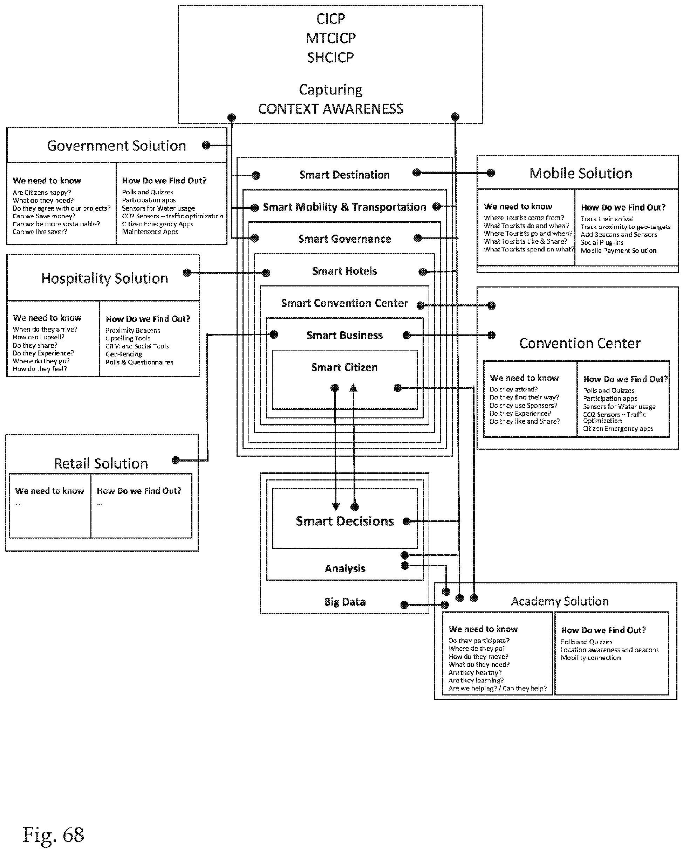

Fig 68 extends the flow illustrated in Fig 67., this figure depicts the consideration and interactions between the various vertical use cases for a master city wide SHCICP-MTCICP with sub-tenant SHCICP-MTCICP system installations in various areas. This is for illustrative purposes and not intended to be all encompassing.

### Big Data Aggregation Example

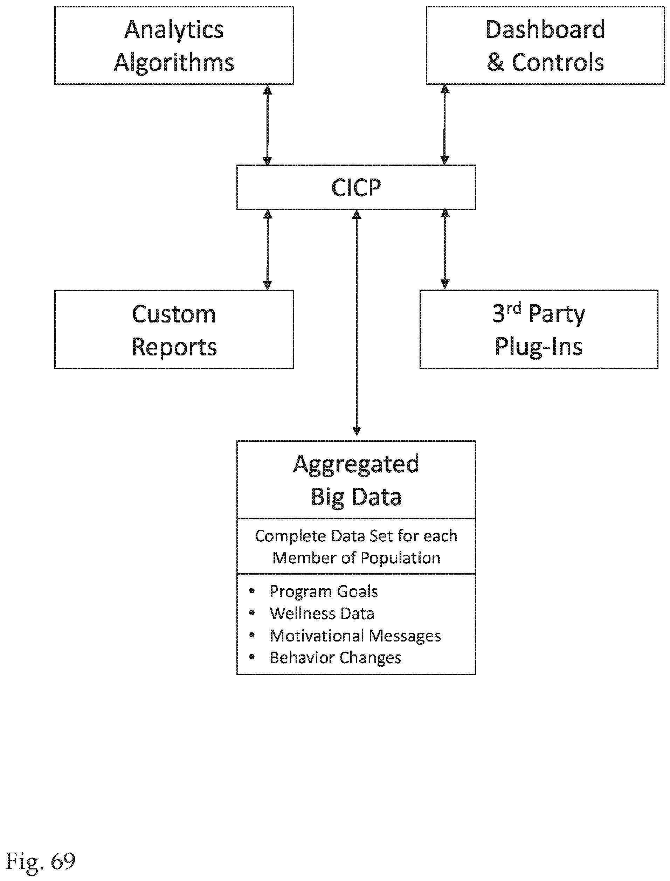

Fig 69 depicts the way a CICP. MTCICP or SHCICP-MTCICP can aggregate "Big Data" to prepare custom reports, can be used to power or integrate with 3^{rd} Party Plug-ins, can presented in on-line dashboards and can also be integrated with additional data sets to provide data insights. This is for illustrative purposes and not intended to be all encompassing

### Museum Example

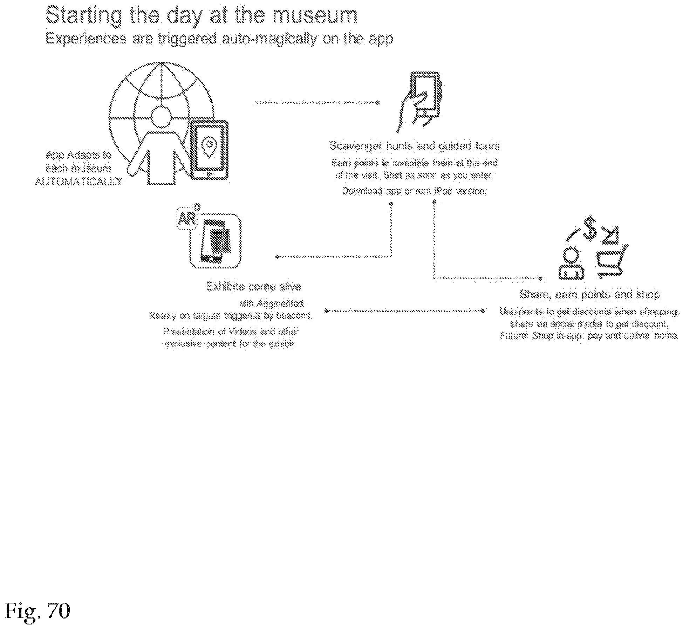

Fig 70 depicts a use case where a museum has installed a SHCICP-MTCICP infrastructure. A visitor has installed a mobile app on his mobile device that is connected to the SHCICP-MTCICP. This app opens automatically when crossing the geo-fence around the museum as set by the SHCICP-MTCICP. Various experiences across the museum can be automatically triggered and enabled within the app as defined and programmed from the SHCICP-MTCTCP. These can range from AR experiences showcasing exhibits with curated content, provide information or create games such as scavenger hunts. As the visitor moves across the museum the system can award points, likewise, if the user performs tasks such as completing quizzes or surveys, shares photos of the experience on social networks or does other actions based on messages transmitted from the SHCICP-MTCICP, he can earn points. He can then use this points for prizes or use the app to purchase products in the museum show, all enabled via the app as controlled and managed by the SHCICP-MTCICP and the known location of the visitor. This is for illustrative purposes and not intended to be all encompassing.

### Transportation Company Example

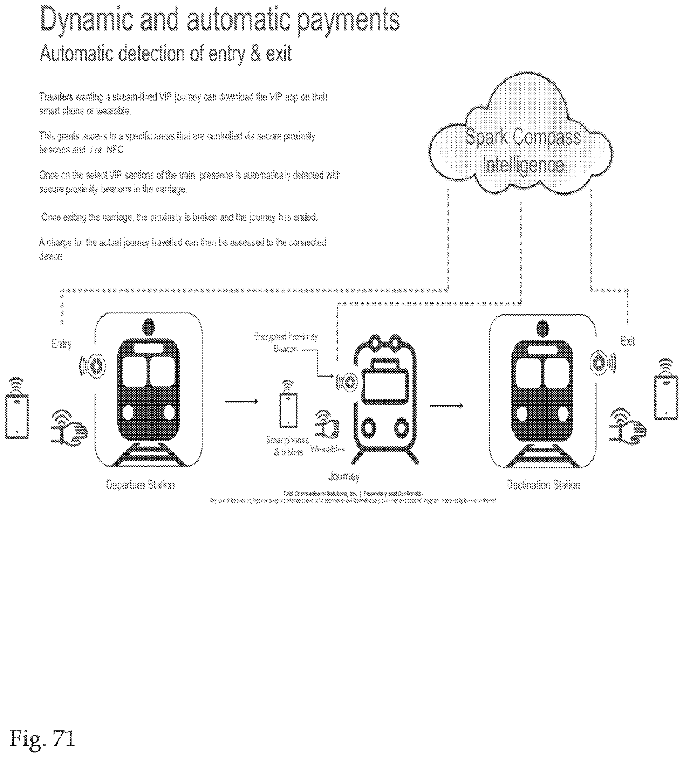

Fig 71 depicts the use of a SHCICP-MTCICP used by a transportation company for the automatic payment for the travelers using their transportation system, in this case a train / trolley system. The SHCIC-MTCICP is depicted as "Spark Compass Intelligence" in. A train arrives at a station "Departure Station". This train has beacons and sensors installed that are identified and integrated into the SHCICP-MTCICP. A traveler enters the train and his "Smartphones and tablets" and / or "Wearables" that have an application installed that integrates with the SHCIC-MTCICP come into proximity to the beacon on the train. This interaction can include an interaction with an "Encrypted Proximity Beacon". This interaction is recorded as an action by the SHCICP-MTCICP as the beginning of the journey. Time, date, location and user identity can be recorded as well. The total number of travelers on the specific wagon or section of the train can also be recorded and retained. The proximity between the beacons and the devices will remain during the trip and time the train is travelling as denoted by "Journey". As the traveler arrives at the "Destination Station" he leaves the train and the proximity between the sensors and beacons on the train and the traveler's devices is broken. This event is denoted as "Exit" and denotes the end of the journey for the traveler. A charge can then be assessed by the pre-programmed SHCIC-MTCICP based on the distance between the "Departure Station" and the "Destination Station" which is the current normal fare structure. A dynamic charge can be added or replace this fee based on length of time of the journey, time of day, day of the week, specific date, number of travelers, weather, and any other parameters that the SHCIC-MTCICP has been programmed to recognize, calculate, predict or other ways consider, or it can be displayed by the SHCIC-MTCICP for an operator to select, program or otherwise influence. This is for illustrative purposes and not intended to be all encompassing.

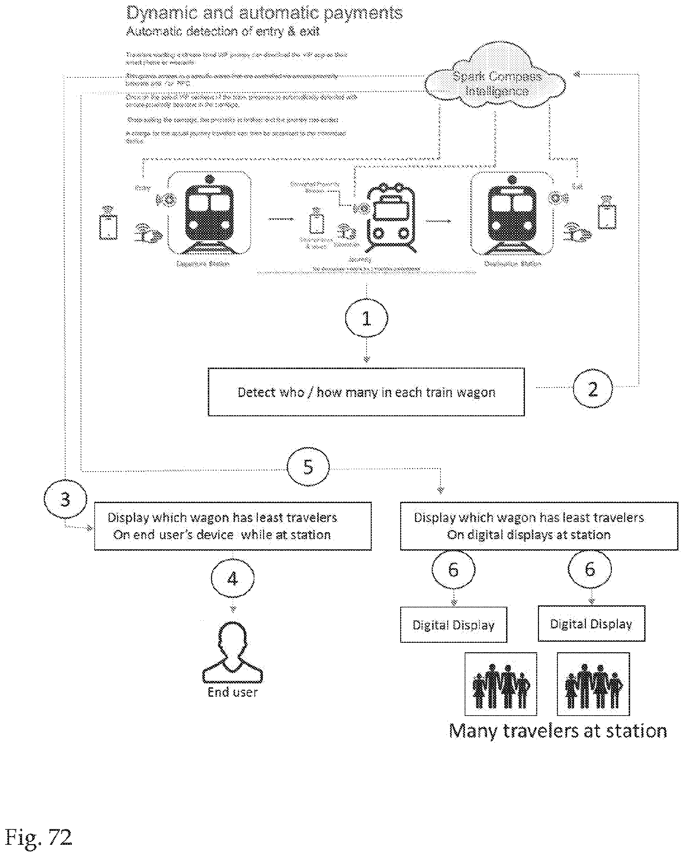

Fig 72 is an extension of the platform described in Fig 72. The data can also be used to determine how many people are in each wagon and an alert before entering the specific wagon, Fig 72-1. This is reported to the SHCIC-MTCICP, Fig 72-2. The information about which wagon has the least passengers can then be displayed on the user's device Fig 72-3. This can be before entering any wagons Fig 72-4. The same information can also be presented to digital displays at the "Departure Station" Fig 72-5. These can then be presented to numerous travelers on digital displays throughout the station and elsewhere, Fig 72-6. This is for illustrative purposes and not intended to be all encompassing

### Re-targeting Example

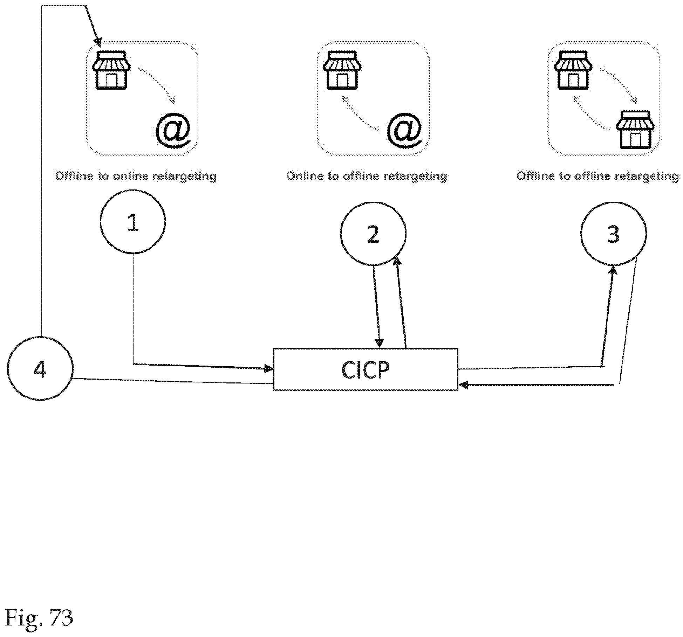

Fig 73 shows how a re-target ad and content use of a CICP can be enabled. An offline interaction with a real physical location as depicted by the schematic "house" is triggered as an on-line event as depicted by the "@" sign and triggers an online retargeting of content, advertisements, experiences or information online. This interaction is transmitted, registered, recorded and retained by the CICP, Fig 73-1. At a later time the process is reversed when an on-line event as depicted by the "@" sign drives an interaction with a physical location as depicted by the house figure. This interaction is initiated and transmitted, registered, recorded and retained by the CICP, Fig 73-2. At a later stage, physical location interactions can also be initiated and transmitted, registered, recorded and retained by the CICP, Fig 73-3. Based on any one or any combination of some or all of these interactions, the CICP can then create new or related or independent interactions between offline to retargeting of content, advertisements, experiences or information online, Fig 73-4. This is for illustrative purposes and not intended to be all encompassing.

### Trade Show Booth Example

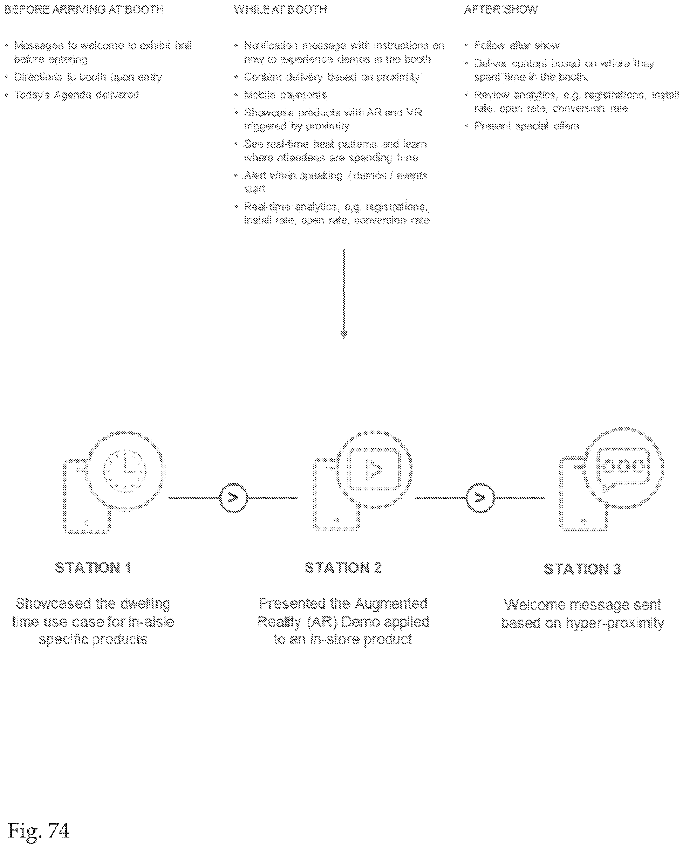

Fig 74 is a schematic overview of an exhibitor at a trade show that is using a SHCICP to enhance their visitor's experience while at their booth. This describes a series of experiences and features before attending the show and before arriving at the booth, while in the booth and after leaving the booth. A series of experiences are described within the booth as the visitor moves across the various stations in the booth, namely "Station 1", "Station 2" and "Station 3". This is for illustrative purposes and not intended to be all encompassing.

### Traveler Example

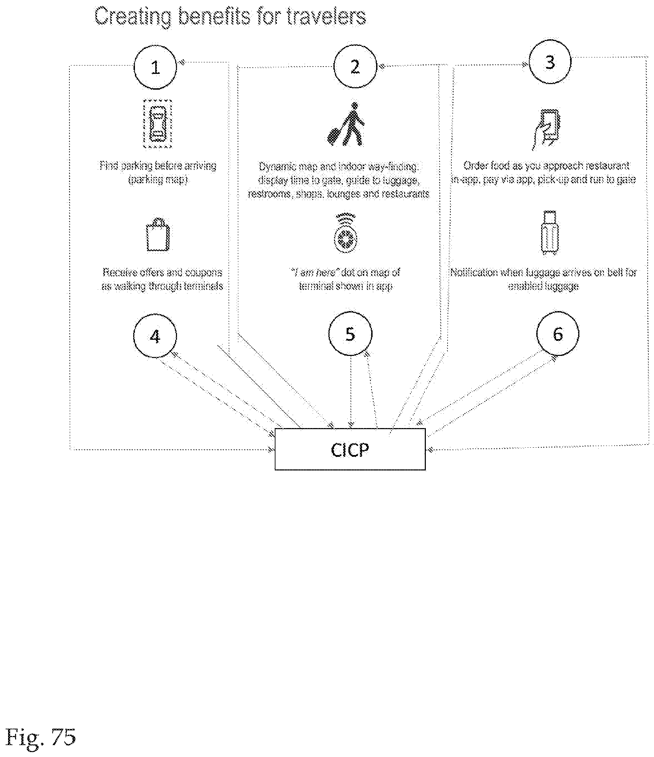

Fig 75 depicts how an airport can use a CICP to enhance the traveler's journey as they move across the facilities. While driving to the airport, the CICP system can present travel information such as traffic updates and provide directions to parking, while recording the location of the car when it has been parked. This information is transmitted, registered, recorded and retained by the CIPC, Fig 75-1. As the traveler arrives in the airport, the CICP can enable and present various features and functions such as in-door maps, gate information and more as described. This information is transmitted, registered, recorded and retained by the CIPC, Fig 75-2. As the user moves across the facilities, the CICP can enable and present menus, enable ordering and complete sales transactions. This information is transmitted, registered, recorded and retained by the CIPC, Fig 75-3. As the traveler moves across the facilities, information, offers and coupons can be presented by the CICP. This information is transmitted, registered, recorded and retained by the CIPC, Fig 75-4. Throughout the traveler's movements across the facility, the user's location can be detected and recorded by the CICP, and presented to the traveler on their mobile device. This information is transmitted, registered, recorded and retained by the CIPC, Fig 75-5. Should the traveler arrive at this airport or an airport with a similar CICP that is programmed to interact with the initial CICP, the CICP can enable the traveler to be alerted when the traveler's luggage arrives above the ground onto the conveyor belt. This information is transmitted, registered, recorded and retained by the CIPC, Fig 75-6. This is for illustrative purposes and not intended to be all encompassing.

### User Behavior Capture Example

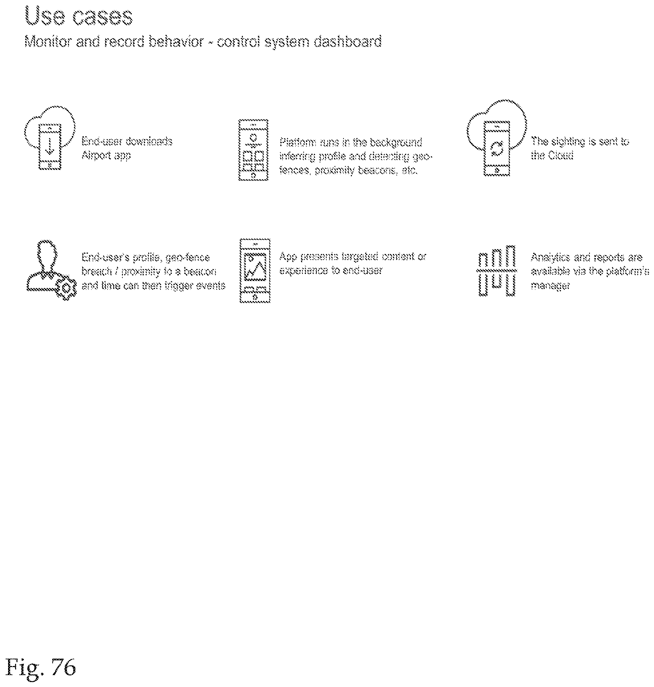

Fig 76 is a schematic overview figure showing how a CICP, MTCICP, SHCICP and / or a SHCICP-MTCICP system captures, monitors and records user behavior. An end user installs an app depicted as "Airport app" on their device, Fig 76-1. The CICP platform captures information, records and retains information, performs calculations, combines and integrates information about current behavior, context, location as well as past behavior, profiles and more, Fig 76-2. Interactions and real-life offline interactions are captured, transmitted and recorded by the CICP, Fig 76-3. Further context triggers offline in the physical world can trigger events Fig 76-4 based on the calculations done in Fig 76-2 and input from Fig 76-3. The app presents information and content, triggers experiences and presents features based on the above to the end user, Fig 76-5. All is retained, recorded and can be presented by the CICP via reports, analytics and data presented to the platform administrator, Fig 76-6. This is for illustrative purposes and not intended to be all encompassing.

### Monetization Example

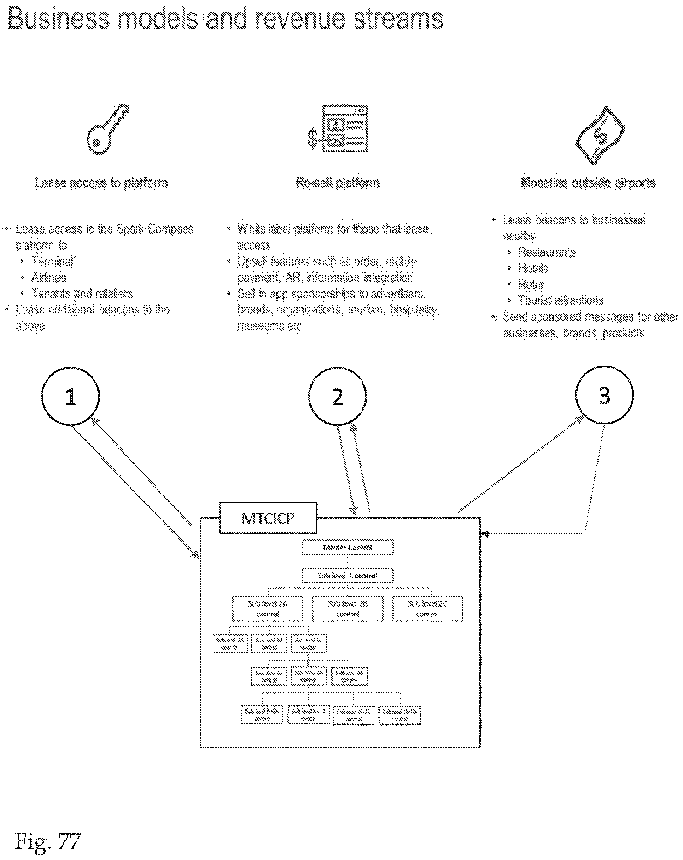

Fig 77 is a high level overview showing the ability to monetize a MTCICP in numerous ways. In this instance, a MTCICP system at an airport can enabled and programmed to enable leased access based on a selection of parameters, Fig 77-1. A simultaneous, parallel, complete or partial, or alternative and exclusive way to monetize the same MTCICP platform can be to "re-sell platform", Fig 77-2. Alternatively, or a simultaneous, parallel, complete or partial, or alternative and exclusive way to monetize the same MTCICP platform can be to "monetize outside the airport", Fig 77-3. This is for illustrative purposes and not intended to be all encompassing.

### User Location Detection Example

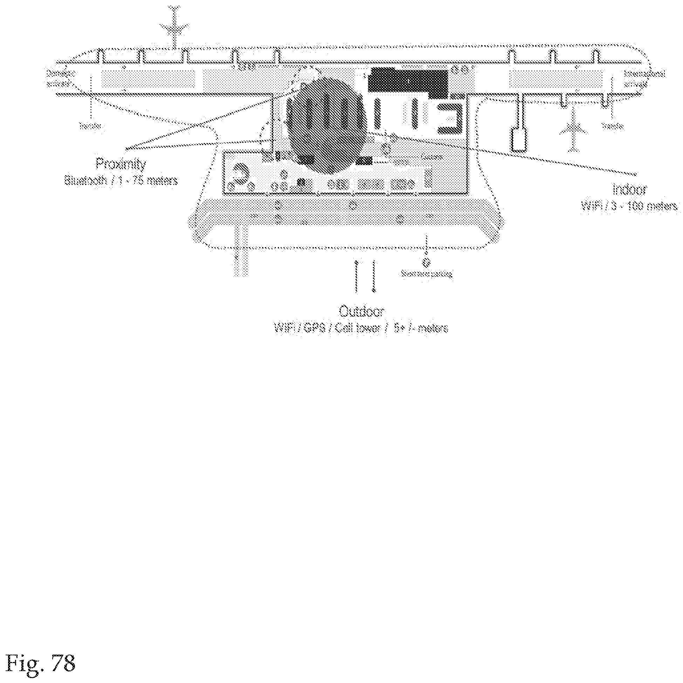

Fig 78 is an overview of the various technologies that can be used by a CICP, MTCICP, SHCICP and / or a SHCICP-MTCICP to detect location of a user or group of users. In this instance, an airport has a CICP based system in place that enables outdoor locations to be detected via geo-fences based on a variety of location based technologies such as Wi-Fi, GPS, Cell tower (assisted GPS) with accuracy expectation in the range of +/- 5 meters. Indoors, the same CICP based system can be programmed to automatically use Wi-Fi triangulation to detect location with accuracy in the range of 3 to 100 meters. Further proximity and location detection can be enabled by the CICP to be provided, detected and confirmed via Bluetooth with accuracy expectation to be 1 to 75 meters. These are based on current standard technology solutions and will be improved by the vendors providing these various solutions. This is for illustrative purposes and not intended to be all encompassing.

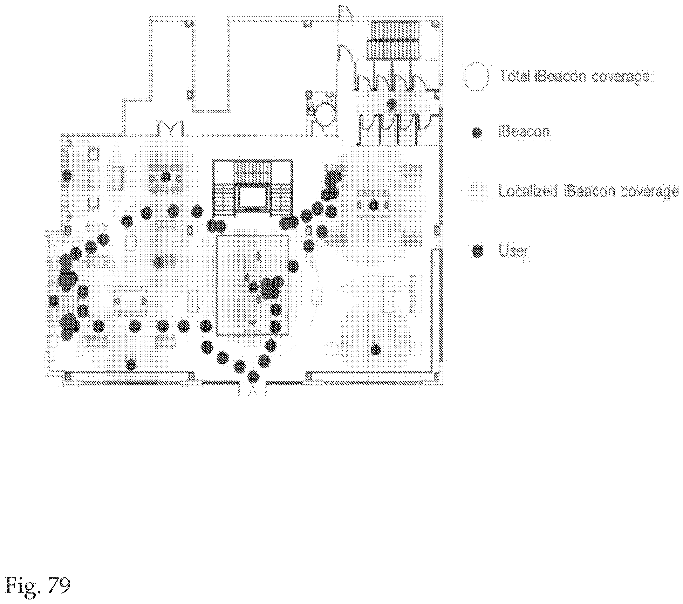

Fig 79 shows how a CICP, MTCICP, SHCICP and / or a SHCICP-MTCICP to detect location of a user or group of users inside an airport. Proximity beacons denoted as "iBeacons" installed in the facility provides signal coverage as indicated. As a user or users move across the facility, their interactions with the various beacons can be depicted as a dot on a map of the facility presented by the CICP system. This is a rendering of the input of beacon signal strengths, standard triangulation calculations of these to detect location and then representation of this calculation or calculations of the detected locations in a dashboard connected to the CICP. This is for illustrative purposes and not intended to be all encompassing.

### Enhanced Pay-to-View Example

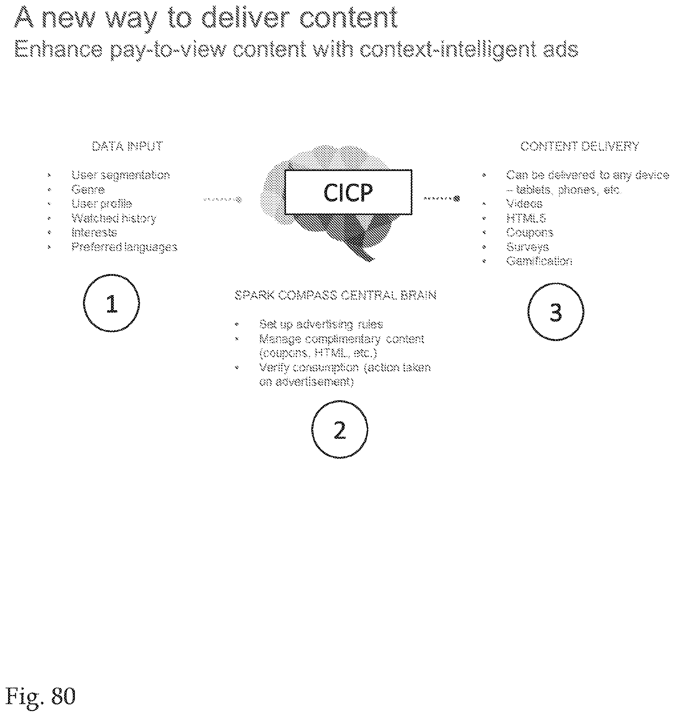

Fig 80 depicts a method to deliver content based on a central CICP control platform. Data input can detect who the user is and his/her interests and past behavior, Fig 80-1. The central CICP can be programmed with algorithms and rules Fig 80-2 to calculate what is relevant and appropriate based on the data input from Fig 80-1. The content delivered Fig 80-3 is thereby based on the intelligence provided by the CICP. This is for illustrative purposes and not intended to be all encompassing.

### Gym Use Example

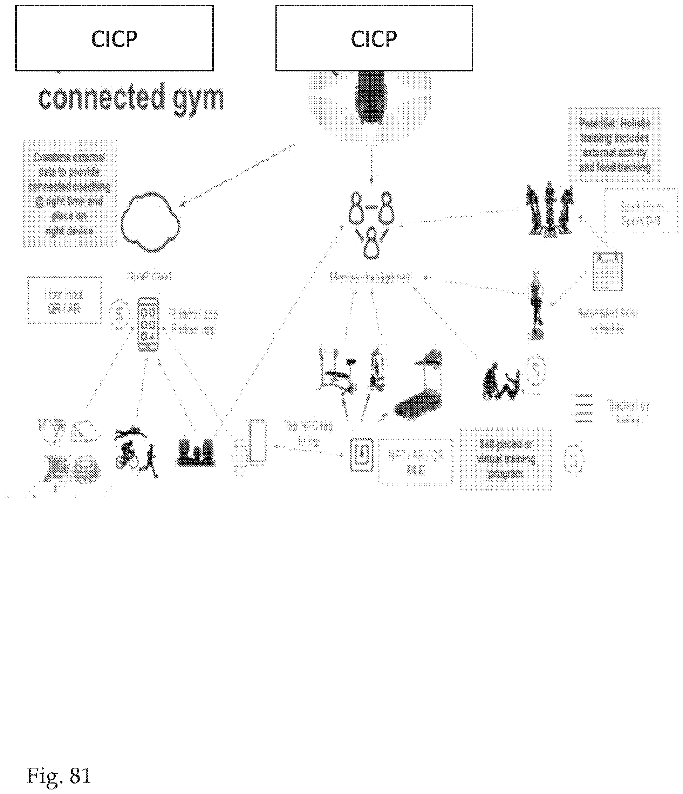

Fig 81 depicts an overview of a connected gym that features a SHCICP-MTCICP and infrastructure, Fig 81-1 as controlled by the "Member management". This SHCICP-MTCICP is connected to an external database or combination of databases, Fig 81-2. The members in the gym is using a mobile app that is installed on mobile devices and wearables, Fig 81-3, that are connected to the SHCICP-MTCICP, Fig 81-7. This app can capture their activities outside and in the gym, Fig 81-5 and be used to manually or automatically capture information about the food they consume, Fig 81-6. It can also detect when they are sedentary and other context information, Fig 81-4. All of this information is recorded, retained and communicated to the SHCICP-MTCICP, Fig 81-7. While the user is in the gym, the user's interactions with the various items of equipment within the gym can be detected via sensor interactions such as BLE beacons, NFC, QR codes or Augmented Reality (AR) between the user's wearables or mobile device, Fig 81-6. These interactions are captured and transmitted to the SHCICP-MTCICP, Fig 81-7, and captured, recorded and retained by the SHCICP-MTCICP. The user can be trained by staff members, Fig 81-8 or presented automatic or list based exercise routines and schedules, Fig 81-9. All the activities in the gym are captured, retained and transmitted to the gym member management, Fig 81-10 who controls the SHCICP-MTCICP, Fig 81-11. This is for illustrative purposes and not intended to be all encompassing.

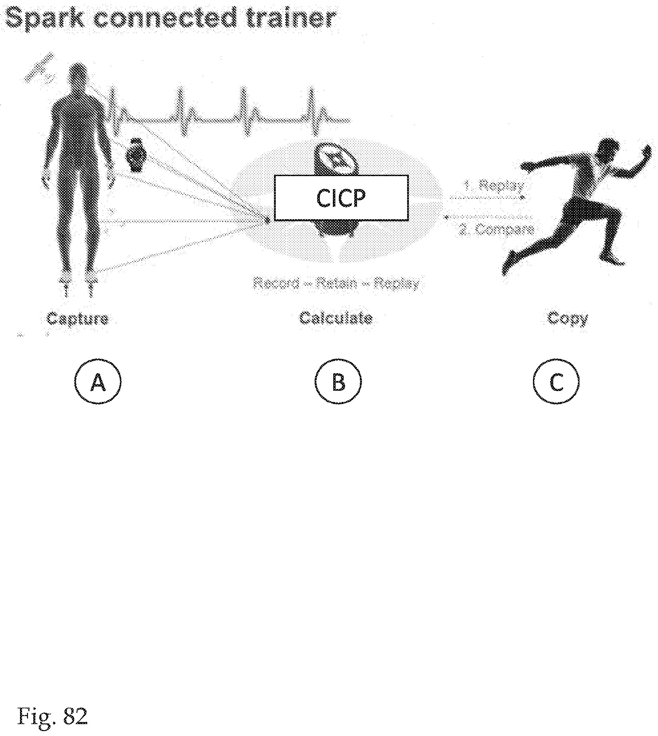

Fig 82 depicts how SHCICP can be used to capture the motions and actions of a person such as a trainer that has been outfitted with sensors that captures his or hers motions and actions, Fig 82-A. The data from these sensors are captured, recorded and transmitted to the SHCICP. The SHCICP records the data, retains it and performs calculations to create a complete recording of the actions of the trainer, Fig 82-B. It then replays these actions, Fig 82-1 and transmits this recording on devices worn by another person who is trying to copy actions of the trainer, Fig 82-C. This is captured and compared with the original motions, Fig 82-2, and communicated to the SHCICP. This is for illustrative purposes and not intended to be all encompassing.

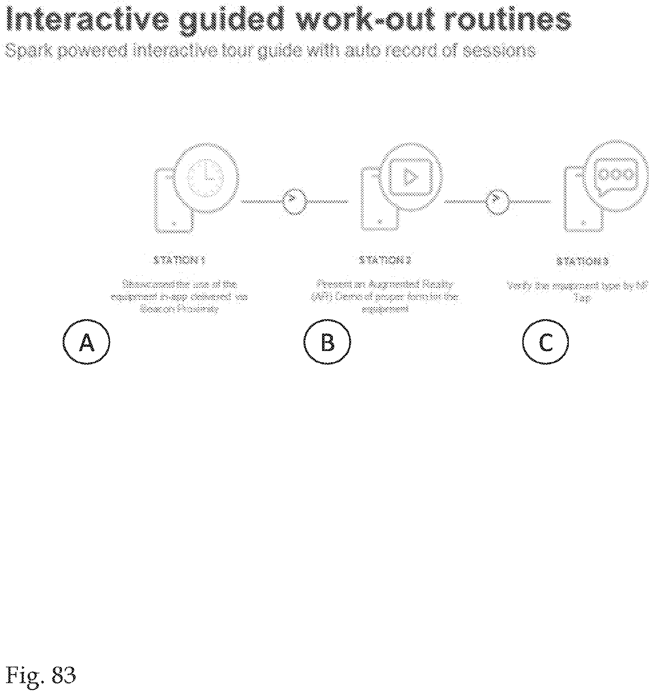

Fig 83 depicts how an interactive and guided work-out routine can be incorporated into a fitness gym that has a SHCICP platform installed. Here an action and routine is showcased in-app and delivered via a proximity beacon interaction that triggers the experience at "Station 1", Fig 83-A. At "Station 2" a demonstration of the proper use of the equipment is presented in Augmented Reality, Fig 83-B. At "Station 3" the system verifies that the user is on the equipment via a NFC tap, Fig 83-C. All the interactions, events and actions are captured and transmitted to the SHCICP, recorded and retained. This is for illustrative purposes and not intended to be all encompassing.

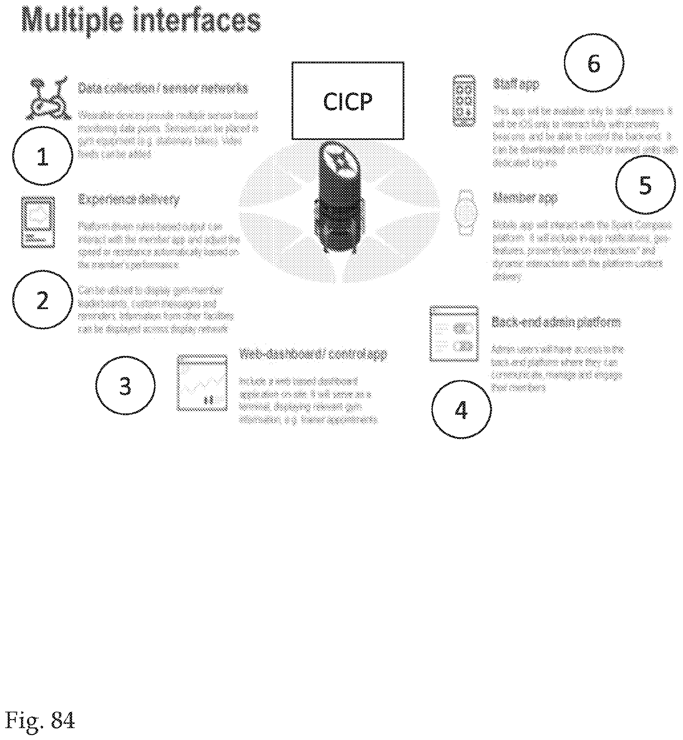

Fig 84 depicts an overview of the interfaces a CICP such as the one depicted in Fig 81 can have. These include the data capture via sensors, Fig 84-1 and the subsequent experiences that it can deliver, Fig 84-2. It will feature web interfaces with control dashboards that can also be mobile apps that control the CICP, Fig 84-3. It can also include administrative controls and data gathering, Fig 84-4. It can include both a member app, Fig 84-5 and a dedicated Staff app, Fig 84-6. Overview descriptions of all are presented. This is for illustrative purposes and not intended to be all encompassing.

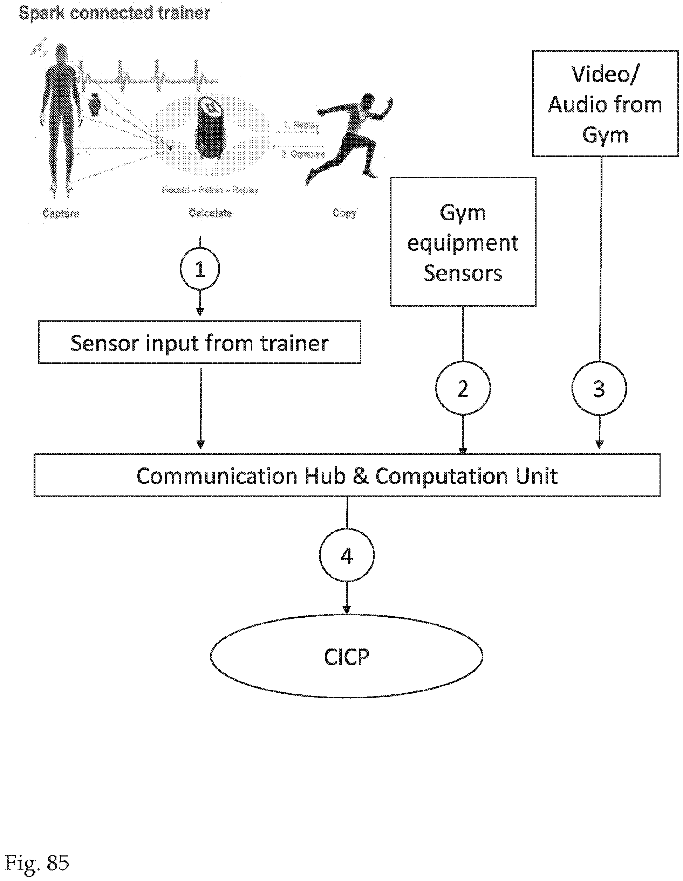

Fig 85 depicts how a system as defined in Fig 82 can be integrated into a SHCICP that has been installed in a gym. Sensors input from the trainer is captured, Fig 85-1. Data is captured on gym equipment with sensors that the trainer is using, Fig 85-2. Video and audio from the exercise is captured, Fig 85-3. The data captured from the gym facility is captured by a "Communication Hub and Computation Unit". This device collects the data and performs any computation on the data to aggregate it and presents it combined or raw to the SCHICP, Fig 85-4. This is for illustrative purposes and not intended to be all encompassing.

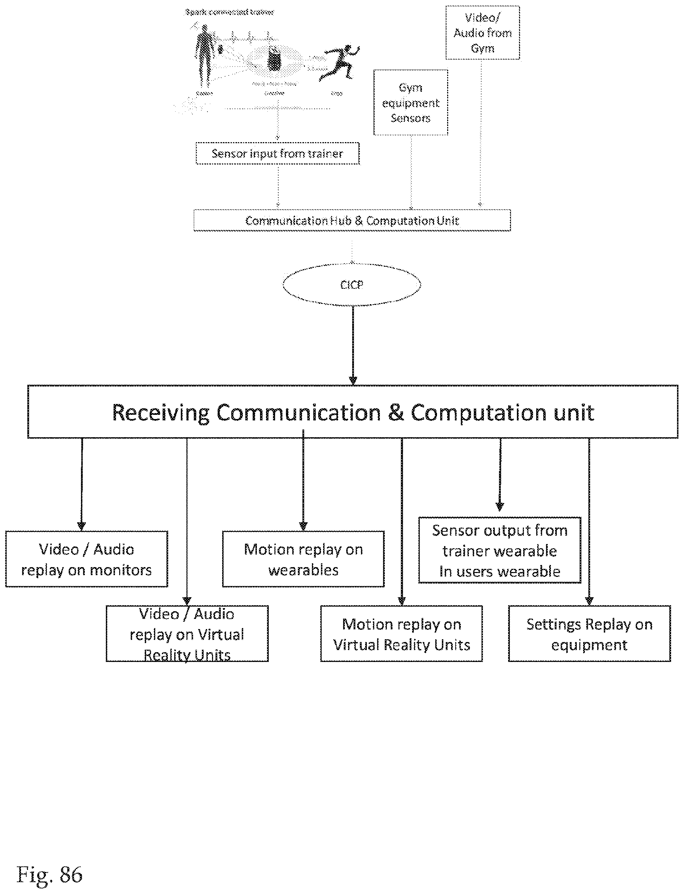

Fig 86 depicts how the system described in Fig 85 can be used to replay the experiences. This replay of the originating experiences captured in Fig 85 is transmitted to a "Receiving Communication and Computation unit", Fig 86-1. This unit is calculating this input data and presenting it in various output modes based on the equipment it is connected to. These can be TVs and monitors replaying audio and video feeds, Fig 86-2. This video and audio feed and / or other such captured data can be presented in Virtual Reality on such devices, Fig 86-3. The motion captured can be replayed on wearables, Fig 86-4. The motion captured can also be used to control settings and display modes in the virtual reality display units, Fig 86-5. The other data captured by the trainer on his or her wearables, can be replayed on the user's wearables, Fig 86-6. The data captured on the equipment the trainer was using can be used to control settings on the equipment the user is using, Fig 86-7. This is for illustrative purposes and not intended to be all encompassing.

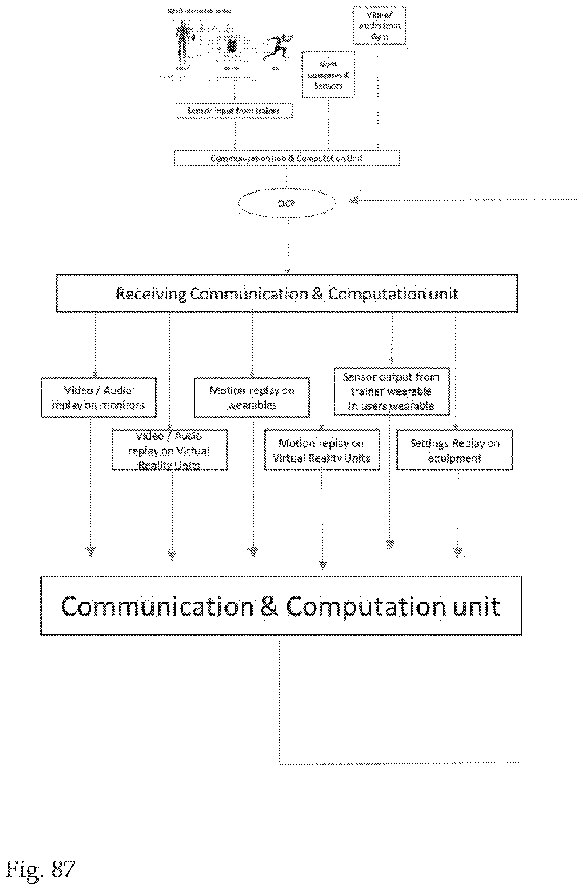

Fig 87 depicts the system depicted in Fig 86 with a feedback loop back into the central SHCICP. Here the various devices that received input from the central "Receiving Communication & Communication Unit, and replayed the data, are now providing feedback and output after the rendering of the experiences back into a "Communication and Computation unit", namely video and audio presented on monitors with an interactive component, Fig 87-1, virtual reality devices with motion feedback, Fig 87-2, motion feedback and sensor input feedback from wearables, Fig 87-3, motion feedback and sensor input feedback from virtual reality display units, Fig 87-4, motion feedback and sensor input feedback from wearables worn by user, Fig 87-5, sensor input feedback from equipment, Fig 87-6. This input is received, processed, calculated and transmitted back to the originating SHCICP, Fig 87-7. This is for illustrative purposes and not intended to be all encompassing.

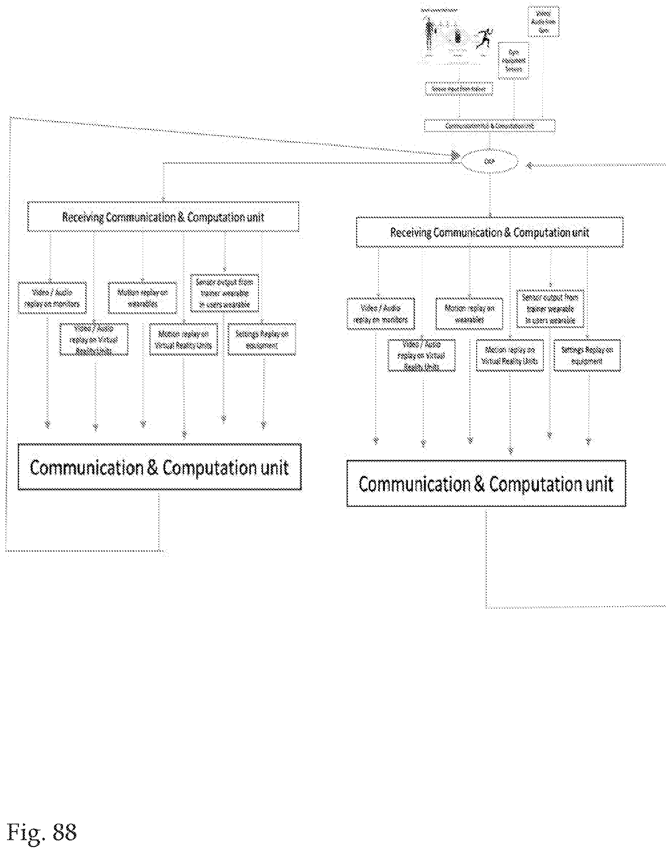

Fig 88 depicts an overall system based on the one described in Fig 87, but instead of one replay system with feedback - Fig 88-1 - there are numerous such systems reporting back to the originating SHCICP, Fig 88-1+n. Numerous replay systems can thereby be connected to one originating SHCICP controlled facility where the motions captured are replayed in numerous locations. This input is received, processed, calculated and transmitted back to the originating SHCICP, Fig 88-1 and Fig 88-1+n. This is for illustrative purposes and not intended to be all encompassing.

### Location Detection in a Building Example

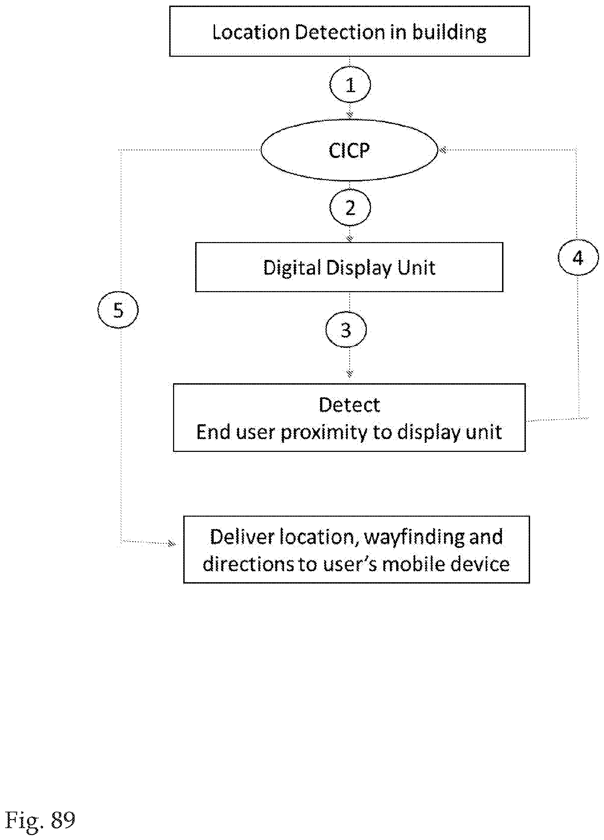

Fig. 89 depicts a CICP system in a building or venue that is connected with a digital display, monitor or TV that delivers wayfinding, location, navigation and asset location information on the display that is relevant to the person or persons in front of the display. Location detection in the building is transmitted to the CICP, Fig 89-1. This information is transmitted to the digital display unit, Fig 89-2. As the end user is standing in front of the display, this proximity is detected via proximity beacon or other sensors such as facial recognition, Wi-Fi signal match, NFC tag or any other such methodology - and reported to the CICP, Fig 89-4. Based on this complete input and data, the CIPC can then transmit the location information to the user's mobile device, Fig 89-5. This is for illustrative purposes and not intended to be all encompassing.

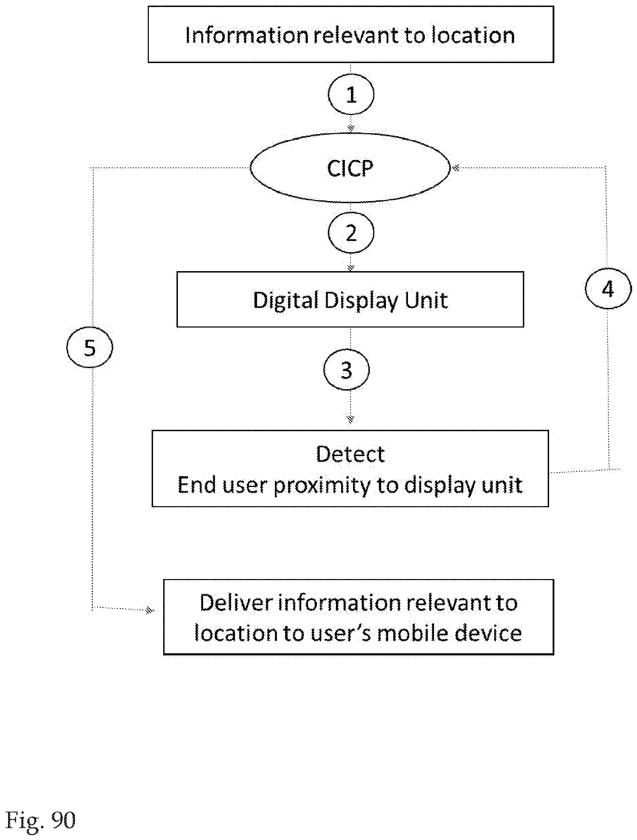

Fig 90 expands on Fig 89. Instead of location information, in this instance, the system delivers information that is relevant to a specific location. This can be in a building, a venue, hotel, airport or any other public / private building, but can also be outside such as a train station platform, at a cruise ship, in a stadium or on a transportation device such as a train. Information about the location is transmitted to the CICP, Fig 90-1. This information is transmitted to the digital display unit, Fig 90-2. As the end user is standing in front of the display, this proximity is detected via proximity beacon or other sensors such as facial recognition, Wi-Fi signal match, NFC tag or any other such methodology - and reported to the CICP, Fig 90-4. Based on this complete input and data, the CIPC can then transmit the information to the user's mobile device, Fig 90-5. This is for illustrative purposes and not intended to be all encompassing.

### Workflow Enhancement Example

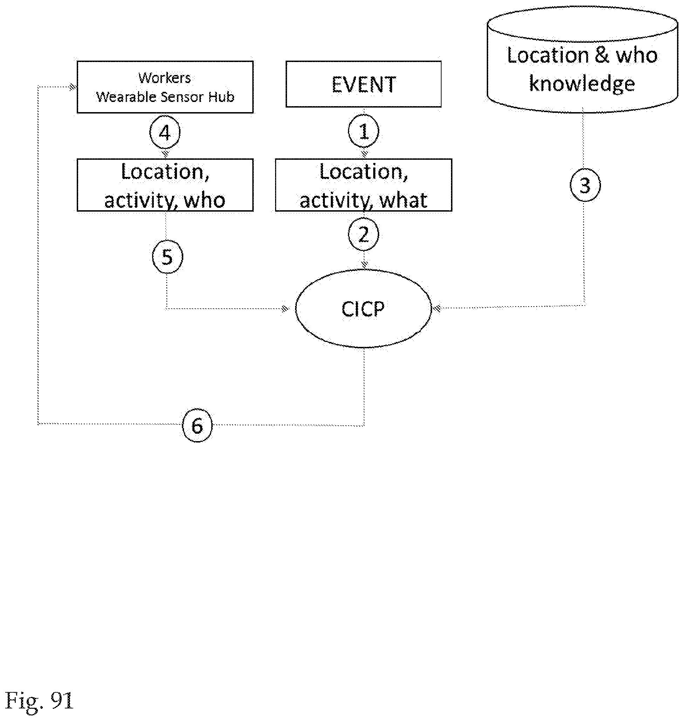

Fig 91 depicts a CICP based system that can be used to enhance work flow for workers across a facility. In this instance, an event happens at the facility - "EVENT". This can be a product or piece of equipment that is malfunctioning, a spill in a convention center, an act of violence, a piece of luggage left un attended, a customer demanding service, a gate agent at an airport with a ticket scanner that is malfunctioning during boarding a plane that is about to depart. This event is identified, Fig 91-1. The nature of the event, location and any associated activity is reported to the CICP, Fig 91-2. A cloud based database has been preprogrammed with knowledge about the location. This database also knows who may be associated with the location and other associated information about the location such as equipment, features, functions, connectivity, security levels and other relevant information about the facility. This data is transmitted to the CICP, Fig 91-3. Workers wearing wearable sensors hubs such as radios, smart watches, wearables and or mobile phones, tablets or other devices are identifiable across the facility, Fig 91-4. The location and activity of these are known, as well as the knowledge of each worker and his/her capabilities and levels of access which is combined and transmitted to the CICP, Fig 91-5. Based on the information about the Event, the location, the activity, the nature of the event, an alert with instructions and details about the event is then sent to the worker via his / her wearable sensor hub, Fig 91-6. This is for illustrative purposes and not intended to be all encompassing.

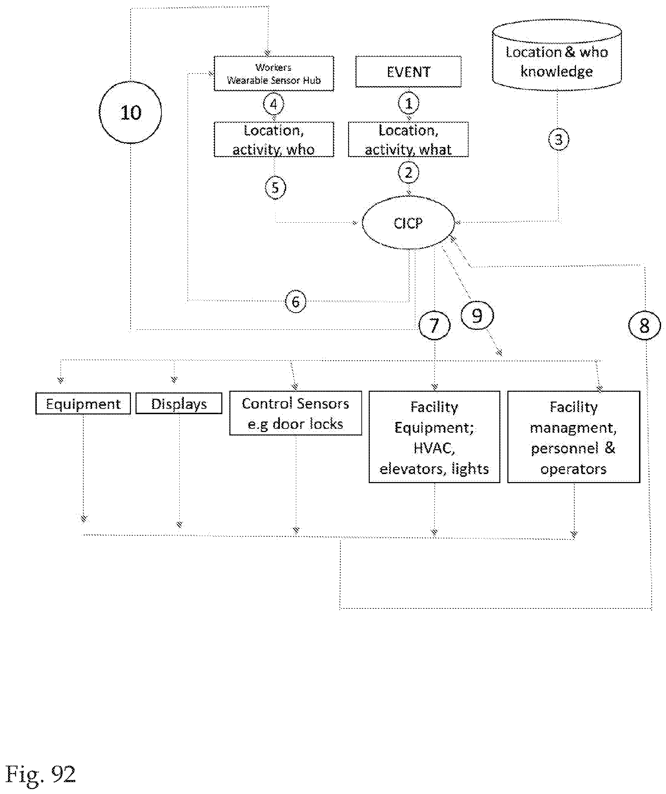

Fig 92 depicts the system described in Fig 91, but with multiple workers. In addition to Fig 91, in this instance all the workers, Fig 91-A are identified with who, activity and location in addition to the worker 92-4. All this information is transmitted to the CICP, Fig 92-B and Fig 92-5. The CICP determines that the worker 92-4 is the one who will be assigned the task and sends the information to his / her wearable, Fig 92-6. The CICP determines that the other workers, Fig 91-A are not suitable, at the right location, doesn't have the right knowledge about the location or event, or is not a match with the activity they are performing or able or allowed to do, so a message is transmitted that they are not required to attend to event, Fig 92-C. This process is then repeated until a suitable user has been located, "End User A", "End User B" and /or "End User N+1" as depicted in Fig 92-7. This is for illustrative purposes and not intended to be all encompassing.

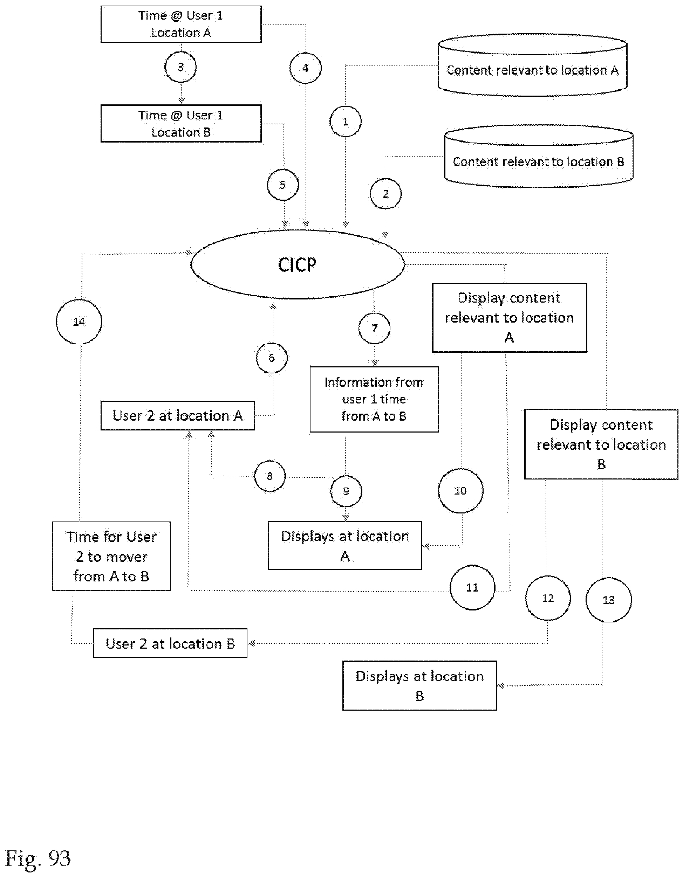

Fig 93 depicts a system as defined in Fig 91 and Fig 92. In this instance, the CICP is also connected to various displays, sensors and equipment across the facility. The CICP goes through the processes defined in Fig 91 and Fig 92 and assigns a task to a worker as shown in Fig 93-1 through Fig 93-5, and sends this assignment and any associated information to the workers wearable sensor hub as shown in Fig 93-6. The CICP then communicates with all the other connected devices, sensors, systems and functions as shown in Fig 93-7. These include equipment, displays, sensors, facility HVAC, elevators etc. as well as assigned personnel. Feedback from their connected devices is sent back to the CICP Fig 93-8. Based on this input the CICP then presents further actions, instructions and or commands to the same sensors or the sensor that has been determined by the CICP to have a relevance based on the worker assigned the task and the event and the location of the event, or a combination of sensors or equipment that has been determined by the CICP to be relevant to the task at hand, Fig 93-9. The results of this communication and the combined results relevant to the task and the worker as computed by the CICP are then transmitted to the worker, Fig 93-10. This is for illustrative purposes and not intended to be all encompassing.

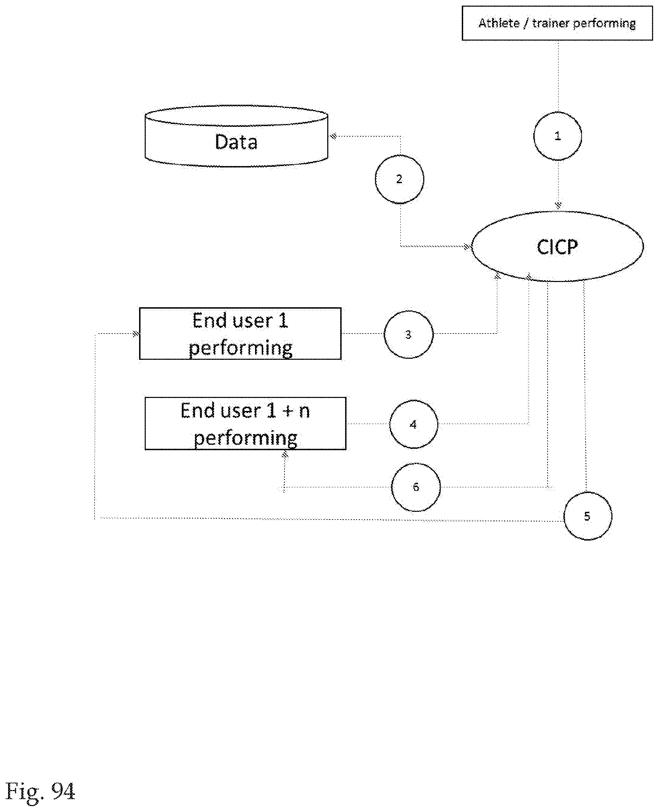

Fig 94 figure depicts the use of a CICP system to determine the time it takes for a person - "User 1" to move from location "A" to location "B" and provide this information to a second user, "User 2" with the ability to present information and content at location A that is relevant to that location, including the time estimated to travel from location A to B, then present content relevant to location B at displays at location B. The content relevant to location A is made available to the CICP, Fig 94-1. Likewise, information relevant to location B is made available to the CICP, Fig 94-2. The A User is at location A at a given time, which is reported, recorded and retained by the CICP, Fig 94-4. The time it takes user 1 to move to location B from location A is captured, Fig 94-3 and transmitted to the CICP, Fig 94-5. Another user or group of users, "User 2" arrives at location A and this is captured, transmitted and recorded and retained by the CICP, Fig 94-6. The information about the time it took user A to move from location A to B is exported from the CIPC, Fig 94-7 and then transmitted to the User at Location A, Fig 94-8. This information is also displayed at a connected display at location A, Fig 94-9. The CICP then displays other information that is relevant to location A based on the input it has received about the location and dynamic data collected by the CICP, Fig 94-10. The CICP can also present the content to the User 1, Fig 94-11. The CICP will also be able to present content relevant to location B on displays at the location B, Fig 94-13 and can present information about location B when the User 2 is there, Fig 94-12. The time it took user 2 move from Location A to Location B is reported back to the CICP. The process can then be repeated to new users arriving at Location A thereby providing a dynamic update of the time it takes to move from A to B with the display of this information on user's devices and displays at Location A. The process can be repeated on numerous locations. This is for illustrative purposes and not intended to be all encompassing.

### Athletic Performance Comparison Example

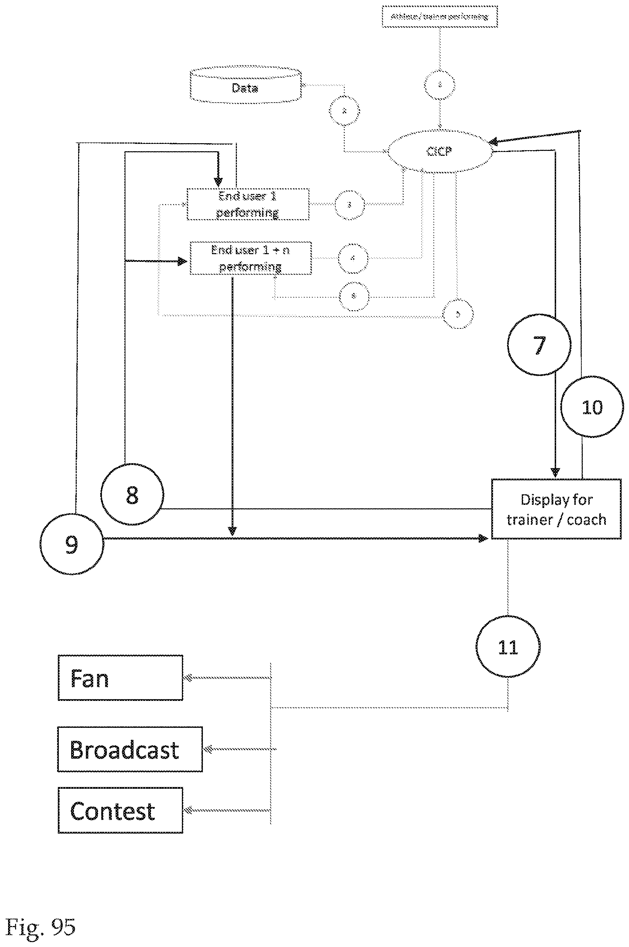

Fig 95 figure depicts a CICP system used by a sport team or training facility which compares motion data gathered by one athlete and compares this against another end user and /or numerous end users such as members of a sport team. The telemetry data gathered by various sensors and input devices such as wearables, video cameras and other sensors is captured and transmitted to a CICP, Fig 95-1. Additional performance and other historical data are also presented to the CICP, Fig 95-2. Data from End user 1 is collected and transmitted to the CICP, Fig 95-1. Additional users, depicted as "End user 1 + n", are also performing and their data is collected and transmitted to the CICP. The CICP sends feedback based on the data gathered by all and based on any computation performed by the CICP to End User 1, Fig 95-5. The CICP sends feedback based on the data gathered by all and based on any computation performed by the CICP to End User 1+n, Fig 95-6. This is for illustrative purposes and not intended to be all encompassing.

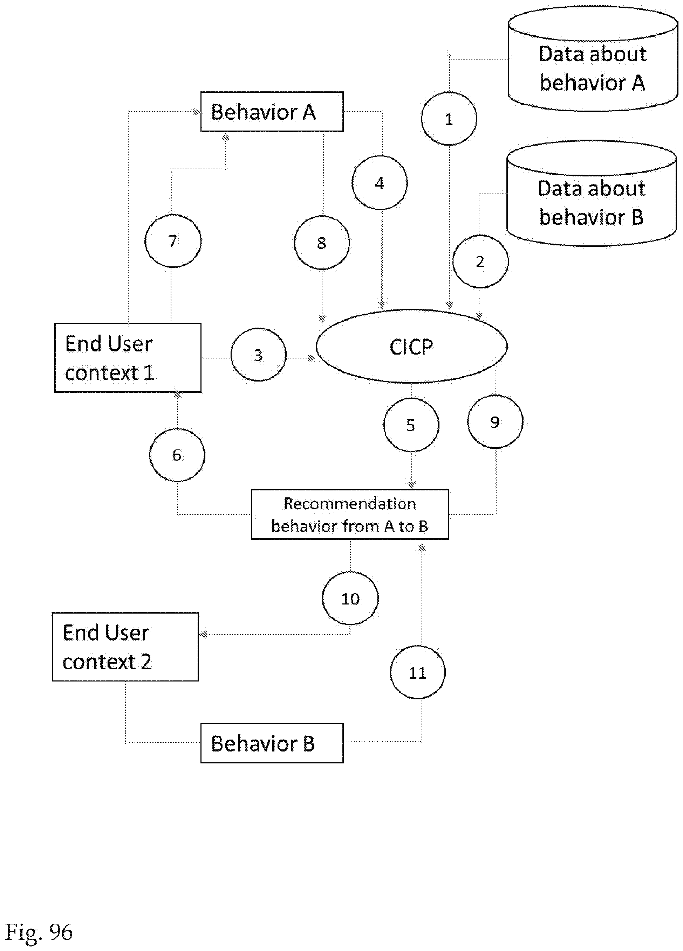

Fig 96 shows how the system depicted in Fig 95 is expanded to provide information to coaches and trainers of the team, as well how select data can be presented to fans, can be used in contest around the sports / performance of the "athlete" vs. the "end user 1" or team denoted as "end user 1+ n" or between the "end user 1" and team mates "end user 1 + n". The process described in Fig 95 continues until Fig 96-6. Select data collected and computed by the CICP is presented to the coach and / or trainer on connected displays, Fig 96-7. Select data from this is then transmitted to the "end user 1" and "end user 1+n", Fig 96-8. Feedback from "end user 1" and "end user 1+n" is presented back to the "trainer / coach" Fig 96-9 and select data is transmitted to the CICP, Fig 96-10 which captures, records and retains the data. The "trainer / coach" can allow select data to be presented to the fans, broadcasters and or used as part of input into contests, Fig 96-11. This is for illustrative purposes and not intended to be all encompassing.

### Second Behavior Modification Example

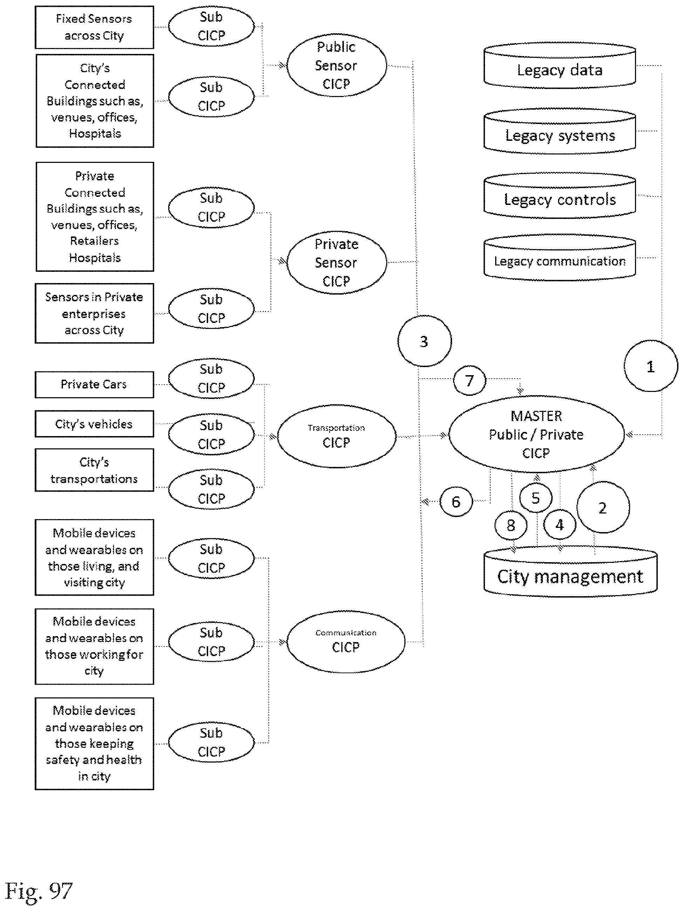

Fig 97 is a schematic overview showing how a CICP based system can be used to change behavior based on an user's past behavior and context by sending recommendations and providing a proof if the behavior was changed. Data is known about behavior, in this instance "behavior A" and "behavior B". This knowledge is made available to the CICP, "behavior A" in Fig 97-1, "behavior B" in Fig 97-2. An "end user" is in a known context depicted as "context 1" which is captured and transmitted to the CICP, Fig 97-3 and received, recorded and retained by the CICP. The End User is in action of behaving a known way, "behavior A" which is retained, captured and transmitted to the CICP, Fig 97-4. The CICP calculates the way to suggest a behavior change from Behavior A to Behavior B, Fig 97-5. This is transmitted to the End user in context 1, Fig 97-6. This is matched up against Behavior A, Fig 97-7 and the result is transmitted to the CICP, Fig 97-8. The CICP then presents the revised behavior recommendation, Fig 97-9 to the user when the user has changed the context to "End User context 2", Fig 97-10. Once the Behavior B is confirmed, this is reported back to the CICP and combined with the recommendation of the behavior change, Fig 97-11. This is for illustrative purposes and not intended to be all encompassing.

### Second Smart City Example

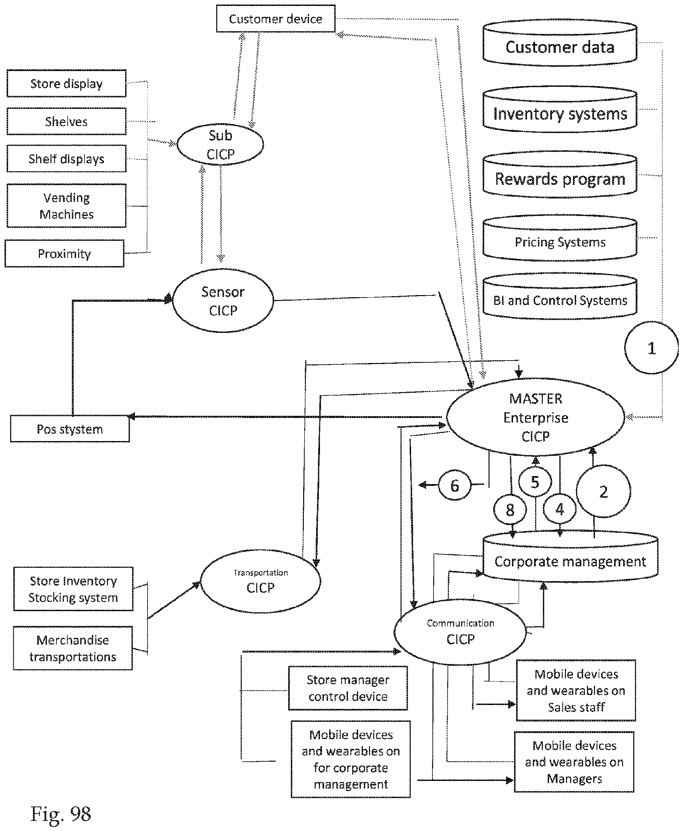

Fig 98 depicts a complete CICP infrastructure as used by a city for managing its interactions and communications in a public / private platform. The city will have numerous current and existing systems and data bases, here denoted as "legacy" systems. These will be communication with and be made available to the CICP system, Fig 98-1. The city management controls the CICP, Fig 98-2. Numerous sub CICP systems are placed across the city and or connected to facilities and systems across the city. These include public sensors, public buildings, private buildings, private sensors, private cars, city owned vehicles, transportation systems, mobile devices worn by private citizens working in the city, living there and or visiting, as well as mobile devices for those working in the city for the city and those keeping the city safe and healthy. These all gather data in connected Sub CICPs that calculate and combine their data with a communication to select gathering CICPs such as Public CICP, Private CICP, transportation CIPC and communication CICP. These aggregate data and submit this to the CICP, Fig 98-3. This aggregated data is captured, record and retained by the master CICP. The data is used to compute and or present data to the city management, Fig 98-4. Commands and decisions are made by the city management, Fig 98-5. These commands are captured and retained by the CICP which calculates commands to go out to the Sub CICP, Fig 98-6. Feedback from these actions or commands that are submitted in Fig 98-6 is reported and captured by the sub CICPs. These transmit their aggregated data back to the Master CICP, Fig 98-7. This data is then captured, retained and used for calculations with results represented and presented to City Management in Fig 98-8. This is for illustrative purposes and not intended to be all encompassing.

### Master Enterprise Example

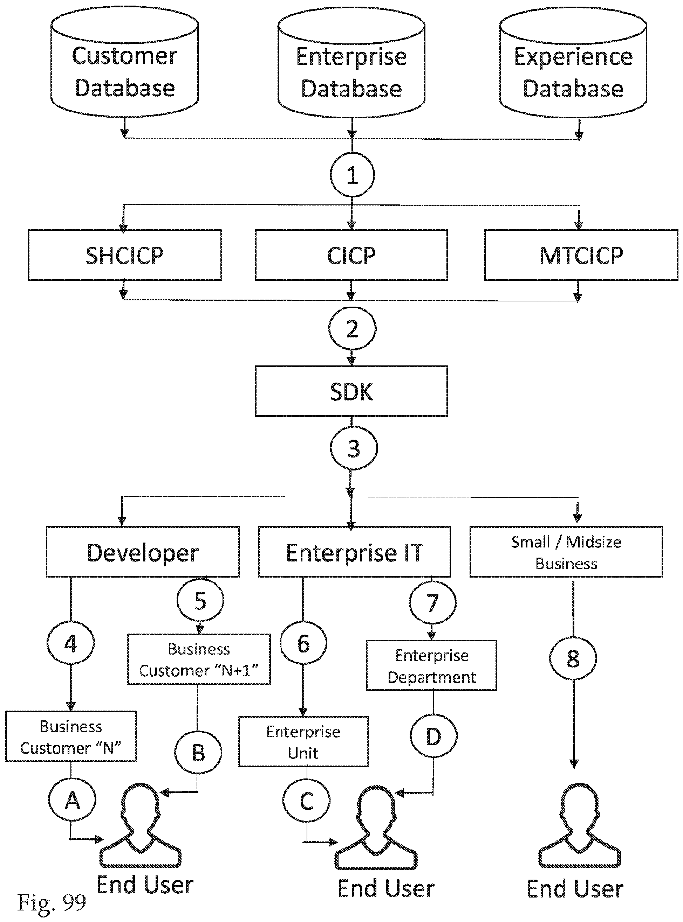

Fig 99 is a schematic overview of a CICP system presents a master CICP system "MASTER Enterprise CICP" at a retailer with one or more retail locations. It can also be other corporate entities such as airports, grocery stores, hotels, stadiums, hospitals, convention centers, shopping malls, government offices or facilities, factories and other large or small facility. It can also be a series of smaller location connected via a central corporate oversight such as a chain of retailers, franchises, fast food restaurants or consortiums of any or all. It has a central management depicted as "corporate management" with data system, interactive displays, shelves and a central inventory system, Point of Sale "POS" systems, sales staff and managers. The Master Enterprise CICP - MECICP hereafter - receives data and is connected with legacy and other data systems such as "Customer Data", "Inventory systems" and has access to "rewards programs", as well as control systems such as "pricing systems" and business intelligence (BI) and control systems, Fig 99-1. The corporate management controls the MECICP, Fig 99-2. The MECICP then provides commands, information, content and calculated instructions to the various sub CICPs, Fig 99-3. These actions are measured, verified, recorded and retained, and this is presented back to the corporate management, Fig 99-4. Further actions are sent to the MECICP based on this information, Fig 99-5. Instructions, information, updates, data and business intelligence is presented to the staff communications CICP, Fig 99-6. Feedback based on all the instructions across the whole infrastructure is gathered and collected by the various sub CICPs and submitted to the MECICP, Fig 99-7. The results are gathered, collected, recorded and retained by the MECICP, and any calculations performed, before presented to the corporate management, Fig 99-8. This is for illustrative purposes and not intended to be all encompassing.

### Distribution of CICP systems via Software Developer Kits (SDK) Example

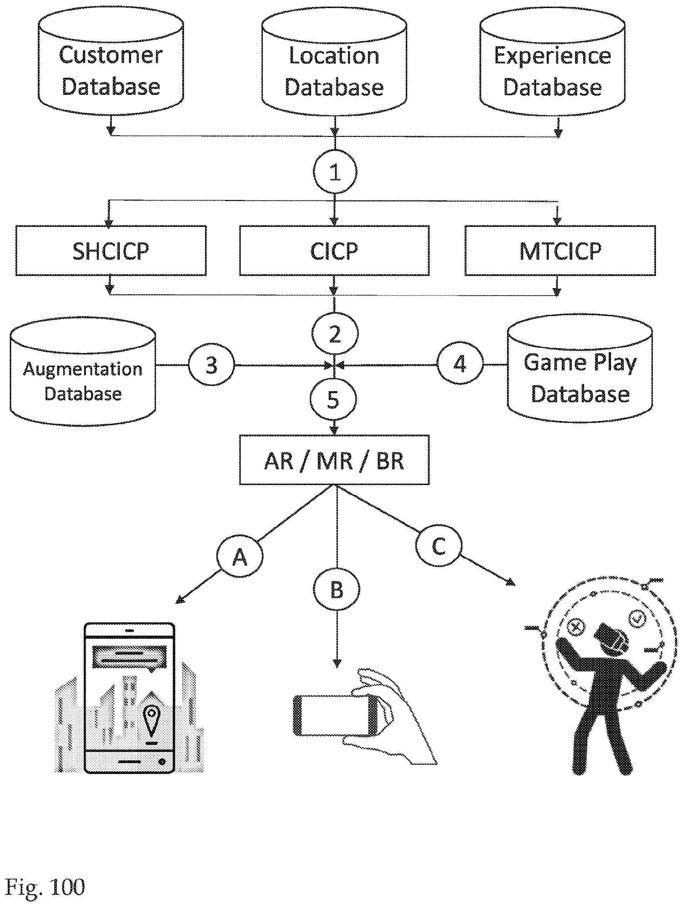

Fig 100 is a schematic overview of how CICP systems - SHCICP, CICP and or MTCICP solutions can be distributed via a SDK to various levels of users, implementers, consultants and enterprises. The SHCICP, CICP and or MTCICP solutions are connected to the control databases such as - but not limited to - customer database, the enterprise's own database and a database or number of databases with information about the relevant experiences, actions, context, locations, merchandise and or event. These communicate with the SHCICP, CICP and or MTCICP solutions, Fig. 100-1. Each SHCICP, CICP and or MTCICP solution have been programmed to be able to be distributed via a dedicated SDK as is a common and well established distribution model for software and platform solutions. The uniqueness of the invention is that the SDK will be programmed to have features and complexity based on the type of distributor depicted as "developer", "enterprise IT" or "Small / Midsize Business", Fig 100-3. If the distributer is a "developer", there are two ways this "developer" can distribute the solution to their "End User"; via a single "Business Customer "N"" with a dedicated solution - Fig 100-4 and Fig 100-A. If the Developer wants to build a common solution that can be distributed to many business owners, he can create one common solution, Fig 100-5 for "Business Customer "N+1"" who will share with numerous End Users - Fig 100-B. Should an Enterprise IT department use the solution, they can create a specific solution for an enterprise unit - Fig 100-6 that will distribute to an End User - Fig. 100-C. The same enterprise IT department can distribute to other Enterprise departments, Fig. 100-7 who can create their own versions to distribute to their enterprise IT end users, Fig 100-D. Should a small / midsize business use the SDK, it is likely they do not have the resources to further develop sub solutions and therefore more likely to create solutions directly for the communications with their end user, Fig 100-8. This is for illustrative purposes and not intended to be all encompassing.

### Curated, Location based and Personalized Experiences delivered in Augmented Reality, Virtual Reality and Mixed Reality based on Geo & Specific Enhanced Content Example

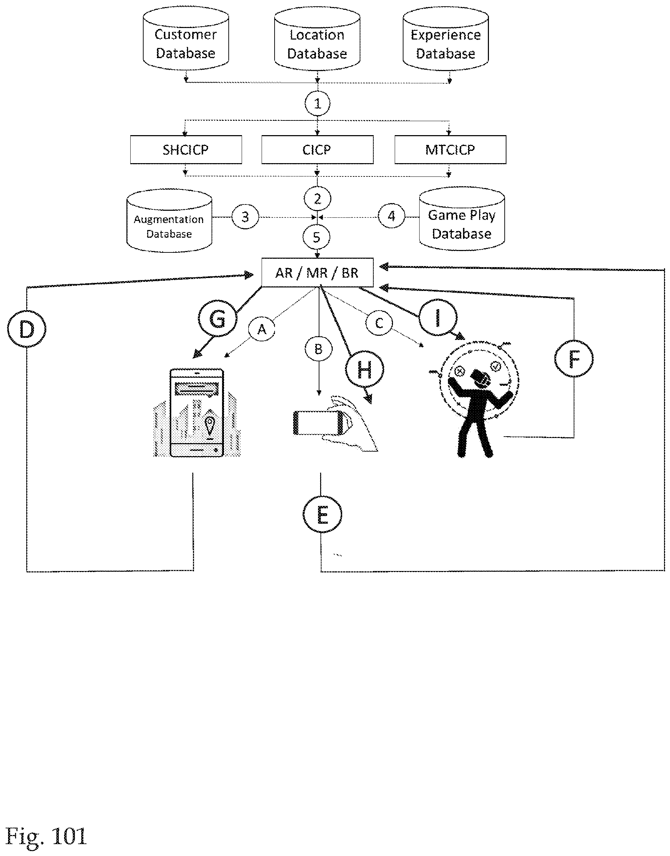

Fig 101 depicts a schematic use of the invention blending SHCICP, CICP and MTICIP systems to deliver location based, personalized, localized and experience specific Augmented Reality (AR), Virtual Reality (VR) and or Mixed Reality (MR) game play. In this embodiment of the invention, a series of databases with known information and data about a player - "Customer Database", the location of the player "location database" and the experience that is about to be served - "Experience Database" are communication and presenting data to individual or a combination of SHCICP, CICP and or MTCICP systems, Fig 101-1. These communicate and transmit their collected calculated curated experiences and data, Fig 101-2. A database with an augmented experience such as 3-D models, videos, audio, tactile input / output and / or other sensor output exports and communicates it's information, data, commands and curated experiences, Fig 101-3 while a database with the game play algorithms, rules and game engines output exports and communicates it's information, data, commands and curated experiences, Fig 101-4. The combined data, commands and curated experiences output of the above combinations of Fig 101-2, Fig 101-3 and Fig 101-4 is then communicated and transmitted into the AR/MR/VR distribution, Fig 101-5 and then replayed in MR, Fig 101-A and / or in AR, Fig 101-B and / or in VR, Fig 101-C. This is for illustrative purposes and not intended to be all encompassing.

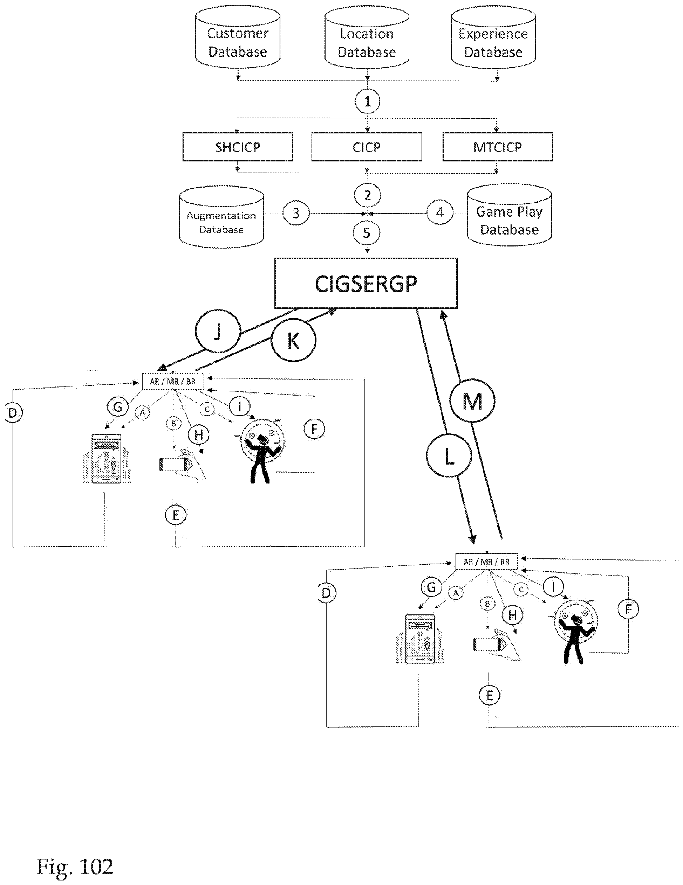

Fig 102 is a schematic of the embodiment shown in Fig 101 with a series of feedback loops. The feedback loops will further enhance the various curated experiences presented in AR, VR and / or MR. In this embodiment, there is a feedback for the Mixed Reality experience presented in 102-A as shown in Fig 102-D. This will then present a further enhancement of the MR curated content presented as shown in Fig 102-G. This loop can continue to improve the curated MR experience as long as the user is engaged with the MR experience. There is a feedback for the Augmented Reality experience presented in 102-B as shown in Fig 102-E. This will then present a further enhancement of the AR curated content presented as shown in Fig 102-H. This loop can continue to improve the curated AR experience as long as the user is engaged with the AR experience. There is a feedback for the Virtual Reality experience presented in 102-C as shown in Fig 102-F. This will then present a further enhancement of the MR curated content presented as shown in Fig 102-1. This loop can continue to improve the curated VR experience as long as the user is engaged with the VR experience. This is for illustrative purposes and not intended to be all encompassing.

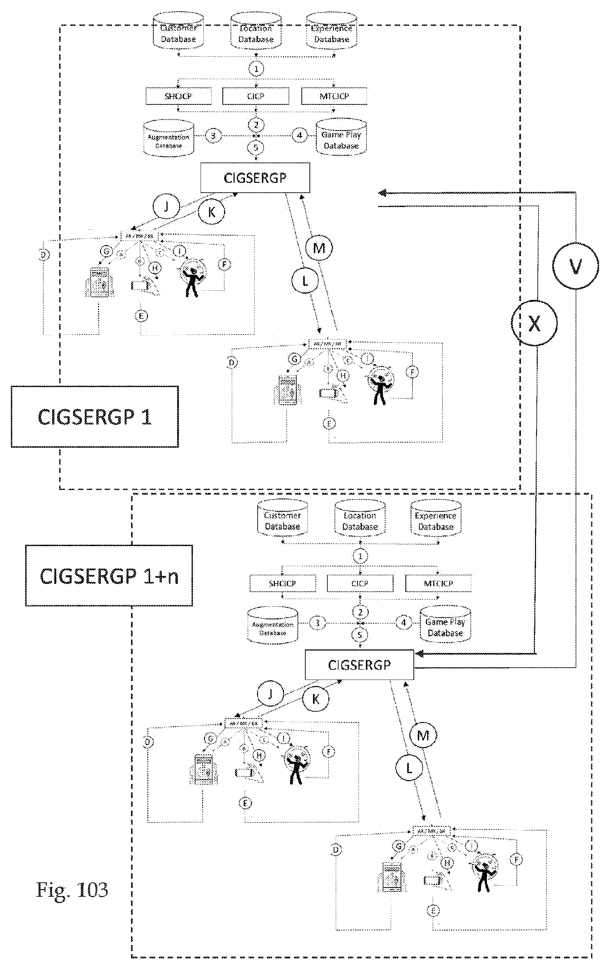

Fig 103 is a schematic overview of an embodiment of the invention where multiple users are engaged in a variety of curated experiences, game play and / or other content experience in the systems described in Fig 102. In this embodiment multiple users are experiencing the curated experience individually with each experience delivered and controlled via a central Contextually Intelligent Geolocation and Sensor Experience Replay Game Processor (CIGSERGP). User A is experiencing the curated experience served by the CIGSERGP, Fig 103-J. The feedback from the system described in Fig 102 is then transmitted to the CIGSERGP. Further enhanced curated content is then sent to the User A via Fig 103 J, and this process is repeated as long as the user is engaged with the curated experience in AR, VR and / or MR. User B is receiving curated experiences in a similar fashion curated, personalized and delivered to him based on his location, past user behavior and experiences as delivered by the CIGSEGP, Fig 103-L. The feedback from the system described in Fig 102 is then transmitted to the CIGSERGP. Further enhanced curated content is then sent to the User B via Fig 103 L, and this process is repeated as long as the user is engaged with the curated experience in AR, VR and / or MR. Furthermore, feedback, input and or data collected from User B by the CIGSEGP via Fig 103-M can be used to further enhance the curated experiences delivered to User A via Fig 103-J. Conversely, input, feedback, results and other data gathered by the CIGSERGP via Fig 103-K can be used to further enhance the curated content delivered in Fig 103-L to user B. Feedback loops Fig 103-M and Fig 103-K will enable the CIGSEGP to continue to gather, record and retain information about the curated experiences to improve these. This knowledge can then be transmitted by the CIGSEGP to the various databases and control systems for further enhancement of each component; Fig 103-N will provide feedback to the "Customer Database", "Location Database" and "Experience Database" which will record and retain relevant data for future real-time use, while presenting the relevant information to the relevant SHCICP, CICP and or MTCICP system for further enhancement of content, experiences and or control commands, while enhancing the "game-play database", Fig 103-P and the Augmentation Database, Fig 103Q. This is for illustrative purposes and not intended to be all encompassing.

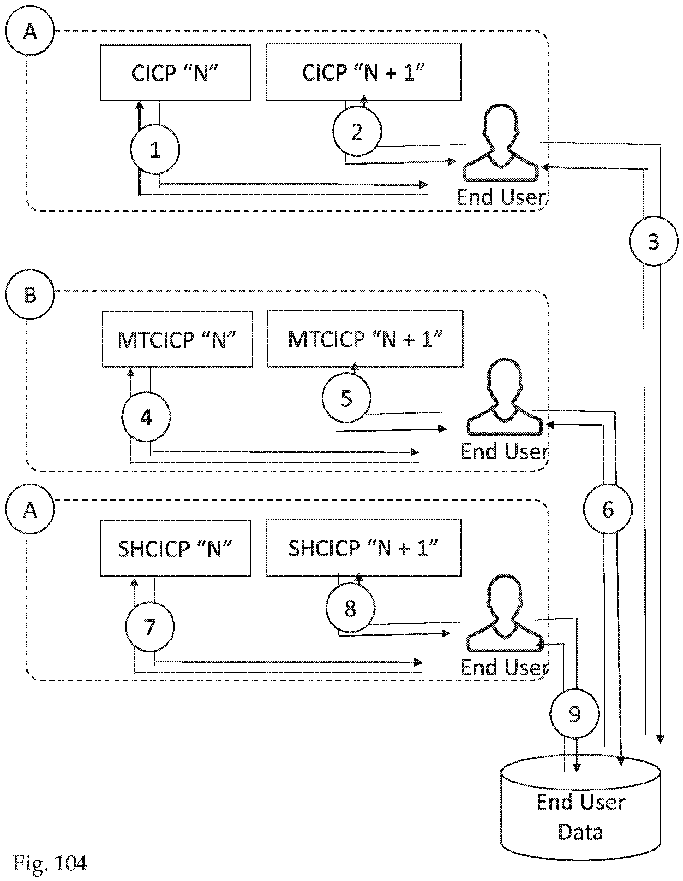

Fig 104 is a schematic representation of multiple CIGSERGP systems defined and described in Fig 103 interacting. System "CIGSERGP 1" is in operation as described in Fig 103 with output delivered to one or many (1+n where "n" is an number of infinite magnitude) other "CIGESRGP" systems, "CIGESRGP 1+n" as illustrated Fig 104-X. Feedback from the "CIGESRGP 1+n" system is sent back to the "CIGESRGP 1" system as illustrated by Fig 104-V. The process can then be repeated between the CIGSERGP systems that are connected until one ends the process. Other systems ("+n") can continue to communicate as long as they are connected. This is for illustrative purposes and not intended to be all encompassing.

### Gathering of Contextual Data by End Users, and the Use of This Data Example

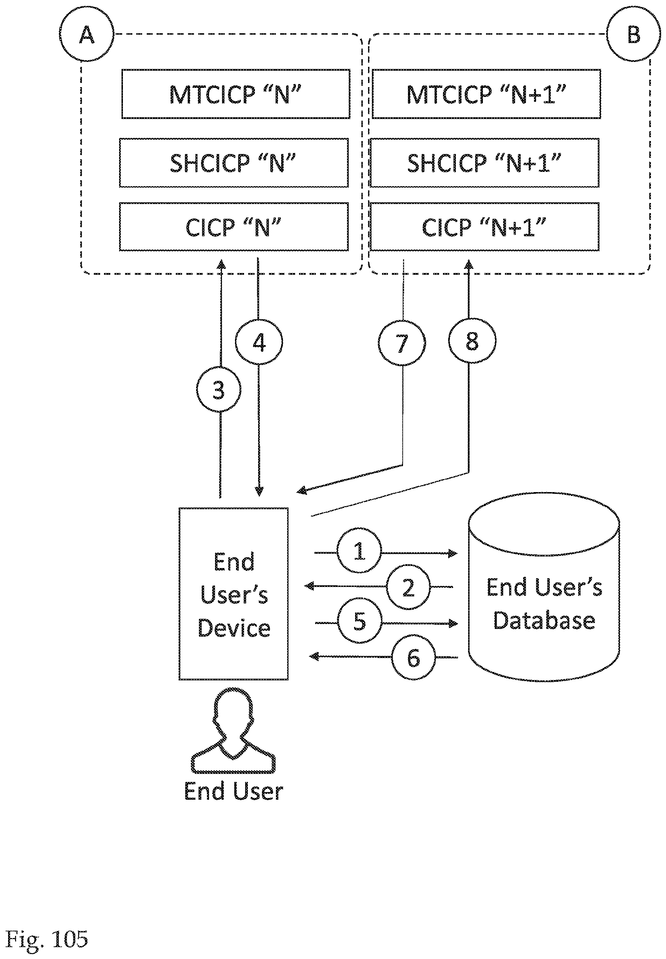

Fig 105 is a schematic overview of a common database gathering data across multiple CICP, MTCICP and SHCICP systems. In this embodiment of the invention, an "End User" is in a context "A" that is controlled by a CICP - "CICP "N"" - system and / or multiple CICP systems "CICP "N+1"". He interacts with the "CICP "N"" system and data and enhanced experiences are transmitted, delivered, as described before, Fig 105-1. He can also interact with other "CICP 1+n" systems in the "A" context, before, simultaneously, coordinated and or independently, during and / or after the interactions with the first single CICP, as shown in Fig 105-2. The aggregated results of these interactions, are sent to a database "End User Data" where the data is stored and retained for future or current use, Fig 105-3. The data gathered from one of the CICP systems can be used to further enhance the curated experience in context A, hence the bi-directional dataflow shown in Fig 105-3. Furthermore, the "End User" may enter another context "B" that is controlled by a MTCICP - "MTCICP "N"" - system and / or multiple MTCICP systems "MTCICP "N+1"". He interacts with the "MTCICP "N"" system and data and enhanced experiences are transmitted, delivered, as described before, Fig 105-4. He can also interact with other "MTCICP 1+n" systems in the "B" context, before, simultaneously, coordinated and or independently, during and / or after the interactions with the first single MTCICP, as shown in Fig 105-5. The aggregated results of these interactions, are sent to a database "End User Data" where the data is stored and retained for future or current use, Fig 105-6. The data gathered from one of the MTCICP systems can be used to further enhance the curated experience in context A, hence the bi-directional dataflow shown in Fig 105-6. Furthermore the "End User" may be in a context "C" that is controlled by a SHCICP - "SHCICP "N"" - system and / or multiple SHCICP systems "SHCICP "N+1"". He interacts with the "SHCICP "N"" system and data and enhanced experiences are transmitted, delivered, as described before, Fig 105-7. He can also interact with other "SHCICP 1+n" systems in the "C" context, before, simultaneously, coordinated and or independently, during and / or after the interactions with the first single SHCICP, as shown in Fig 105-8. The aggregated results of these interactions are sent to a database "End User Data" where the data is stored and retained for future or current use, Fig 105-9. The data gathered from one of the SHCICP systems can be used to further enhance the curated experience in context C, hence the bi-directional dataflow shown in Fig 105-9. This is for illustrative purposes and not intended to be all encompassing.

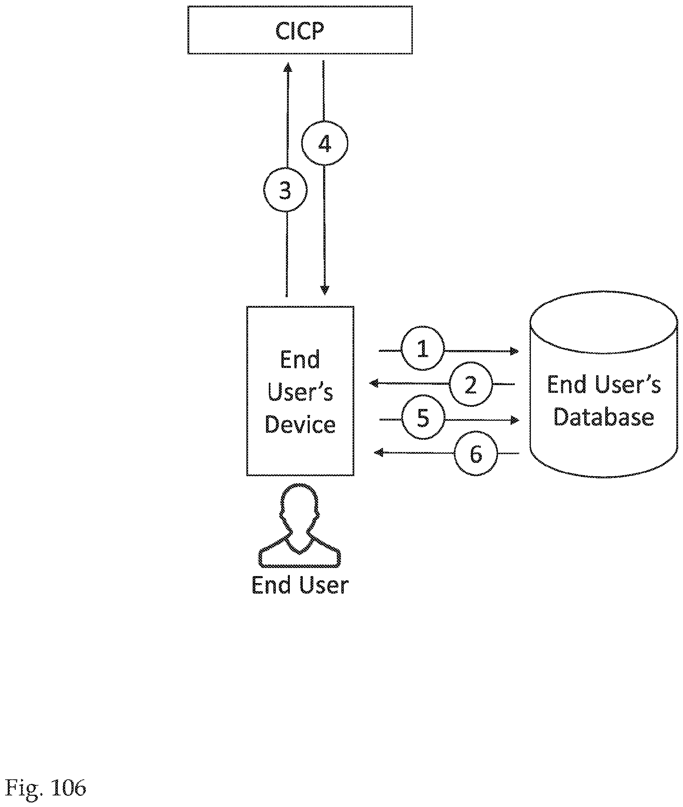

Fig 106. This is a schematic representation describing the embodiment described in Fig 105 where Context A and Context B contains multiple different type CICP systems. The "End User's Device" is connected with the user's database, "End User's Database" and communicates with this - Fig 106-1 and Fig 106-2. He enters context "A" where his device communicates with the MTCICP "N", and / or the SHCICP "N" and / or the CICP "N" as shown in Fig 106-3. The results of these interacts are transmitted back to the user's device - Fig 106-4. This data is transmitted back to the end user's database - Fig 106-5. The aggregated, combined, compiled and / or calculated results of the new data from the communication from Fig 106-4 communication, and the previously stored data on the end user's database is transmitted back to the user's device, Fig 106-6. As the user enters new context(s) "B" where there are one of multiple MTCTP, SHCICP and CICP systems "MTCICP N+1", "SHCIP N+1" and / or "CICP N+1" the user's device transmits and communicates with these with the data known from Fig 106-6 to the systems in B as shown in Fig 106-7. The feedback from these systems is transmitted back to the end user's device, Fig 106-8 in same manner as in Fig 106-4. The aggregated data is then transmitted back to the end user's database, Fig 106-9. This loop will then continue as the user moves from Context to Context with the end user's database gathering, recording, retaining the data gathered, and presenting it back to the CICP systems in new contexts to further enhance the end user curated experiences. This is for illustrative purposes and not intended to be all encompassing.

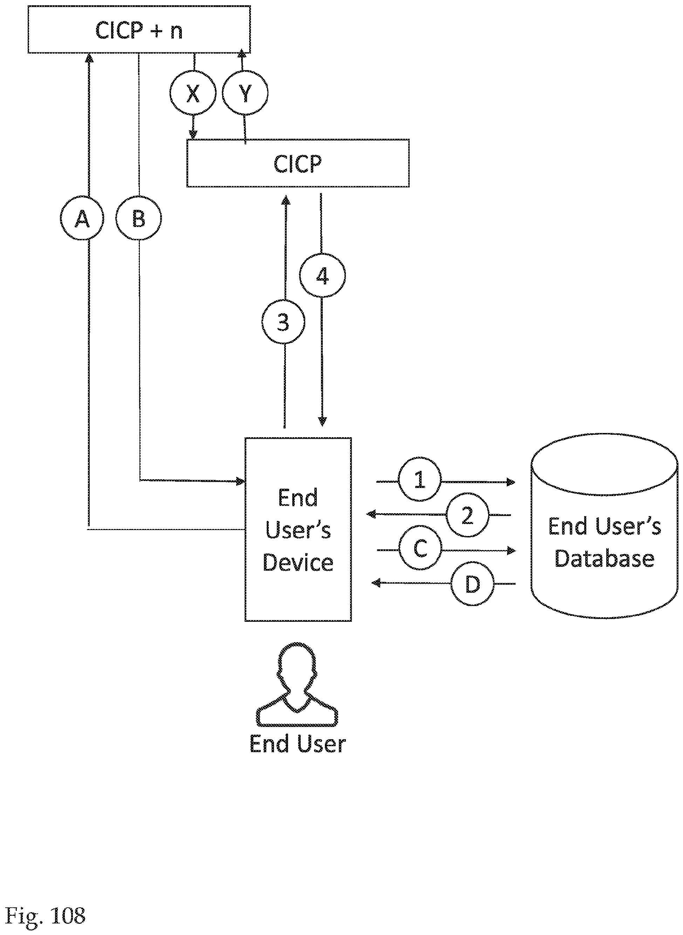

Figure 108 is a schematic overview of the interactions between the end user, the end user's data base as the user is interacting with the first CICP then the data is used to enhance the next CICP interactions. In this representation, the end user's device is communicating with the user's database, Fig 108-1 and Fig 108-2. This bi-directional communication is used to communicate with the CICP when the end user's device connects with it, Fig 108-3 and the results of these interactions are communicated back to the device, Fig 108-4. The results of these interactions are transmitted back to the end user database, Fig 108-1 with the results of any calculations or computation done on the data by the database system transmitted back to the device, Fig 108-D. As the come into communication with a new or different CICP system, "CICP + n" the data known by the End User's device as transmitted to if from the end user's database as shown in Fig 108-2 is transmitted to the CICP + n as shown in Fig 108-A. The results of this interaction are sent back to the end user device, Fig 108-B. The results of this are transmitted to the End User database by the end user device, Fig 108-C. The results of these interactions are transmitted back to the end user database, Fig 108-1 with the results of any calculations or computation done on the data by the database system transmitted back to the device, Fig 108-D. This is for illustrative purposes and not intended to be all encompassing.

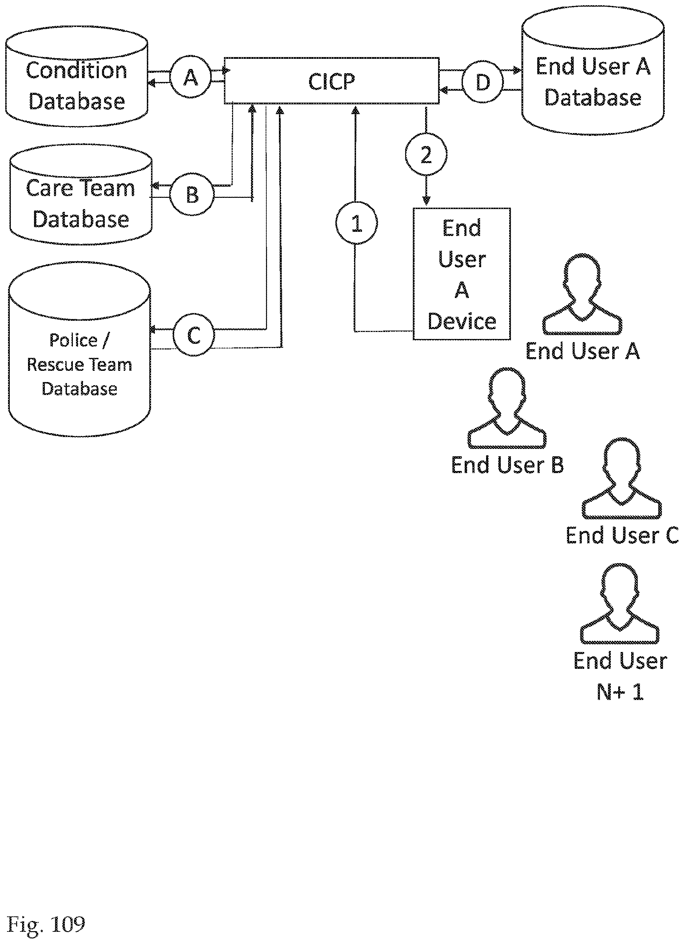

Fig 109 shows an illustration that expands on the embodiment described in Fig 108. In this embodiment, the CICP systems are connected and communicate bi-directionally, Fig 109-X and Fig 109-Y. These can occur before end user interacts with either "CICP", and / or while he interacts with "CICP + n" during "CICP" interactions, before "CICP + n" interactions, simultaneously with all or separately individually with the "CICP" or the "CICP + n" systems or any combinations of any interconnected CICP systems. This is for illustrative purposes and not intended to be all encompassing.

### Use of CICP System to Identify Registered Users in a Crowd Example

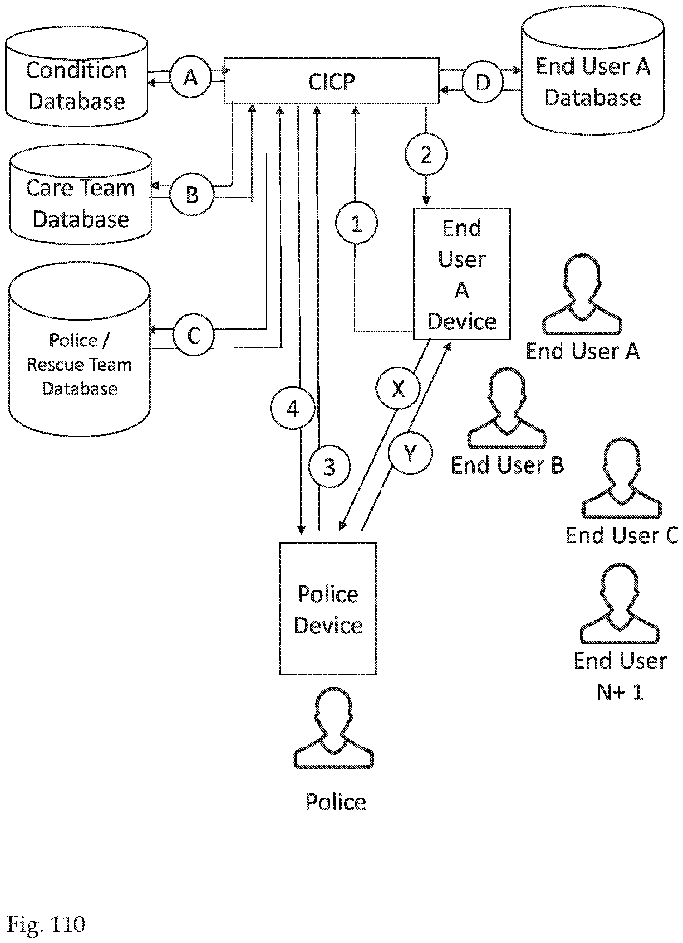

Fig 110 is a schematic overview of another embodiment of the invention where a CICP system is used to identify specific users in a context setting. In this instance, "End User A" has a condition as identified by the "Condition Database", a database with known information about the user "End User A Database", a care team that is known, "Care Team Database" and is in a context with numerous other users "End User A, B, C N+1. There is also a database used by an organization such as a police department or rescue team. End user's device communicates with the CICP, Fig 110-1. The CICP communicates with bi-directional information with the CICP about the End User's condition, Fig 110-A. The CICP also communicates with the care team database in a bi-directional manner, Fig 110-B, as well as the police / rescue team database - Fig 110-C. Continuous bi directional communication is ongoing with the end user's personal database, Fig 110-D. The combined, computed and aggregated data is then communicated back to the end user's device, Fig 110-2. This is for illustrative purposes and not intended to be all encompassing.

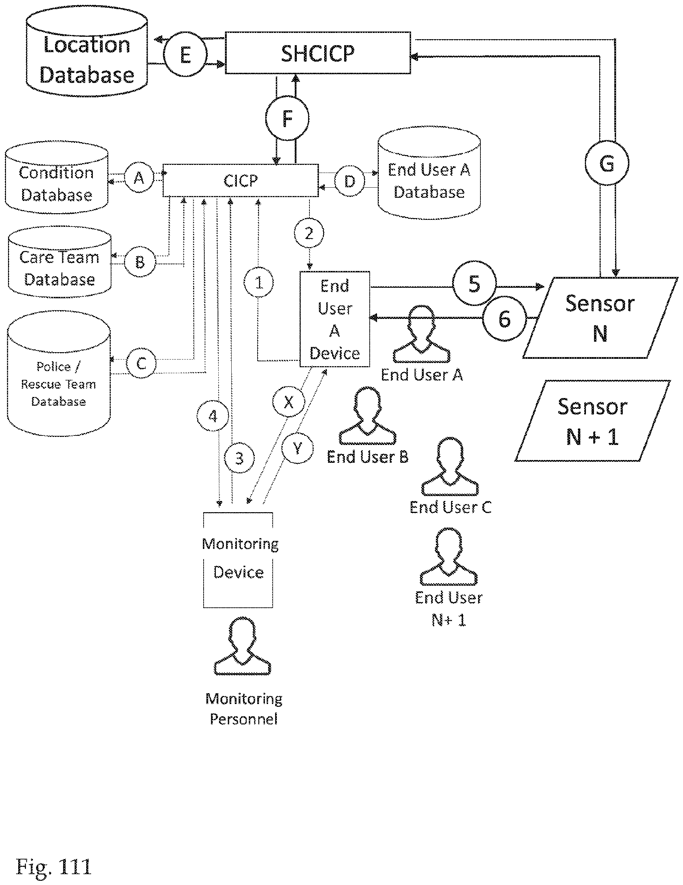

Fig 111 is an extension on the embodiment described in Fig 110 where a police officer or other authority person with a device that is connected to the CICP described in Fig 110 enters an area, location and / or context where End User A from Fig 110 is located with a series of other end users. In this instance, the system is established and operating as described in Fig 110 when the police officer enters with his connected device "Police Device". This device is programmed to identify the End User and / or his device when in proximity, Fig 110-Y. This can be via BLE, WiFi signature, and / or a series or combination of readily available peer to peer protocols that are available when authorized by end user A and enabled on police devices. Once the connection is established, the User device can authenticate the matching, Fig 111-X. Alternatively, the presence of the police officer in the same context as the End User can be detected by the CICP as follows; the end user's device is connected to the CICP, Fig 111-1 and the context integration is confirmed via communication, Fig 111-2. The Police Device is communicating with the same CICP that detects the context of the device, Fig 111-3 and is confirmed by the CICP, Fig 111-4. The CICP will therefore be able to detect when the Police Device and the End User A device is in the same context, i.e. same location, proximity, area etc. Once the CICP has confirmed that they are in the same context via the proximity detection method between the two - Fig 111-X and Fig 111-Y - or the cloud based pairing performed by the CICP - Fig 111-1 / Fig 111-2 and Fig 111-3 and Fig 111-4 - communication about the interaction can be communicated to all parties. The police officer can receive collected information from the CICP, Fig 111-4. This information can include data about the user, Fig 111-D, his Condition, Fig 111-A as well as information about the user's care team, Fig 111-B. The police officer can also learn more information about other interactions with the end user that the police / rescue team may have, as shown in Fig 111-C. Any interactions with the police and information that is relevant and of value to the End user can also be delivered to the end user, Fig 111-2. Any, all and / or select information about the interactions between the police and the end user, can retained, recorded and be delivered to the Care Team and its database, Fig 111-B, used to learn and study aspects of the Condition, Fig 111-A and be recorded and retained by the end user in his database, Fig 111-D and / or the police / rescue team database, Fig 111-C. This is for illustrative purposes and not intended to be all encompassing.

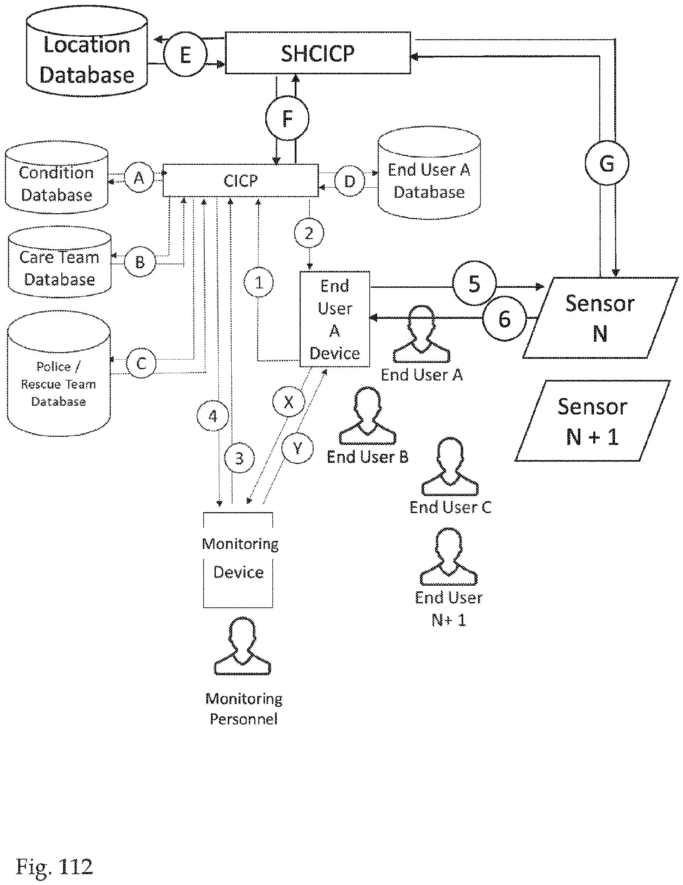

Fig 112 is a schematic overview of an extended system described in Fig 111 which includes a location database, a SHCICP and sensors in the area. In this embodiment of the invention, there is a database with known information about a location, "location database" that communicates and provides bi-directional communication with a SHCICP, Fig 112-E. This SHCICP is also bi-directionally communicating with the CICP in Fig 111 as illustrated by Fig 112-F. It is also communicating with Sensors - "Sensors N" and multiple sensors, "Sensors N+1" as illustrated by Fig 112-G. In this instance the system is functional and operational as described in Fig 111. The end user enters an area or location where there are sensors, Fig 112-5. This triggers bi-directional communication with the SHCICP, Fig 112-G, the Location Database Fig 112-E as well as between the SHCICP and the CICP, Fig 112-F. The CICP will communicate back to the device, Fig112-2 and the sensor will communicate back to the device, Fig 112-6. These aggregated content, data and / or computed commands are then communicated to the CICP, Fig 112-1 with a feedback loop and distribution of content, experiences, data and other information as described in Fig 111 across all the effected and integrated users, systems and databases. This is for illustrative purposes and not intended to be all encompassing.

### Use of Multiple CICP Systems in Various Facilities to Provide Extended Care and Support for Users Example

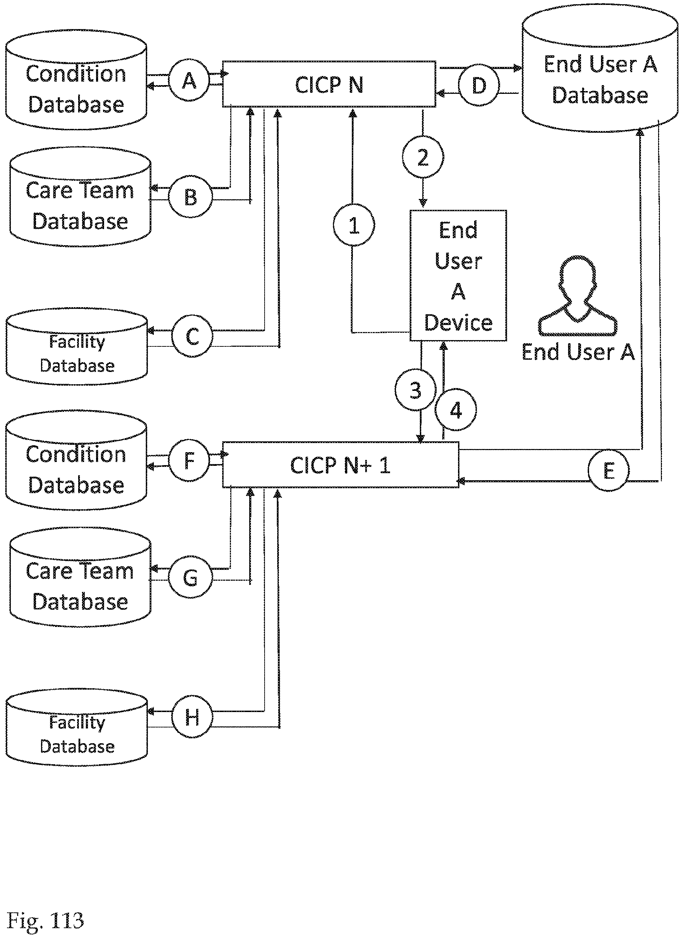

Fig 113 is a schematic representation of an extension of the system described in Fig 112 with additional CICP systems interacting with the user's device and with an integrated Facility database. In this embodiment, the same structure and interactions described in Fig 112 will apply with the addition of a database that contains information about the facility(ies) the end user is within. End user A has a device, "End User A-Device" that communicates with a CICP N, as illustrated in Fig 113-1 and Fig 113-2. This CICP communicates with a "condition database" as shown in Fig 113-A, a "Care Team Database", Fig 113-B and a database that contains information about the facilities associated with "CICP N", Fig 113-C. Any and all data and interactions between these and the CICP N that are associated with End User A are captured, recorded and retained by End Use A database, Fig 113-D. These interactions are described in Fig 112 with a change that the facility information is included. The End User then enters into a facility where another CICP is in operation or numerous CICPs are in operation, "CICP N+1" as depicted in Fig 113-3 and Fig 113-4. This CICP communicates with a "condition database" as shown in Fig 113-F, a "Care Team Database", Fig 113-G and a database that contains information about the facilities associated with "CICP N", Fig 113-H. Any and all data and interactions between these and the CICP N that are associated with End User A are captured, recorded and retained by End Use A database, Fig 113-E. These interactions are described in Fig 112 with a change that the facility information is included. The information from interactions with "CICP N+1" transmitted in Fig 113-E to the end user database can be used by the "CICP N" as illustrated in Fig 113-D. Conversely, the information gathered by the "CICP N" and transmitted to the End User A database in Fig 113-D can be used by the "CICP N+1" as shown by Fig 113-E. This is for illustrative purposes and not intended to be all encompassing.

### Example of Use of a Common CICP Using Various End User's Databases to Present Curated Content

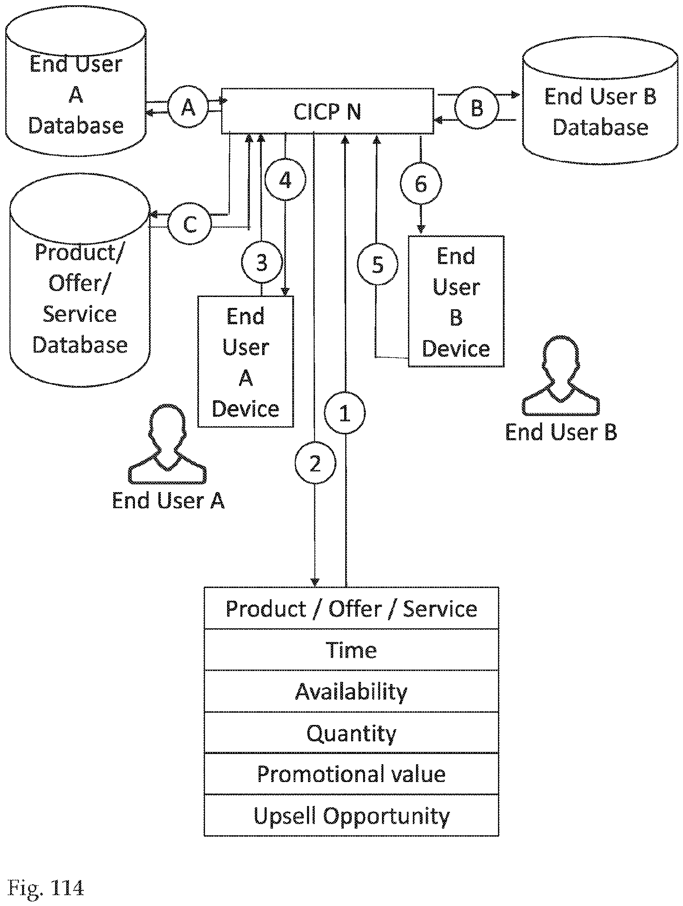

Fig 114 presents a schematic overview of a CICP system used to present curated content to end users based on their end user databases. In this embodiment of the platform, a CICP, "CICP N" is used to present a series of curated experience, herein illustrated as "Product / Offer / Service", "Time", "Availability", "Quantity", "Promotional Value" and "Upsell Opportunity" as a series of suggested feature / parameters / quantifier of the curated content and the way to assign values to each feature / parameter / quantifier - as shown in Fig 114-1 and Fig 114-2. End User A enters into communication with CICP N, Fig 114-3. This triggers CICP-N to communicate with End User A database, Fig 114-A. Based on this information, the CICP-N will then communicate with "Product Offer/Service Database", Fig 114-C. Based on computation performed by the CICP N based on parameters presented and communicated via Fig 114-1 and queries sent back and forth via Fig 114-1 and Fig 114-2, curated content and experiences are presented to End User A as shown by Fig 114-4. End user B enters communication with the same CICP N before, simultaneously or after the communication between the CICP-N and End User A, as illustrated by Fig 114-5. The results of presenting this curated content is then recorded and retained for future use by User A database, Fig 114-A. The same process is performed by the CICP N for end User B connecting with End User B Database instead of end user A database, as shown in Fig 114-B. The results of the process and computation performed by the CICP as described for End User A but now performed for End User B based on his End User B database present curated content the is personalized for End User B as shown in Fig 114-6. The results of presenting this curated content is then recorded and retained for future use by User B database, fig 114-B. This is for illustrative purposes and not intended to be all encompassing.

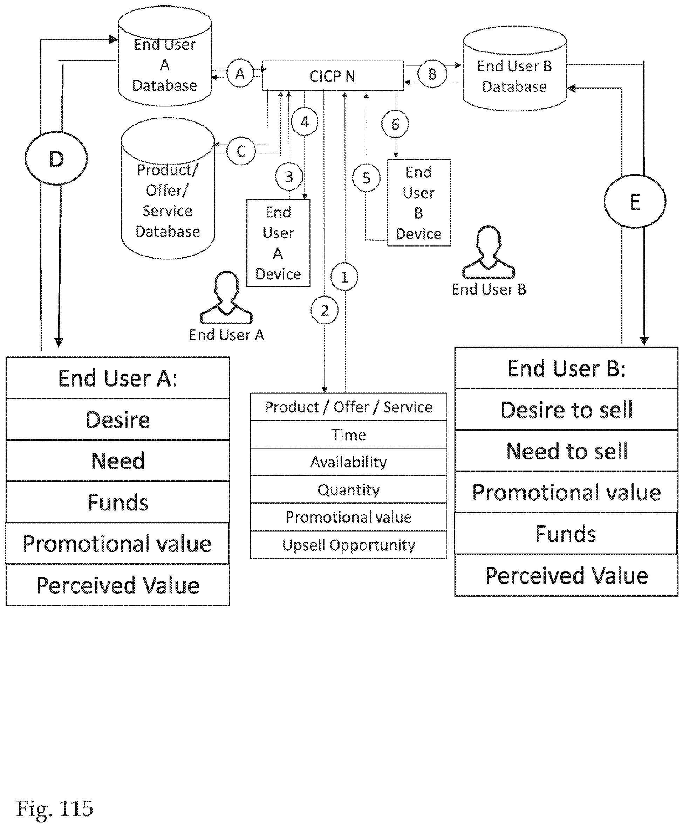

Fig 115. In this embodiment of the invention, a schematic overview is presented showcasing how a CICP described in Fig 114 can be used to broker transactions between End User A and End User B. The CICP N is operating as described in Fig 114 but in this embodiment, the End User A Database has received additional information from End User A, here illustrated as "Desire", "Need", "Funds", "Promotional Value" and "Perceived Value" as shown in \. This is entered into the CICP N as shown in Fig 115-A. End user B has information / parameters as well, here illustrated as "Desire to sell", "Need to sell", "Promotional Value", "Funds" and "Perceived Value". These are transmitted to the end B user database as shown in Fig 115-E. End user A is in communication with CICP and has a desire to purchase, acquire, trade or otherwise obtain something of value or experience or consume curated content. He has described his desires and other aspects, Fig 115-D. The CICP N then will match these parameters with the data received via Fig 115-1 with a query back Fig 115-2. Prior, simultaneously or later based on parameters in the CICP N will evaluate the data presented by End User B to his database, Fig 115-E as transmitted to the CICP N as illustrated in Fig 115-B. The CICP N will then perform computations to present offers to End User A, Fig 115-4. The response from End User A is presented back to the CICP N, Fig115-3. Should the response be an acceptance of the offer, this is communicated to End User B via the CICP N as shown in Fig 115-5, and the acceptance of the offer is presented to the CICP N via Fig 115-6, with a confirmation send to End User A via Fig 115-4. Should End User B not accept the offer, his counter offer can be submitted via Fig 115-5, then transmitted to the End User A via Fig 115-3 with the End User responding back with acceptance or counter offer via Fig 115-3. This process can repeat until End User A and End User B arrives at acceptable transaction terms. Should End User A not accept the initial offer presented by the CICP N, then he can present a counter offer to the CICP N via Fig 115-3 and the negotiation process will repeat. The uniqueness of the invention is the use of a common CICP to pair between an entity that has something to sell with a person that may personally have something to offer and a user that has a desire to purchase something. This can translate to other transactions without the actual purchase of a product such as for services such as transportation where ride share and taxi services can use the same system. This is for illustrative purposes and not intended to be all encompassing.

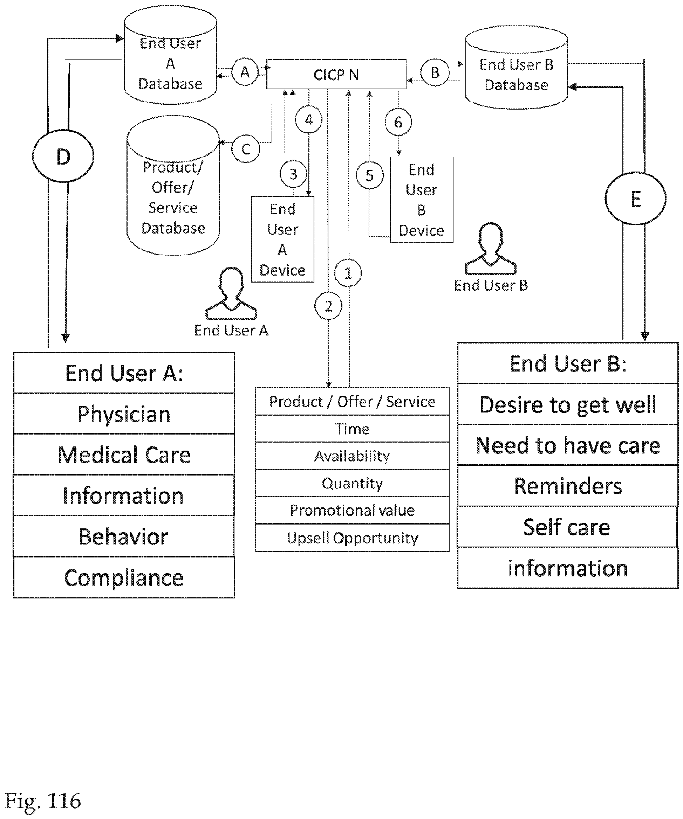

Fig 116. This is a schematic overview of the embodiment described in Fig 115 where the transaction between End User A and End User B is for medical care. In this case the system operates as described in Fig 115, but End User A is someone who can perform or provide care, medical care, support or other tasks that may be of value to others. This is illustrated as "Physician", Medical Care", "Information", "Behavior" and "Compliance", a series of parameters that are presented and communicated to End User A Database, Fig 116-D. End User B is someone how is in need of services, herein depicted as "Desired to get well", "Need to have care", "reminders", "self-care" and "information". These parameters are presented to End User Database B as illustrated in Fig 116-E. A third parties, or numerous third parties, are also communicating with the CICP- N, Fig 116-1 and Fig 116-2. These can in this example be entities such as hospitals, clinics, venues, spas, senior living facilities, ER, operating rooms, pharmaceutical companies, medical insurance companies, doctors, physician groups, assisted living organizations, nurses, or 3^{rd} party operators or provides of any such facilities, goods, services etc. In this instance, End User B is in need of care, while End User A can provide such services. The process the CICP- N is using to match the 2 parties and compare versus the 3^{rd} party provider(s) and transmit a recommended curated experience and services to End User B and broker, negotiate and facilitate the communication of such offer is described in Fig 115. This is for illustrative purposes and not intended to be all encompassing.

### Example of Use of Multiple CICP Systems by Government Entities to Teach and Educate

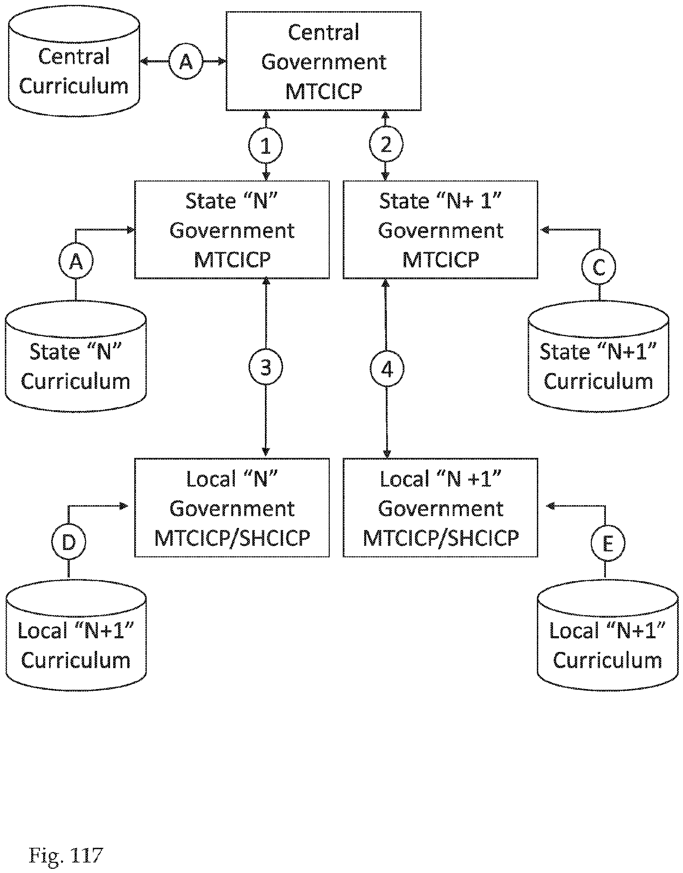

Fig 117 is a schematic overview of the invention as used by a series of government agencies to provide Contextually Intelligent Communicated Education in a system named IDEAL; "Individualized, Differentiated Education & Arts Learning". In this overview, there are 3 levels of governments involved; "Central Government", "State Government" and "Local Government". The Central Government controls a MTCICP that is connected with the central government Curriculum as illustrated by Fig 117-A. An individual state "State N" has its own MTCICP that is connected to the central government MTCICP, Fig 117-1. There are more states and there are common systems in addition to the individual state as depicted by "State N+1" Government MTCICP" that are also communicating the Central Government MTCICP, Fig 117-2. The individual state has its own curriculum, "State "N" Curriculum" that is providing information to the State N MTCICP, Fig 117-B. The other state has their own curriculum, "State "N +1" Curriculum" and are either collaborating with one or many others, and the curriculum is providing information to the State N+1 MTCICP, Fig 117-C. Each individual state "State N" controls and communicates with the local governments, "Local "N" Government" that has its own MTCICP and / or SHCICP that is connected to the state government MTCICP, Fig 117-3. There are more local governments and there are common systems in addition to the individual local government as depicted by "Local N+1" Government MTCICP/SHCICP" that are also communicating the State Government MTCICP, Fig 117-4. The individual local Government has its own curriculum, "Local "N" Curriculum" that is providing information to the Local N MTCICP and / or SHCICP, Fig 117-D. The other local governments - "Local "N+1" Government MTCTCIP / SHCICP" have their own curriculum, "Local "N +1" Curriculum" and are either collaborating with one or many others, and the curriculum is providing information to the Local N+1 MTCICP/SHCICP, Fig 117-E. This is an example of the overall multitenant architecture where various curriculum are presented to the various CICP systems with controls and oversights enabled at various levels. Curated experiences and content can be delivered by any of the CICP systems to end users such as teachers or students, to operators such a parents or school administrators with oversight and controls of performance at all levels. This is for illustrative purposes and not intended to be all encompassing.

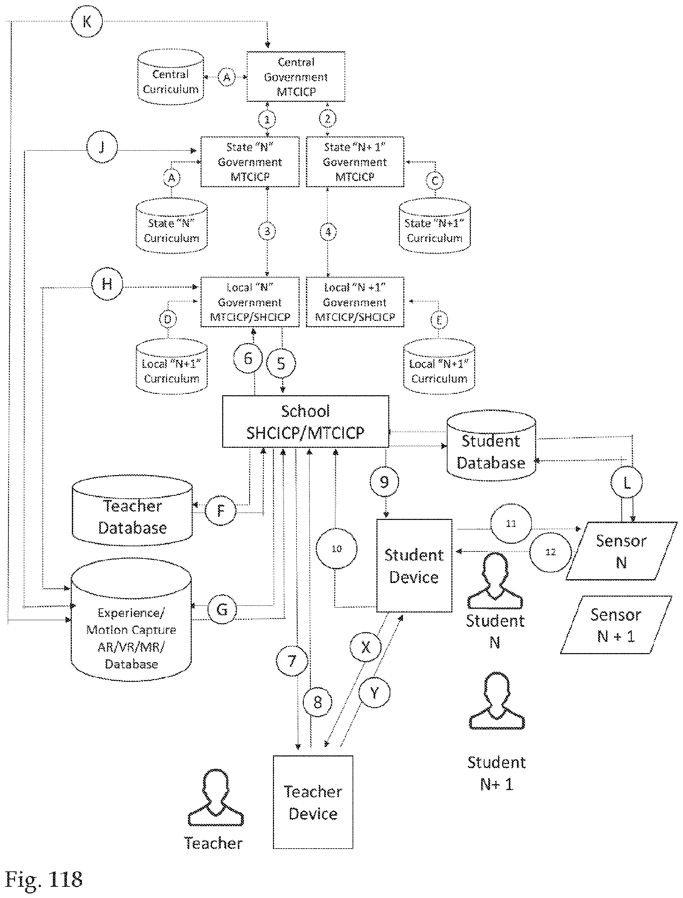

Fig 118 is a schematic overview of the system described in Fig 117 expanded to include student device, student database, teacher device and in-school sensors. In this embodiment of the invention, the system described in Fig 117 is operational. A teacher is working for a local government and is connected with a school's CICP system; "School SHCICP/MTCTCIP" as depicted in Fig 118-7 and Fig 118-8. The "School SHCICP/MTCTCIP" as connected to a database for the teachers - "Teacher Database" - as depicted in Fig 118-F as well as the "Local "N" Government MTCICP/SHCICP" as shown in Fig 118-5 and Fig 118-6. This enables the local "School SHCICP/MTCTCIP" to operate as the implementation described in Fig 117 explains. The "School SHCICP/MTCTCIP" is also connected and communicating with a database for the students - "Student Database" as depicted in Fig 118-M. A series of students are in the same context as the teacher and in communication with the "School SHCICP/MTCTCIP", as depicted in Fig 118-9 and Fig 118-10. This does not mean that they need to be in the same location. A series of additional curated education experiences have been created and stored in a database; "Experience / Motion Capture, AR/VR/MR Database" and is communicating with the "School SHCICP/MTCTCIP" as illustrated in Fig 118-G. This same database is also in bi-directional communication with the "Central Government MTCICP" as shown in Fig 118-K, the "State "N" Government MTCICP" as shown in Fig 118-J and the "Local "N" Government MTCICP/SHCICP" as shown in Fig 118-H. When the "Student N" and the Teacher are in proximity, a verification of this proximity can be detected in two manners; one is via direct proximity detection between the two as depicted by Fig 118-X and Fig 118-Y. This can be determined via a series of technologies such as BLE and / or other proximity/ peer-to-peer technologies. A second methodology to detect that the student and teacher are in the same context but not at the same location - i.e. they are not in proximity - for instance in a distance learning situation with teacher in one location and the student(s) is in another - is that the "School SHCICP/MTCTCIP" detects that both are in the same context and makes the pairing between the student and the teacher. Once the connection is made, the "School SHCICP/MTCTCIP" will alert the teacher as depicted in Fig118-7. The teacher can then use her device to communicate and control the curated content delivery from the "School SHCICP/MTCTCIP" from her device as depicted in Fig 118-8. The "School SHCICP/MTCTCIP" will then compute the curated content to be delivered by combining the data and input from the systems connected to it as described in Fig 117 as well as the "Experience / Motion Capture, AR/VR/MR Database", the "Teacher Database" as well as the "Student Database" and serve this to the student as depicted in Fig 118-9. The response to this curated content delivery is transmitted back to the "School SHCICP/MTCTCIP" as shown in Fig 118-10. The content is recorded and retained by the "Student Database" as shown in Fig 118-M, the "Teacher Database" Fig 118-F and the system described in Fig 117 via the connection illustrated as Fig 118-6. The results are also presented to the Teacher as depicted in Fig 118-7. Should grading, feedback, comments, corrections, encouragement or other feedback be needed or warranted, the Teacher can communicate this via the "School SHCICP/MTCTCIP" as depicted in Fig118-8, with communication to the student, Fig 118-9 and transmission of the data / content to the Student database, Fig 118-M and Teacher Database, Fig 118-F as well as to the system described in Fig 117 via Fig 118-6. Should the curated content that the "School SHCICP/MTCTCIP" determines or is instructed to deliver to the student needs additional functionality such as motion, movement, actions and body movement, exercises, AR/VR/MR experiences or any combination thereof, such content stored on the "Experience / Motion Capture, AR/VR/MR Database", this will be communicated to the "School SHCICP/MTCTCIP" as shown in Fig 118-G. The "School SHCICP/MTCTCIP" will transmit this to the Student as illustrated in Fig 118-9 with feedback delivered back to the "School SHCICP/MTCTCIP" as shown in Fig 118-10. The results are also presented to the Teacher as depicted in Fig 118-7. Should grading, feedback, comments, corrections, encouragement or other feedback be needed or warranted, the Teacher can communicate this via the "School SHCICP/MTCTCIP" as depicted in Fig 118-8, with communication to the student, Fig 118-9 and transmission of the data / content to the Student database, Fig 118-M and Teacher Database, Fig 118-F as well as to the system described in Fig 117 via Fig 118-6. Should the student N be in an environment where there are Sensors installed, these can interact with the student's device as depicted in Fig 118-11 and Fig 118-12. Any results of such interactions can be transmitted to the Student Database as shown in Fig 118-L. The results are also presented to the "School SHCICP/MTCTCIP" as depicted in Fig 118-10 and onwards by the "School SHCICP/MTCTCIP" to the teacher as depicted in Fig 118-7. Should grading, feedback, comments, corrections, encouragement or other feedback be needed or warranted, the Teacher can communicate this via the "School SHCICP/MTCTCIP" as depicted in Fig 118-8, with communication to the student, Fig 118-9 and transmission of the data / content to the Student database, Fig 118-M and Teacher Database, Fig 118-F as well as to the system described in Fig 117 via Fig 118-6. All the interactions can be captured and stored on the teacher database and student database both accessible by the School SHCICP/MTCICP. Data can be computed, condensed or truncated or otherwise summarized by the School SHCICP/MTCICP to be transmitted to the "Local "N" government MTCICP/SHCICP" as depicted in Fig 118-6. Data can be computed, condensed or truncated or otherwise summarized by the Local N Government SHCICP/MTCICP to be transmitted to the "State "N" government MTCICP/SHCICP" as depicted in Fig 118-3. Data can be computed, condensed or truncated or otherwise summarized by the State "N" MTCICP to be transmitted to the "Central Government MTCICP" as depicted in Fig 118-6. This is for illustrative purposes and not intended to be all encompassing.

### Convention Center Example

In such an embodiment, the convention center operator is in control of the MTCICP. Show managers will lease the physical location for a certain specific time and organize a show such as the ComiCon event at the San Diego Convention Center.

This organizer then controls the MTCICP during the period they have agreed to pay for or otherwise compensate for.

This show manager can now use the multi-tenant feature and further sub-lease access to the MTCICP system to exhibitors that are showcasing their products or content as a paid exhibitor. This exhibitor can then use the portion of the MTCICP they are granted access to. This can enable them to send messages and present content to those attendees that are in the exhibitor's booth at the time they are physically there.

Likewise, a concessionaire that has a permanent installation in the convention center can be granted access to the MTCICP. Instead of a time restriction, they can be granted access to use only a portion of the MTCICP that accesses and interacts with attendees while they are in a predetermined area or granted access to control a specific area within the convention center where they can interact with attendees that have devices that are connected with the MTCICP. They can then offer content such as their food and drink menu to the attendees. This will be controlled by their access to the MTCICP and delivered from the MTCICP to the attendee's mobile device when the attendees are within the geographical area or specific area within the convention center. Such menu message can be programmed to launch an order system within the mobile device. The attendee can then place an order on their device. This order is sent to the MTCICP which then will transmit this order to a device in the concessionaire stand or a mobile device one of the staff members carry that is also connected to the MTCICP or to the Point of Sale system the concessionaire is using. A mobile payment for the order can also be accommodated through the same system in the same fashion. Systems such as Apple Pay, Google Pay, Samsung Pay, MasterCard Pass or other payment systems can be incorporates into the MTCICP to handle the financial transaction portions.

Similar to the concessionaire retailers, shops, restaurants, hotels, shopping malls, night clubs, tourist attractions, museums, private transportation, public transportation, airlines, taxi companies, tour organizations and others close by the convention center or otherwise associated with the attendees, tourism or safety, traffic, or city planning or management, can be granted access to communicate with the attendees by accessing the MTCICP. This access can be granted based on time, location or other per-determined parameters agreed upon by the master licensee of the MTCICP and the sub licensee. This access can be granted against no compensations, for compensation or for a participation of any commerce generated via the use of the MTCICP by all parties.

A brand may also be interested in having access to the attendees while they are in town for the convention. Such access can be granted via access to the MTCICP. This access can then be granted for a limited time, but can work across all the geographical areas, including within the range of other sub-leases. The access can be limited to parameters in other fashions such as based on gender, age, interests, profession, position, wealth, type of car owned, level of authority, national origin for tourists and other parameters known within the MTCICP and its extended and connected databases.

A service provider such as an organization or an airline or a cruise ship operator or an operator of a software or mobile app service can also be granted access to the attendees. Again, they will be granted access to control aspects of the MTCICP agreed upon by the parties in the same fashion as the brands described above.

It will be very important to the owner of the MTCICP that all these entities do not inundate the attendees with offers and content in an intrusive, obnoxious or disruptive manner. Numerous ways to leverage and select the most relevant offer to present exists and can be incorporated into the MTCICP to ensure a limited number of offers and content are presented. Reverse "Dutch" auctions can be used and pre-programmed in a manner to programmatically present the offers that are most relevant and paying most to be displayed first.

Such a platform can work for owners and operators of facilities such as the convention center mentioned, airports as described later, shopping malls, universities, stadiums, venues, hotels, city buildings, airlines, tourism agencies, city management, federal government, government agencies, web site and mobile service providers and law enforcement.

### Airport Example 3

Another embodiment of the MTCICP is for an airport operator. Modern airport operators have turn into landlords, leasing space to concessionaires and earning a percentage of their sales in addition to the lease they charge for the space. Airlines lease access to gates and typically no longer own these. In most modern airports, parking is one of the top revenue generators if not top. It is therefore in the interests to have happy travelers that spend as much time as possible walking in the airport, shopping and dining / eating / drinking after they have parked their car. A happy traveler spends a lot more than one that is stressed and rushed to get to their gate. The MTCICP can enable the airport to create a series of new revenue streams. It can lease access to the system to airlines, concessionaires, stores and restaurants, to tourism agencies, amusement parks, transportation companies, hotels, convention centers and any other entity that wants to communicate with travelers. This can be the advertisers and brands that pay for display ads in the airport, it can be products that are beings sold or the owners of the companies providing services for the airport.

Regardless of the location that has the MTCICP the same functionality will be deployed and enabled.

The MTCICP will record all messages and content sent to the attendees, all the messages viewed, all the messages opened, all the messages acted upon. Should there be a call to action in the message such as open a message, follow a link to another page or to go to a physical location, the MTCICP system will record such an action and retain it.

The system architecture of the MTCICP is based on the CICP "event-action-verify and record" method where all interactions with the systems are named as an event. This event is logged and it is determined if an action is warranted. Such actions can be a control command back to the system component that triggered, recorded and transmitted the event. If and when warranted the control command is sent to the appropriate device. This device can be the originating device, or any other connected device that has been associated with the originating device. In certain events, no action is warranted and no control commands are sent. In all instances, the event and any actions taken are verified to have been performed. The whole process is recorded and retained. The commands sent will trigger new events. These events are then matched against the desired outcome of the action. If the desired outcome was produced another event has occurred and the desired outcome has been verified. If the desired outcome was not produced, another event has occurred and the failure to achieve the desired outcome has been verified. All events and actions are recorded. What produces the desired outcomes will be repeated as needed and desired. The actions that do not result in the desired outcome will be retained and used by future similar events where other actions will be presented. The gathering of this date is the core of the intelligence component of the MTCICP.

The events can be the gathering of data from individual set of sensors, a combination of sensors independently or numerous sensors combined into a device such as a mobile smart phone, the interactions between multiple sensors in geographical physical locations, the interactions of a connected device with one of multiple sensors, the interactions of a multiple connected mobile devices with a single sensor and / or the interactions of multiple sensors with multiple mobile devices, and / or the interactions between multiple mobile devices.

The events can be based on proximity between a sensor and other sensors, the sensor and a mobile device, multiple sensors and a mobile device, the sensor and multiple mobile devices and / or multiple sensors and multiple mobile devices, and / or between multiple sensors, and / or between multiple mobile devices.

The events can be based on time of the proximity of a sensor and other sensors, the sensor and a mobile device, multiple sensors and a mobile device, the sensor and multiple mobile devices and / or multiple sensors and multiple mobile devices, and / or between multiple sensors, and / or between multiple mobile devices.

The events can be based on the location of the interactions of a sensor and other sensors, the sensor and a mobile device, multiple sensors and a mobile device, the sensor and multiple mobile devices and / or multiple sensors and multiple mobile devices, and / or between multiple sensors, and / or between multiple mobile devices.

The events can be based on the person who is involved at the time, location or in the proximity of the sensor and other sensors, the sensor and a mobile device, multiple sensors and a mobile device, the sensor and multiple mobile devices and / or multiple sensors and multiple mobile devices, and / or between multiple sensors, and / or between multiple mobile devices.

The event can be based on the person's background, shared profile, demographic profile, age, gender, interest, current behavior, past behavior, wellness, health, activity level, mood, the rate of travel, level of exercise, level of interest, personal danger, products around the person, the location of the person, other connected devices in proximity to the person, facilities such as buildings, homes, museums, venues, bars, restaurants, convention centers, hospital, stadiums, universities, airports, master planned communities, hotels and any other building structure, equipment around the person, equipment the person is using, riding, operating, driving, controlling, flying as the connections between any associated sensor and other sensors, the sensor and a mobile device, multiple sensors and a mobile device, the sensor and multiple mobile devices and / or multiple sensors and multiple mobile devices, and / or between multiple sensors, and / or between multiple mobile devices.

The event can be based on the product the user is interacting with based on interactions between sensor and other sensors, the sensor and a mobile device, multiple sensors and a mobile device, the sensor and multiple mobile devices and / or multiple sensors and multiple mobile devices, and / or between multiple sensors, and / or between multiple mobile devices

The event can be based on the user described above becomes in connection with another person who has another device connected to the MTCICP.

This "event-action-verify-record" architecture enables the right messages to be delivered based on the context as described in the original description of the MTCICP.

The actions that the MTCICP will deliver to the devices that are connected to it will be controlled and programmed by those that the master licensee has granted access to within the parameters that the master licensee and sub licensee have agreed upon for the compensation the parties have agreed upon during the time frames the parties agreed upon to the users and devices that the parties agreed upon, delivering the experiences, content, information and offers the parties agree upon within the parameters the parties agreed upon.

The actions that the MTCICP can send can be offers to purchase, coupons for such offers, access, tickets, offers for service, special access or privileges, advertisements or alerts, alarms or encouragements. Actions can also be launching functions within communication device such as sounding an alarm, opening a camera view finder, launching a video, launching an AR browser, launching a QR code reader, trigger an NFC based event, launch a function within a software, trigger an event on the device. Actions can also be interactions with other equipment such as opening a door, grant access, punch a ticket stamp, trigger a video on a video display, dispense a product from a vending machine, trigger a payment, turn on a device, turn off a device, adjust music volume, adjust temperature settings and connect with any other connected devices.

The content can be in-app, graphics, photos, images, videos. Content can be displayed as videos or photos, in augmented reality or virtual reality. Content can be displayed on the device, on equipment or video screens. All will be controlled, launched and triggered via commands from the MTCICP.

The experiences, content and actions can be on the user's mobile devices or wearables that are connected to the MTCICP. They can be displayed on connected devices such as kiosks, vending machines, video screens or other connected display mediums.

Where a facility has been installed with a complete MTCICP with numerous sensors or access points such as Wi-Fi access points and routers, beacons and other transmission devices such as LED lightbulbs with BLE, way finding solution can be implemented. In such an installation, the access points can be used to triangulate the location of any device that is connected to the MTCICP. Numerous system currently exists that can provide accurate locations based on such sensors. Solutions that detect location, way-finding and solutions that enable guided navigation from one point to another point within the facility are also available. Integration of these into the MTCICP enables the various users of the MTCICP to present offers within the navigation and guides presented back to the users of the system as they progress through the facility.

Since the MTCICP can detect the location of the users of the system within the geographical reach of the system which can range from global to precise in-door locations, if can guide interested parties to meet each other. This feature can be used by attendees at convention centers that are trying to locate and meet peers or co-workers, by a single person trying to locate another single person in an amusement park, a mother looking for her son at a university campus. Permission for such discovery will need to have been granted by both parties prior to such pairing. The MTCICP is the central hub and will retain such permission. The match making will only be enabled and allowed when both parties have consented to such pairing.

When the pairing occurs between two or more consenting people who have devices that are connected to the MTCICP, an exchange of information between the two parties can be enabled by the MTCICP. The action of the connection of the two can be recorded and retained by the MTCICP as well as the transmission and sharing of the content.

### Retail Chain Example 2

One such implementation of the MTCICP can be in a retail environment. Here the retail chain has purchased a master MTCICP. They have installed a MTCICP system in each retail location. Each sub set of the MTCICP is controlled by the master MTCICP at the corporate HQ. The local store management has been granted limited access to control aspects of the system that is installed only in its physical location. Its sales staff has devices that are connected with the MTCICP. The devices that the staff carries in the store will transmit their location to the sub MTCICP. The store manager can then see the location of his staff from his device that has been granted another layer of access than the staffs devices. When a customer with a device that has a software or mobile app or otherwise has granted the retailer access to contact the customer enters the retail location, the event of this entry is recorded by the system. The MTCICP will then match this customer who has granted approval to be identified to the retailer and operator of the MTCICP with their profile that the retailer has on the customer. This profile can be a loyalty or reward program, a store credit card, a frequent buyer card, or other sources of user profiles the retailer retains on its customers. The MTCICP can also go to other connected databases to seek more information about the customer. Numerous sources for demographic data exist, as well as buying patterns from activities both on-line and off-line. This data will be aggregated by the MTCICP. The sum of this data will then be presented to the sub MTCICP system in the retail location. The location of the customer in the store will be monitored, recorded and retained. Should the customer stop at any place indicating that they have intent to understand, experience, touch, feel or try a product at that particular location within the premises; the MTCICP will detect such an action. Based on the dwell time the customer has at this location, a message can be sent from the MTCICP to a staff member or a number of staff members that are near-by. This message can be sent with back-ground information gathered by the MTCICP so that the staff member is well prepared when they initiate the verbal communication with the customer. When the staff member comes into proximity of the customer, the MTCICP system records this. Messages can be sent out to the other staff members that they do no longer need to look for the customer. Content that is relevant to the location can be presented by the MTCICP to the staff member so that the staff member can present stats or other features. The MTCICP can also send message and present content to the customer via his or her device that is connected to the MTCICP. Information such as comparisons, inventory level, options, features and functions can be presented in a sales promotional manner to the customer, while information about the product sent to the staff member has been created to assist in closing the sale. Thereby, the MTCICP is sending the right message to the right person, at the right time while they are both close to each other. All the data, the interactions, the customers dwell time at the product before the staff arrives, the time it took the staff member to arrive, the content sent to the customer and the content sent to the staff member will all be recorded and option to be displayed on the HQ and store manager level MTCICP. Digital displays can also be connected to the MTCICP. These can be programmed to present advertisements from brands that have paid to use the MTCICP. These ads can be displayed when a specific type of customer is in front of the display. The displays can also be movable, preprogrammed and connected. These can be tablets that are placed on fixed or movable display units that incorporate pre-programmed image recognition solutions. This image recognition solution can be connected to the MTCICP. The targets it is looking for can be selected and determined via the MTCICP by the store manager or the HQ or the brand owner who has been granted access against a fee. Once the image recognition system has made a match, content that is preloaded on the device can be triggered and displayed on the device. This interaction is an event and recorded as such by the MTCICP. The event can trigger an augmented reality representation of a product showcased in the target image, or it can be a promotional video, or an advertisement, a link to a web page, an interactive fact sheet, a presentation, photos, reviews, comparisons, data and fact sheets or any other aspect related to the image. All interactions are recorded and retained by the MTCICP. All results can be displayed as real time interactions on the store MTCICP or the HQ MTCICP.

The data can be anonymized on the option of the MTCICP should this be need to comply with the retailer's privacy policies.

### Healthy Lifestyle Promotion System

Preferred embodiments of the MTCICP may be configured to function to promote a healthy lifestyle, wellness encouragement, and verification and reward for healthy behavior while improving medical care, including pre- and post-surgical operation care with verification of medication and activity compliance.

The invention can also be used to encourage behavior and actions, activity or purchases, verify that the desired action has been performed and then record and or reward for the desired behavior. If the desired behavior has not been achieved, corrective action can be presented, and the process repeated until the desired action has been taken. Additional messages, content delivery, alarms to send others to intervene, activity stop can be delivered as needed should it be needed to intervene.

In another application of the central CICP, the MTCICP is extended beyond the delivery of content and experiences, it can be used to encourage healthy habits, drive wellness and improve the effectiveness of medical care and medication.

This invention is not dependent upon or based on the features and functions in a CICP platform, but it is preferred to be used in conjunction with such a CICP solution.

This invention is a Health and Wellness CICP - HWCICP - which is to be used to connect and communicate with wearables such as the Samsung GearS2 watch, the Apple Watch, or other connected fitness and wellness tracking devices via a central CICP and or other connected mobile devices, sensors and connected equipment, display units and other equipment.

This HWCICP is used to send specific health and wellness related messages. The objectives of such messages is to drive healthy behavior by sending motivational messages at the right time and on the right device, encouraging the user to make the right choices. These messages can then be answered by devices that can determine if the action was taken. This action can be to run faster, lift a weight, flex and arm or kick a ball. When the action has been completed, it can be recorded and if a reward is appropriate it can be awarded. A point can be collected and retained in a loyalty database connected to the CICP.

It is an established fact that it takes more than 21 days to make a habit permanent. With this system, reminders can be sent at the right time. Rewards can be granted for the right behavior. This will then be repeated until a decreasing number of scheduled reminders are omitted. If the behavior remains, then the habit has been established. Rewards can be used as incentives along the process. Games can be used to encourage the right behavior. Such games can be made public or shared with a select group to instill competition.

In certain settings and facilities such as office buildings, it can be of benefit to the owner and or operator of the facility that those that are in the facility are as healthy as possible. In office settings, an in active work in front of a compute can cause obesity. Simple reminders to stand up and be active are common features on wearable devices and mobile phones such as S-Health by Samsung and Apple Health by Apple. Such a device can be connected to the HWCICP which can then be connected with sensors in the facility. Now messages can be directed to those that are standing in front of an elevator. These messages can be to take the stairs instead. Only those that are standing by the elevator will get the message, while those that are walking by and continue on will not. Those that actually climb the stairs or walk down the stairs can be awarded. This action can be determined and recorded via proximity beacons in the stairwell, or by the activity sensors on the devices. The HWCICP will record and award rewards and points according to set parameters. These parameters can be defined and included in the message about taking the stairs.

Likewise, the same system can be used to detect if a person is in front of a water cooler or water fountain. If they walk by, nothing happens. If they stop by the fountain or water cooler for a given period of time, the system can detect this and send a message to drink water. The action of standing by the water cooler or water fountain for a period of time - dwell time - can be used as verification that the person is drinking water. Such an event will be recorded by the HWCICP and points awarded.

Likewise, the same system can be used to make healthy food choices while in front of a snack food vending machine or in line to order food in the cafeteria at the facility. Suggestions on what to order can be presented on the users connected device by the HWCICP which detects the actual location. Message can be to present the menu of the cafeteria or option to connect with the vending machine. Should the user select an item from the cafeteria menu, the order will be gathered by the HWCICP. The event is recorded and the action will be to send that order to the Cafeteria system. This can be the cafeteria ordering system, a POS system, a dedicated device at the cafeteria or on the connected device of some of their staff. Such devices will be connected via the HWCICP with whatever connectivity they have. IN the case of the vending machine, the connection can be made directly or via cloud based servers and control system that can connect with the HWCICP.

Near Field Communication (NFC) tags can be placed at specific locations. When such a tag is triggered by a HWCICP connected device, the system can detect that an action related to that NFC tag has occurred and be recorded by the HWCICP in the user's profile. This tag can be placed by a certain food in a cafeteria, by a turn still at an entry to a facility or on specific exercise equipment. The pairing of these tags can be used to determine what food the user is selecting in a cafeteria, what entry to the building they use (stairs or elevator) or what type of exercise the user is engaging in - is it a leg lift or arm curling machine.

Connected displays in the facilities can also present the messages as the users move past and stand in front of these devices. Special motivational messages can be displayed personalized to the person standing in front of the display. The user's personal communication device that is connected with the HWCICP will detect that the user is in proximity to the display. The display is also connected to the HWCICP. Once the pairing between the two connected devices has occurred, appropriate messages based on the programming of the HWCICP and any past demographical data and or profiles of the user, the location of the display and the activity around it.

The system can also present motivational messages delivered by respected people such as athletes, at the right time and place. Audio messages such as the famous Eye of the Tiger from the Rocky movies can be triggered on mobile devices as the user comes to the 3^{rd} floor in a flight of stairs.

Directional messages and both the display and the user's connect devices can offer the user to take the stairs to the 2^{nd} floor rather than the elevator.

As today's young generation is heading to be the first generation in recorded history to have a shorter life expectancy than its parents based on lifestyle choices, the HWCIC can be used to motivate activity, encourage healthy eating habits and monitor sleep. Using HWCIC to create gamification away from video games and TV screens that drives sedentary life style in the younger generation can be enabled to counter sedentary lifestyle. The same gamification can be used for today's office workers also sit at long period in front of computers. The ability to create messages such as encouraging activities and assigning points to these is a simple way to gamify - scavenger hunts that requires walking is a simple aspect. A more detailed and engaging feature can be to fit professional athletes or action movie stars with sensors and then track them as they perform their routines, shoot their baskets, score goals, run, ski, jump or do action movie motions. These actions can be recorded via body sensors and or video capture systems and captured in a HWCIC enabled platform. These actions then are recorded and retained. A user with a device such as a wearable, set of wearables, and or other sensors, can then try to replicate the movements, actions and or motions. Their performance is recorded and retained by their HWCIC connected devices. The user can then see how she or he compares in their motions against the expert. This can be against a set time, number or repetitions, speed, strength or accuracy that the expert achieved. The match and score against the expert can be presented on the user's HWCIC device real-time with an encouragement to repeat and improve. The experience can also be replayed or acted with virtual reality googles to create an immersive experience. The expert could have been filmed in a real world environment using one of the numerous 3D cameras with 360 degree capture. The same methodology can be used to enable participants to compete with each other. In such an instance each player has a device or devices connected to the HWCIC. Each player is identified in the HWCIC to compete against each other and each other have granted permission to the HWCIC and each other to participate and influence the game. The same methodology can be used to improve one's own game or performance. The initial run-through of the process can be completed using sensors that capture the motions such as motion capture sensors, and the actions and motions are recorded into the HWCIC. At a later time, the same motions are performed and the way these are performed can be matched real-time against what had been captured by the HWCIC in the previous instance. This can be used to improve a user's own performance, or the HWCIC can be a multi-tenant CICP where a sports team has the controls. They can then grant access to their trainers, medical, sports agents and others to monitor performance, monitor and verify improvements and detect where there may be problems. Corrective actions, suggested improvements and other actions can be programmed into the HWCIC to assist in behavior change.

The HWCIC can also be used to suggest and recommend healthy eating habits. Time to consume food and drinks, vitamins, medications, supplements and the frequency and amounts of these can be programmed into the HWCIC. The HWCIC can then send messages and alerts about what to consume, and when and how much via HWCIC connected devices that the user has with him, is wearing or are within his context. He can confirm via the HWCIC connected devices that he has consumed the products or performed the actions. The HWCIC will retain and record this confirmation. Points can be assigned for the positive actions and retained by the HWCIC. Points can be deducted for failure to perform. Point status can be displayed on the user's device, on a public device or devices that are connected via the HWCIC and are permitted to see this information by the user, his team, his boss or employers, agents, teams, trainers, medical staff, supporters. As the action has been verified by the HWCIC, in addition or in-lieu of awarding points, the HWCIC can send an action to a sensor on the user to take a reading of his condition. This can be vital stats such as taking a heart rate pulse, moisture levels to measure sweat, blood sugar, glucose levels, oxygen levels or rate of speed of travel direction, height above ground, length of time airborne, power in turns and / or any other performance data and / or other stats on the conditions of the user. This can be used to measure levels of performance, accuracy or if the user may appear to have fallen, is there a pulse.

Consumption of the right food groups can also be encouraged via the HWCIC. When a user with a HWCIC connected device enters a grocery store, a restaurant, hotel, venue, airport or other place where he is likely to consume food and drinks, he can be reminded to select what is healthy. Confirmation that he chooses correct can be automatically in instances where a product packaging has a feature that includes an image recognizable by the HWCIC or a NFC tag that is associated with the product when this match is done in a manner recognized by the HWCIC. Offers to purchase healthy food can be provided with manual or automatically points awarded for right choices. This confirmation can be via object recognition systems, QR codes on the product packaging, NFC tags on the product. It can be confirmed via integration into the retailers POC system. It can be via product confirmation from devices such as Samsung fridge system that detects what products are in the fridge.

The same HWCIC can also be used to connect to devices and or sensors that the user wears while sleeping or have placed in his bed, in his room or in his proximity where he sleeps. Alerts and reminders to start to rest and slow down can be imitated via the HWCIC before the person needs to go to sleep. This can be motivational messages, turning on soothing audio sounds, running a hot bath, preparing a warm tea - all triggered and controlled via the HWCIC system that has been integrated into the user's home or hotel room or wherever he is sleeping.

The sensors can determine the quality of the sleep, the length and effectiveness. There are numerous solutions in the marketplace from wearables, to sensors in beds, to units to place on night stands. Any and all that are connected via Wi-Fi and has permissions via protocols to connect with other systems can be connected to the central HWCIC. The HWCIC thereby creates a multi-tenant HWCIC Smart home integration and master system.

Points can be assigned at each step of the process from waking up in the morning, eating breakfast, exercise, drive to work, take stairs at work instead of elevator, snack at work at certain times, drink water at certain times, stand at certain times, choose healthy food at lunch, remain active, drink more water, eat a snack, take stairs, walk to car, eat healthy dinner, stretch, relax before bed, go to bed at the right time, sleep well - and repeat.

The ability to monitor lifestyle and encourage healthy choices is also of great value to medical insurance companies, employers and educational institutions. Once such embodiment of the invention is for a medical insurance company that encourages their members to go to a fitness gym. Such a program may give a discount to the member if he goes to the gym twice a week and are quite common place. When the insurance company implements a HWCIC to manage this program, the verification that the member goes to the gym can be automatically recorded. Each time and the number of times he enters the gym can be detected via geofences around the gym, beacon in the gym or NFC or other sensors in their facilities. These will interact with the member's mobile devices or wearables or sensors that are connected to the HWCICP. These interactions are recorded and retained as a proof of presence. The HWCICP can also be used to verify that the member is actually exercising by opening a heart right sensor or motion sensor that records movement and activity take a recording, record and retain this. This data can be retained by the HWCICP in the user's profile and or can be retained and recorded in a manner that remains anonymous. The action of going to the gym, the frequency, the times entering and exiting, the time there can all be recorded and retained by the HWCICP. Equipment, shoes, wearables and other sports and exercise tools can be fitted with sensors such as NFC tags or QR codes to validate, verify and record the use of these by the member via a connected wearable or mobile device that can communicate with the HWCICP or can retain the information for a period of time while out of range for communication with the HWCICP and transmit the collected, recorded and retain information and data when the connection is re-established with the HWCICP.

The rewards for the activity at the gym can be a reduction in monthly medical insurance bills. The HWCICP can grant access to the gym attendance information, and the performance data there if user has granted rights to this to the accounting department of the insurance company. Alternatively, the HWCICP can be integrated into the insurance company accounting department database systems triggering a reduction in premiums for the user.

### Hospital Example

The same MTCICP system can be used in a hospital facility. In such an instance, the customer is a patient, the staff is nurses, and the store admin is replaced by the hospital admin staff. Instead of recording when standing in front of products, the patient's location will be mapped as he moves from examination room to examination room to laboratory and other facilities across the hospital. Instead of presenting content about a product, the MTCICP can present information about the patient. Should the hospital have a HIPPA compliant version of the MTCICP, electronic health records can be presented to the nurses, admins and physicians who have HIPPA compliant mobile devices that are connected to the MTCICP when they are in proximity to the patient. The path and movement of the patient can be recorded and retained by the HIPPA compliant MTCICP platform.

This system can also be extended to patient care post operations. There is a big issues currently regarding re-admit within 30 days of discharge. It is of great importance to the physicians to ensure that patients make the follow up appointments with their primary care physician within 48 hours of discharge. It is also of great importance that the patient follows the routines and regiments of care required and prescribed by the discharge physicians and nurses. The proper intake of the prescribed medicine in right dosage at the right time is also vital. Finally, there is a need to inform and educate the patient about the procedure the just had performed, with a mean to contact the right care give should the patient have any concerns or if problems occur.

The use of a MTCICP system can enable these things to happen. A patient that is being discharged will typically receive a print out of the their prescribed medications, paper forms with instructions, phone directory on a paper or phone book and other written notes and documents printed on paper. A MTCICP solution can add to this with a tablet that has been preprogrammed with all the relevant information around the procedure. Links to websites, videos and other information can be pre-programmed into this tablet. The user interface can be customized for easy navigation for seeing impaired people, elderly or those with limited dexterity in their hands and arms. Voice or gesture controls can also be included in this tablet.

The tablet is connected with the MTCICP via cellular network so it is always connected. Easy to use tabs to connect the patient with the care team can also be included. Once the patient makes a request for connection, the connection will be made via the MTCICP or in such a fashion that the MTCICP captures and records the connection attempt. It can ensure that the right care giver is connected. If that care giver is also part of the MTCICP, he or she can have a mobile device that is connected to the MTCICP and alerts the care giver when the request for contact has been made by the patient. As part of the discharge kit a wearable such as a Samsung Gear S2 watch can be given, lent, sold or leased to the patient. This device is also connected via cellular network to the MTCICP. As part of its preloaded mobile application, the MTCICP can open up sensors on this device upon certain events. These events can be event such as when acceleration is recorded by the device which the on-board chips will calculate to indicate that the wearer of the watch has fallen. Then the watch can sound an alarm to alert the user, it can make a connection to the MTCICP and sound an alarm via its connections, it can open up its heart rate sensor and take 2 readings, and seek any other motions or sounds. If these indicate a fall and that the wearer of the watch is in distress, the watch can send an emergency alert to the MTCICP and call 911. Since the unit has a cell unit and SIM card in it, the MTCICP can route a voice call to the unit and the 911 operator can also engage a voice call. Since the unit operates on the cell network, location can be detected and ported to the 911 service. The unit can also present medication alerts and reminders in non-emergency situations. These can be triggered by the MTCICP and displayed on the watch face with an alarm and vibration trigger. The patient can acknowledge that he is taking the medication. Such a response can be retained by the MTCICP as an indication that the patient is complying with the medication regiment prescribed. If of interest to the prescribing physician or discharge team, the watch can be programmed to take a hear rate reading before the message is sent, and after the patient has confirmed that he has consumed the medication. All such recordings will be recorded and retained by the MTCICP. Should the patient want to contact some of his care givers, the connections can be presented via the MTCICP. Such a message can be similar to a "nurse call" button in the hospital room, with the direct connection to on-staff nurses enabled. It is of great interest to the medical team, the hospital administrator and other care givers and family members that the patient can get the appropriate care at the right time. Early warning signs of a worsening condition can be detected earlier and prevented. One such issue is rapid weight gain post heart operation. Should a scale with the ability to be connected via WiFi or cellular network be prescribed as part of the discharge kit, reminders to measure weight and recording of these can detect warning signs before they become life threatening. Any other connected device that measures health statics or data can be connected with the MTCICP. Nearly equally important to the hospital operators, owners and admins is to intercept patients that are returning to the hospital or any other care giver within the 30 days without a critical need. The hospital that performed the operation may in such an instance forfeit the payment for the original operation and or be subject to a fine. In many instances, it may be more economical to send a trained professional nurse or doctor or other care giver to the location that the patient is at. The MTCICP can assist in administrating and coordinating such efforts to preemptive intercept an early re-admit. Any such staff member that has a device that is connected to the MTCICP and is on duty can be directed to go to the location of the patient to ascertain if the patient really needs to be readmitted. The MTCICP can also be used to enable additional uses of the discharge kit components such as smart home controls via gesture controls of the Samsung Gear S2 with the MTCICP capturing all interactions, with the ability to detect trends such as diminishing activity levels or weaker movements. Such trends can cause the MTCICP to send an alert to care givers.

While the MTCICP can interact with people and their devices, it can also be used to track, locate and detect proximity of products, assets, equipment and other items of value that can be moved or are designed to be moved.

In the hospital setting, asset tracking is a big issue. Equipment is mobile and often needed in an emergency resulting in no actual tracking of where it was taken from, how long it was used and where it was placed after it was no longer needed for that particular situation.

Such equipment can have a sensor placed on it. This sensor could be a Bluetooth LE sensor. This sensor is associated with the equipment in the MTCICP. Whenever a member of staff that has a device that is connected with the MTCICP comes in proximity to that specific piece of equipment, that interaction is recorded and retained by the MTCICP. It will retain the information about the equipment, where the staff member was when the interaction started, the time it occurred, how long it lasted and at what time the proximity ended and where the staff member was at that time. The location of the piece of equipment is thereby detected, recorded and retained by the MTCICP and can instantly or at a later time be displayed in the MTCICP or on any other device connected with the MTCICP that has the right credentials to have access to this information. This 'last known location' is another aspect of the MTCICP.

Such an MTCICP system can also track, locate and alert about assets in locations without the MTCICP infrastructure of sensors. Such an embodiment can be the use of the MTCICP for baggage tracking and alerts. A Bluetooth LE beacon can be placed on a piece of baggage and identified via a mobile device that has an app that communicates with the MTCICP. It can be logged as related to that specific device and the specific piece of luggage and recoded as such in the MTCICP. Once the traveler checks in his luggage at the departing airport, the proximity is broken and recorded and retained by the MTCICP. Once the traveler arrives at is arrival airport, his device will recognize the location as an airport via geo-fences preprogrammed in the MTCICP. It will start listening for the BLE beacon assigned with the person's device. Once the luggage arrives on the luggage conveyer belt, proximity is detected and the mobile device will sound an alarm, shake or otherwise alert the user that his luggage has arrived and is ready to be collected. Should the first airport be a connecting airport, the user will not connect with his luggage and the alert is not sent. All of these events and actions are transmitted to the MTCICP and recorded with location and time - and retained.

Another embodiment of the MTCICP is the ability to present actions such as enabling on-device order of products such as food and beverages when in proximity to a facility that has a MTCICP connection. The mobile device is then also connected to the MTCICP and when the user approaches the facility, the menu can be presented. In app and on the device selection of the products can be recorded by the device and the selection presented as an order on the device. Once confirmed by the user, the order will be transmitted to the MTCICP. The MTCICP will then transmit the order to the facility's connect devices. This can be a display, a mobile device that is fixed or mobile, a mobile device used by some of the staff member or directly into the facility's point of purchase system. Any of these systems will be connected to the MTCICP and will send a confirmation message back to the originating device. Information about the person that placed the order will also be transmitted to the facility via the MTCICP. This can be a photo of the user or the identification of the user's mobile device. A payment for the products ordered can also be facilitated via the MTCICP. Using any of the multiple mobile payment solutions such as Apple Pay or Google Pay, the tender can be closed when the user receives the products ordered. In one such instance, a 27 year old male person visiting from another town has a mobile watch such as a Samsung Gear S2 watch. Once he enters a crowded bar that has access to a MTCICP and installation in place, he is presented an offer to order a Coke and Bacardi on his wrist watch. He presses yes, and the MTCICP transmits the order to the bar tender's personal mobile device that is also connected to the MTCICP. He confirms receipt of the order and sees the FaceBook profile photo of the user. As the user approaches the bar, the bartender recognizes him and hands him his drink. The user acknowledges receipt of his drink on his watch and the tender is closed and payment arranged via the MTCICP. In this instance, Bacardi had access to the MTCICP. They have paid the owner of the system to be allowed to present offers for drinks using Bacardi Rom to male persons travelling that are between age of 25 and 30. This is why the offer for the Bacardi was presented instead of an offer for a Vodka martini. The order includes a handling fee that is automatically included in the cost. This is shared by the owner of the MTCICP and the facility in a predetermined revenue share agreement. The order also includes an automatic % for tip that will be paid to the bar staff. In another impediment of the same MTCICP order solution, a busy mom is travelling with her twin 3 year old boys. She arrives at the airport where the MTCICP has been installed. The MTCICP has guided her through the shortest lines through security. She has signed up for a health and fitness tracker version of the system. Her pulse is recorded as she has passed through security. The struggles with security and 2 unruly three year old boys have caused her stress levels to be elevated. The MTCICP recognizes this elevated stress level. It matches her with her profile of being a mother of young children. A newsstand is located across the gate where she has sat down with her boys trying to calm them. There are no food concessionaires at this area of the airport. Her watch pings her gently. It displays a message on the display asking if she could use a bottle of water and some packages of fruits for her boys that has been sent from the MTCICP. She states yes. This confirmation is now sent to the newsstand that carries both via the MTCICP. The order is confirmed via the system and displayed on the woman's watch. An option to have this delivered to her is offered at a fee, and she confirms she wants this. This request is again sent via the MTCICP to the newsstand. The order is now carried by a staff member or other service provider who has a device that is connected to the MTCICP. The location of the woman is shown on the device this staff member has with her. Once the connection is made, the order is closed and payment procured in the preferred manner of the woman; cash, credit card or via the MTCICP enabled watch.

As this woman is waiting for her flight, the MTCICP enabled watch pings her saying the Southwest airline is delayed and there is a gate change. She now moves to this new gate with her two sons in tow. They are all getting hungry, but she does not want to risk leaving the gate. Now she uses her mobile phone that is also connected to the MTCICP to see what restaurants are close by inside the airport and offer the same delivery service. She can see a couple of fast food restaurants nearby, but the lines are long and boys even more on edge. She finds a healthy alternative in a restaurant in the opposite side of the terminal. She places an order for a salad for herself and two healthy sandwiches and apples for her boys. She selects "deliver to me" and "initiate beacon tracking" on her phone. The order and the action are transmitted to the MTCICP. The "initiate beacon tracking" feature of the MTCICP enabled app opens up the BLE signal transmitter on the phone. The ID of the phone is retained by the MTCICP and included with the order. As the order has been transmitted, placed and processed at the restaurant, all this information is sent to the person carrying the food. His MTCICP connected device has a map of the area where the woman is. But this is a very crowded area with frustrated and delayed travelers. Everyone is on edge because of the two hungry and unruly boys. The server will use his device to see signal strength of the BLE signal being transmitted from the woman's phone. As he gets closer, the signal gets stronger, should he move in the wrong direction, it gets weaker. They meet up quickly despite the crowded area.

The man who ordered the food earlier is also delayed. He is a business traveler and has his entire luggage with him as hand luggage making it hard to reach his phone.

He has his flight details included in his MTCICP connected mobile app on the phone. Now as he approaches the display banks of the flights, the beacon that is associated with that specific display that is also connected to the MTCICP recognizes that he is in proximity to this display. This verification that he is in front of this particular display will be recorded by the MTCICP. It will match him with his flight information that is retained by his mobile device. As he approached his flight number will be instructed from the MTCICP to flash, have a name by it, have his initials by it, have a border around it, be highlighted or some other ways be made to stand out. This will last for a duration programmed and determined by the MTCICP. It can be based on how many other people who also have devices that are connected to the MTCICP are standing in front of that display. It can be flashing as long as he stands there and stop when he walks away. It can be on for a few seconds. His device that is connected to the MTCICP can be programmed to import the flight gate information onto the device. Indoor way finding can then be provided by the MTCICP to guide the user to his gate.

Another embodiment of the MTCIC is in use for operations of facilities, venues, airports, hospitals, restaurants, office buildings, convention centers and other buildings. In such instances, it can be used by the owners or management of the building, staff on site, contracted staff, electricians, managers, sanitation, room service, housekeeping, maintenance, service providers.

This MTCICP can then be used by the operator of the facility with access granted to various contractors and departments. This can be used to communicate with professionals when there is a problem at a certain location. It can be used to alert about equipment failures or damages. This can range from a faulty faucet or overflowing WC, a broken pipe or a spill of liquids on a floor, to faulty escalator, elevator or moving walkway, a broken window, or other structural damages. It can be an issue such as a fire, a person that is hurt or ill, a person that needs service, a person that needs help moving in a wheel chair, temperature that is too high or too low, it can be a piece of electronic equipment or display or tool that is malfunctioning. When such an event is recorded as an issue of concern via sensors that are connected to the MTCICP, or sensors that can alert other devices that are connected to the MTCICP such as a mobile device used by those in the vicinity of the issue, or the user of such a mobile device activates the issue of the concern, the MTCICP records this issue as an event. The event then triggers an action or series of actions. Such an action can be to alert the staff that has devices that are connected to the MTCICP that and are in proximity to the event or has some other interaction or control or authority of the event. This alert will then be displayed on the staff member's mobile device that is connected to the MTCICP. Content, instructions and information about the issue at hand can be delivered as well so that the staff member is fully informed and educated about the issue at hand. When the staff member has acknowledged that he is addressing the issue the MTCICP will also record and retain this information. Should the staff member be unable to fix, correct or handle the issue, he can use his device that is connected to the MTCICP to alert staff members to assist. The MTCICP will then send messages to these via their connected devices with actions to take. The MTCICP can also escalate issues of importance to those with a higher authority or to the master license holder or the owner of the MTCICP based on predetermined algorithms, alert triggers or if-then commands.

The MTCICP can also be used to ensure that personnel are performing the tasks they are supposed to perform. This can be cleaning a room or restroom, servicing a vending machine, maintaining a piece of equipment, checking a certain area for intruders or problems, checking in with a patient, guest or inmate, checking the function of measuring meters, sensors, doors, gates, bridges, areas, roofs, cellars, back-yard, courtyards or other areas. When the personnel are in these areas, the MTCICP can record that the person is there, when the person entered and when the person left. If there is a security issue, the MTCICP can open up the microphone on the connected device to listen to ambience noise or any noise that may indicate danger such as yelling, screaming, breaking of glass, squeals of brakes, gun shots or it can open up camera units on the connected device or it can open up heart monitors on the devices or other sensors on the devices that are connected to the MTCICP to determine the level of danger or threat or security risk. The MTCICP can then send alerts or messages or alarms to the level of reinforcement, repairs, law enforcement, emergency care or supervisor level in case of less urgent or less threat situations. It can be sent to those who are close by the issue event or those far away that need to come to assist such as law enforcement, ambulance or fire brigade.

### Aggregated Hub Embodiment

Preferred embodiments of the MTCICP may also be configured to include combinations of CICPs systems with sensors and devices that combine on-board, on-device computation algorithms with calculation results communicated via aggregation hubs. The aggregated CICP computing hubs preferably communicate through a common CICP central data gathering and computation site. The common CICP site is preferably and optionally integrated into a common interface, preloaded onto numerous connected devices and/or included as a part of an operating system that can enable the interactions of the physical world with the digital world.

The earlier defined CICP gathers data from sensors that communicate with the central CICP. In this new innovation, these sensors are housed within common communication devices such as a mobile smart phone where accelerometers, manometers, gyroscopes, microphones and camera sensors are used to determine numerous aspects of context. In these instances, numerous embedded and off-the-shelves algorithm solutions to detect orientation, accelerations, impact, image recognition, ambient noise, walk-run-stand, heart rate and step counters exists. Each device has a series of predetermined and pre-loaded algorithms to determine these.

The invention described here within is a Sensor Hub based CICP (SHCICP) system that provides a communication platform system that incorporates computation hubs based on computers, connected banks of servers and or super-computers are programmed to detect and learn context and take desired and programmed actions based on the determined context. The system can be program to present recommendations, deliver content, and interact with devices and control environments. The SHCICP collects data from one or numerous connected devices.

This continuation in part invention now calls for a sub sensor based hub connected CICP system structure is used to provide intelligent contextual data detection on a smaller chip, device or equipment and then sends the resulted action as a command to a central communication hub and which is connected with to a central SHCICP. This transmitting CICP can collect action commands from numerous sub CICPs. It can use its own computation power to transmit collective results to the master CICP.

This can be a series of small sensors on a person's body such as a NFL football player. Each sensor has collections of chips that at are connected to a master computational chip that has been pre-preprogrammed with algorithms to take the input from the various chips to detect a predetermined set or sets of action or actions.

This device then can transmit the results of its on-chip on-sensor to the communication component of the sensor. This can be a low power low range low power consumption communication module such as a BLE. This follows the principle of the CICP - take input, select and calculate actions on this input - and then transmit the result.

In this embodiment, the result from this sub SHCICP sensor is transmitted to a central hub. This central hub can take input from numerous other sub SHCICP sensors. This central communication hub SHCICP will then communicate via to a more powerful communication method such as a WAN, WIFI or 3G, LTE, 4G, 5G or other communication network to a more powerful SHCICP.

In such an event, the NFL player can have multiple sensors such as on shoes, in his helmet, in knee-braces, woven in the materials of his uniform, heart rate monitor, blood oxygen measurement, moisture sensors, tactile sensors in gloves, pressure sensors in the shoes, camera on his helmet, contact lenses in his eyes, head up display in his visor and any additional new type sensors that might become available.

Each unit calculates its own sensor data and transmits it calculation result to a central communication hub.

This hub can be a larger unit placed in the belt of the player's uniform, in his shoulder pads or on the helmet. Ideally it will be placed in a location that helps facilitate the transmission of the data it calculates.

It will take the input from each of the sensors on the player and combine all of these inputs into its own on-chip SHCICP calculation chip.

The results of this aggregated data will be transmitted to a central SHCICP.

This central SHCICP can be placed in a training facility.

There are numerous other NFL players on the same field at the same time.

Each player has been outfitted with the same system.

Each player's hub communicates its specific aggregated data from its player to the central stadium SHCICP.

This is thereby a fully embedded SHCICP that connects the team in a fashion called "Contextually Connected Team" - "CCT".

The SHCICP component of the CCT can be displaying results of its calculations on devices that are connected to it such as a tablet, mobile phone or other communication devices.

For deeper and more complicated calculations, the central SHCICP unit of the CCT can transmit its collected data to a cloud based server. This cloud based server can be connected to a super computer for further calculations.

These calculations can be combined with past data collected from the CCP via its SHCICP into a CICP, data relevant to the facility such as weather conditions, data relevant to the individual players from other databases, as well as data from other teams with similar CCT systems installed.

Real time contextual data is thereby collected. Past performance can be matched with today's performance by each individual player and or the team as a whole. Real time input can be created such as changing a line-up, positions of the players, the actual play called to the quarter back and the ways the front line stands. All of these variations will be recorded by the CCT CICP and the master CICP. Real time results of the variations can be showcased on devices that are connected to the CCT CICP and or the master CICP.

While some of the aspects described herein within these individual sensor chip parts are not new, the aspects of these hubs - individually or together as a system - being a part of a complete SHCICP system are new.

This data gathering system can be used in other sports, whether they are performed by one person competing alone, or teams, or numerous individuals against each other or together. It can be used where the person is using equipment or not. In cases where the person is using equipment or other animals, these can also be equipped with sensors that have SHCICP architecture and communications hubs. This can range from devices such as skis, rackets, clubs, mallets, or bicycles, cars, motor cycles, sailboats, row boats or motor boats, skateboards or surf boards. They can be placed on equipment the user is earing such as protective padding, gloves, helmets, cleats, shoes or uniforms. They can be placed on training equipment, on goal posts, or barricades, walls, nets. They can be placed across a field, stadium, and track, course, under water or above. They can measure weather conditions or ambient noise, wind, smell, rain, moisture.

Select hubs can also display the results of these calculations, the actions gathered, and the results achieved. These are devices are connected to a multi-tenant SHCICP (MT-SHCICP) system which grants access to the various information relevant to that specific user. This could be a head coach for a NFL team, the medical doctor, the head of performance data, the defensive coordinator, the coach for the quarterback etc. Each person / team has a set of data points they want to focus on. The MT-SHCICP will collect all the data and present the relevant data to the relevant user on the right device. These devices can be mobile phones, tablets, computers, virtual reality devices or other wearables.

The data recorded and retained can be used to replay actions or event at a later time. This can be used to observe actions and see the results from these actions. The data can be used to render replay modes in video, in data stats, in augmented reality renderings, using 3D avatars of the participants or their equipment, 3D renderings of the physical space, or real life 3D video rendering depending on the data capture process. The replay of the event can be performed on site, real time or off site later. 3D environment and data gathering can be replayed in virtual reality. In all these embodiments, the MT-SHCICP has captured the data and telemetry, recorded it and retained it. It is being used to re-create the event via devices that are connected and communicating with the MT-SHCICP.

This ability to capture real time data, performance and activity in physical areas, combine this with the activity of a user, record and retain this into the MT-SHCICP with a profile can enable experiences for the user when that user at a later time is going on-line. The profile can be used to recommend content and as input to programmatic ad buying and presentation of these ads. The actions take based on these ad placements can then drive interactions in the real-world at a later stage where the MT-SHCICP can present offers or advice on behavior directly on connected devices the user has or on devices that are in the user's context. Numerous services can assist in the presentation of such content such as Unicast. Others can provide services that can provide an artificial intelligence recommendation engine to present the content and offers most likely to be of value to the user such as Xcense.

The MT-SHCICP captures past behavior, records and records this and can then integrate past behavior knowledge with recommendation engines within the MT-SCHICP and the learned understanding of the current context calculated by the MT-SHCICP to deliver the right message, information or replay the right experience via devices connected to the MT-SCHICP

### Asset Location Embodiment

Alternate embodiments of the MTCICP may be configured to include a centralized system that functions to identify the location of devices, products and assets within a physical space through use of listening devices, active transmitters, mobile devices and network-connected equipment, including connections through use of, for example, relatively low cost proximity beacons, NFC tags and/or other sensors.

Another continuation of part of the original CICP is where the connected sensors and infrastructure of a facility that has a CICP enabled infrastructure is used to communicate and locate devices and equipment as well as used to direct attention, dispatch personnel to a location and use the system to direct the closet personnel to a moveable piece of equipment.

Such a location can be a hospital. The hospital has installed a CICP system to communicate with its patients, enabling the hospital to communicate with their patients when they are at the premises, before and after, pre-care and post-operation -via mobile devices that are connected to CICP that they wear or carry with them as they move across the hospital setting. Nurses, administrators, staff, cleaning staff and physicians also carry mobile devices that are also connected to the CICP. These devices function as input units as well as displaying content that is relevant to the individual staff member and relevant to the location they are in, their context or those nearby in proximity. The CICP can also be connected with equipment and digital signage and screens throughout the facility outside the entry, in the lobby, by elevators, outside and inside examination rooms, inside and outside operation rooms, inside and outside recovery rooms and patient rooms, inside and outside nurse stations, inside and outside waiting rooms, inside and outside physician's offices, in hallways, in stairwells, outside, inside and throughout cafeteria, outside, inside, and throughout pharmacy, outside, inside and throughout waiting rooms, outside, inside and throughout gift shops, in operations, in restrooms - throughout the facility wherever a digital sign can provide value. Sensors such as proximity beacons, NFC tags and other sensors can be placed at known locations across each of the same locations. Multiple sensors can be placed in larger areas. Some sensors can be powered by batteries, solar panels or attached to power supply. This power supply can be electrical outlets or USB ports in PCs, TVs or digital displays. These sensors and the displays are connected to the CICP and their unit and location is known by the CICP. Other sensors and proximity beacons will be placed throughout the facilities. These can be low cost Bluetooth low energy proximity beacons. None of these require connectivity or WiFi. The location of all these are known. These locations can be displayed on a digital map presented by the CICP in dashboard accessible via cloud based computers for those that have been granted access. When a person with a mobile device that is connected with the CICP comes into connection with one of these sensors or beacons, then this connected device alerts the CICP that the proximity or connection with that specific device has been established. The CICP can then detect the proximity of that user in relation to this specific sensor. To determine more exact location, triangulation between 3 node points with known location can be achieved using any standard triangulation methods or out of the box indoor navigation solution. The sensors are not connected to the CICP, the connection to the CICP occur via the mobile device the person is wearing. Numerous persons can thereby be displayed on the CICP without the need for connectivity beyond network and / or Wi-Fi that connects the devices. In addition to this system, a movable piece of equipment can be fitted with a proximity beacon. This can be a battery powered beacon or one that is connected to a power supply within the piece of equipment or on a rechargeable battery pack. This beacon's id number is logged into the CICP and assigned with that particular piece of equipment such as a hospital bed. This hospital bed is located in room 1A. A staff member enters room 1A and the CICP records the time and location of the entry of the staff member into room 1A and retains this information. The staff member walks to the bed and starts moving the rollable bed. The proximity beacon on the bed triggers a proximity alert on the staff member's connected device. This connection is transmitted to the CICP which records the interaction, the time and the location of the staff member in room 1A. Staff member moves the bed into the hall way and to the elevators. Proximity beacons along the way records the entry and exit of their range with the staff member's mobile device, which is sending this information to the CICP. At each interaction, the bed is still in proximity to the staff member's mobile device and this proximity is also noted. The staff member enters the elevator and connectivity to his device is lost while in the elevator. The CICP records and retains this lost connection as a last known location. The staff member exits the elevator on the second floor. His device connects with the proximity beacon at the 2^{nd} floor elevator lobby, and this connection is recorded and transmitted to the CICP. Location of the staff member is thereby re-established. He is still in proximity to the bed. The beacon on the bed is also in range with the staff member's connected device. This device then communicates the location of the bed to be the same as the staff member. The staff member walks down the corridor and the same procedure as on floor 1 repeats with the mobile device alerting the CICP as it comes in and out of range of the beacons in the corridor. Real time location of the staff member is thereby captured. Each time, the proximity of the staff member's mobile device and the bed is detected, captured and transmitted to the CICP. The location of the bed is thereby also inferred. The staff member arrives at room 2B and enters. The beacon in Room 2B interacts with his mobile device and transmits to the CICP, the location of the staff member in room 2B is thereby detected. The proximity of the bed to the staff member is also detected and transmitted to the CICP. The location of the bed in room 2B can thereby be determined, recorded and retained. The staff member now leaves the bed in room 2B and moves into the corridor. His mobile device connects with the signals from the proximity beacons in the hallway and transmits these interactions with the CICP. At this state he is not in proximity to the bed any longer. The past proximity with the bed beacon is broken and it is recorded as an "exit" between the beacon on the bed and the staff member's device, and this is also included as information sent by the device to the CICP. The location where the last proximity was detected between the bed beacon and the staff member's mobile device will be noted in the CIPC as the "last known location" and retained by the CICP as the most likely location of the bed.

The CICP can then display this last know location on dashboard on displays connected to it to those authorized to view this information. It can then provide information and directions to this last known location directly onto mobile devices of other staff members. This can be provided via active search, or directional instructions, or alphanumerical displays of the location of each asset that has an identifying tag. Displays placed in sections of the hospital can provide lists of the assets that are close to it or on the same floor - with directions to them. This information is provided by the CICP. When a staff member stands in front of the display, this proximity is detected by the CICP and the location and information can be transmitted to the staff member's device that is connected to the CICP.

The last known location can also be verified by the CICP. When another staff member with a device that is connected to the CIPC enters the 2B room, the beacon on the bed will be discovered by the device. The device has connected with the CICP and the sensors in the room 2B thereby alerting the CICP to its presence in room 2B. When the device detects the proximity of the bed beacon, this detection is transmitted to the CICP, recorded and retained by it. The location of this proximity detection is verified to be room 2B and the location of the bed is therefore verified and status of the bed location is "known" and in proximity to the identified staff member. When this staff member leaves the room without the bed, the last know location is recorded. When another member enters the room with another device the process is repeated. When that member leaves the room with the bed, the process from the first staff member leaving room la is repeated. The location of the asset - the bed - is therefore active and real-time when in proximity and being actively moved by a staff member, when it is stationary the last known location is displayed.

This methodology can be used to measure traffic patterns and locate assets and staff in a hospitals, factory, venue, hotel, convention center, across a port or airport, in a sports event, during a sporting event, across a stadium or anywhere there is the capability to place sensors in the physical environment, where assets, products, equipment, people, animals or other movable things can move across the physical location.

It can also be extended beyond a physical building and extend into a larger area such as a university campus, port area or entire cities, islands or countries. Combined with a MTCICP and SHCICP the complete interactions between the physical and the people, assets, things and communication devices across a geographical area can be detected, monitored, influenced, recorded and retained, i.e., contextually intelligent city management.

### INDUSTRIAL APPLICABILITY

The presently described systems and processes has industrial capability in that is can be used for interactive, electronic networks that enable multi-level control, variable access, multi-user communications of real-time contextually relevant data or information among network-connected devices for numerous end uses, and for actions based on those communications, as the network-connected devices, with or without its corresponding user(s) move from one location to another and/or the data/information flow among those devices change over time.

## Claims

1. A wireless, internet-based, cloud-based, multi-tenant, multi-level control, variable access, multi-user, interactive, computer-implemented electronic network (200 - 228) adapted for providing real-time end user relevant content (278, 292) among network-connected devices as at least one of the network-connected devices moves relative to other of the network-connected devices or as the content or context changes, said content or context including at least one of application-specific designations of who, what, where, when, device(s), activity(ies), profile(s), who else, what else, preference(s), reward(s), display method and sensor(s), said computer-implemented electronic network (200 - 228) comprising:
a first control level (200) having a first control level administrative user and first level network-connected devices, wherein the first control level administrative user is adapted to control access to said system;
one or more end-user mobile communication devices associated with one or more end-users;
a server (262) in communication with each said one or more end-user mobile communication devices; and
a relationship management system (316) that resides in said server (262), said relationship management system (316) populated with historical demographic data for each end-user (264, 271, 272, 274, 280), with input content (238, 240, 242, 244, 266) corresponding to data from known data sources and with content from each of said network-connected devices; wherein
one or more of said mobile communication devices including one or more sensors (266, 364, 368, 370, 372, 378, 380, 382) adapted to record and provide sensor input data (410) to said server (262) when each said end-user (264, 271, 272, 274, 280) and each said one or more mobile communication devices are in an end-user current context;
**characterized by**
a second control level (202) having N second control level administrative users, where N is an integer, and second level network-connected devices, wherein access to the second control level is controlled by at least one of said first control level administrative user or said second level administrative users, and each of N second control level users have access to one or more of said second level network-connected devices; and
a third control level (204, 206, 208) having M third control level administrative users, where M is an integer, and third level network-connected devices, wherein access to the third control level is controlled by at least one of said first level administrative user, said second level administrative users or said third level administrative users.

2. The network (200 - 228) of claim 1 wherein the end-user relevant content (278, 292) includes any of data, information, offers or experiences having potential use by said end-user.

3. The network (200 - 228) of claim 1 wherein said sensor input data (266) includes data corresponding to any of a current location of any user mobile communication device, current activity of any said user, mental state of any user, physical state of any said user, mode of travel of any said user, direction of travel of any said user, speed of travel of any said user, level of engagement of any said user in any said user current context, surrounding environment of any said user in any said user current context, identity of one or more persons in addition to any said user and who are nearby any said user in any said user current context, identity of at least one mobile device other than any said user mobile communication device and that is nearby any said user mobile communication device in any said user current context.

4. The network (200 - 228) of claim 1 wherein said relationship management system (316) further is adapted to gather and record real-time performance data for more than one of said administrative users.

5. The network (200 - 228) of claim 1 further including connected organization administrative users (298, 300, 302, 306), said connected organization administrative users having access to designated control levels and designated types of access to the designated control levels.

6. The network (200 - 228) of claim 5 wherein said organization administrative users (298, 300, 302, 306) further have said access to designated control level and designated types of access to the designated types of access within, among and spanning across the levels and type of access for each organization.

7. The network (200 - 228) of claim 5 wherein the connected organization administrative users (298, 300, 302, 306) have access to multiple organizations or to one or more groups of organizations.

8. The network (200 - 228) of claim 7 wherein the connected organization administrative users (298, 300, 302, 306) further have said access to designated control levels and designated types of access to the designated types of access within, among and spanning across the levels and type of access for each organization or group of multiple organizations.

9. The network (200 - 228) of claim 1 wherein:
the first control level (200) comprises computer-implemented software code implemented for a specific enterprise, said enterprises selected from the group consisting of national retail chain stores, international retail chain stores, internet-based supplier of products, internet-based supplier of services, a hospital, a convention center, a sport venue such as a football stadium, a baseball part, a race track, a collage, a university, a K-12 school, a local government;
the first control level (200) is operated by the first control level administrative user; and
the first control level (200) comprises computer-implemented code that is adapted to control all of the types, sub-types (230, 232, 234, 236), levels and sublevels of control (202, 206,208, 210, 212, 214, 216, 218, 220, 222, 224, 226, 228) and/or access for users within the enterprise and users outside of the enterprise who have been granted some degree of access to a specific enterprise application.

10. The network (200 - 228) of claim 1 wherein said relationship management system (316) is also populated with output content (246, 248, 250, 252, 278) that is based on input content (238, 240, 242, 244, 266) and on sensor input data (410).

11. The network (200 - 228) of claim 1 wherein said relationship management system (316) is also populated with output content (246, 248, 250, 252, 278) that is based on input content (238, 240, 242, 244, 266), on sensor input data (410) and on feedback data from connected devices (338, 346, 352, 356, 360).

12. The network (200 - 228) of claim 1 wherein said relationship management system (316) is also populated with output content (246, 248, 250, 252, 278) that is based on input content (266), on sensor input data (410) and on feedback data based on computations performed by selected connected devices (338, 346, 352, 356, 360) on prior content presented to said selected connected devices (338, 346, 352, 356, 360).

13. The network (200 - 228) of claim 1 wherein said network is self-learning, comprising: said relationship management system (316) further populated with content from said network- connected devices, said content including effectiveness of prior provided content to said devices to provide a feedback loop with each interaction recorded and stored for repeated use during system operation thereby creating self-learning for the network.

14. The self-learning network (200 - 228) of claim 13 adapted to present the results of the self-learning in real time as the end user moves to a new context.

15. The network (200 - 228) of claim 1 wherein said second control level corresponds to a predesignated area of influence comprising:
a geographical area (230);
a grouping of individuals, companies, entities or other grouping based on predetermined criteria (232);
a time-limited grouping (234);
a grouping based on predetermined user characteristics (236)
a grouping based on predetermined interests (236);
a grouping based on geographical position of a user (236); and,
a grouping based on identity of any device(s) (236).

16. The network (200 - 228) of claim 1 wherein said sensors (364 - 410) comprise cameras, proximity sensors, proximity beacons, near field communication tags, augmented reality triggers, microphones, pressure sensors, light sensors, hear rate sensors, blood pressure sensors, finger print sensors and touch pad sensors.

## Patentansprüche

1. Eine drahtloses, internetbasiertes, cloudbasiertes, multi-mandantenfähiges, für mehrstufige Steuerung, variablen Zugang, und eine Mehrzahl von Nutzern ausgelegtes, interaktives, computerimplementiertes elektronisches Netzwerk (200 - 228), welches zum Bereitstellen von nutzerrelevantem Inhalt (278, 292) unter in dem Netzwerk verbundenen Benutzergeräten in Echtzeit ausgebildet ist, während sich wenigstens eines der in dem Netzwerk verbundenen Benutzergeräte relativ zu den anderen in dem Netzwerk verbundenen Benutzergeräten bewegt oder während sich der Inhalt oder der Kontext ändert, wobei der Inhalt oder Kontext wenigstens eine anwendungsspezifische Angabe von wer, was, wo, wann, Gerät(e), Aktivität(en), Profil(e), wer sonst noch, was sonst noch, Präferenz(en), Vergütung(en), Anzeigeverfahren und Sensoren beinhaltet, wobei das computerimplementierte elektronische Netzwert (200 - 228) versehen ist mit:
einer ersten Steuerungsebene (200), welche einen ersten Steuerungsebenen-Administrator-User und netzwerkverbundene Geräte der ersten Steuerungsebene aufweist, wobei der erste Steuerungsebenen-Administrator-User zur Steuerung des Zugangs zum System befähigt ist;
einem oder mehrere mobile Endbenutzer-Kommunikationsgeräte, welche einem oder mehreren Endbenutzern zugehörig sind;
einem Server (262), welcher sich mit allen der vorgenannten einen oder mehreren mobilen Endbenutzer-Kommunikationsgeräte in Kommunikation befindet;
einem Beziehungs-Managementsystem (316), welches sich auf dem Server (262) befindet, wobei das Beziehungs-Managementsystem (316) mit historischen demographischen Daten für jeden der Endbenutzer (264, 271, 272, 274, 280) befüllt ist, wobei der Eingabeinhalt (238, 240, 242, 244, 266) den Daten von bekannten Datenquellen entspricht und Inhalt von jedem der netzwerkverbundenen Geräte aufweist; wobei
eines oder mehrere der mobilen Endbenutzer-Kommunikationsgeräte einen oder mehrere Sensoren (266, 364, 368, 370, 372, 378, 380, 382) aufweist, welche zum Erfassen und Bereitstellen von Sensor-Eingabedaten (410) zur Eingabe in den Server (262) ausgebildet ist, sobald sich jeder der Endbenutzer (264, 271, 272, 274, 280) und jede der einen oder mehreren mobilen Endbenutzer-Kommunikationsgeräte in einem aktuellen Endbenutzer-Kontext befinden;
**gekennzeichnet durch**
eine zweite Steuerungsebene (202), welche N zweite Steuerungsebenen-Administrator-User der zweiten Steuerungsebene aufweist, wobei N eine ganze Zahl ist, und netzwerkverbundene Geräte der zweiten Steuerungsebene aufweist, wobei der Zugang zu der zweiten Steuerungsebene durch einen Administrator-User der ersten Steuerungsebene oder/oder durch den Administrator-User der zweiten Steuerungsebene gesteuert wird, wobei jeder der N zweiten Steuerungsebenen-Administrator-User Zugang zu einem oder mehreren der netzwerkverbundenen Geräte der zweiten Steuerungsebene hat; und
einer dritten Steuerungsebene (204, 206, 208), welche M dritte Steuerungsebenen-Administrator-User der dritten Steuerungsebene aufweist, wobei M eine ganze Zahl ist, und netzwerkverbundene Geräte der dritten Steuerungsebene aufweist, wobei der Zugang zu der dritten Steuerungsebene durch einen Administrator-User der ersten Steuerungsebene und/oder durch den Administrator-User der zweiten Steuerungsebene und/oder durch den Administrator-User der dritten Steuerungsebene gesteuert wird.

2. Das Netzwerk (200 - 228) nach Anspruch 1, wobei der für den Endbenutzer relevante Inhalt (278, 292) jegliche Daten, Informationen, Angebote oder Erfahrungen beinhaltet, welche von potentiellen Wert für den Endbenutzer sind.

3. Das Netzwerk (200 - 228) nach Anspruch 1, wobei die Sensor-Eingabedaten (266) solche Daten beinhaltet, welche zu einem momentanen Ort von jedem beliebigen der mobilen Endbenutzer-Kommunikationsgeräte korrespondieren, einer aktuellen Aktivität von jedem beliebigen der User, einen geistigen Zustand von jedem beliebigen der User, einen physischen Zustand von jedem beliebigen der User, einer Art der Fortbewegung von jedem beliebigen der User, einer Fortbewegungsrichtung von jedem beliebigen der User, einer Fortbewegungsgeschwindigkeit von jedem beliebigen der User, einem Involvierungs-Level von jedem beliebigen der User hinsichtlich des momentanen Kontext des Users, einer Umgebung von jedem beliebigen der User in jedem beliebigen der momentanen Kontexte des Users, einer Identität von einem oder mehreren Personen zusätzlich von jedem beliebigen der User korrespondieren, der sich in der Nähe von dem User in jedem beliebigen der momentanen Kontexte des Users befindet, sowie zu der Identität von wenigstens einem mobilen Kommunikationsgerät korrespondieren, welche sich von dem mobilen Endbenutzer-Kommunikationsgerät unterscheidet und sich in der Nähe des mobilen Endbenutzer-Kommunikationsgeräts in jedem beliebigen der aktuellen Endbenutzer-Kontext befindet.

4. Das Netzwerk (200 - 228) nach Anspruch 1, wobei das Beziehungs-Managementsystem (316) weiter dazu ausgebildet ist, in Echtzeit Daten zu sammeln und aufzuzeichnen, welche sich auf die Leistung von einem oder mehreren der Administrator-User bezieht.

5. Das Netzwerk (200 - 228) nach Anspruch 1, weiter versehen mit miteinander verbundenen Organisations-Administrator-Usern (298, 300, 302, 306), wobei diese Organisations-Administrator-User Zugriff haben auf vorbestimmte Steuerungsebenen und vorbestimmte Arten von Zugriff auf die vorbestimmte Steuerungsebenen haben.

6. Das Netzwerk (200 - 228) nach Anspruch 5, wobei die Organisations-Administrator-User (298, 300, 302, 306) weiter den Zugriff auf vorbestimmte Steuerungsebenen und vorbestimmte Arten von Zugriff auf die vorbestimmte Steuerungsebenen innerhalb der Steuerungsebenen, unterhalb der Steuerungsebenen, und in einer die Steuerungsebenen überbrückenden Art des Zugriffs für jede der Organisationen haben.

7. Das Netzwerk (200 - 228) nach Anspruch 5, wobei die verbundenen Organisations-Administrator-User (298, 300, 302, 306) Zugriff auf mehrere Organisationen oder zu einem oder mehreren Gruppen von Organisationen haben.

8. Das Netzwerk (200 - 228) nach Anspruch 7, wobei die Organisations-Administrator-User (298, 300, 302, 306) weiter den Zugriff auf vorbestimmte Steuerungsebenen und vorbestimmte Arten von Zugriff auf die vorbestimmte Steuerungsebenen innerhalb der Steuerungsebenen, unterhalb der Steuerungsebenen, und in einer die Steuerungsebenen überbrückenden Art des Zugriffs für jede der Organisationen oder jede Gruppe von Organisationen haben.

9. Das Netzwerk (200 - 228) nach Anspruch 1, wobei:
die erste Steuerungsebene (200) computer-implementierte Softwarecodes aufweist, welche für ein bestimmtes Unternehmen implementiert sind, wobei diese Unternehmen aus einer Gruppe ausgewählt sind, welche besteht aus nationalen Geschäften einer Ladenkette, internationalen Geschäften einer Ladenkette, Internet-basierenden Lieferanten von Produkten, Internet-basierenden Lieferanten von Dienstleistungen, einem Krankenhaus, einem Kongresszentrum, einem Sportveranstaltungsort wie einem Fußballstadion, einem Baseball-Veranstaltungsort, einer Rennstrecke, einer Hochschule, einer Universität, einer Schule, einer lokalen Behörde;
die erste Steuerungsebene (200) zu von einem Administrator-User der ersten Steuerungsebene betrieben wird; und
die erste Steuerungsebene (200) einen computer-implementierten Code aufweist, welcher zum Steuern von allen Arten oder Unterarten (230, 232, 234, 236), Steuerungsebenen und Unter-Steuerungsebenen (202, 206, 208, 210, 212, 214, 216, 218, 220, 222, 224, 236, 228) ausgebildet ist und/oder zum Zugriff für User innerhalb des Unternehmens und User außerhalb des Unternehmens ausgebildet ist, welchen Usern außerhalb des Unternehmens ein bestimmter Grad von Zugriff zu bestimmten unternehmensbezogenen Anwendungen gewährt wurde.

10. Das Netzwerk (200 - 228) nach Anspruch 1, wobei das Beziehungs-Managementsystem (316) auch mit Ausgangs-Inhalts-Daten (246, 248, 250, 252, 278) befüllt ist, welche auf Eingangs-Inhalts-Daten (238, 240, 242, 244, 266) und auf Sensor-Eingabedaten (410) basieren.

11. Das Netzwerk (200 - 228) nach Anspruch 1, wobei das Beziehungs-Managementsystem (316) auch mit Ausgangs-Inhalts-Daten (246, 248, 250, 252, 278) befüllt ist, welche auf Eingangs-Inhalts-Daten (266), auf Sensor-Eingabedaten (410) und auf Rückkopplungsdaten von verbundenen Geräten (338, 346, 352, 356, 360) basieren.

12. Das Netzwerk (200 - 228) nach Anspruch 1, wobei das Beziehungs-Managementsystem (316) auch mit Ausgangs-Inhalts-Daten (246, 248, 250, 252, 278) befüllt ist, welche auf Eingangs-Inhalts-Daten (238, 240, 242, 244, 266), auf Sensor-Eingabedaten (410) und auf Rückkopplungsdaten von ausgewählten verbundenen Geräten (338, 346, 352, 356, 360) basieren, basierend auf Datenverarbeitung, welche von den ausgewählten der verbundenen Geräten aufgrund von früherem Inhalt, welcher zu den ausgewählten verbundenen Geräten (338, 346, 352, 356, 360) präsentiert wurde.

13. Das Netzwerk (200 - 228) nach Anspruch 1, wobei das Netzwerk selbstlernend ist, wobei: das Beziehungs-Managementsystem (316) weiter mit Inhalts-Daten von den im Netzwerk verbundenen Geräten befüllt ist, wobei der Inhalt die Effizienz von früher an die vorgenannten Geräte gelieferten Inhalt umfasst, um eine Rückkopplungsschleife für jede der erfassten und gespeicherten Interaktionen zur wiederholten Verwendung während des Betriebs des Systems zu liefern, wodurch ein Selbstlerneffekt für das Netzwerk geschaffen wird.

14. Das Netzwerk (200 - 228) nach Anspruch 13, wobei das Netzwerk zum Präsentieren der Resultate des Selbstlernprozesses in Echtzeit an den User ausgebildet ist, während sich dieser zu einem neuen Kontext fortbewegt.

15. Das Netzwerk (200 - 228) nach Anspruch 1, wobei die zweite Steuerungsebene zu einem vorbestimmten Einflussgebiet gehört, wozu die folgenden gehören:
ein geographischer Ort (230);
einer Gruppierung von Personen, Firmen, Einheiten oder anderen Gruppierungen basierend auf vorbestimmten Kriterien (232);
einer zeitlich beschränkten Gruppierung (234);
einer auf vorbestimmten User-Charakteristiken basierenden Gruppierung (236);
einer auf vorbestimmten Interessen basierenden Gruppierung (236);
einer auf einem geographischen Ort von einem der User basierenden Gruppierung (236); und,
einer auf einer Identität von jedem beliebigen der Geräte basierenden Gruppierung (236).

16. Das Netzwerk (200 - 228) nach Anspruch 1, wobei die Sensoren (364 - 410) die folgenden sein können: Kameras, Näherungssensoren, Näherungs-Warnsignalgeräten, Nahfeld-Kommunikation-Tags, Auslösern von erweiterter Realität, Mikrofonen, Drucksensoren, Lichtsensoren, Hörratensensoren, Blutdrucksensoren, Fingerabdrucksensoren, Touchpadsensoren.

## Revendications

1. Réseau électronique implémenté par ordinateur, sans fil, basé sur Internet, basé sur un cloud, multi-locataire, à commande multi-niveau, à accès variable, multi-utilisateur et interactif (200-228) adapté pour fournir en temps réel un contenu pertinent pour un utilisateur final (278, 292) parmi des dispositifs connectés au réseau lorsqu'au moins un des dispositifs connectés au réseau se déplace par rapport à un autre des dispositifs connectés au réseau ou lorsque le contenu ou le contexte change, ledit contenu ou contexte comprenant au moins une des désignations spécifiques à une application de qui, quoi, où, quand, dispositif(s), activité(s), profil(s), qui d'autre, quoi d'autre, préférence(s), récompense(s), procédé d'affichage et capteur(s), ledit réseau électronique implémenté par ordinateur (200-228) comprenant :
un premier niveau de commande (200) comportant un utilisateur administratif de premier niveau de commande et des dispositifs connectés au réseau de premier niveau, dans lequel l'utilisateur administratif de premier niveau de commande est adapté pour commander un accès audit système ;
un ou plusieurs dispositifs de communication mobiles d'utilisateur final associés à un ou plusieurs utilisateurs finaux ;
un serveur (262) en communication avec chacun desdits un ou plusieurs dispositifs de communication mobiles d'utilisateur final ; et
un système de gestion de relations (316) qui réside dans ledit serveur (262), ledit système de gestion de relations (316) étant rempli de données démographiques historiques pour chaque utilisateur final (264, 271, 272, 274, 280), d'un contenu d'entrée (238, 240, 242, 244, 266) correspondant à des données provenant de sources de données connues et d'un contenu provenant de chacun desdits dispositifs connectés au réseau ; dans lequel
un ou plusieurs desdits dispositifs de communication mobiles comprenant un ou plusieurs capteurs (266, 364, 368, 370, 372, 378, 380, 382) sont adaptés pour enregistrer et fournir des données d'entrée de capteur (410) audit serveur (262) lorsque chacun dudit utilisateur final (264, 271, 272, 274, 280) et chacun desdits un ou plusieurs dispositifs de communication mobiles se trouvent dans un contexte actuel d'utilisateur final ;
**caractérisé par**
un deuxième niveau de commande (202) comprenant N utilisateurs administratifs de deuxième niveau de commande, où N est un nombre entier, et des dispositifs connectés au réseau de deuxième niveau, dans lequel l'accès au deuxième niveau de commande est commandé par au moins un dudit utilisateur administratif de premier niveau de commande ou desdits utilisateurs administratifs de deuxième niveau, et chacun des N utilisateurs de deuxième niveau de commande a accès à un ou plusieurs desdits dispositifs connectés au réseau de deuxième niveau ; et
un troisième niveau de commande (204, 206, 208) ayant M utilisateurs administratifs de troisième niveau de commande, où M est un nombre entier, et des dispositifs connectés au réseau de troisième niveau, dans lequel l'accès au troisième niveau de commande est commandé par au moins un dudit utilisateur administratif de premier niveau, desdits utilisateurs administratifs de deuxième niveau ou desdits utilisateurs administratifs de troisième niveau.

2. Réseau (200-228) selon la revendication 1 dans lequel le contenu pertinent pour l'utilisateur final (278, 292) comprend l'une quelconque parmi des données, informations, offres ou expériences ayant une utilisation potentielle par ledit utilisateur final.

3. Réseau (200-228) selon la revendication 1 dans lequel lesdites données d'entrée de capteur (266) comprennent des données correspondant à l'un quelconque parmi un emplacement actuel d'un quelconque dispositif de communication mobile de l'utilisateur, une activité actuelle d'un quelconque utilisateur, un état mental dudit quelconque utilisateur, un état physique dudit quelconque utilisateur, un mode de déplacement dudit quelconque utilisateur, une direction de déplacement dudit quelconque utilisateur, une vitesse de déplacement dudit quelconque utilisateur, un niveau d'engagement dudit quelconque utilisateur dans un quelconque contexte actuel de l'utilisateur, un environnement environnant dudit quelconque utilisateur dans ledit quelconque contexte actuel de l'utilisateur, une identité d'une ou plusieurs personnes en plus dudit quelconque utilisateur et qui sont à proximité dudit quelconque utilisateur dans ledit quelconque contexte actuel de l'utilisateur, une identité d'au moins un dispositif mobile autre que ledit quelconque dispositif de communication mobile de l'utilisateur et qui se trouve à proximité dudit quelconque dispositif de communication mobile de l'utilisateur dans ledit quelconque contexte actuel de l'utilisateur.

4. Réseau (200-228) selon la revendication 1 dans lequel ledit système de gestion de relations (316) est en outre adapté pour recueillir et enregistrer des données de performance en temps réel pour plus d'un desdits utilisateurs administratifs.

5. Réseau (200-228) selon la revendication 1 comprenant en outre des utilisateurs administratifs d'organisation connectés (298, 300, 302, 306), lesdits utilisateurs administratifs d'organisation connectés ayant accès à des niveaux de commande désignés et à des types d'accès désignés aux niveaux de commande désignés.

6. Réseau (200-228) selon la revendication 5 dans lequel lesdits utilisateurs administratifs d'organisation (298, 300, 302, 306) ont en outre ledit accès à un niveau de commande désigné et à des types d'accès désignés aux types d'accès désignés à l'intérieur, parmi et à travers les niveaux et le type d'accès pour chaque organisation.

7. Réseau (200-228) selon la revendication 5 dans lequel les utilisateurs administratifs d'organisation connectés (298, 300, 302, 306) ont accès à de multiples organisations ou à un ou plusieurs groupes d'organisations.

8. Réseau (200-228) selon la revendication 7 dans lequel les utilisateurs administratifs d'organisation connectés (298, 300, 302, 306) ont en outre ledit accès à des niveaux de commande désignés et à des types d'accès désignés aux types d'accès désignés à l'intérieur, parmi et à travers les niveaux et le type d'accès pour chaque organisation ou groupe de multiples organisations.

9. Réseau (200-228) selon la revendication 1 dans lequel :
le premier niveau de commande (200) comprend un code logiciel implémenté par ordinateur implémenté pour une entreprise spécifique, lesdites entreprises étant sélectionnées dans le groupe comprenant des chaînes nationales de magasins de détail, des chaînes internationales de magasins de détail, un fournisseur de produits sur Internet, un fournisseur de services sur Internet, un hôpital, un centre de congrès, un site sportif tel qu'un stade de football, un stade de baseball, une piste de course, un collège, une université, une école k12, une autorité locale ;
le premier niveau de commande (200) est exploité par l'utilisateur administratif de premier niveau de commande ; et
le premier niveau de commande (200) comprend un code implémenté par ordinateur qui est adapté pour commander tous les types, sous-types (230, 232, 234, 236), niveaux et sous-niveaux de commande (202, 206, 208, 210, 212, 214, 216, 218, 220, 222, 224, 226, 228) et/ou l'accès pour des utilisateurs au sein de l'entreprise et des utilisateurs extérieurs à l'entreprise qui ont obtenu un certain degré d'accès à une application d'entreprise spécifique.

10. Réseau (200-228) selon la revendication 1 dans lequel ledit système de gestion de relations (316) est également rempli d'un contenu de sortie (246, 248, 250, 252, 278) qui est basé sur un contenu d'entrée (238, 240, 242, 244, 266) et sur des données d'entrée de capteur (410).

11. Réseau (200-228) selon la revendication 1 dans lequel ledit système de gestion de relations (316) est également rempli d'un contenu de sortie (246, 248, 250, 252, 278) qui est basé sur un contenu d'entrée (238, 240, 242, 244, 266), sur des données d'entrée de capteur (410) et sur des données de rétroaction provenant de dispositifs connectés (338, 346, 352, 356, 360).

12. Réseau (200-228) selon la revendication 1 dans lequel ledit système de gestion de relations (316) est également rempli d'un contenu de sortie (246, 248, 250, 252, 278) qui est basé sur un contenu d'entrée (266), sur des données d'entrée de capteur (410) et sur des données de rétroaction basées sur des calculs effectués par des dispositifs connectés sélectionnés (338, 346, 352, 356, 360) sur un contenu antérieur présenté auxdits dispositifs connectés sélectionnés (338, 346, 352, 356, 360).

13. Réseau (200-228) selon la revendication 1 dans lequel ledit réseau est auto-apprenant, comprenant : ledit système de gestion de relations (316) en outre rempli de contenu provenant desdits dispositifs connectés au réseau, ledit contenu comprenant une efficacité de contenu précédemment fourni auxdits dispositifs pour fournir une boucle de rétroaction avec chaque interaction enregistrée et stockée pour une utilisation répétée pendant le fonctionnement du système en créant ainsi un auto-apprentissage pour le réseau.

14. Réseau d'auto-apprentissage (200-228) selon la revendication 13 adapté pour présenter les résultats de l'auto-apprentissage en temps réel lorsque l'utilisateur final passe à un nouveau contexte.

15. Réseau (200-228) selon la revendication 1 dans lequel ledit deuxième niveau de commande correspond à une zone d'influence pré-désignée comprenant :
une zone géographique (230) ;
un groupement de personnes, de sociétés, d'entités ou autre groupement basé sur des critères prédéterminés (232) ;
un groupement limité dans le temps (234) ;
un groupement basé sur des caractéristiques d'utilisateur prédéterminées (236)
un groupement basé sur des intérêts prédéterminés (236) ;
un groupement basé sur une position géographique d'un utilisateur (236) ; et
un groupement basé sur une identité d'un ou plusieurs quelconques dispositifs (236).

16. Réseau (200-228) selon la revendication 1 dans lequel lesdits capteurs (364-410) comprennent des dispositifs de prise de vues, des capteurs de proximité, des balises de proximité, des étiquettes de communication en champ proche, des déclencheurs de réalité augmentée, des microphones, des capteurs de pression, des capteurs de lumière, des capteurs de fréquence auditive, des capteurs de pression artérielle, des capteurs d'empreinte digitale et des capteurs à pavé tactile.
